# EUROPEAN PATENT APPLICATION

(11) **EP 4 617 146 A1**
(43) Date of publication of application: **17.09.2025**
(21) Application number: 23889276.4
(22) Date of filing: 08.11.2023
(51) Int. Cl.: B62B 7/14, B62B 7/08, B62B 9/12, B62B 9/18, F16F 9/54

(54) **CLAMPING SEAT ASSEMBLY AND WHEELED MOBILE DEVICE**

(30) Priority: 08.11.2022 CN 202211393615; 02.03.2023 CN 202310193406; 10.05.2023 CN 202310523976; 19.06.2023 CN 202310730134; 09.08.2023 CN 202311002128
(71) Applicant: Jani International Pte. Ltd., Singapore 569874 (SG)
(72) Inventor: GUO, Zhengwen, Wan Chai (HK); CHEN, Yingzhong, Wan Chai (HK); YUAN, Jialiang, Wan Chai (HK); ZHONG, Zhiren, Wan Chai (HK)
(74) Representative: Pfenning, Meinig & Partner mbB
(86) International application number: PCT/SG2023/050741
(87) International publication number: WO 2024/102076

(57) **Abstract**

The present application relates to a clamping seat assembly and a wheeled mobile device. The clamping seat assembly comprises: a seat plate assembly, which is used for placing an object thereon; and a locking mechanism, which comprises at least one locking member, wherein the at least one locking member is arranged on the seat plate assembly and can slide between a first locked position and a first unlocked position; when the locking member is in the first locked position, the locking member can lock the object; and when the locking member is in the first unlocked position, the locking member can unlock the object. The wheeled mobile device comprises the clamping seat assembly.

## Description

### CROSS-REFERENCE TO RELATED APPLICATIONS

This application claims priority to Chinese patent application No. 2022113936156, filed on November 8, 2022, entitled "ENGAGING BASE ASSEMBLY AND WHEELED MOVABLE DEVICE INCLUDING THE SAME", Chinese patent application No. 2023101934065, filed on March 2, 2023, entitled "WHEELED MOVABLE DEVICE", Chinese patent application No. 2023105239766, filed on May 10, 2023, entitled "WHEELED MOVABLE DEVICE, ENGAGING BASE ASSEMBLY, STRAP GUIDING MECHANISM, AND CARRIER", Chinese patent application No. 2023107301348, filed on June 19, 2023, entitled "SUPPORT ASSEMBLY AND WHEELED MOVABLE DEVICE", and Chinese patent application No. 2023110021287, filed on August 9, 2023, entitled "SUPPORT ASSEMBLY AND WHEELED MOVABLE DEVICE", the disclosures of which are incorporated herein by reference in their entireties.

### TECHNICAL FIELD

The present application relates to an engaging base assembly and a wheeled movable device.

### BACKGROUND

Generally, when traveling with infants or animals, users can use trolleys to move the infants or animals, but these trolleys cannot be placed directly in a vehicle in an unfolded state. Instead, the trolleys need to be folded and stored in the vehicle (such as the trunk of the vehicle), and additional carriers may be further disposed in the vehicle to carry the infants or animals. This means that users need to prepare at least two carriers when going out, which is inconvenient. Moreover, since the configuration of the seat of the trolley is relatively complex, even if it is folded, the trolley will take up a large space in the vehicle.

In addition, although users can use handheld carriers to carry infants or animals when going out, in this case, the handheld carrier may need to be carried for a long time, which is quite laborious. Even if the handheld carrier is placed on a movable device, the handheld carrier may not be stably fixed on the movable device, causing the handheld carrier to tilt or even fall from the mobile.

### SUMMARY

In an aspect, the present application provides an engaging base assembly, including: a seat plate assembly configured to receive an object thereon; and a locking mechanism including at least one locking member. The at least one locking member is disposed on the seat plate assembly and slidable between a first locked position and a first unlocked position. When the locking member is at the first locked position, the locking member is capable of locking the object. When the locking member is at the first unlocked position, the locking member is capable of unlocking the object.

Further, the locking mechanism is mounted on the seat plate assembly. The locking mechanism further includes at least one unlocking operating member. The unlocking operating member is connected to the locking member. The unlocking operating member is slidable between a second locked position and a second unlocked position. When the unlocking operating member is at the second locked position, the locking member is at the first locked position. When the unlocking operating member is operated to move from the second locked position to the second unlocked position, the locking member moves to the first unlocked position as the unlocking operating member moves.

Further, the unlocking operating member and/or the locking member is provided with a second driving inclined surface. The unlocking operating member and the locking member are operably connected via the second driving inclined surface, such that a moving direction of the unlocking operating member is perpendicular to a moving direction of the locking member.

Further, the locking member is provided with an extension. The extension is provided with an inclined hole. The second driving inclined surface is disposed on a hole wall of the inclined hole. The unlocking operating member is fitted with a driving pin that slidably cooperates with the inclined hole.

Further, the locking mechanism includes two first locking members. The two first locking members are connected by a linkage device. When any one of the first locking members is subjected to force and moves towards the first unlocked position, the linkage device drives another of the first locking members to move towards the first unlocked position synchronously.

Further, the two first locking members are disposed on a same side of the seat plate assembly. The two first locking members move in a same direction to switch to the first locked position or the first unlocked position. Alternatively, the two first locking members move in opposite directions to switch to the first locked position or the first unlocked position. The engaging base assembly further includes at least one elastic device. The elastic device applying a force to each first locking member to move towards the first locked position.

Further, the linkage device includes a linkage assembly connected between the two first locking members. When any one of the first locking members is subjected to force and moves between the first unlocked position and the first locked position, the linkage assembly drives another of the first locking members to move synchronously between the first unlocked position and the first locked position.

Further, the linkage assembly includes a fixed connection point positioned between the two first locking members, and two pivot shafts positioned on two sides of the fixed connection point. The linkage assembly is pivotally connected to the two first locking members through the two pivot shafts. When any one of the first locking members moves, the two pivot shafts are caused to move in opposite directions, such that the two first locking members move synchronously in opposite directions.

Further, the linkage assembly includes a first linking rod, a second linking rod, a third linking rod and a fourth linking rod. The first linking rod, the second linking rod, the third linking rod and the fourth linking rod are connected in pairs to form four connection points. One of the four connection points is a fixed connection point, the fixed connection point being fixed to the seat plate assembly. A connection point of the four connection points opposed to the fixed connection point is a central connection point. Two of the first linking rod, the second linking rod, the third linking rod and the fourth linking rod that are connected to the central connection point are respectively connected to the two first locking members. A line connecting the fixed connection point and the central connection point is perpendicular to moving directions of the two first locking members.

Further, the locking mechanism includes two second locking members. The two second locking members are disposed on another side of the seat plate assembly and are respectively parallel to the two first locking members. The two second locking members have configurations corresponding to the two first locking members.

Further, the locking mechanism includes two second locking members. The two second locking members are disposed on another side of the seat plate assembly and are respectively parallel to the two first locking members. The two first locking members and the two second locking members are connected by the linkage device. The linkage device allows the two first locking members and the two second locking members to move synchronously to the first unlocked position.

Further, the locking mechanism includes at least one first locking member and at least one second locking member. A moving direction of the at least one first locking member is parallel to a moving direction of the at least one second locking member. One of the at least one first locking member and one of the at least one second locking member are positioned on a diagonal line and are connected by a linkage device. The linkage device allows the first locking member and the second locking member that are connected to each other to move in opposite directions and synchronously switch to the first unlocked position.

Further, the linkage device includes a linkage member. the linkage member is a link rod or a traction member. The first locking member and the second locking member positioned on the diagonal line are connected by the linkage member. Additionally/alternatively, the engaging base assembly further includes at least one elastic device. The elastic device applies a force to the first locking member and/or the second locking member to move towards the first locked position.

Further, the locking mechanism includes two first locking members and two second locking members. The two first locking members are connected to the two second locking members by two linkage members.

Further, the two linkage members are link rods respectively, and the two linkage members are disposed to intersect with each other.

Further, the two linkage members are pivotally connected at an intersection therebetween. Additionally/alternatively, an angle is defined by connection points between the two linkage members and the two second locking members with respect to the intersection of the two linkage members. When the locking member moves from the first locked position towards the first unlocked position, the angle becomes smaller.

Further, the engaging base assembly further includes two support frames configured to support the seat plate assembly. The two support frames are respectively disposed on the left and right sides of the seat plate assembly. Each of the support frames includes a longitudinal bar, a connecting bar and a shock-absorbing bar that are connected to form a triangular structure.

Further, the longitudinal bar is disposed below the seat plate assembly and is fixedly connected to the seat plate assembly. A first end of the connecting bar is connected to a first end of the longitudinal bar. A second end of the connecting bar is connected to a first end of the shock-absorbing bar. A second end of the shock-absorbing bar is connected to the longitudinal bar. The shock-absorbing bar is elastic to provide buffer support to the seat plate assembly.

Further, the engaging base assembly is configured to be mounted on a foldable frame. The each of the support frames further includes a first connecting component and a second connecting component. A first end of the first connecting component and a first end of the second connecting component are respectively pivotally connected to the second end of the connecting bar; a second end of the first connecting component, a second end of the second connecting component and the first end of the connecting bar are respectively pivotally connected to different bars of the frame that are foldable relative to each other.

Further, a first connecting bar is connected between two longitudinal bars of the two support frames. Additionally/alternatively, a second connecting bar is connected between two connecting bars of the two support frames.

Further, the longitudinal bar includes a limiting finger disposed at the first end of the longitudinal bar. The limiting finger limits an angle by which the longitudinal bar pivots downwardly relative to the connecting bar by abutting against the connecting bar. Additionally/alternatively, the longitudinal bar includes a limiting protrusion disposed at the first end of the longitudinal bar. The limiting protrusion limits an angle by which the longitudinal bar pivots upwardly relative to the connecting bar by abutting against the connecting bar.

Further, the support frame further includes a limiting member. A first end of the limiting member is slidably connected to the longitudinal bar, and a second end of the limiting member is pivotally connected to the connecting bar.

Further, the engaging base assembly further includes a retaining mechanism configured to retain the locking member at the first unlocked position. The retaining mechanism includes: a touch button disposed on the seat plate assembly, the touch button being movable in a vertical direction relative to the seat plate assembly to allow at least a portion of the touch button to protrude upwardly relative to the seat plate assembly; a buckling portion connected to the touch button; and a reset member disposed between the touch button and the seat plate assembly, and configured to drive the touch button to move upwardly such that the touch button protrudes upwardly relative to the seat plate assembly. When the object is placed on the seat plate assembly, the touch button is pressed downwardly by the object, and the buckling portion moves downwardly along with the touch button; when the locking member moves from the first locked position to the first unlocked position, a retaining hook of the locking member hooks the buckling portion, and the locking member is retained at the first unlocked position.

Further, the buckling portion is movable in the vertical direction relative to the touch button. The retaining mechanism further includes an elastic member. The elastic member is disposed between the touch button and the buckling portion and is configured to drive the buckling portion to move downwardly relative to the touch button.

Further, the engaging base assembly includes at least one engaging channel configured to be engaged with at least one engaging member of the object. When the locking member is at the first locked position, the locking member extends into the corresponding engaging channel to lock the corresponding engaging member; when the locking member is at the first unlocked position, the locking member retracts relative to the engaging channel to allow the engaging member to be removed from the engaging channel.

Further, the engaging base assembly further includes a retaining mechanism configured to retain the locking member at the first unlocked position.

Further, the retaining mechanism includes: a movable member mounted in a sliding channel in communication with the engaging channel, the movable member having an abutting end adapted to extend into the engaging channel and an engaging end away from the abutting end; a reset device configured to drive the abutting end to extend into the engaging channel. When the engaging channel is engaged with the engaging member, the abutting end is pressed by the engaging member and withdraws from the engaging channel; when the locking member moves to the first unlocked position, the engaging end is engaged with the locking member to lock the locking member at the first unlocked position.

Further, the engaging end is provided with a first buckling portion, and the locking member is provided with a second buckling portion. When the engaging member is engaged into the engaging channel, the first buckling portion moves to a moving path of the second buckling portion; when the locking member moves to the first unlocked position, the second buckling portion is engaged with the first buckling portion.

Further, the locking member is provided with an elastic arm, and the second buckling portion is disposed on the elastic arm. Additionally/alternatively, one of the first buckling portion and the second buckling portion is an engaging groove, and another of the first buckling portion and the second buckling portion is a wedge-shaped step.

Further, the locking member and the elastic arm are integrally formed. Or, the elastic arm is fixed to the locking member via a fastener, and a rotation-stopping structure is disposed between the elastic member and the locking member.

Further, the reset device further includes a pulling wire, a first reset member and a sliding member. The pulling wire is connected between the movable member and the sliding member. The first reset member abuts against the sliding member and is configured to drive the sliding member to reset. When the sliding member is reset, the pulling wire drives the abutting end to extend into the engaging channel.

Further, the sliding member has an engaging indication region configured to indicate a position of the movable member. The sliding member is mounted in a hollow bar, and the bar being provided with an observation hole that is configured to observe the engaging indication region.

Further, the movable member has a connecting portion positioned outside the sliding channel. The pulling wire is supported by a guiding bracket positioned outside the sliding channel and is connected to the connecting portion. A moving direction of the pulling wire between the connecting portion and the guiding bracket is parallel to the sliding channel.

Further, the locking member is provided with a matching portion. The movable member has a limiting portion positioned outside the sliding channel. When the engaging member moves out of the engaging channel, the reset device drives the movable member to move such that the limiting portion moves to a moving path of the locking member and abuts against the matching portion, to retain the locking member at the first unlocked position; when the engaging channel is engaged with the engaging member, the limiting portion moves out of the moving path of the locking member to allow the locking member to move towards the first locked position.

Further, the engaging base assembly is configured to be mounted on the frame. At least one unlocking operating member is mounted on the frame. The at least one unlocking operating member is operably connected to the at least one locking member. The at least one unlocking operating member is configured to drive the at least one locking member to move towards the first unlocked position.

Further, the at least one unlocking operating member has an unlocking identification region. The unlocking identification region being configured to indicate that the at least one locking member is at the first locked position or the first unlocked position.

Further, the frame includes at least one wheel seat configured to be fitted with a front wheel or a rear wheel. The at least one unlocking operating member slidably cooperates with the at least one wheel seat. The unlocking operating member is connected to the at least one locking member by at least one traction rope.

Further, the frame is provided with at least one guiding mechanism configured to guide the at least one traction rope. The at least one guiding mechanism includes at least one rotating member disposed proximate to the at least one unlocking operating member.

Further, the unlocking operating member has a first driving inclined surface. The first driving inclined surface is inclined relative to a sliding direction of the unlocking operating member. An end of the traction rope abuts against the first driving inclined surface so as to be able to slide along the first driving inclined surface.

Further, the unlocking operating member includes a first limiting wall. A first engaging structure is formed between the first limiting wall and the first driving inclined surface. The wheel seat is provided with a second limiting wall therein. A second engaging structure is formed on the second limiting wall; and the first driving inclined surface is between the first limiting wall and the second limiting wall. The end of the traction rope is adapted to be engaged with the first engaging structure or the second engaging structure.

Further, the wheel seat is provided with a first guiding inclined surface therein. An angle is formed between the first guiding inclined surface and the first driving inclined surface. The end of the traction rope abuts against the first driving inclined surface and the first guiding inclined surface within a range of the angle.

Further, the locking mechanism includes at least two locking members. The at least two locking members are connected by a linkage device. The linkage device allows the at least two locking members to move synchronously to the first unlocked position. The frame is fitted with an unlocked state synchronization mechanism and at least two unlocking operating members. The at least two unlocking operating members are respectively connected to the at least two locking members. The unlocked state synchronization mechanism allows the at least two unlocking operating members to be synchronically in a state of unlocking the at least two locking members.

Further, the at least two unlocking operating members are respectively connected to the at least two locking members by at least two traction ropes. The frame includes at least two wheel seats configured to be fitted with front wheels or rear wheels. The at least two unlocking operating members is capable of being slidably mounted to the at least two wheel seats, respectively.

Further, each of the at least two unlocking operating members has a first driving inclined surface. The first driving inclined surface is inclined relative to a sliding direction of the unlocking operating member. each of the at least two unlocking operating members abut against an end of a respective one of the at least two traction ropes by the respective first driving inclined surface. The unlocked state synchronization mechanism includes at least two second reset members, each of which abuts against the end of the respective traction ropes to drive the end of the respective traction rope to move away from the respective first driving inclined surface to allow a corresponding one of the unlocking operating members to slide downwardly.

Further, the seat plate assembly includes a first seat plate assembly and a second seat plate assembly. The locking mechanism includes a first locking mechanism and a second locking mechanism. The first locking mechanism is disposed on the first seat plate assembly. The second locking mechanism is disposed on the second seat plate assembly. Each of the first locking mechanism and the second locking mechanism includes the at least one locking member. The first seat plate assembly and the second seat plate assembly are rotatable relative to each other about a rotation axis, such that the engaging base assembly has an unfolded state and a folded state. When the engaging base assembly is in the unfolded state, the engaging base assembly is adapted to support the object, and the at least one locking member is adapted to lock the object.

Further, the seat plate assembly is mounted on a foldable connecting assembly. The connecting assembly includes the rotation axis. An unfolded state of the connecting assembly corresponds to the unfolded state of the engaging base assembly, and a folded state of the connecting assembly corresponds to the folded state of the engaging base assembly.

Further, the connecting assembly includes: a first coupling member to which the first seat plate assembly is mounted; an auxiliary support member to which the second seat plate assembly is mounted; and the first coupling member and the auxiliary support member being pivotally connected via a pivot shaft. A centerline of the pivot shaft forms the rotation axis.

Further, the first coupling member includes two first tubes disposed in parallel. The auxiliary support member includes two second tubes disposed in parallel. Each of the first tubes is pivotally connected to an adjacent one of the second tubes through the pivot shaft. The first seat plate assembly is connected between the two first tubes and extends in a first direction. The second seat plate assembly is connected between the two second tubes and extends in the first direction. When the connecting assembly is in the unfolded state, the first seat plate assembly and the second seat plate assembly are spaced apart in a second direction. The first direction and the second direction are not parallel to each other.

Further, when the connecting assembly is in the unfolded state, an angle between the first tube and the second tube adjacent to the first tube is substantially 180 degrees; and when the connecting assembly is in the folded state, the angle between the first tube and the second tube adjacent to the first tube is an acute angle. Additionally/alternatively, the first seat plate assembly is proximate to the pivot shaft, and the second seat plate assembly is far away from the pivot shaft. When the connecting assembly is in a folded state, positions of the first seat plate assembly and the second seat plate assembly are staggered from each other.

Further, sleeves are respectively provided at two ends of the first seat plate assembly. Each of the sleeves is sleeved on a corresponding one of the first tubes. The pivot shaft extends through the sleeve.

Further, the first seat plate assembly has at least one first engaging channel, each of which extends in a second direction. The first locking mechanism has at least one first locking member, each of which moves in a first direction to switch to the first locked position or the first unlocked position. When the first locking member is at the first locked position, the first locking member extends into the corresponding first engaging channel. When the first locking member is at the first unlocked position, the first locking member retracts from the corresponding first engaging channel. The second seat plate assembly has at least one second engaging channel, each of which extends in the second direction. The second locking mechanism has at least one second locking member, each of which moves in the first direction to switch to the first locked position or the first unlocked position. When the second locking member is at the first locked position, the second locking member extends into the corresponding second engaging channel. When the second locking member is at the first unlocked position, the second locking member retracts from the corresponding second engaging channel. The first direction and the second direction are not parallel to each other.

Further, the first locking mechanism includes two first locking members. The two first locking members are connected by a first linkage assembly. The first linkage assembly controls the two first locking members to move synchronously such that the two first locking members are synchronously switched between the first locked position and the first unlocked position. Additionally/alternatively, the second locking mechanism includes two second locking members. The two second locking members are connected by a second linkage assembly. The second linkage assembly controls the two second locking members to move synchronously such that the two second locking members are synchronously switched between the first locked position and the first unlocked position.

Further, the at least one first locking member is connected to the at least one second locking member via at least one linkage member. The first locking member and the second locking member that are connected to a same linkage member are synchronously switched between the first locked position and the first unlocked position. The first locking member and the second locking member that are connected to the same linkage member move in opposite directions.

Further, the first seat plate assembly is connected to a first pivot base, the second seat plate assembly is connected to a second pivot base. The first pivot base and the second pivot base are pivotally connected to each other and the rotation axis is formed. A moving direction of the first locking member, a moving direction of the second locking member, and the rotation axis are parallel to one another.

Further, the first seat plate assembly is mounted on a first support frame. The first support frame is connected to the first pivot base. The second seat plate assembly is mounted on a second support frame. The second support base is connected to the second pivot base. The first pivot base and the second pivot base are connected to a mounting base. The mounting base is configured to be detachably connected to a frame.

In another aspect, the present application further provides a wheeled movable device, including a frame and the engaging base assembly as described above.

Further, the frame is provided with a storage rack. The storage rack has at least one receiving cavity. An opening of the at least one receiving cavity is provided with at least one clamping portion. The clamping portion is made of an elastic material.

In another aspect, the present application further provides a wheeled movable device, including a frame and a connecting assembly. The frame includes: a front support bar fitted with a front wheel; a rear support bar fitted with a rear wheel; and an upper support bar connected to a handlebar. An upper end of the front support bar, an upper end of the rear support bar and a lower end of the upper support bar are pivotally connected via a pivot portion. The connecting assembly is pivotally connected to the frame. The connecting assembly is folded as the frame is folded.

Further, the connecting assembly includes: a first coupling member, a front end of the first coupling member being pivotally connected to a first pivot point of the front support bar; an auxiliary support member, a front end of the auxiliary support member being pivotally connected to a second pivot point of the first coupling member, and the auxiliary support member being pivotally connected to a third pivot point of the rear support bar; a linking element, an upper end of the linking element being pivotally connected to a fourth pivot point of the upper support bar, and a lower end of the linking element being pivotally connected to a fifth pivot point of the auxiliary support member. When the frame is in an unfolded state, the first coupling member and the auxiliary support member are unfolded, and the second pivot point is positioned between the first pivot point and the third pivot point, and the fifth pivot point is positioned between the second pivot point and the third pivot point; when the frame is in a folded state, the first coupling member and the auxiliary support member are folded.

Further, when the frame is unfolded, the first coupling member and the auxiliary support member are disposed horizontally. The second pivot point, the third pivot point and the fifth pivot point are substantially on a straight line.

Further, the connecting assembly further includes a seat plate support member. The seat plate support member is connected to the auxiliary support member and capable of moving synchronously with the auxiliary support member. The seat plate support member is fitted with an engaging base assembly. The engaging base assembly is configured to be engaged with the carrier.

Further, the seat plate support member is disposed on an inner side of the auxiliary support member. A rear end of the first coupling member is positioned between the seat plate support member and the auxiliary support member. Additionally/alternatively, the engaging base assembly is mounted on the seat plate support member. The engaging base assembly includes a plurality of engagement points.

Further, an engaging base assembly is mounted on the auxiliary support member. The engaging base assembly includes a plurality of engagement points.

Further, the linking element has an approximately S-shaped structure. The approximately S-shaped structure has a first section, a second section and a third section in sequence.

Further, an engaging base assembly is mounted on the connecting assembly. The engaging base assembly includes a seat plate assembly configured to receive and support the carrier. The seat plate assembly has a first extension and/or a second extension. The first extension extends rearwardly from the seat plate assembly. The second extension extends forwardly from the seat plate assembly.

Further, an engaging base assembly is mounted on the connecting assembly. The engaging base assembly includes a plurality of engagement points. When the frame is folded, the front support bar, the rear support bar and the upper support bar approach each other, and the connecting assembly drives the engaging base assembly to pivot, such that a front end of the engaging base assembly pivots downwardly and a rear end of the engaging base assembly pivots upwardly.

Further, an engaging base assembly is mounted on the connecting assembly. The engaging base assembly includes: a seat plate assembly configured to receive an obj ect thereon; a locking mechanism including at least one locking member. The at least one locking member is disposed on the seat plate assembly and is slidable between a first locked position and a first unlocked position. When the locking member is at the first locked position, the locking member is capable of locking the carrier; when the locking member is at the first unlocked position, the locking member is capable of unlocking the carrier.

In another aspect, the present application provides a wheeled movable device, including a frame. The frame includes: a front support bar fitted with a front wheel; rear support bars, each rear support bar being fitted with a rear wheel; and an upper support bar connected to a handlebar. An upper end of the front support bar, an upper end of the rear support bar and a lower end of the upper support bar are pivotally connected via a pivot portion. The wheeled movable device further includes an engaging base assembly mounted on the frame and configured to support and lock the carrier. When the frame is unfolded, a center of gravity of the engaging base assembly is offset towards the rear wheel relative to the pivot portion.

Further, when the frame is in an unfolded state, the center of gravity of the engaging base assembly is proximate to or positioned in a plane formed by the rear support bars.

Further, when the frame is in an unfolded state, the engaging base assembly is lower than the pivot portion.

**In** another aspect, the present application further provides a wheeled movable device, including: a frame; and an engaging base assembly mounted on the frame and extending in a left-right direction. The engaging base assembly includes a seat plate assembly configured to receive a carrier thereon and a locking mechanism including at least one locking member. The locking member is configured to lock the carrier. The frame includes a first crossbar and/or a second crossbar extending in the left-right direction. The first crossbar is positioned at a predetermined distance in front of the engaging base assembly. The first crossbar and the engaging base assembly collaboratively support the carrier. The second crossbar is positioned at a predetermined distance behind the engaging base assembly. The second crossbar and the engaging base assembly collaboratively support the carrier.

Further, the frame includes: a front support bar fitted with a front wheel; a rear support bar fitted with a rear wheel; a connecting assembly respectively connected to the front support bar and the rear support bar. The engaging base assembly is mounted on the connecting assembly. The front support bar includes the first crossbar. Additionally/alternatively, the connecting assembly includes the second crossbar. Additionally/alternatively, a position of the second crossbar in a front-rear direction is adjustable.

Further, the front support bar is pivotally connected to the rear support bar. The frame is foldable. The connecting assembly includes a first coupling member and an auxiliary support member. The first coupling member is pivotally connected to a first pivot point of the front supporting bar. A second pivot point of the first coupling member is pivotally connected to the auxiliary support member. The auxiliary support member is pivotally connected to a third pivot point of the rear supporting bar. When the frame is in an unfolded state, the first coupling member and the auxiliary support member are unfolded, and the second pivot point is positioned between the first pivot point and the third pivot point; when the frame is in a folded state, the first coupling member and the auxiliary support member are folded. The engaging base assembly is connected to the first coupling member or the auxiliary support member. The auxiliary support member includes the second crossbar.

Further, the engaging base assembly has a sleeve configured to be sleeved with the first coupling member or the auxiliary support member. A pivot shaft at the second pivot point extends through the sleeve.

Further, the frame further includes an upper support bar. A lower end of the upper support bar is pivotally connected to an upper end of the front support bar and an upper end of the rear support bar. An upper end of the upper support bar is connected to a handlebar. The connecting assembly further includes a linking element. An upper end of the linking element is connected to the upper support bar, and a lower end of the linking element is connected to the auxiliary support member.

Further, the first crossbar is provided with a first groove or a first positioning protrusion. Additionally/alternatively, the second crossbar is provided with a second groove or a second positioning protrusion. Additionally/alternatively, the engaging base assembly is provided with a third groove or a third positioning protrusion.

Further, the first crossbar is fitted with a first abutting member configured to abut against the carrier. Additionally/alternatively, the second crossbar is fitted with a second abutting member configured to abut against the carrier.

Further, the engaging base assembly includes at least one engaging channel extending in a front-rear direction. The at least one engaging channel is spaced apart and disposed in a row in a left-right direction. The at least one locking member is slidable in the left-right direction. The at least one locking member has a first locked position where the at least one locking member extends into the at least one engaging channel to lock the carrier, and a first unlocked position where the at least one locking member retracts from the at least one engaging channel to unlocking the carrier.

Further, the frame includes at least one wheel seat configured to be fitted with a front wheel or a rear wheel. At least one unlocking operating member slidably cooperates with the at least one wheel seat. The at least one unlocking operating member is connected to the at least one locking member via at least one traction rope to drive the at least one locking member to move to an unlocked position. The at least one unlocking operating member has an unlocking identification region. The unlocking identification region is configured to indicate that the at least one locking member is at a locked position or at the unlocked position.

Further, the engaging base assembly further includes at least one retaining mechanism. When the at least one locking member is driven to an unlocked position, the at least one retaining mechanism is configured to lock the at least one locking member at the unlocked position.

In addition, the present application provides a wheeled movable device, including: a frame; an engaging base assembly mounted on the frame and configured to be engaged with a carrier, the engaging base assembly including at least one locking member, and the at least one locking member having a locked position for locking the carrier and an unlocking position for unlocking the carrier; and an indicator device mounted on the frame and/or the engaging base assembly, and configured to indicate a working state of the wheeled movable device. The working state includes whether the engaging base assembly is engaged with the carrier, and/or whether the at least one locking member locks the carrier.

Further, the engaging base assembly includes at least one engaging channel configured to be engaged with an engaging member of the carrier. The indicator device includes a first indicator device. The first indicator device is configured to indicate whether the at least one engaging channel is engaged with at least one engaging member.

Further, the first indicator device includes: a movable member mounted in a sliding channel in communication with each engaging channel, the movable member having an abutting end that is adapted to extend into the engaging channel; a sliding member operably connected to the movable member and having an engaging indication region. When each engaging member is engaged in the respective engaging channel, the abutting end is pressed by the engaging member and withdraws from the engaging channel, such that the movable member drives the sliding member to slide, so as to change a position of the engaging indication region.

Further, the frame includes a hollow bar. The sliding member is slidable in the bar. The bar is provided with an observation hole for observing the engaging indication region. The first indicator device further includes a pulling wire. The pulling wire is disposed between the sliding member and the movable member.

Further, the first indicator device further includes a first reset member. The first reset member abuts against the sliding member and is configured to drive the sliding member to reset, such that the pulling wire drives the abutting end to extend into the engaging channel.

Further, the movable member has a connecting portion positioned outside the sliding channel. The pulling wire is supported by a guiding bracket positioned outside the sliding channel and is connected to the connecting portion. A moving direction of the pulling wire between the connecting portion and the guiding bracket is parallel to the sliding channel.

Further, the movable member has an engaging end away from the abutting end. When the engaging channel is engaged with the engaging member and the locking member moves to the unlocked position, the engaging end is engaged with the locking member, and lock the engaging member at the unlocked position.

Further, the indicator device includes a second indicator device. The second indicator device is configured to indicate whether the at least one locking member is at the locked position or at the unlocked position.

Further, the second indicator device includes at least one unlocking operating member. The at least one unlocking operating member is operably connected to the at least one locking member. The at least one unlocking operating member has an unlocking identification region. The unlocking identification region is configured to indicate a position of the at least one locking member.

Further, the wheeled movable device further includes at least one retaining mechanism. When the at least one locking member is driven to the unlocked position, the at least one retaining mechanism is configured to retain the at least one locking member at the unlocked position such that the respective unlocking operating member is retained at an unlocked position of unlocking the locking member.

Further, the engaging base assembly includes a seat plate assembly configured to receive a carrier thereon. The at least one locking member and the at least one unlocking operating member are disposed on the seat plate assembly. The at least one unlocking operating member and/or the at least one locking member is provided with a second driving inclined surface. The at least one unlocking operating member and the at least one locking member are operably connected via the second driving inclined surface, such that a moving direction of each unlocking operating member is perpendicular to a moving direction of each locking member.

Further, the frame includes a wheel seat configured to be fitted with a front wheel or a rear wheel. The at least one unlocking operating member is slidably mounted to the wheel seat, and is connected to the at least one locking member by at least one traction rope.

Further, the engaging base assembly includes at least two locking members. The at least two locking members are connected by a linkage device. The linkage device allows the at least two locking members to move synchronously to the unlocked position. The wheeled movable device further includes an unlocked state synchronization mechanism and at least two unlocking operating members. The at least two unlocking operating members are operably connected to the at least two locking members respectively. The unlocked state synchronization mechanism allows the at least two unlocking operating members to be synchronically in a state of unlocking the at least two locking members.

Further, the frame includes a wheel seat configured to be fitted with a front wheel or a rear wheel. The at least one unlocking operating member is slidably mounted to the wheel seat, and is connected to the at least one locking member by at least one traction rope. Each of the at least two unlocking operating members is operably connected to an end of a respective one of the at least two traction ropes by a first driving inclined surface. The unlocked state synchronization mechanism includes at least two second reset members. Each second reset member abuts against the end of the respective traction rope to push the end of the traction rope to move away from the first driving inclined surface.

In another aspect, the present application further provides a wheeled movable device, including: a frame including at least two wheel seats configured to be fitted with front wheels or rear wheels; and an engaging base assembly. The engaging base assembly includes: a seat plate assembly configured to receive a carrier thereon; a locking mechanism including at least two locking members, the at least two locking members being disposed on the seat plate assembly and is slidable between a locked position and an unlocked position, when the locking members are at the locked position, the locking members being capable of locking the carrier, when the locking members are at the unlocked position, the locking members being capable of unlocking the carrier; and a linkage device connected to the at least two locking members, so as to allow the at least two locking members to move synchronously to the unlocked position. The wheeled movable device further includes at least two unlocking operating members that are slidably mounted on the at least two wheel seats respectively, the at least two unlocking operating members being connected to the at least two locking members respectively by at least two traction ropes; and an unlocked state synchronization mechanism allowing the at least two unlocking operating members to be synchronically in a state of unlocking the locking member.

Further, the at least two locking members are connected via a linkage device. When any one of the locking members is subjected to force and moves towards the unlocked position, the linkage device drives another of the locking members to move towards the unlocked position synchronously.

Further, the locking mechanism includes two locking members. The linkage device includes a linkage assembly connected between the two locking members. The linkage assembly allows the two locking members to synchronously move in opposite directions.

Further, each of the at least two unlocking operating members has a first driving inclined surface. Each of the at least two unlocking operating members is operably connected to an end of a respective one of the at least two traction ropes by the first driving inclined surface. The unlocked state synchronization mechanism includes at least two second reset members. Each second reset member abuts against the end of the respective traction rope to push the end of the traction rope to move away from the first driving inclined surface.

Further, the wheel seat is provided with a first guiding inclined surface therein. An angle is formed between the first guiding inclined surface and the first driving inclined surface. The end of the traction rope abuts against the first driving inclined surface and the first guiding inclined surface within a range of the angle.

Further, the wheeled movable device further includes a retaining mechanism. When the locking member is driven to the unlocked position, the retaining mechanism is configured to lock the locking member at the unlocked position such that the respective unlocking operating member is retained at a second unlocked position of unlocking the locking member.

In another aspect, the present application further provides a support frame for supporting a seat plate assembly. The support frame includes a longitudinal bar, a connecting bar and a shock-absorbing bar that are connected into a triangular structure. The longitudinal bar is disposed under the seat plate assembly and fixedly connected to the seat plate assembly. A first end of the connecting bar is connected to a first end of the longitudinal bar, and a second end of the connecting bar is connected to a first end of the shock-absorbing bar. A second end of the shock-absorbing bar is connected to the longitudinal bar. The shock-absorbing bar is elastic to provide buffering support to the seat plate assembly.

Further, the support frame further includes a first connecting component and a second connecting component. A first end of the first connecting component and a first end of the second connecting component are respectively pivotally connected to a second end of the connecting bar. A second end of the first connecting component, a second end of the second connecting component and the first end of the connecting bar are respectively pivotally connected to different bars of the frame that are foldable relative to each other.

Further, two support frames are provided. The two support frames are disposed on left and right sides of the seat plate assembly. A first connecting bar is connected between longitudinal bars of the two support frames. Additionally/alternatively, a second connecting bar is connected between two connecting bars of the two support frames.

Further, the longitudinal bar includes a limiting finger disposed at the first end of the longitudinal bar. The limiting finger limits an angle by which the longitudinal bar pivots downwardly relative to the connecting bar by abutting against the connecting bar.

Further, the longitudinal bar includes a limiting protrusion disposed at the first end of the longitudinal bar. The limiting protrusion limits an angle by which the longitudinal bar pivots upwardly relative to the connecting bar by abutting against the connecting bar.

Further, the support frame further includes a limiting member. A first end of the limiting member is slidably connected to the longitudinal bar, and a second end of the limiting member is pivotally connected to the connecting bar.

In another aspect, the present application further provides a locking mechanism, including: two first locking members moving in opposite directions to move to a locked position or an unlocked position; and a linkage assembly including a fixed connection point between the two first locking members, and two pivot shafts positioned on two sides of the fixed connection point. The linkage assembly is pivotally connected to the two first locking members via the two pivot shafts; the linkage assembly is configured to cause the two pivot shafts to move in opposite directions when any one of the first locking members moves, such that the two first locking members move synchronously in opposite directions.

Further, the linkage assembly includes a four-bar linkage mechanism.

Further, the linkage assembly includes a first linking rod, a second linking rod, a third linking rod, and a fourth linking rod. The first linking rod, the second linking rod, the third linking rod, and the fourth linking rod are connected in pairs to form four connection points. One of the four connection points is the fixed connection point, one of the four connection points opposed to the fixed connection point is a central connection point. Two of the first linking rod, the second linking rod, the third linking rod and the fourth linking rod that are connected to the central connection point are respectively connected to the two first locking members. A line connecting the fixed connection point and the central connection point is perpendicular to moving directions of the two first locking members.

Further, the locking mechanism further includes two second locking members. The two second locking members are parallel to the two first locking members. One of the two first locking members and one of the two second locking members are positioned on a diagonal line and connected by a linkage member.

Further, the linkage member is a link rod or a traction member.

Further, the linkage member is a link rod. The two first locking members are connected to the two second locking members by two link rods respectively. The two link rods are pivotally connected to each other at an intersection therebetween.

In another aspect, the present application further provides a retaining mechanism. The retaining mechanism is configured to retain a locking member that is slidable between a locked position and an unlocked position, at the unlocked position. The locking member is mounted on a seat plate assembly. The retaining mechanism includes: a movable member mounted in a sliding channel of the seat plate assembly, the movable member having an abutting end and an engaging end away from the abutting end; the abutting end being capable of be pressed by a carrier placed on the seat plate assembly, the locking member being configured to lock the carrier; and a reset device configured to drive the abutting end to move in a direction away from the engaging end. When the carrier is locked by the locking member, the pressing end is pressed by the carrier and moves towards the engaging end; when the locking member moves to the unlocked position, the engaging end is engaged with the locking member, to lock the locking member at the unlocked position.

Further, the engaging end is provided with a first buckling portion, and the locking member is provided with a second buckling portion. The first buckling portion is engaged with the second buckling portion to lock the locking member at the unlocked position.

Further, the locking member is provided with an elastic arm, and the second buckling portion is disposed on the elastic arm. Additionally/alternatively, one of the first buckling portion and the second buckling portion is an engaging groove, and another of the first buckling portion and the second buckling portion is a wedge-shaped step.

Further, the locking member is provided with a matching portion, and the movable member has a limiting portion positioned outside the sliding channel. When the carrier does not press the movable member, the reset device drives the movable member to move, such that the limiting portion moves to a moving path of the locking member and abuts against the matching portion, to retain the locking member at the unlocked position.

Further, when the carrier presses the pressing end of the movable member downwardly, the limiting portion moves out of the moving path of the locking member to allow the locking member to move to the locked position.

Further, the locking member has a recess. The matching portion is formed on a wall of the recess.

### BRIEF DESCRIPTION OF THE DRAWINGS

In order to more clearly illustrate the technical solutions in the embodiments of the present application or prior art, the drawings required to be used in the description of the embodiments or the prior art will be briefly introduced below. Apparently, the drawings described below are only for some embodiments of the present application. For ordinary skills in the art, other drawings may be obtained based on these drawings without creative efforts.
FIG. 1 to FIG. 4 schematically illustrate a wheeled movable device according to an embodiment of the present application, in which a box body of a carrier is removed in FIG. 3 and FIG. 4 to show a connection between a bracket device of the carrier and a locking mechanism;
FIG. 5 schematically shows a frame according to an embodiment of the present application;
FIG. 6 to FIG. 8 schematically illustrate an engaging base assembly according to an embodiment of the present application;
FIG. 9 schematically shows a support structure according to an embodiment of the present application;
FIG. 10 and FIG. 11 schematically show a support structure according to another embodiment of the present application;
FIG. 12 to FIG. 14 schematically illustrate a frame provided with an engaging base assembly according to an embodiment of the present application;
FIG. 15 schematically shows a frame provided with a support structure according to an embodiment of the present application;
FIG. 16 and FIG. 17 schematically illustrate a frame provided with an engaging base assembly according to an embodiment of the present application, with the frame in the process of being folded;
FIG. 18 and FIG. 19 schematically show a frame provided with an engaging base assembly according to an embodiment of the present application, with the frame in a fully folded state;
FIG. 20 and FIG. 21 schematically illustrate an engaging base assembly according to an embodiment of the present application, with an upper housing of a seat plate assembly being removed in FIG. 20 to illustrate a locking mechanism;
FIG. 22 and FIG. 23 schematically illustrate a locking mechanism according to an embodiment of the present application;
FIG. 24 schematically illustrates a wheeled movable device according to an embodiment of the present application, with a box body of a carrier being removed to show a connection between a bracket device of the carrier and a locking mechanism;
FIG. 25 and FIG. 26 schematically illustrate a locking mechanism and a carrier placed thereon according to an embodiment of the present application;
FIG. 27 and FIG. 28 schematically illustrate an engaging base assembly according to another embodiment of the present application, with an upper housing of a seat plate assembly being removed in FIG. 27 to illustrate a locking mechanism;
FIG. 29 schematically illustrates an engaging base assembly provided with a retaining mechanism according to an embodiment of the present application, with an upper housing of a seat plate assembly being removed to illustrate the retaining mechanism;
FIG. 30 schematically shows a sectional view of the retaining mechanism taken along a line B3-B3 of FIG. 29, with a cross- section of the seat plate assembly being correspondingly shown to illustrate a structural relationship between the retaining mechanism and the seat plate assembly;
FIG. 31 and FIG. 32 schematically show sectional views of a retaining mechanism according to an embodiment of the present application, with a carrier placed above the seat plate assembly;
FIG. 33 schematically shows a sectional view of a retaining mechanism according to an embodiment of the present application;
FIG. 34 shows a perspective schematic view of a wheeled movable carrier according to an embodiment of the present application;
FIG. 35 shows a perspective schematic view of a frame according to an embodiment of the present application;
FIG. 36 shows a perspective schematic view of the frame shown in FIG. 35 from another perspective;
FIG. 37 shows a perspective schematic view of an engaging base assembly according to an embodiment of the present application;
FIG. 38 shows a perspective schematic view of the engaging base assembly shown in FIG. 37 with a seat plate assembly removed;
FIG. 39 shows a perspective schematic view of the frame shown in FIG. 35 and a seat plate support member mounted on the frame;
FIG. 40 shows a perspective view of the frame and the seat plate support member shown in FIG. 39 from another perspective;
FIG. 41 shows a perspective schematic view of a frame and an engaging base assembly mounted on the frame according to an embodiment of the present application;
FIG. 42 shows a perspective schematic view of the frame and the engaging base assembly shown in FIG. 41 from another perspective;
FIG. 43 shows a side view of the wheeled movable carrier shown in FIG. 34;
FIG. 44 shows a front view of the wheeled movable carrier shown in FIG. 43 with a carrier removed;
FIG. 45 shows a side view of the frame and the engaging base assembly shown in FIG. 41;
FIG. 46 shows a side view of the frame and the engaging base assembly shown in FIG. 45 in the process of being folded;
FIG. 47 shows a side view of the frame and the engaging base assembly shown in FIG. 45 after being fully folded;
FIG. 48 shows a front view of the frame and the engaging base assembly shown in FIG. 47;
FIG. 49 schematically shows a perspective view of a wheeled movable device according to an embodiment of the present application;
FIG. 50 schematically shows a perspective view of a frame and an engaging base assembly in FIG. 49;
FIG. 51 schematically shows a top view of the frame and the engaging base assembly shown in FIG. 50;
FIG. 52 schematically shows a side view of the frame and the engaging base assembly shown in FIG. 50 in a state between an unfolded state and a folded state;
FIG. 53 schematically shows a side view of the frame and the engaging base assembly shown in FIG. 50 in the folded state;
FIG. 54 schematically shows a sectional view of the engaging base assembly taken along a line C1-C1 in FIG. 51, with a carrier locked by a locking mechanism;
FIG. 55 schematically shows a bottom perspective view of the engaging base assembly in FIG. 50, with a lower housing omitted;
FIG. 56 schematically shows a top perspective view of the engaging base assembly in FIG. 50, with an upper housing omitted;
FIG. 57 schematically shows a perspective view of the engaging base assembly in FIG. 50, with the upper housing and the lower housing omitted;
FIG. 58 schematically shows a sectional view of the engaging base assembly taken along a line C1-C1 in FIG. 51, with a locking member locked by the retaining mechanism;
FIG. 59 schematically shows a sectional view of the engaging base assembly taken along a line C1-C1 in FIG. 51, with the locking member separated from the retaining mechanism;
FIG. 60 schematically shows a partial sectional view taken along a line C2-C2 of FIG. 49;
FIG. 61 schematically shows a partial sectional view taken along a line C3-C3 of FIG. 51;
FIG. 62 schematically shows a side view of a locking member and a linkage assembly of the engaging base assembly in FIG. 57, with the locking member at a locked position;
FIG. 63 schematically shows a side view of the locking member and the linkage assembly of the engaging base assembly in FIG. 57, with the locking member at an unlocked position;
FIG. 64 schematically shows a perspective view of a modified embodiment of a storage rack mounted on a handlebar in FIG. 49;
FIG. 65 shows a top view of the handlebar and storage rack shown in FIG. 64;
FIG. 66 schematically shows an exploded view of the storage rack in FIG. 64;
FIG. 67 schematically shows a perspective view of a wheeled movable device according to some embodiments of the present application, the wheeled movable device having a support assembly according to some embodiments of the present application;
FIG. 68 schematically shows a perspective view of a frame and an engaging base assembly shown in FIG. 67;
FIG. 69 schematically shows a top view of some components of the frame and the engaging base assembly shown in FIG. 68;
FIG. 70 schematically shows a side view of the frame and engaging base assembly shown in FIG. 68;
FIG. 71 schematically shows a side view of the frame and the engaging base assembly shown in FIG. 68 that are in a state between an unfolded state and a folded state;
FIG. 72 schematically shows a side view of the frame and the engaging base assembly shown in FIG. 68 in the folded state;
FIG. 73 schematically shows a perspective view of the frame and the engaging base assembly shown in FIG. 68 in the folded state;
FIG. 74 schematically shows a perspective view of a first seat plate assembly shown in FIG. 68, with an upper housing omitted, and each first locking member at a locked position;
FIG. 75 schematically shows a bottom perspective view of some components of the frame and internal components of the first seat plate assembly shown in FIG. 68;
FIG. 76 schematically illustrates a configuration of a first locking members and a linkage assembly in FIG. 74, with each first locking member at an unlocked position;
FIG. 77 schematically shows a perspective view of a second seat plate assembly shown in FIG. 68, with an upper housing is omitted;
FIG. 78 schematically shows a sectional view taken along a line U5-U5 of FIG. 69, with a lower housing of a second seat plate assembly omitted, and each second locking member at a locked position;
FIG. 79 schematically shows a sectional view of the frame and the engaging base assembly shown in FIG. 68, with an unlocking operating member in a state where a locking member is not unlocked;
FIG. 80 schematically shows a sectional view of the frame and the engaging base assembly shown in FIG. 68, with the unlocking operating member in a state of unlocking the locking member;
FIG. 81 schematically shows a sectional view taken along a line U1-U1 of FIG. 69, with a first locking member at a locked position, and without an engaging member of the carrier entering a first engaging channel;
FIG. 82 schematically shows a sectional view taken along a line U2-U2 of FIG. 69, with the first locking member at the locked position, and a movable member of a retaining mechanism being pressed by the engaging member of the carrier;
FIG. 83 schematically shows a bottom perspective view of some components of a first seat plate assembly and a retaining mechanism shown in FIG. 68, with a first buckling portion moving to a moving path of a second buckling portion;
FIG. 84 schematically shows a sectional view taken along line U3-U3 of FIG. 83;
FIG. 85 schematically shows a bottom perspective view of some components of the first seat plate assembly and the retaining mechanism shown in FIG. 68, with the first buckling portion and the second buckling portion engaged with each other;
FIG. 86 schematically shows a bottom perspective view of some components of the first seat plate assembly and the retaining mechanism shown in FIG. 68, with the first buckling portion moving out of the moving path of the second buckling portion;
FIG. 87 schematically shows another side view of the frame and engaging base assembly shown in FIG. 68;
FIG. 88 schematically shows another perspective view of the frame and the engaging base assembly shown in FIG. 68;
FIG. 89 schematically shows a perspective view of a wheeled movable device according to some embodiments of the present application, the wheeled movable device having a support assembly according to other embodiments of the present application;
FIG. 90 schematically shows a perspective view of a frame and an engaging base assembly shown in FIG. 89;
FIG. 91 schematically shows a bottom perspective view of some components of the frame and internal components of a first seat plate assembly shown in FIG. 90, with each first locking member at a locked position;
FIG. 92 schematically shows a bottom perspective view of some components of the frame and internal components of the first seat plate assembly shown in FIG. 90, with each first locking member at an unlocked position;
FIG. 93 schematically shows a partial enlarged view of the first locking member shown in FIG. 92 being locked at the unlocked position by a retaining mechanism, with a limiting portion of the retaining mechanism abutting against a matching portion of the first locking member;
FIG. 94 schematically shows a sectional view taken along a line U6-U6of FIG. 90, with the first locking member at a locked position, an engaging member of a carrier entering a first engaging channel, and a limiting portion of the retaining mechanism separated from the matching portion of the first locking member;
FIG. 95 schematically shows a bottom perspective view of some components of the frame and internal components of the first seat plate assembly shown in FIG. 90, with the first locking member at a locked position, the engaging member of the carrier entering the first engaging channel, and the limiting portion of the retaining mechanism separated from the matching portion of the first locking member;
FIG. 96 schematically shows a partial enlarged view of some components in FIG. 95, with the first locking member at the unlocked position, the limiting portion of the retaining mechanism separated from the matching portion of the first locking member, and the engaging member of the carrier being ready to move out of the first engaging channel;
FIG. 97 schematically shows a sectional view taken along line U6-U6 of FIG. 90, with the engaging member of the carrier having been moved out of the first engaging channel, the limiting portion of the retaining mechanism abutting against the matching portion of the first locking member, and the first locking member locked at the unlocked position;
FIG. 98 schematically shows a bottom perspective view of some components of the frame shown and internal components of the first seat plate assembly in FIG. 90, with the engaging member of the carrier having been moved out of the first engaging channel, the limiting portion of the retaining mechanism abutting against the matching portion of the first locking member, and the first locking member locked at the unlocked position;
FIG. 99 schematically shows a sectional view of the frame shown in FIG. 90, with an unlocking operating member in a state where a locking member is not unlocked;
FIG. 100 schematically shows a perspective view of two unlocking operating members both in a state where the locking members are not unlocked;
FIG. 101 schematically shows a sectional view of the frame shown in FIG. 90, with the unlocking operating member in a state of unlocking the locking member;
FIG. 102 schematically shows a perspective view of two unlocking operating members both in a state where the locking members are unlocked;
FIG. 103 schematically shows a perspective view of a wheeled movable device according to some embodiments of the present application, the wheeled movable device having a support assembly according to some other embodiments of the present application;
FIG. 104 schematically shows a perspective view of a frame and a support assembly shown in FIG. 103;
FIG. 105 schematically shows a side view of the frame and the support assembly shown in FIG. 104 in a folded state;
FIG. 106 schematically shows a perspective view of the support assembly shown in FIG. 104;
FIG. 107 schematically shows a perspective view of some components of the support assembly shown in FIG. 106, with upper housings of a first seat plate assembly and a second seat plate assembly omitted;
FIG. 108 schematically shows an exploded view of the support assembly shown in FIG. 106;
FIG. 109 schematically shows an exploded view of a first pivot base and an unlocking member in FIG. 106;
FIG. 110 schematically shows a perspective view of a cover body and the unlocking member in FIG. 106;
FIG. 111 schematically shows another perspective view of the support assembly shown in FIG. 106;
FIG. 112 schematically shows a sectional view taken along line U4-U4 of FIG. 106, with the support assembly is in an unfolded state;
FIG. 113 schematically shows a view of the support assembly shown in FIG. 112 in a folded state; and
FIG. 114 schematically shows an exploded view of an unlocking operating member and a first locking member shown in FIG. 107.

### DETAILED DESCRIPTION

Technical solutions in the embodiments of the present application will be clearly and completely described below in conjunction with the drawings in the embodiments of the present application. Obviously, the described embodiments are only part of the embodiments of the present application, not all of the embodiments. Based on the embodiments in the present application, all other embodiments obtained by ordinary skills in the art without creative work are within the scope of protection of this application.

Hereinafter, the present application will be described in detail with reference to the accompanying drawings.

### First Embodiment

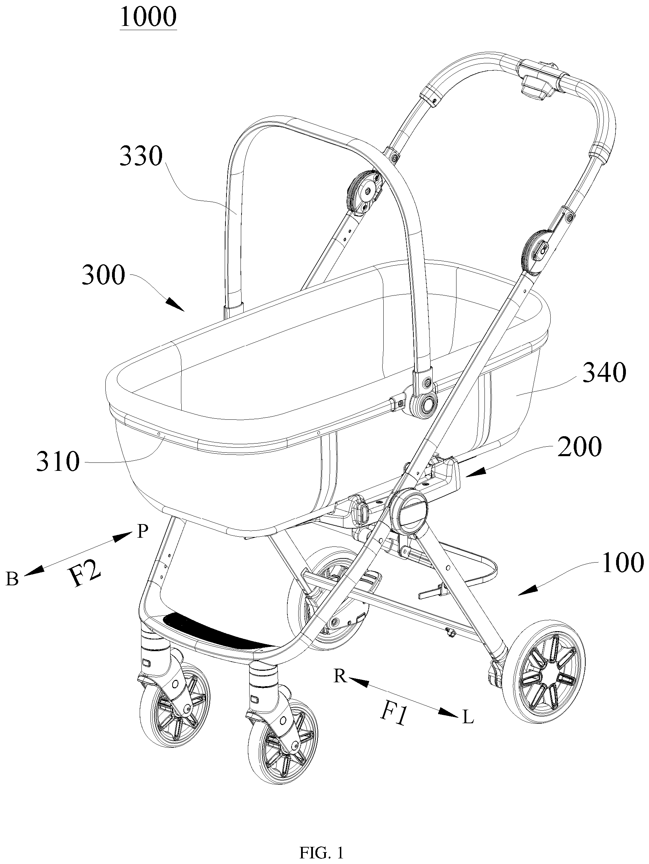

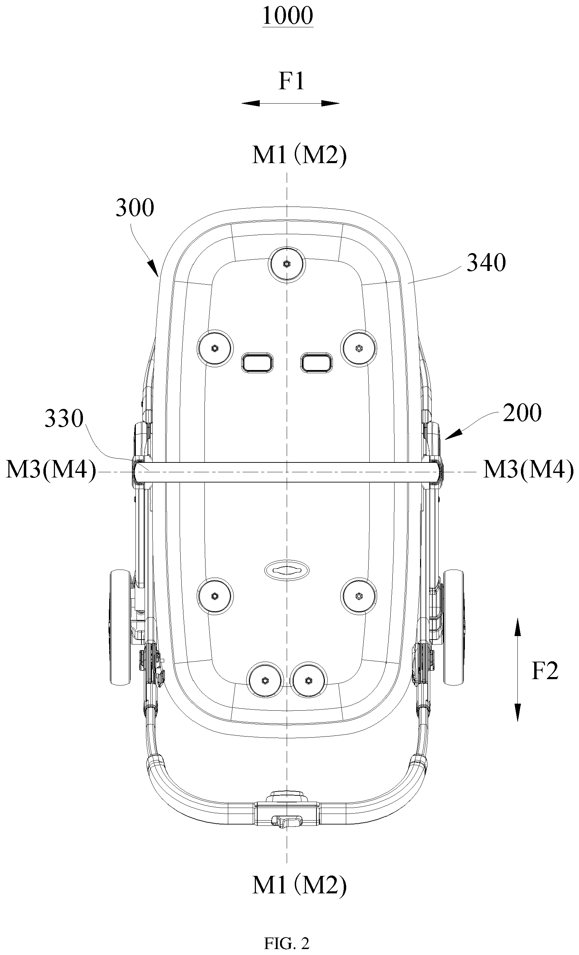

Referring to FIG. 1 and FIG. 2, which schematically illustrate a wheeled movable device 1000 according to some embodiments of the present application. FIG. 1 is a perspective view of the wheeled movable device 1000 in this embodiment, and FIG. 2 is a top perspective view of the wheeled movable device 1000.

As shown in FIG. 1, the wheeled movable device 1000 in this embodiment includes a frame 100, an engaging base assembly 200 and a carrier 300. The frame 1000 has a structure similar to a trolley, and the specific configuration thereof will be described below. The engaging base assembly 200 is mounted on the frame 1000, and can be locked with and unlocked from an object to be locked (also referred to as the "object to be engaged", hereinafter collectively referred to as the "object"), so that the object is firmly disposed thereon, thereby improving the safety of the object during movement. Moreover, by operating the engaging base assembly 200, the user can easily mount the object on the frame 100 or remove it from the frame 100.

In this embodiment, as shown in FIG. 1, the object may be the carrier 300. The carrier 300 may be, but is not limited to, a box-shaped structure. The carrier 300 is configured to carry infants or animals (such as pets, etc.) and can be mounted on the frame 100 by the engaging base assembly 200.

As shown in FIG. 2, the carrier 300 includes a handle 330 and a box body 340. The handle 330 is configured to lift the carrier 300. The box body 340 is configured to carry infants or animals. When the carrier 300 is mounted on the engaging base assembly 200, a longitudinal centerline M1-M1 of the carrier 300 and a longitudinal centerline M2-M2 of the engaging base assembly 200 are substantially on the same vertical plane. That is, the carrier 300 is substantially in symmetry relative to the longitudinal centerline M2-M2 of the engaging base assembly 200. It should be noted that the "longitudinal centerline" is a centerline perpendicular to a line connecting the connection positions between the two ends of the handle 330 and the carrier 300. The direction indicated by "F2" in FIG. 2 (i.e., the longitudinal direction F2, which may also be referred to as a front-rear direction or a second direction) is a longitudinal extension direction parallel to the longitudinal centerlines M1-M1 and M2-M2.

In some embodiments, as shown in FIG. 2, a transverse centerline M3-M3 of the carrier 300 and a transverse centerline M4-M4 of the engaging base assembly 200 are substantially on the same vertical plane. In this case, the carrier 300 is substantially centered relative to the engaging base assembly 200. It should be noted that the "transverse centerline" is a centerline parallel to the line connecting the connection positions between the two ends of the handle 330 and the carrier 300. The direction shown by "F 1" in FIG. 2 (i.e., the transverse direction F1, which may also be referred to as a left-right direction or a first direction) is a transverse extension direction parallel to the transverse centerlines M3-M3 and M4-M4. In some embodiments, a line connecting the two ends of the handle 330 is parallel to the transverse centerline M3-M3 of the carrier 300 and is positioned on the same vertical plane as the transverse centerline M3-M3, so that the user can keep the carrier 300 balanced when carrying it.

It should be noted that, unless otherwise clearly specified and limited, the orientational directional terms such as "front", "rear", "left", and "right" of the wheeled movable device 1000 and the frame 100 in various embodiments of the present application are based on the "frontward", "rearward", "leftward", and "rightward" directions of the wheeled movable device 1000 and the frame 100 in normal travel, and the arrows B and P in the figures schematically indicate the "frontward" and "rearward" directions, and the arrows L and R schematically indicate the "leftward" and "right" directions. These orientational terms are only used to make the description of the embodiments of the present application clearer, and are not used to improperly limit the protection scope of the present application.

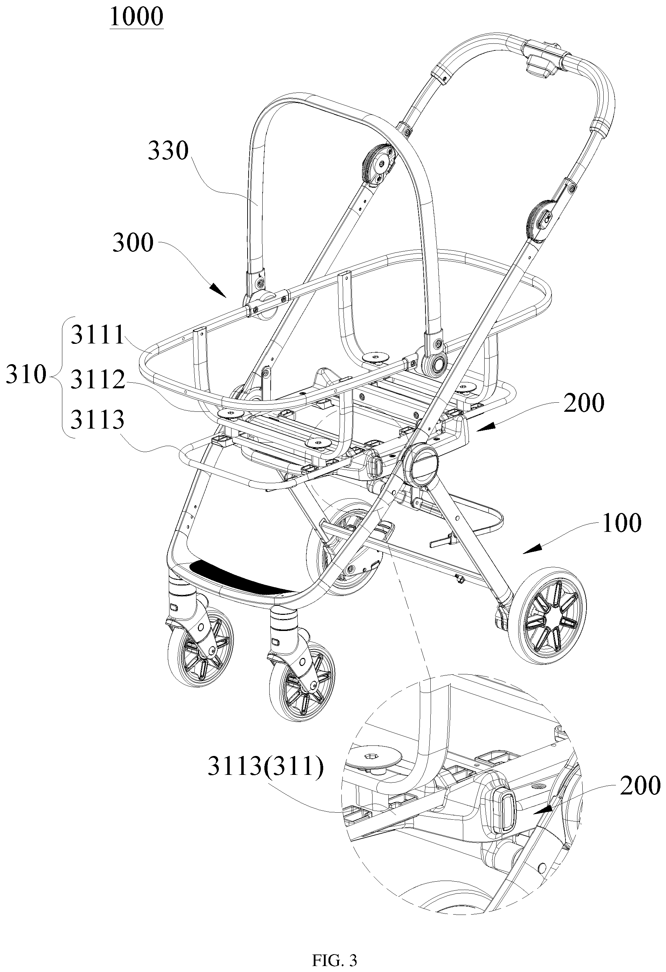

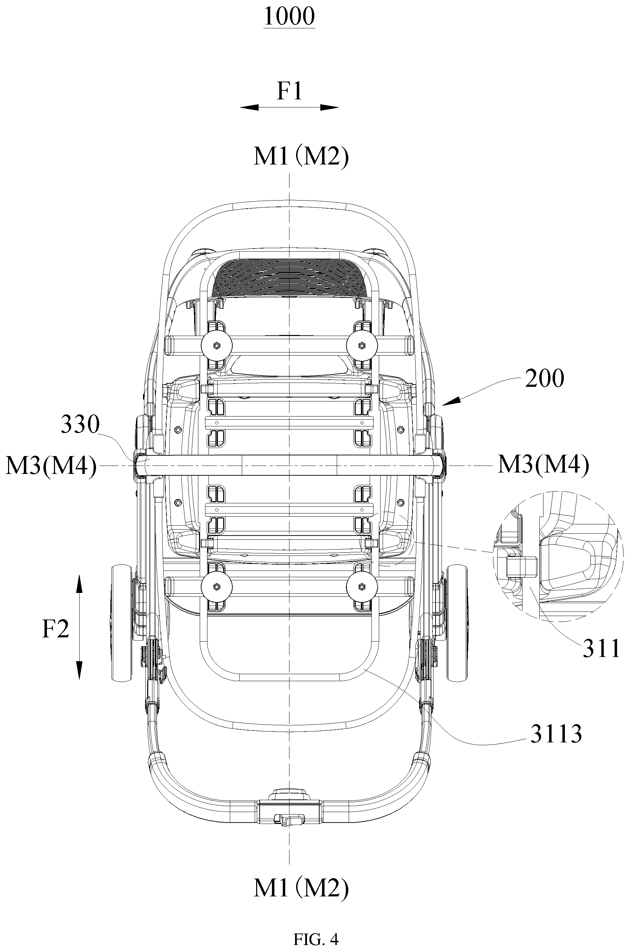

Referring to FIG. 3 and FIG. 4, FIG. 3 is a perspective view of the wheeled movable device 1000 with the box body 340 of the carrier 300 being removed, and FIG. 4 is a top perspective view of the wheeled movable device 1000 with the box body 340 being removed.

As shown in FIG. 3 and FIG. 4, the carrier 300 further includes a bracket device 310. The bracket device 310 includes a first bracket 3111, a second bracket 3112 and a third bracket 3113. The first bracket 3111 is positioned above the third bracket 3113. The second bracket 3112 is connected between the first bracket 311 and the third bracket 313. The bracket device 310 encloses a space for accommodating the box body 340. The handle 330 is connected to the first bracket 3111. The carrier 300 includes an engaging member 311, and more specifically, the third bracket 3113 of the bracket device 310 includes the engaging member 311. In some embodiments, the engaging member 311 is an annular structure (e.g., a substantially rectangular annular structure). Certainly, the configuration of the engaging member 311 is not limited thereto. When the carrier 300 is mounted on the engaging base assembly 200, the engaging member 311 is engaged with the engaging base assembly 200, so that the carrier 300 can be stably mounted on the frame 100 by the engaging base assembly 200.

In some embodiments, as shown in FIG. 4, the engaging base assembly 200 provides a plurality of engagement points, and one of the engagement points is illustrated in a partial enlarged view. When the carrier 300 is mounted on the engaging base assembly 200, the engaging member 311 is engaged with the engaging base assembly 200 at each engagement point. In some embodiments, the engaging base assembly 200, for example, provides four engagement points. The four engagement points are generally symmetrically distributed relative to the longitudinal centerline M1-M1 of the carrier 300 (and also the longitudinal centerline M2-M2 of the engaging base assembly 200), and symmetrically distributed relative to the transverse centerline M3-M3 of the carrier 300 (and also the transverse centerline M4-M4 of the engaging base assembly 200). In some embodiments, the four engagement points are centrally symmetrically disposed on the engaging base assembly 200.

Therefore, in the embodiment of the present application, the carrier 300 is positioned on the engaging base assembly 200 in such a way that the carrier 300 is symmetric in the left-right direction, so that the carrier 300 can be stably mounted on the engaging base assembly 200 and the frame 100. By reasonably setting the positions of the above-mentioned multiple engagement points of the engaging assembly 200, the user can easily place the carrier 300 on the frame 100 in such a way that the carrier 300 is symmetric in the left-right direction, and the carrier 300 is also at a suitable position of the frame 100 in the front-rear direction, so that the frame 100 can provide stable support for the carrier 300, which improves the overall stability of the wheeled movable device 1000, and enables the wheeled movable device 1000 to maintain balance during moving, while also having better impact resistance and safety.

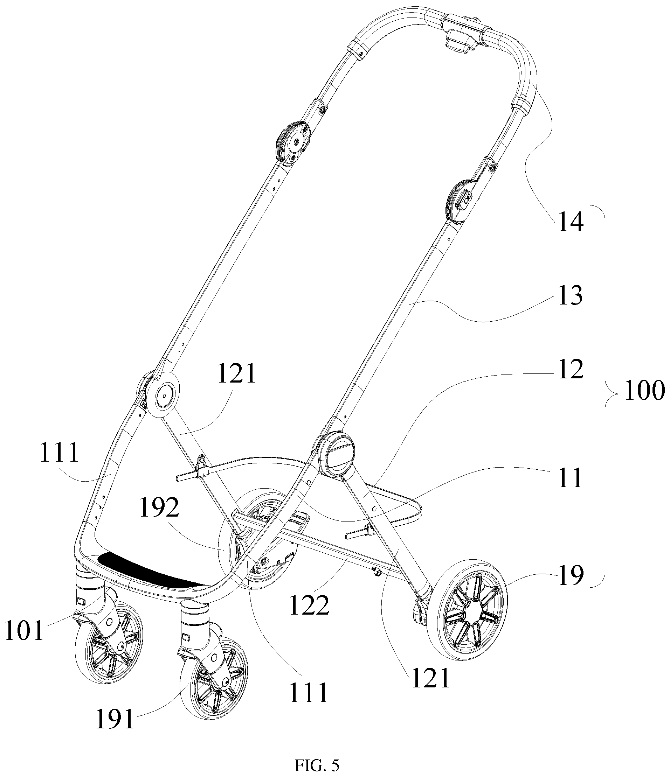

Referring to FIG. 5, the frame 100 according to some embodiments of the present application is schematically illustrated.

As shown in FIG. 5, the frame 100 in this embodiment includes a front support bar 11, a rear support bar 12, an upper support bar 13, a handlebar 14 and a wheel set 19. The wheel set 19 includes a front wheel 191 and a rear wheel 192. The front wheel 191 and rear wheel 192 are connected to the front support bar 11 and the rear support bar 12 respectively.

In some embodiments, the front support bar 11 may have a U-shaped structure, and include two bars 111 respectively positioned on the left and right sides and a first crossbar 101 connected between the two bars 111. The rear support bar 12 may include two parallel bars 121 and a rear crossbar 122 connected between the two bars 121. The upper ends of the bars 111 of the front support bar 11 are pivotally connected to the upper ends of the bars 121 of the rear support bar 12, respectively. At least one front wheel 191 is connected to the lower side of the front support bar 11. The lower ends of the two bars 122 of the rear support bar 12 are respectively connected to the corresponding rear wheels 192. As shown in FIG. 5, in this embodiment, two front wheels 191 are provided. The two front wheels 191 are symmetric in the left-right direction and pivotally disposed on the front support bar 11. As an example, the two front wheels 191 are universal wheels. The two rear wheels 192 are rotatably connected to the two bars 121 of the rear support bar 12 respectively, and can roll in the front-rear direction of the frame 100.

Although some embodiments of the present application have been set forth, the present application is not limited to the configurations and quantities of the above components. For example, in some other embodiments, the rear support bar 12 may have a U-shaped structure and be connected with two rear wheels 192. Alternatively, the front support bar 11 may also have a V-shaped or I-shaped structure, or only one front wheel 191 may be provided. In addition, the front wheel 192 may be a one-way wheel, or the rear wheel 192 may be a universal wheel.

In this embodiment, a distance between the two front wheels 191 is less than a distance between the two rear wheels 192, so as to improve the stability of the frame 100 and make the frame 100 easier to change its direction.

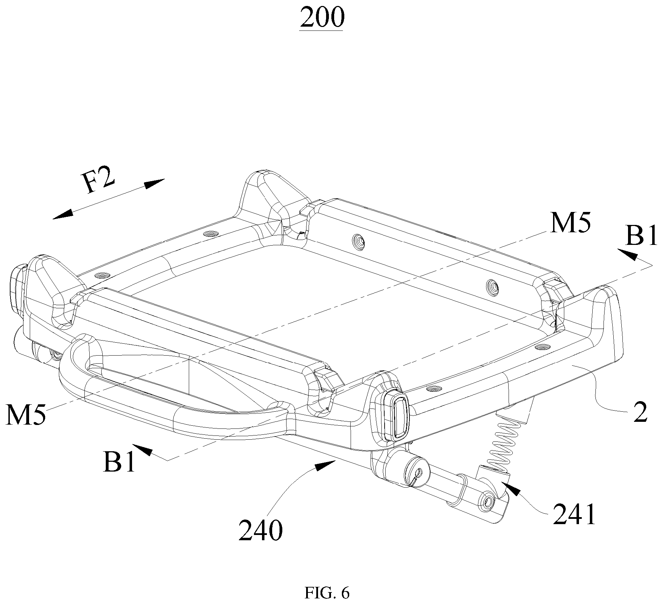

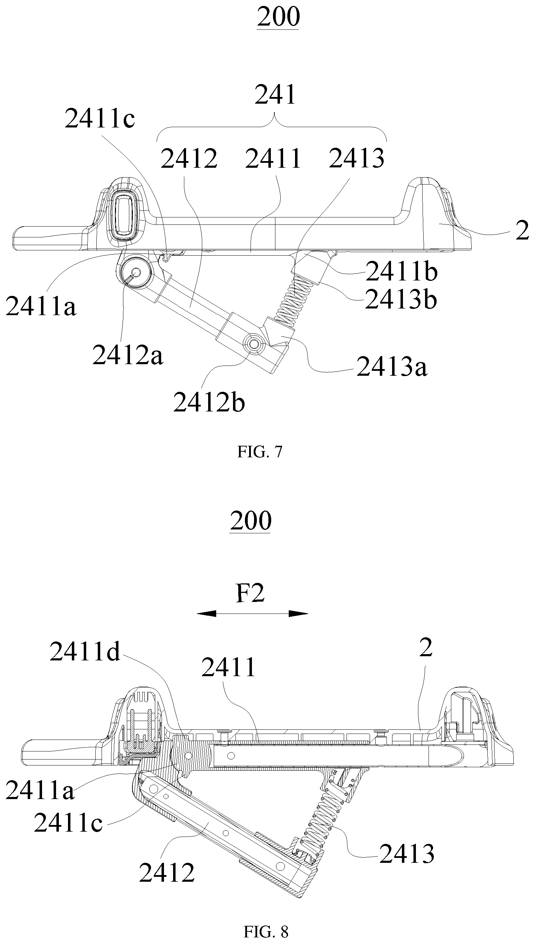

Referring to FIG. 6 to FIG. 8, the engaging base assembly 200 according to some embodiments of the present application is schematically illustrated. Specifically, FIG. 6 is a perspective view of the engaging base assembly 200, FIG. 7 is a side view of the engaging base assembly 200, and FIG. 8 is a sectional view taken along the section line B1 - B1 in FIG. 6.

As shown in FIG. 6, the engaging base assembly 200 includes a seat plate assembly (also referred to as a seat plate) 2, a locking mechanism and a support structure 240. The seat plate assembly 2 includes an upper housing and a lower housing. The locking mechanism is disposed in the seat plate assembly 2. In FIG. 6, the locking mechanism is shielded by the upper housing of the seat plate assembly 2, and the specific configuration of the locking mechanism will be described below.

In some embodiments, the support structure 240 may include two support frames 241. The two support frames 241 (only one support frame 241 is shown in FIG. 6, and another support frame 241 is shielded by the seat plate assembly 2) are respectively disposed at the left and right sides of the seat plate assembly 2. For example, the two support frames 241 are symmetrically disposed at both sides of the seat plate assembly 2 with respect to a longitudinal centerline M5-M5 of the seat plate assembly 2. It should be noted that the longitudinal centerline M5-M5 extends in the longitudinal direction F2 as shown in FIG. 6.

Further referring to FIG. 7 and FIG. 8, each support frame 241 includes a longitudinal bar 2411, a connecting bar 2412 and a shock-absorbing bar 2413. The longitudinal bar 2411, the connecting bar 2412 and the shock-absorbing bar 2413 are connected to one another to define a triangular structure. The longitudinal bar 2411 is disposed below the seat plate assembly 2 and is fixedly connected to the seat plate assembly 2 (e.g., the lower housing of the seat plate assembly 2). A first end 2412a of the connecting bar 2412 is pivotally connected to a first end 2411a of the longitudinal bar 2411 (as shown in FIG. 7), and a second end 2412b of the connecting bar 2412 is connected to the first end 2413a of the shock-absorbing bar 2413. A second end 2413b of the shock-absorbing bar 2413 is connected to a second end 2411b of the longitudinal bar 2411. For example, the connection position between the shock-absorbing bar 2413 and the longitudinal bar 2411 corresponds to the longitudinal middle and rear section of the seat plate assembly 2. In some embodiments, the shock-absorbing bar 2413 is elastic to provide buffer support to the seat plate assembly 2. For example, the shock-absorbing bar 2413 may be a compression spring, a torsion spring, a cylinder or other elastic structures.

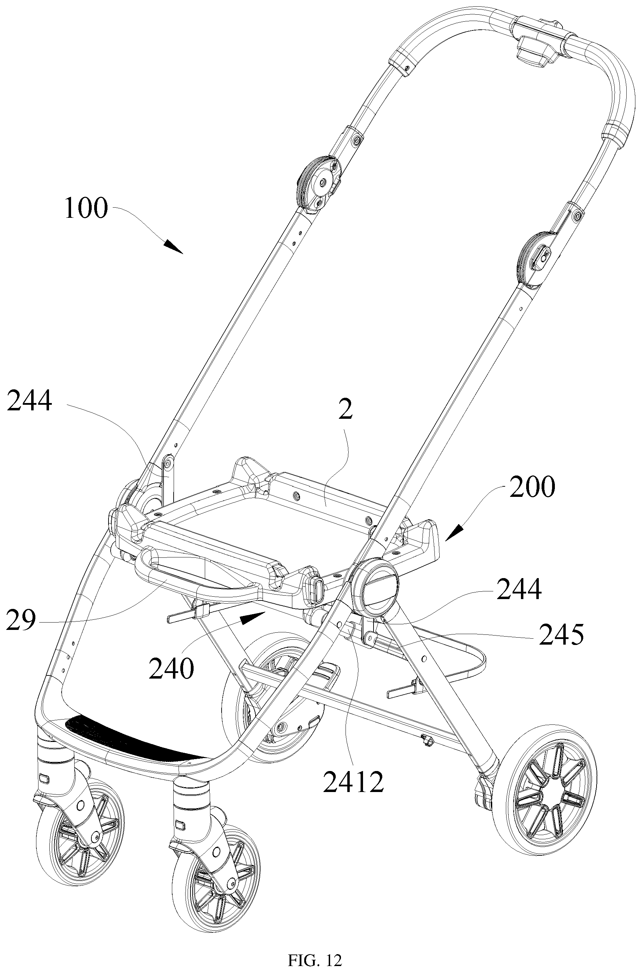

Through the triangular structure of the support frame 241, the engaging base assembly 200 can be stably disposed on the frame 1000 (not shown in FIG. 6 to FIG. 8, and the specific disposing method may be referred to the description of FIG. 12 to FIG. 15 below). By disposing the shock-absorbing bar 2413, when moving in a bumpy surface, the frame 1000 can provide a certain degree of cushioning for the object mounted on the seat plate assembly 2.

In this embodiment, the upper end of the shock-absorbing bar 2413 is connected to the second end 2411b of the longitudinal bar 2411 (corresponding to the middle and rear section of the seat plate assembly 2). The shock-absorbing bar 2413 has a better shock-absorbing stroke, thereby providing a better shock-absorbing effect. However, the present application is not limited to thereto. In other embodiments, by adjusting the length of the longitudinal bar 2411 to adjust the relative position relationship between the connection position of the shock-absorbing bar 2413 and the longitudinal bar 2411 and the seat plate assembly 2, the buffering capacity of the support frame 241 may be adjusted. For example, the connection position of the shock-absorbing bar 2413 and the longitudinal bar 2411 corresponds to the central position, the rear end, etc. of the seat plate assembly 2. Certainly, in some embodiments, the buffering capacity of the support frame 241 may also be adjusted by setting the angle between the connecting bar 2412 and the longitudinal bar 2411, the angle between the connecting bar 2412 and the shock-absorbing bar 2413, and/or the angle between the shock-absorbing bar 2413 and the longitudinal bar 2411 within a preset range, and adjusting the length of the connecting bar 2412. In some embodiments, when the shock-absorbing bar 2413 adopts a pressure spring, the elastic coefficient of the shock-absorbing bar 2413 may be adjusted to achieve a better shock-absorbing effect. For example, the elastic coefficient of the shock-absorbing bar 2413 may be changed by changing the spring pitch, diameter and material parameters of the compression spring. When the shock-absorbing bar 2413 adopts a cylinder, a better shock-absorbing effect may be achieved by changing the pressure strength of the cylinder.

In addition, as shown in FIG. 7 and FIG. 8, the longitudinal bar 2411 further includes a limiting finger 2411c. The limiting finger 2411c is disposed at the first end 2411a of the longitudinal bar 2411 and protrudes towards the connecting bar 2412 (protrudes downwardly). The limiting finger 2411c is configured to limit the angle by which the longitudinal bar 2411 pivots downwardly relative to the connecting bar 2412. When the wheeled movable device 1000 travels on a bumpy road, the shock-absorbing bar 2413 is deformed (e.g., shortened or bent) to provide a buffering effect, so that the longitudinal bar 2411 pivots downwardly relative to the connecting bar 2412. When the limiting finger 2411c disposed below the longitudinal bar 2411 abuts against the connecting bar 2412, the longitudinal bar 2411 may not continue to pivot downwardly (that is, the angle between the longitudinal bar 2411 and the connecting bar 2412 may not continue to decrease), thereby preventing the longitudinal bar 2411 from tilting too much with respect to the horizontal plane, and thereby preventing the seat plate assembly 2 and the objects disposed thereon from being tilted too much, thereby improving safety and travelling stability.

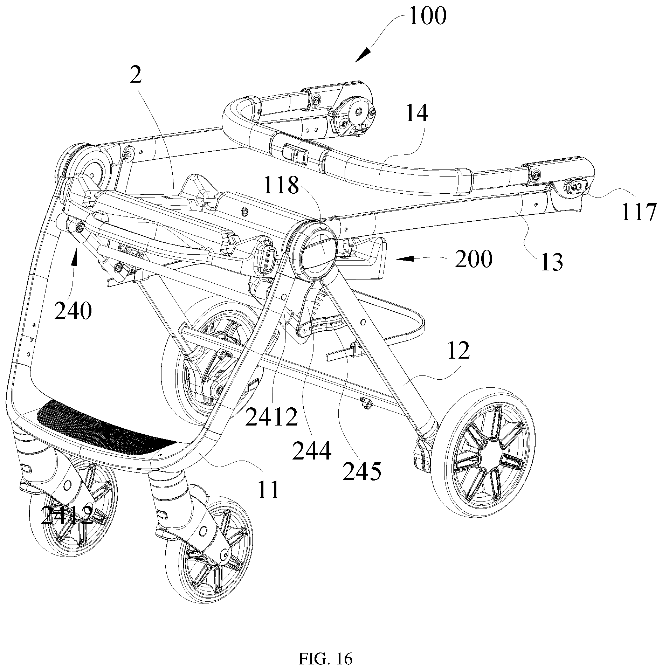

As shown in FIG. 8, in some embodiments, the longitudinal bar 2411 may further include a limiting protrusion 2411d. The limiting protrusion 2411d is disposed at the first end 2411a of the longitudinal bar 2411. The limiting protrusion 2411d and the limiting finger 2411c are, for example, positioned at opposite sides of the first end 2411a of the longitudinal bar 2411. The limiting protrusion 2411d, for example, protrudes upwardly. In some embodiments, the limiting protrusion 2411d is between the longitudinal bar 2411 and the upper housing of the seat plate assembly 2. The limiting protrusion 2411d is configured to limit the angle by which the longitudinal bar 2411 pivots upwardly relative to the connecting bar 2412. For example, as described above, when the wheeled movable device 1000 travels on a bumpy road, the longitudinal bar 2411 may pivot downwardly or upwardly relative to the connecting bar 2412 as the shock-absorbing bar 2413 is deformed or reset from its deformation. When the shock-absorbing bar 2413 is reset from its deformation, the shock-absorbing bar 2413 may apply a force to the longitudinal bar 2411 to cause the longitudinal bar 2411 to pivot upwardly. When the longitudinal bar 2411 pivots upwardly, the limiting protrusion 2411d can abut against the structure on the connecting bar 2412, thereby preventing the longitudinal bar 2411 and the seat plate assembly 2 from pivoting upwardly at too large an angle, thereby preventing the connection between the longitudinal bar 2411 and the connecting bar 2412 from breaking. In addition, after the seat plate assembly 2 and the frame 100 (not shown in FIG. 8) are folded as a whole (for the specific folding process, please refer to the description of FIG. 16 to FIG. 19 below), the user can lift the entire frame structure by lifting the front and rear ends of the seat plate assembly 2. In this case, the limiting protrusion 2411d can prevent the seat plate assembly 2 from turning outwardly due to the large force applied to the rear end of the seat plate assembly 2, thereby further improving the use safety and structural stability of the wheeled movable device 1000.

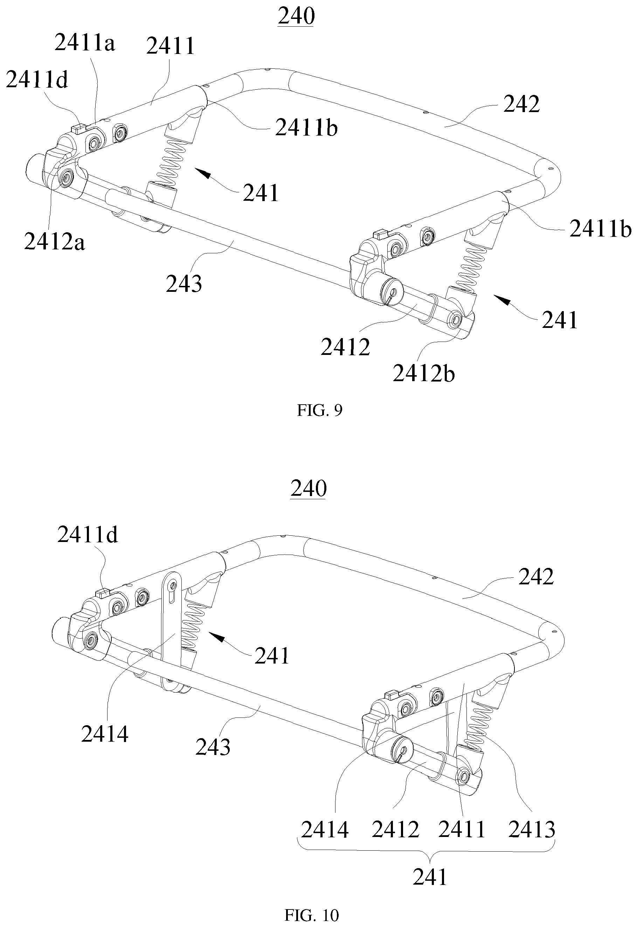

Referring to FIG. 9, a support structure 240 according to some embodiments of the present application is schematically illustrated.

In some embodiments, the support structure 240 further includes a crossbar or a U-shaped first connecting bar 242. The first connecting bar 242 is connected between the longitudinal bars 2411 of the two support frames 241. For example, as shown in FIG. 9, the first connecting bar 242 connects the second ends 2411b of the longitudinal bars 2411 of the two support frames 241 together. Optionally, the second ends 2411b of the longitudinal bars 2411 of the two support frames 241 are respectively sleeved on two ends of the first connecting bar 242. In other embodiments, the support structure 240 further includes a second connecting bar 243. The second connecting bar 243 is connected between the connecting bars 2412 of the two support frames 241. In some embodiments, the first connecting bar 242 is connected to or integrally formed with the first ends 2411a of the two longitudinal bars 2411, respectively, and the second connecting bar 243 is connected to or integrally formed with the second ends 2411b of the two longitudinal bars 2411, respectively. The first connecting bar 242, the two longitudinal bars 2411, and the second connecting bar 243 define a rectangular frame structure.

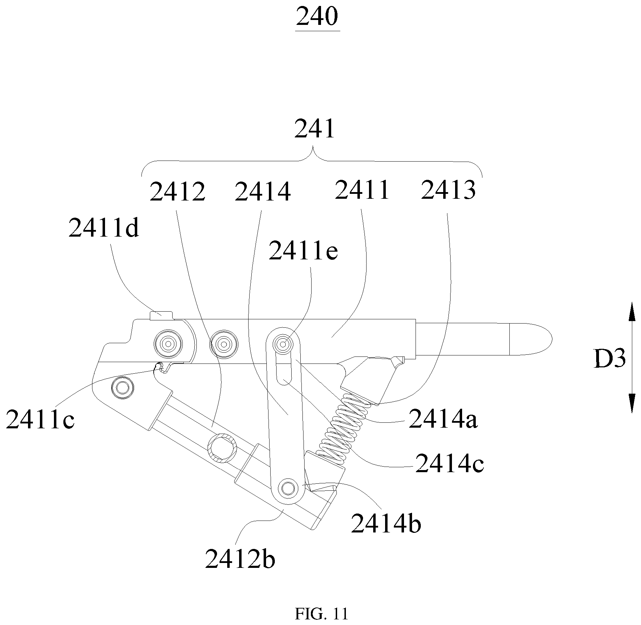

Referring to FIG. 10 and FIG. 11, the support structure 240 according to some other embodiments of the present application is schematically illustrated. FIG. 10 shows a perspective view of the support structure 240, and FIG. 11 shows a plan view of the support structure 240 viewed from the inside.

The support structure 240 shown in FIG. 10 has a similar configuration to the support structure 240 shown in FIG. 9, and also includes two support frames 241. Each support frame includes the longitudinal bars 2411, the connecting bar 2412 and the shock-absorbing bar 2413. The difference between the support structure 240 shown in FIG. 10 and the support structure 240 shown in FIG. 9 lies in that the support frame 241 may further include a limiting member 2414.

As shown in FIG. 11, a first end 2414a of the limiting member 2414 is slidably connected to the longitudinal bar 2411, and a second end 2414b of the limiting member 2414 is pivotally connected to the second end 2412b of the connecting bar 2412. In some embodiments, a limiting groove 2414c is provided at the first end 2414a of the limiting member 2414, and a pin 2411e is provided at the middle section of the longitudinal bar 2411. The limiting member 2414 can slide vertically relative to the longitudinal bar 2411 by the cooperation between the limiting groove 2414c and the pin 2411e.

Optionally, when the support structure 240 is in an initial state shown in FIG. 11, supported by the shock-absorbing bar 2413, the pin 2411e is positioned at the uppermost end of the limiting groove 2414c, and the angle between the longitudinal bar 2411 and the connecting bar 2412 reaches the maximum. In this case, the limiting member 2414 is substantially perpendicular to the longitudinal bar 2411 (the limiting member 2414 is, for example, parallel to the upward-downwardly direction D3 shown in FIG. 11). When the wheeled movable device 1000 travels on a bumpy road, the shock-absorbing bar 2413 is deformed (for example, shortened or bent) to provide a buffering effect, so that the longitudinal bar 2411 pivots downwardly relative to the connecting bar 2412. At this time, the limiting member 2414 pivots around a connection point between its second end 2414b and the connecting bar 2412, and the pin 2411e of the longitudinal bar 2411 slides downwardly along the limiting groove 2414c. The lower end of the limiting groove 2414c limits the downwardly sliding stroke of the pin 2411e of the longitudinal bar 2411, thereby limiting the pivoting of the longitudinal bar 2411 relative to the connecting bar 2412 within a certain angle range. In this way, the longitudinal bar 2411 and the seat plate assembly 2 fixed thereon (not shown in FIG. 11, reference may be made to the seat plate assembly 2 shown in FIG. 6 to FIG. 8) may be prevented from tilting downwardly at too large an angle relative to the connecting bar 2412, and the possibility of the longitudinal bar 2411 and the seat plate assembly 2 turning outwardly (i.e., the angle between the longitudinal bar 2411 and the connecting bar 2412 is greater than the maximum angle in the initial state) may be prevented when the user lifts the seat plate assembly 2 to move the frame 100 in the folded state. In other words, the limiting member 2414 can further limit the pivoting of the longitudinal bar 2411, and the limiting member 2414 can simultaneously achieve the functions of the limiting finger 2411c and the limiting protrusion 2411d. Certainly, the present application is not limited thereto. In other embodiments, the support structure 240 may be provided with only the limiting member 2414 without providing the limiting finger 2411c and the limiting protrusion 2411d.

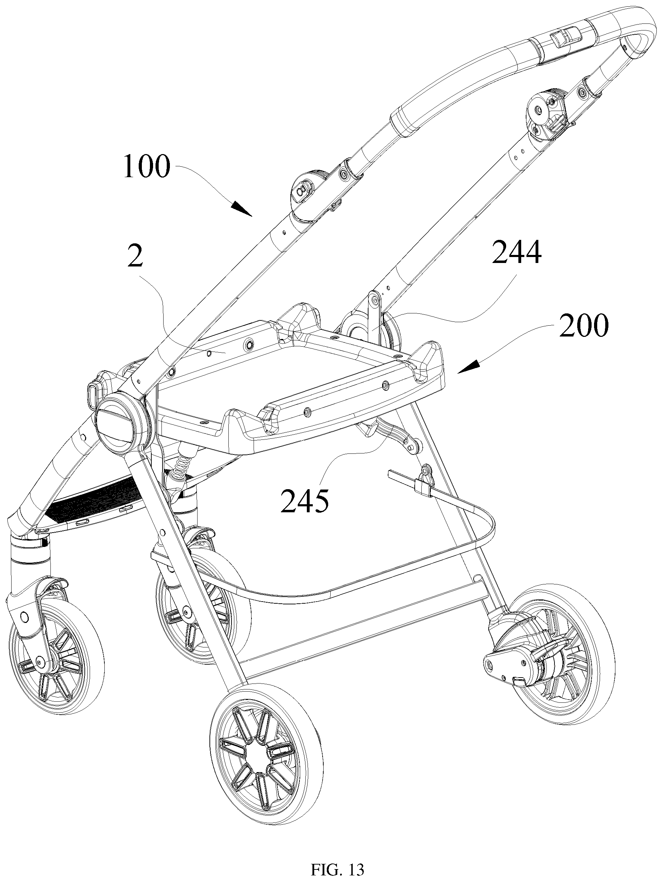

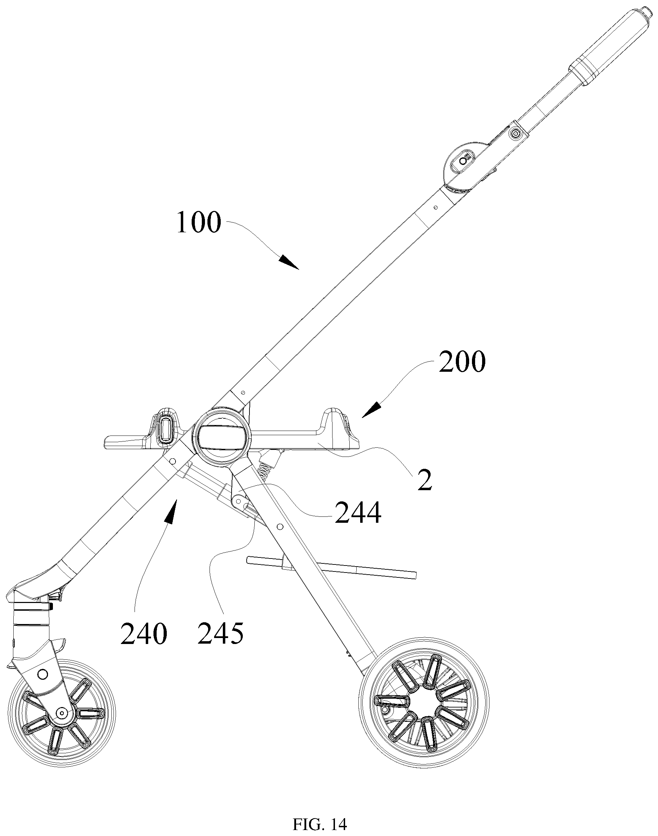

Referring to FIG. 12 to FIG. 14, the frame 100 provided with the engaging base assembly 200 according to some embodiments of the present application is schematically illustrated. FIG. 12 and FIG. 13 are perspective views of the frame 100 and the engaging base assembly 200 mounted thereon viewed from different angles, and FIG. 14 is a side view of the frame 100 and the engaging base assembly 200.

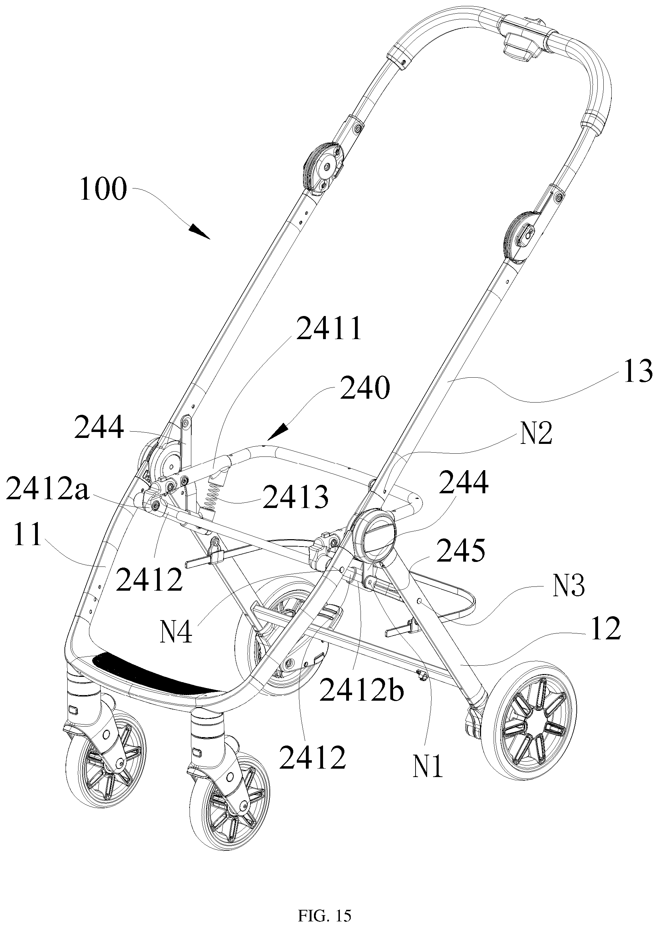

As shown in FIG. 12 to FIG. 14, the engaging base assembly 200 is mounted on the frame 100 by its support structure 240. The frame 100 may be folded, and the engaging base assembly 200 may be folded together with the frame 100. The seat plate assembly 2 and the locking mechanism (the locking mechanism is shielded in FIG. 12, and the specific configuration thereof will be described below) of the engaging base assembly 200 are fixedly mounted on the support structure 240. The seat plate assembly 2 provides a substantially horizontal plane for receiving an object (in this embodiment, which is the carrier 300). Referring to FIG. 15, the support structure 240 further includes a first connecting component 244 and a second connecting component 245. The first connecting component 244 and the second connecting component 245 are respectively pivotally connected to the frame 100. Through the arrangement of the first connecting component 244 and the second connecting component 245, the engaging base assembly 200 may be folded as the frame 100 is folded. The specific connection method between the support structure 240 and the frame 100, as well as the mechanism by which the engaging base assembly 200 and the frame 100 are folded together will be described below.

Please refer to FIG. 15, the frame 100 provided with the support structure 240 according to some embodiments of the present application is schematically illustrated, and the frame 100 is in an unfolded state. As shown in FIG. 15, one end of the first connecting component 244 and one end of the second connecting component 245 are pivotally connected to the second end 2412b of the connecting bar 2412, respectively, and another end of the first connecting component 244, another end of the second connecting component 245, and the first end 2412a of the connecting bar 2412 are pivotally connected to different bars of the frame 100. Through this connection mode of the first connecting component 244 and the second connecting component 245, the support structure 240 may be pivotally mounted on the frame 100. When the frame 100 is in an unfolded state, the support structure 240 is at a position for supporting the engaging base assembly 200 (for clarity, the structure of the engaging base assembly 200 other than the support structure 240 is removed in FIG. 15). When the frame 100 is folded, the support structure 240 can rotate relative to the frame 100 to be folded together with the frame 100.

In some embodiments, as shown in FIG. 15, the one end of the first connecting component 244 is pivotally connected to the second end 2412b of the connecting bar 2412, and the other end of the first connecting component 244 is pivotally connected to the upper support bar 13 of the frame 100. The oneend of the second connecting component 245 is pivotally connected to the second end 2412b of the connecting bar 2412, and the other end of the second connecting component 245 is pivotally connected to the rear support bar 12. The first end 2412a of the connecting bar 2412 is pivotally connected to the front support bar 11, so that the support frame 241 together with the entire engaging base assembly 200 can pivot as the frame 100 pivots, thereby achieving overall folding. Referring to FIG. 15, in some embodiments, the oneend of the first connecting component 244, the one end of the second connecting component 245, and the second end 2412b of the connecting bar 2412 are pivotally connected at the pivot point N1. The other end of the first connecting component 244 is pivotally connected to the upper support bar 13 of the frame 100 at a pivot point N2. The other end of the second connecting component 245 is pivotally connected to the rear support bar 12 at a pivot point N3. The first end 2412a of the connecting bar 2412 is pivotally connected to the front support bar 11 at a pivot point N4.

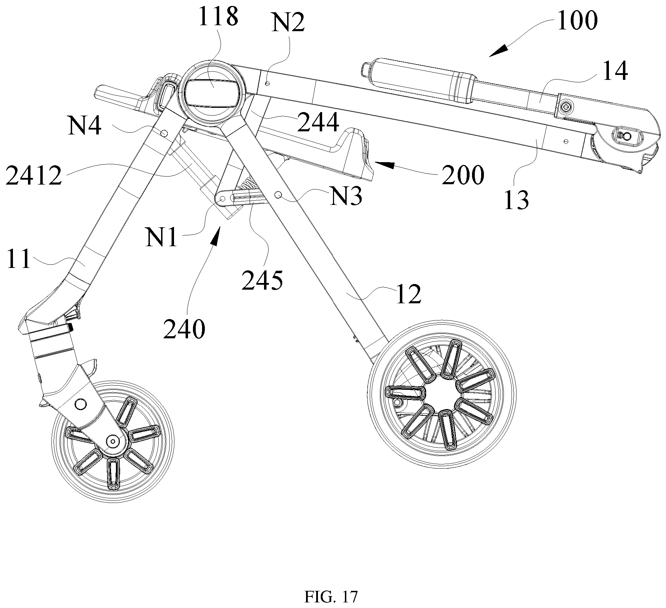

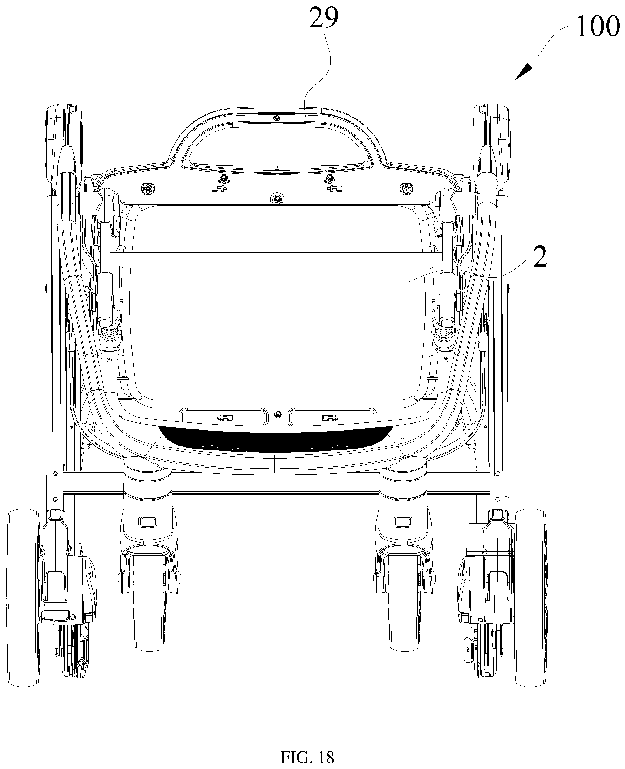

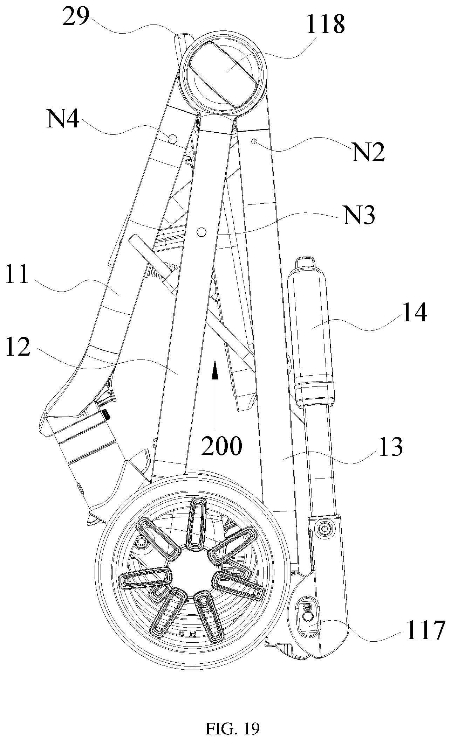

Referring to FIG. 16 to FIG. 19, the folding process of the frame 100 with the engaging base assembly 200 mounted thereon according to some embodiments of the present application is schematically illustrated. FIG. 16 and FIG. 17 respectively show a perspective view and a side view of the frame 100 and the engaging base assembly 200 during the folding process of the frame 100. FIG. 18 and FIG. 19 respectively show a front view and a side view of the frame 100 and the engaging base assembly 200 after the frame 100 is completely folded.

As shown in FIG. 16, the frame 100 in this embodiment can be folded so as to be easily carried and stored. Specifically, the handlebar 14 of the frame 100 is pivotally connected to the upper support bar 13 via a pivot portion 117 so as to be foldable relative to the upper support bar 13. The front support bar 11, the rear support bar 12 and the upper support bar 13 are pivotally connected to a pivot portion (also referred to as a pivot point) 118 and may be folded relative to each other. In addition, when the frame 100 is folded, the support structure 240 may also be driven to pivot, so that the engaging base assembly 200 mounted on the support structure 240 may also pivot as the frame 100 is folded.

Referring to FIG. 17, the first connecting component 244 of the supporting structure 240 is pivotally connected to the upper support bar 13 of the frame 100 at the pivot point N2. The second connecting component 245 is pivotally connected to the rear support bar 12 at the pivot point N3. The connecting bar 2412 is pivotally connected to the front support bar 11 at the pivot point N4. The first connecting component 244, the second connecting component 245, and the connecting bar 2412 are pivotally connected at the pivot point N1. Through the above-mentioned connection relationship, the first connecting component 244, the second connecting component 245, the upper support bar 13 and the rear support bar 12 form a four-bar linkage mechanism via the pivot portion 118, the pivot points N1, N2, and N3; the front support bar 11, the rear support bar 12, the second connecting component 245 and the connecting bar 2412 form a four-bar linkage mechanism via the pivot portion 118, the pivot points N1, N3, and N4; and the front support bar 11, the upper support bar 13, the first connecting component 244 and the connecting bar 2412 form a four-bar linkage mechanism via the pivot portion 118, the pivot points N1, N2, and N4, so that the engaging base assembly 200 can pivot as the frame 100 is folded, so as to be stored within the overall structure of the frame 100 (the fully folded state of the frame 100 is shown in FIG. 19).

As shown in FIG. 18 and FIG. 19, when the frame 100 is completely folded, the front support bar 11, the rear support bar 12, the upper support bar 13, and the handlebar 14 are each folded closest to one another, and the rear support bar 12 is positioned between the front support bar 11 and the upper support bar 13. The engaging base assembly 200 is pivoted relative to the frame 100 and stored between the upper support bar 13 and the front support bar 11.

In addition, as shown in FIG. 18, the seat plate assembly 2 may include a lifting handle 29. When the frame 100 and the engaging base assembly 200 are completely folded, the lifting handle 29 near the top of the folded frame 100, so that the user can easily grab the lifting handle 29 to move the frame 100 and the engaging base assembly 200.

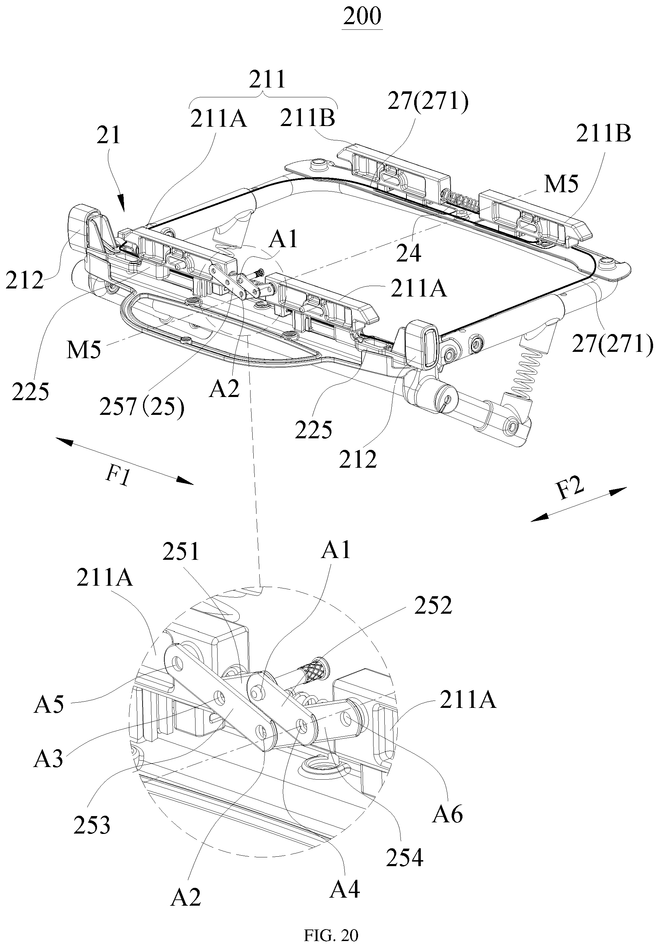

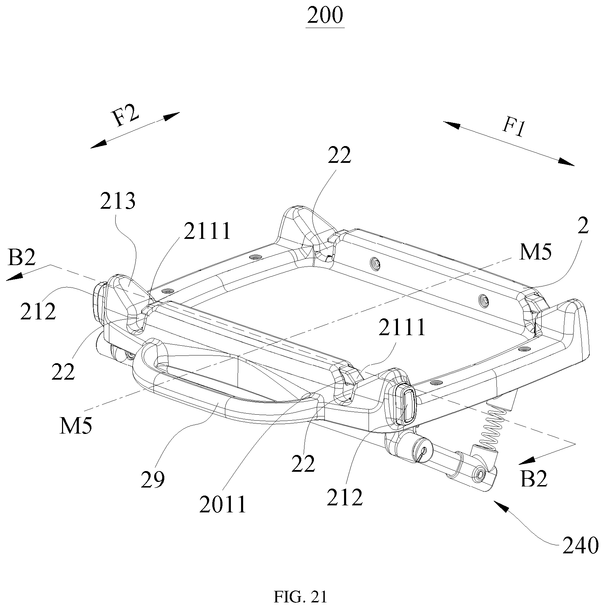

Referring to FIG. 20 and FIG. 21, the engaging base assembly 200 according to some embodiments of the present application is schematically illustrated. FIG. 20 and FIG. 21 are perspective views of the engaging base assembly 200, with the upper housing of the seat plate assembly 2 being removed in FIG. 20 to facilitate observation of a locking mechanism 21 positioned in the seat plate assembly 2.

As can be seen from FIG. 20 and FIG. 21, the locking mechanism 21 is mounted in the seat plate assembly 2 for locking and unlocking an object (e.g., a sleeping box) positioned on the seat plate assembly 2.

As shown in FIG. 20, the locking mechanism 21 includes at least one unlocking operating member 212 and at least one locking member 211. The unlocking operating member 212 is disposed on the seat plate assembly 2 and is movable between a locked state (also referred to as a second locked position) and an unlocked state (also referred to as a second unlocked position) relative to the seat plate assembly 2. The locking member 211 can move as the unlocking operating member 212 moves, so as to move accordingly between a locked position (also referred to as a first locked position) and an unlocked position (also referred to as a first unlocked position). In some embodiments, when the unlocking operating member 212 is in the locked state as shown in FIG. 21, at least a part of the unlocking operating member 212 protrudes from the seat plate assembly 2. When the unlocking operating member 212 is in the locked state, the locking member 211 is at the locked position, and the locking member 211 locks the object placed on the seat plate assembly 2. When the unlocking operating member 212 is pressed and moves inwardly from the locked state to the unlocked state, the locking member 211 moves to the unlocked position along with the movement of the unlocking operating member 212, thereby unlocking the object on the seat plate assembly 2.

As shown in FIG. 20, in some embodiments, at least one locking member 211 may include a plurality of first locking members 211A. The plurality of first locking members 211A may be connected to each other by a linkage assembly 25. The linkage assembly 25 allows the plurality of first locking members 211 positioned on the same side (front side, rear side, left side or right side) of the seat plate assembly 2 to move synchronously. In this embodiment, the plurality of first locking members 211A are simultaneously positioned on the front side of the seat plate assembly 2. The plurality of first locking members 211A may also be referred to as front locking members. In some embodiments, the plurality of first locking members 211A may be rigidly connected (i.e., fixedly connected) to move synchronously in the same direction. Alternatively, in some embodiments, the plurality of first locking members 211A may be connected by the linkage assembly 25 as shown in FIG. 20 to move synchronously in opposite directions. In some embodiments, at least one locking member 211 may also include a plurality of second locking members 211B. The plurality of second locking members 211B are all positioned on another side of the seat plate assembly 2, opposite to the plurality of first locking members 211A. In some embodiments, the plurality of second locking members 211B may be connected by another linkage assembly 25, so that the plurality of locking members 211 positioned on another side of the seat plate assembly 2 can move synchronously. In this embodiment, the plurality of second locking members 211B are all positioned on the rear side of the seat plate assembly 2. The plurality of second locking members 211B may also be referred to as rear locking members. In some embodiments, the moving direction of the second locking member 211B is parallel to the moving direction of the first locking member 211A, or it may be referred to as the second locking member 211B being parallel to the first locking member 211A.

In other embodiments, at least one locking member 211 may include at least one first locking member 211A and at least one second locking member 211B. The first locking member 211A is disposed on a side (e.g., the front side) of the seat plate assembly 2 and is operably connected to the corresponding unlocking operating member 212. The second locking member 211B is disposed on another side (e.g., the rear side) of the seat plate assembly 2. The first locking member 211A and the second locking member 211B are connected to each other via a linkage member 27. The linkage member 27 allows the first locking member 211A and the second locking member 211B to move synchronously.

Here, the linkage assembly 25 and the linkage member 27 may be collectively referred to as a linkage device 257. The linkage device 257 is configured to connect the plurality of locking members 211 (the plurality of first locking members 211A and/or the plurality of second locking members 211B) so that these locking members 211 can move accordingly with the movement of the unlocking operating member 212, thereby achieving synchronous unlocking or synchronous locking of the object by the plurality of locking members 211.

For example, as shown in FIG. 20, two unlocking operating members 212 are provided in some embodiments of the present application. The two unlocking operating members 212 are respectively positioned at the lateral sides (i.e., the left and right sides) of the seat plate assembly 2, and are respectively movable between their respective locked states and unlocked states relative to the seat plate assembly 2. Accordingly, two first locking members 211A and two second locking members 211B are also provided in this embodiment. The two first locking members 211A are movably provided on a side of the seat plate assembly 2, and are connected (e.g., fixedly connected) to the corresponding (e.g., adjacent) unlocking operating members 212 respectively. The two second locking members 211B are movably provided on another side of the seat plate assembly 2, and each second locking member 211B is connected to the corresponding first locking member 211A through the linkage member 27.

In some embodiments, the two first locking members 211A may be disposed at the front side of the seat plate assembly 2 and fixedly connected to adjacent unlocking operating members 212 respectively. The two second locking members 211B are disposed at the rear side of the seat plate assembly 2 and are respectively connected to the two first locking members 211A through corresponding linkage members 27 to move synchronously with the two first locking members 211A. More specifically, as shown in FIG. 20 and FIG. 21, the two unlocking operating members 212 are disposed at two sides of the seat plate assembly 2 and symmetric with respect to the centerline M5-M5 of the seat plate assembly 2, and the centerline M5-M5 of the seat plate assembly 2 extends in the longitudinal direction F2 of the seat plate assembly 2. The two first locking members 211A are disposed between the two unlocking operating members 212 and symmetric with respect to the centerline M5-M5. Each first locking member 211A is fixedly connected to its adjacent unlocking operating member 212.

Referring to FIG. 21, in some embodiments, each locking member 211 moves towards the centerline M5-M5 and is switched to the unlocked position, and correspondingly, each locking member 211 moves away from the centerline M5-M5 and is switched to the locked position. That is, the moving directions of the plurality of locking members 211 (the first locking member(s) 211A and the second locking member(s) 211B) positioned on the same side of the centerline M5-M5 are the same. Certainly, in other embodiments, a part of the locking members 211 may be switched to the unlocked position by moving towards the centerline M5-M5, and switched to the locked position by moving away from the centerline M5-M5, and another part of the locking members 211 may be switched to the unlocked position by moving away from the centerline M5-M5, and switched to the locked position by moving towards the centerline M5-M5. That is, the moving directions of the plurality of locking members 211 (the first locking member(s) 211A and the second locking member(s) 211B) positioned on the same side of the centerline M5- M5 are opposite.

In some embodiments, as shown in FIG. 20, the linkage member 27 may be a traction member (e.g., a traction rope) 271. Specifically, the traction member 271 may be disposed to extend in the seat plate assembly 2. The first locking member 211A and the second locking member 211B disposed diagonally relative to the centerline M5-M5 of the seat plate assembly 2 may be connected to each other through the same traction member 271, so that the moving directions of the first locking member 211A and the second locking member 211B connected by the same traction member 271 are opposite. For example, the first locking member 211A at the left front side is connected to the second locking member 211B at the right rear side by one traction member 271; and the first locking member 211A at the right front side is connected to the second locking member 211B at the left rear side by another traction member 271. In this way, when any unlocking operating member 212 is operated to switch to the unlocked state, the unlocked unlocking operating member 212 drives the corresponding first locking member 211A to move towards the centerline M5-M5 to switch to the unlocked position, and under the action of the traction member 271, the first locking member 211A drives the second locking member 211B connected to the first locking member 211A (disposed diagonally to the first locking member 211A) to move in the opposite direction, thereby causing the second locking member 211B to also move towards the centerline M5-M5 to switch to the unlocked position. When the unlocking operating member 212 is released to switch to the locked state, the first locking member 211A and the second locking member 211B connected by the same traction member 271 both move away from the centerline M5-M5 to move to the locked position synchronously.

Certainly, in other embodiments, the moving directions of the plurality of locking members 211 positioned on the same side of the centerline M5-M5 are, for example, opposite, and the first locking member 211A and the second locking member 211B positioned on the same side of the centerline M5-M5 of the seat plate assembly 2 may be connected by the same traction member 271. When the unlocking operating member 212 is operated to switch to the unlocked state, the moving directions of the first locking member 211A and the second locking member 211B connected by the same traction member 271 are still opposite, for example, the first locking member 211A moves towards the centerline M5-M5 to switch to the unlocked position, and the second locking member 211B moves away from the centerline M5-M5 to switch to the unlocked position.

In this embodiment, the traction member 271 may be a steel wire, which is covered by a steel wire sleeve and hidden in the seat plate assembly 2. In other embodiments, the traction member 271 may also be a flexible member such as a composite material wire.

As shown in FIG. 20, in some embodiments, the linkage assembly 25 may be disposed between the two first locking members 211A and/or between the two second locking members 211B. The distance of the linkage assembly 25 between the two first locking members 211A or the two second locking members 211B may be adjusted so that the two first locking members 211A move synchronously in opposite directions, and/or the two second locking members 211B move synchronously in opposite directions. For example, the linkage assembly 25 is a four-bar linkage mechanism, which may be formed by connecting four sheet-like strips in pairs (specifically, formed by hingedly connecting two by two). The four-bar linkage mechanism has a fixed pivot point fixed to the seat plate assembly 2 (in order to illustrate the configuration of the locking mechanism 21, the upper housing of the seat plate assembly 2 is removed in FIG. 20), and may be extended to two sides (corresponding to the locked state of the unlocking operating member 212) and shortened (corresponding to the unlocked state of the unlocking operating member 212) with the position of the fixed pivot point as the centerline.

Referring to FIG. 20, specifically, the four-link connection mechanism includes a first linking rod 251, a second linking rod 252, a third linking rod 253 and a fourth linking rod 254. The first linking rod 251, the second linking rod 252, the third linking rod 253 and the fourth linking rod 254 are connected in pairs to form four connection points. The four connection points correspond to pivot shafts A1, A2, A3 and A4. One of the four connection points is a fixed pivot point (or referred to as a fixed connection point). More specifically, the pivot shaft A1 is fixed to a fixed structure (such as the seat plate assembly 2) of the engaging base assembly 200 and thus serves as a fixed pivot point. The third linking rod 253 and the fourth linking rod 254 that are connected to a central connection point (corresponding to the pivot shaft A2) opposite to the fixed pivot point are respectively connected to the two first locking members 211A or the two second locking members 211B through the pivot shafts A5 and A6. That is, taking the linkage assembly 25 positioned between the two first locking members 211A as an example, the linkage assembly 25 includes the fixed pivot point (the pivot shaft A1) positioned between the two first locking members 211A. The linkage assembly 25 is pivotally connected to the first locking members 211A on two sides respectively through the pivot shafts (the pivot shaft A5 on the third linking rod 253 and the pivot shaft 6 on the fourth linking rod 254) positioned on the two sides of the fixed pivot point. The distance between the pivot shaft A5 and the pivot shaft A6 corresponds to the length of the linkage assembly 25 between the two first locking members 211A. When the linkage assembly is disposed between the two second locking members 211B, the configuration of the linkage assembly and the connection relationship between the linkage assembly and the two second locking members 211B can refer to the configuration of the linkage assembly 25 and the connection relationship between the linkage assembly 25 and the two first locking members 211A. That is, the two second locking members 211B have configurations corresponding to the two first locking members 211A.

Certainly, in some embodiments, when the moving directions of the first locking member 211A and the second locking member 211B on a same side of the centerline M5-M5 are parallel to the second direction F2, the linkage assembly 25 may be disposed between the first locking member 211A and the second locking member 211B on the same side of the centerline M5-M5.

Through the linkage assembly 25 as described above, when any unlocking operating member 212 moves from the locked state to the unlocked state, the locking member 211 correspondingly connected to the unlocking operating member 212 moves along with the unlocking operating member 212 in the same direction, the pivot shaft A1 of the linkage assembly 25 remains stationary, the pivot shaft A2 moves, and the moving direction of the pivot shaft A2 is perpendicular to the moving direction of the locking member 211. That is, the line connecting the fixed connection point and the central connection point is perpendicular to the moving direction of the two first locking members 211A.

The engaging base assembly 200 fitted with the linkage assembly 25 and the linkage member 27 (for example, the traction member 271) has unlocking and locking processes as follows. When the unlocking operating member 212 is in the locked state, the user can operate any of the unlocking operating members 212 to move the unlocking operating member 212 from the locked state to the unlocked state, and the unlocking operating member 212 moving towards the unlocked state drives the first locking member 211A connected thereto to move. Under the action of the linkage assembly 25, the two first locking members 211A synchronously move in the opposite direction (for example, approach each other) to move towards the unlocked position, and under the action of the linkage member 27, the two first locking members 211A drive the two second locking members 211B to move in the opposite direction (for example, approach each other) to move towards the unlocked position. The two first locking members 211A and the two second locking members 211B move to the unlocked position at the same time, that is, the object locked by the engaging base assembly 200 may be released. On the contrary, when the unlocking operating member 212 moves from the unlocked state to the locked state, under the action of the linkage assembly 25 and the linkage member 27, the two first locking members 211A move away from each other synchronously to move to the locked position, and the two second locking members 211B also move away from each other synchronously to move to the locked position. That is, when any one of the first locking members 211A moves, the pivot shaft A5 and the pivot shaft A6 are caused to move in opposite directions.

Certainly, in other embodiments, when the moving directions of the two first locking members 211A are the same, the two first locking members 211A and/or the two second locking members 211B may also move synchronously in the same direction through a linkage component 25 in other forms.

In addition, as shown in FIG. 20, the engaging base assembly 200 further includes an elastic device 24. The elastic device 24 provides a force to drive the unlocking operating member 212 to be in the locked state or reset to the locked state, so as to drive the locking member 211 to return to the locked position. In some embodiments, the elastic device 24 is disposed between the two first locking members 211A, and provides a force to drive the two first locking members 211A o move away from each other, that is, provides a force to move the two first locking members 211A towards the locked position. Optionally, the elastic device 24 may also be disposed between the two second locking members 211B, and provides a force to drive the two second locking members 211B to move away from each other, that is, provides a force to move the two second locking members 211B towards the locked position. For example, the elastic device 24 may be a compression spring. In other embodiments, when multiple locking members 211 on the same side move in the same direction to synchronously move to the unlocked position or the locked position, the multiple locking members 211 on the same side may be fixedly connected to one another, and the elastic device 24 may be disposed between the fixed structure (for example, the seat plate assembly 2 as shown in FIG. 21) of the engaging base assembly 200 and at least one locking member 211. The elastic device 24 applies a force to the unlocking operating member 212 to move the unlocking operating member 212 towards the locked state by the locking member 211. The multiple locking members on the same side as mentioned above may be, for example, two first locking members 211A positioned on the front side, or two second locking members 211B positioned on the rear side, or two locking members positioned on the right side (the first locking member 211A on the right side and the second locking member 211B on the right side), or two locking members positioned on the left side (the first locking member 211A on the left side and the second locking member 211B on the left side. It should be noted that the "front side", "rear side", "right side" and "left side" herein are all with respect to the direction shown in FIG. 20. For example, the lower left side in FIG. 20 corresponds to the front side of the engaging base assembly 200, the upper right side corresponds to the rear side of the engaging base assembly 200, and the like.

In addition, the elastic device 24 may also be disposed between at least one locking member 211 and the seat plate assembly 2 (for example, when the two first locking members 211A are fixedly connected or the two second locking members 211B are fixedly connected) to provide a force through the locking member 211 to drive the unlocking operating member 212 to be in the locked state or reset to the locked state.

As shown in FIG.20, in some embodiments, the two first locking members 211A are fixedly connected to the corresponding unlocking operating members 212 respectively through corresponding sliding members 225. Each sliding member 225 can slide in a sliding groove of the locking mechanism 21, so that when the user performs the unlocking operation on any of the unlocking operating members 212, the first locking member 211A and the unlocking operating member 212 connected together by the same sliding member 225 slide synchronously, and under the action of the linkage assembly 25, the two first locking members 211A slide towards each other and move to the unlocked position. Certainly, in other embodiments, the first locking member 211A and the corresponding unlocking operating member 212 may also be connected to each other by other means, such as bolt connection, bonding, etc. Optionally, the sliding member 225 may be integrally formed with the corresponding unlocking operating member 212.

In addition, in some embodiments, referring to both FIG. 20 and FIG. 21, a locking portion 2111 (depicted in FIG. 21) is disposed at an end of the first locking member 211A, and an opening 2011 is disposed on the seat plate assembly 2 at a position corresponding to the locking portion 2111. When the upper housing of the seat plate assembly 2 is mounted above the locking mechanism 21, the locking portion 2111 can protrude from the opening of the seat plate assembly 2. For example, the front side of the seat plate assembly 2 has an upwardly protruding structure at a position corresponding to each first locking member 211A. The upwardly protruding structure is provided with an engaging channel (also referred to as a recessed portion) 22 at a position positioned at the end of each first locking member 211A. The engaging channel 22 extends through the upwardly protruding structure in the second direction F2 to accommodate at least a part of the object. The position of the engaging channel 22 corresponds to the engagement point as described above. The channel wall of the engaging channel 22 is provided with the opening 2011 to allow the locking portion 2111 to protrude from the seat plate assembly 2. The rear side of the seat plate assembly 2 (i.e., the position corresponding to each second locking member 211B) also has the same upwardly protruding structure, which will not be repeatedly described in detail herein. When an object is placed on the seat plate assembly 2, the engaging channel 22 accommodates at least a portion of the object (e.g., the bracket device of the sleeping box, more specifically, the engaging member 311), and the locking portion 2111 protrudes from the opening 2011 and locks the portion of the object in the engaging channel 22. In some embodiments, as shown in FIG. 21, an upper surface of the locking portion 2111 protruding from the opening is a downwardly inclined surface, which facilitates the portion of the object for being locked to move along the inclined surface to enter the engaging channel 22.

In addition, as shown in FIG. 21, the protruding upper housing structure of the seat plate assembly 2 is further provided with a slope 213. The slope 213 is positioned above the locking channel 22 and on the side opposite to the opening 2011 of the locking channel 22, for guiding the locking of the object (not shown) with the engaging base assembly 200.

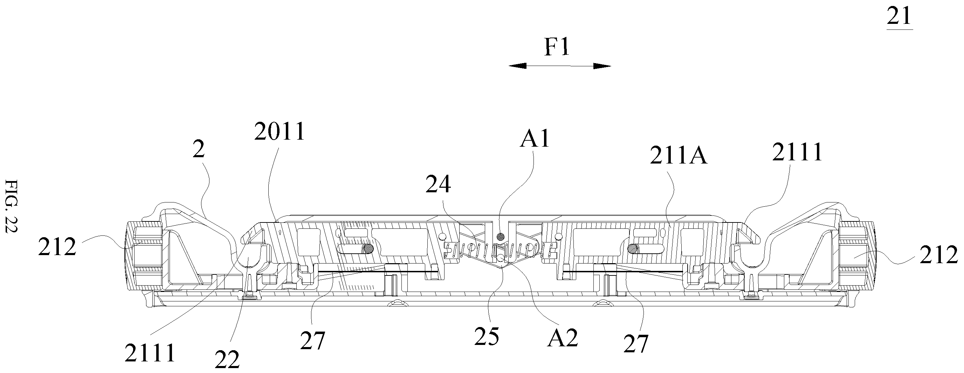

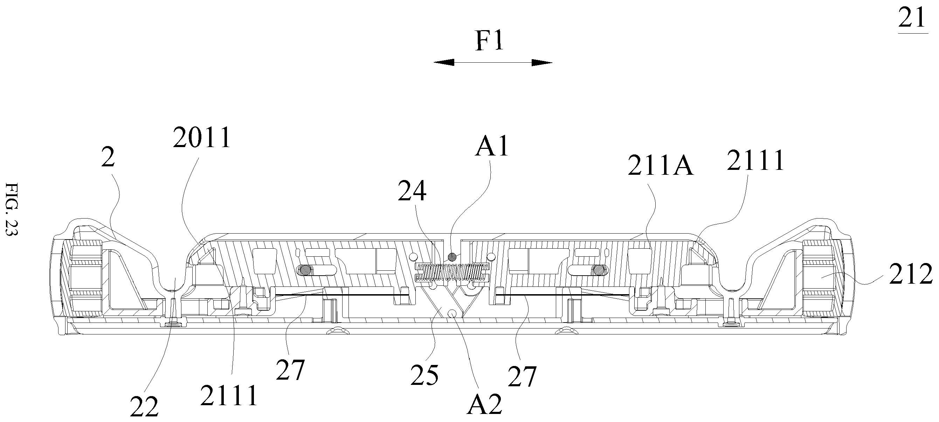

Referring to FIG. 22 to FIG. 23, the locking mechanism 21 in the locked state and in the unlocked state according to some embodiments of the present application are shown. Specifically, FIG. 22 shows a sectional view taken along a line B2- B2 in FIG. 21, with the locking mechanism 21 at the locked position. FIG. 23 shows the locking mechanism 21 switched from the locked position shown in FIG. 22 to the unlocked position.

As shown in FIG. 22, when the locking mechanism 21 is in the locked state, each unlocking operating member 212 is in the locked state (also referred to as the initial state), and each first locking member 211A fixedly connected to the corresponding unlocking operating member 212 is in its locked position. That is, the locking portion 2111 of each first locking member 211A extends from the seat plate assembly 2 into the corresponding engaging channel 22. At the same time, each second locking member 211B is also maintained in its locked position. In this case, the first locking member 211A and the second locking member 211B respectively lock the object at the front and rear sides of the seat plate assembly 2. At this time, the elastic device 24 positioned between the two first locking members 211A is in the initial state (e.g., stretched state), and optionally, the elastic device (not shown) positioned between the two second locking members 211B is also in the initial state (e.g., stretched state). In some embodiments, the pivot shaft A2 of the four-bar connecting mechanism of the linkage assembly 25 is positioned at the upper position as shown in FIG. 22, that is, at a position approaching the pivot shaft A1.

As shown in FIG. 23, when any one of the unlocking operating members 212 is operated to move from the locked state to the unlocked state, the first locking member 211A fixedly connected to this unlocking operating member 212 moves towards the unlocked position along with the movement of the unlocking operating member 212. At the same time, the linkage assembly 25 drives another first locking member 211A and another unlocking operating member 212 to move synchronously, and each linkage member 27 (the traction member 271 in this embodiment) drives the corresponding second locking member 211B (not shown in FIG. 23) to move synchronously. The locking portions 2111 of the two first locking members 211A and the locking portions of the two second locking members 211B (not shown in FIG. 23) are retracted into the seat plate assembly 2, thereby unlocking the object. At this time, the elastic device 24 positioned between the two first locking members 211A is in a state (e.g., a compressed state) tending to reset the unlocking operating member 212 to the locked state. Optionally, the elastic device (not shown) positioned between the two second locking members 211B is also in a compressed state. In some embodiments, the pivot shaft A2 of the four-bar linkage of the linkage assembly 25 is positioned at a lower position as shown in FIG. 23, i.e., away from the pivot shaft A1. That is, when the unlocking operating member 212 moves from the locked state to the unlocked state, the pivot shaft A2 of the linkage assembly 25 moves downwardly substantially vertically relative to the pivot shaft A1.

After the unlocking operating member 212 is released, for example, under the action of the elastic device 24 between the two first locking members 211A, the two first locking members 211A move away from each other, the two unlocking operating members 212 are driven to synchronously return from their respective unlocked states to the locked states, and at the same time, the two second locking members 211B are driven to move away from each other, so that the locking mechanism 21 is returned to the locked state as shown in FIG. 22. In other embodiments, after the unlocking operating member 212 is released, under the action of the elastic device between the two second locking members 211B (not shown), the two second locking members 211B move away from each other, the two first locking members 211A are driven to move away from each other, and at the same time, each unlocking operating member 212 is driven to return from its respective unlocked state to the locked state, so that the locking mechanism 21 is returned to the locked state as shown in FIG. 22.

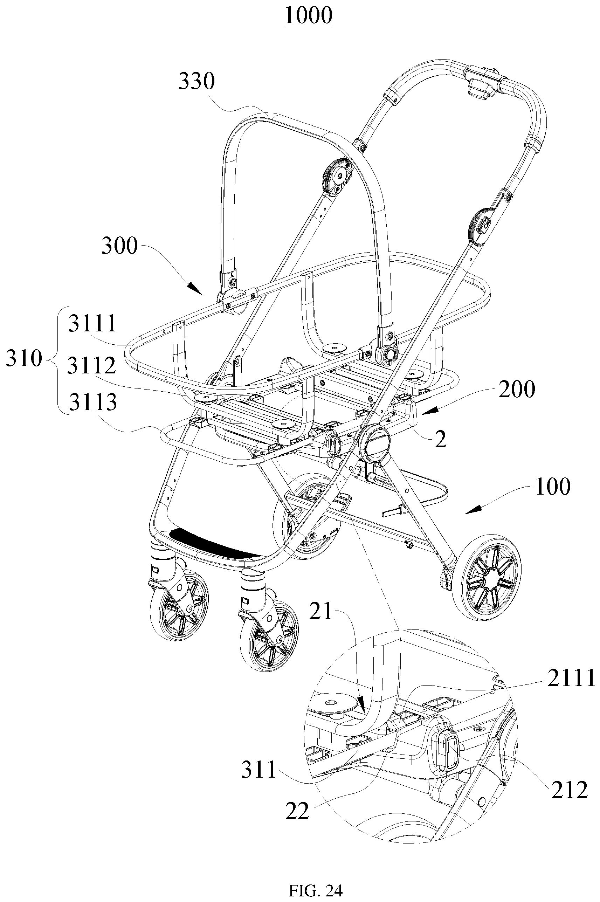

Referring to FIG. 24, the wheeled movable device 1000 according to some embodiments of the present application is illustrated, with the box body of the carrier 300 is removed to illustrate the connection relationship between the bracket device 310 of the carrier 300 and the locking mechanism 21. The carrier 300 may be, but is not limited to, a sleeping box.

As shown in FIG. 24, when the carrier 300 is mounted on the seat plate assembly 2 via the locking mechanism 21 (the unlocking operating member 212 is in the locked state), the engaging member 311 (e.g., the annular structural member shown in FIG. 24) of the third bracket 313 is partially locked in the space defined by the engaging channel 22 and the locking portion 2111, thereby locking the carrier 300 to the seat plate assembly 2.

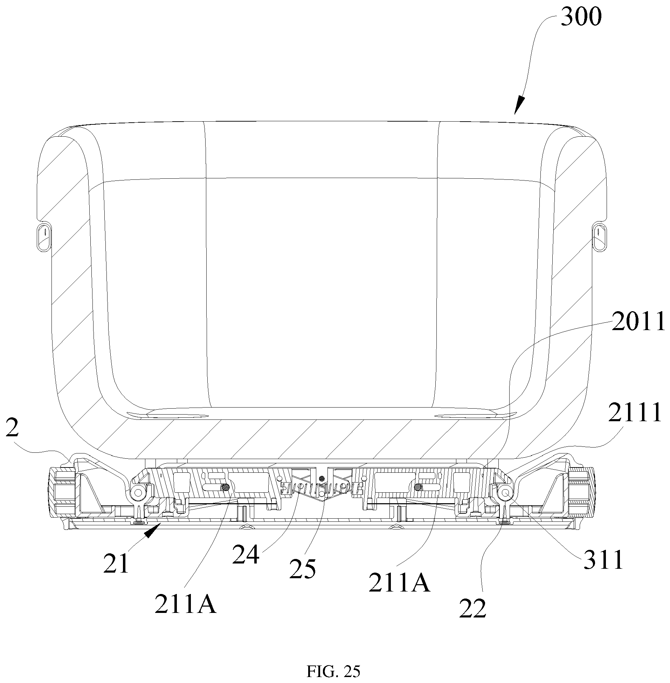

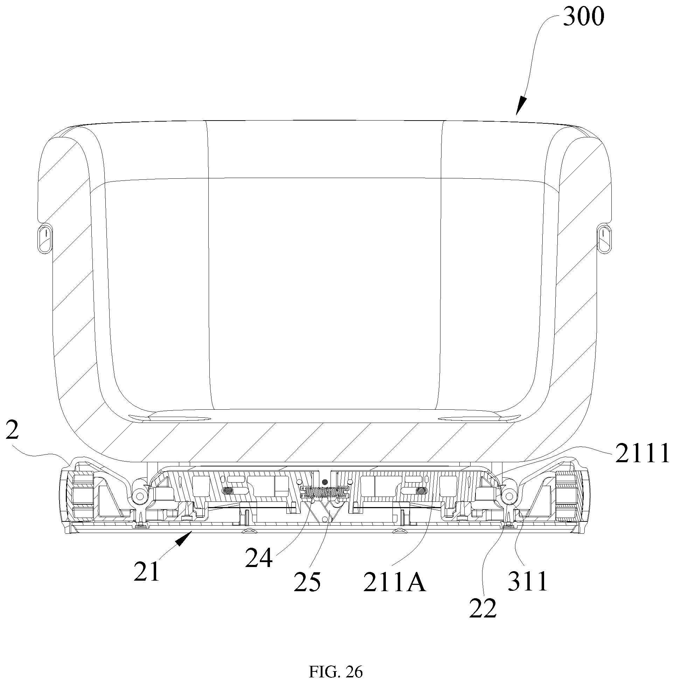

Further referring to FIG. 25 to FIG. 26, the locking mechanism 21 and the carrier 30 placed thereon according to some embodiments of the present application are schematically shown. FIG. 25 shows a view of the carrier 300 being on the seat plate assembly 2 and locked by the locking mechanism 21, and FIG. 26 shows a view of the carrier 300 being placed on the seat plate assembly 2 but the locking mechanism 21 being in the unlocked state.

As shown in FIG. 25, when the locking mechanism 21is in the locked state, the locking portion 2111 of the first locking members 211A protrudes out of the opening 2011 at the engaging channel 22 of the seat plate assembly 2, and locks the engaging member 311 of the carrier 300 in the engaging channel 22.

As shown in FIG. 26, when the locking mechanism 21 returns from the locked state to the unlocked state, the locking portion 2111 retracts into the seat plate assembly 2 (e.g., into the opening 2011 at the engaging channel 22), and the engaging member 311 of the carrier 30 may be removed from the engaging channel 22, that is, the carrier 30 may be removed.

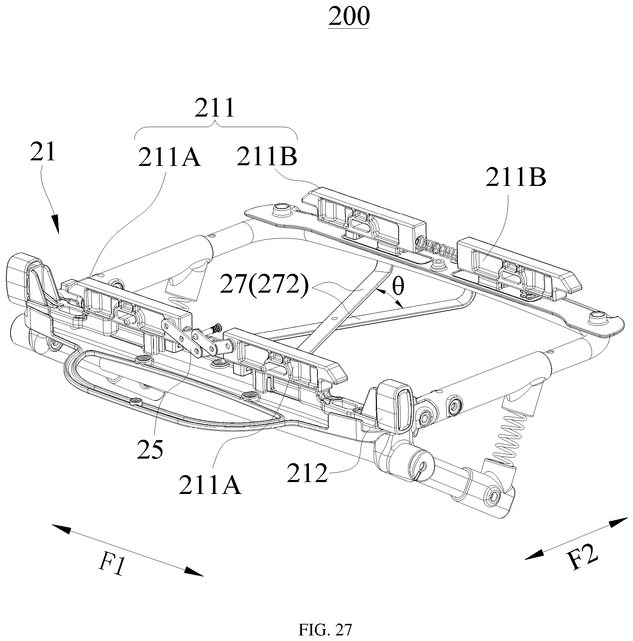

Referring to FIG. 27 to FIG. 28, the engaging base assembly 200 according to some other embodiments of the present application are shown, with the upper housing of the seat plate assembly 2 being removed to show the locking mechanism 21.

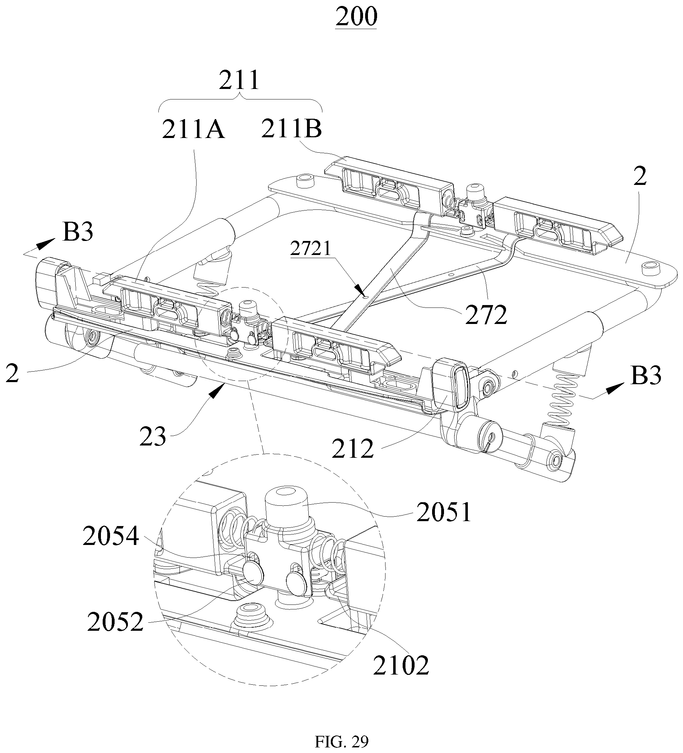

In some other embodiments of the present application, as shown in FIG. 27, the linkage member 27 may include at least one link rod 272. Specifically, each link rod 272 may connect two locking members 211 positioned on the front and rear sides of the engaging base assembly 200, in particular, the first locking member 211A and the second locking member 211B disposed diagonally. In some examples, two ends of each of the two link rods 272 are pivotally connected to the first locking member 211A and the second locking member 211B disposed diagonally respectively. The two link rods 272 intersect with each other. An angle θ is formed between the two link rods 272. In some embodiments, the two link rods 272 are connected at the intersection of the two link rods 272. More specifically, the two link rods 272 are pivotally connected at the intersection of the two link rods 272 by a pivot shaft 2721 (FIG. 29). The angle θ corresponds to the angle defined by the connection points between the two link rods 272 and the two second locking members 211B and the intersection of the two link rods 272. It can be understood that the angle θ also corresponds to the angle defined by the connection points between the two link rods 272 and the two first locking members 211A and the intersection of the two link rods 272.

When any of the unlocking operating members 212 is operated, the two first locking members 211A synchronously move towards each other and approach each other under the action of the linkage assembly 25, and the two first locking members 211A synchronously move from the locked position towards the unlocked position, so that the angle θ between the two link rods 272 gradually decreases, and the two link rods 272 drive the two second locking members 211B to move towards each other and approach each other. When the unlocking operating member 212 is released, the two first locking members 211A synchronously move away from each other, and the two first locking members 211A synchronously move from the unlocked position towards the locked position, and the angle θ between the cross-connected two link rods 272 gradually increases, so that the two second locking members 211B also move away from each other.

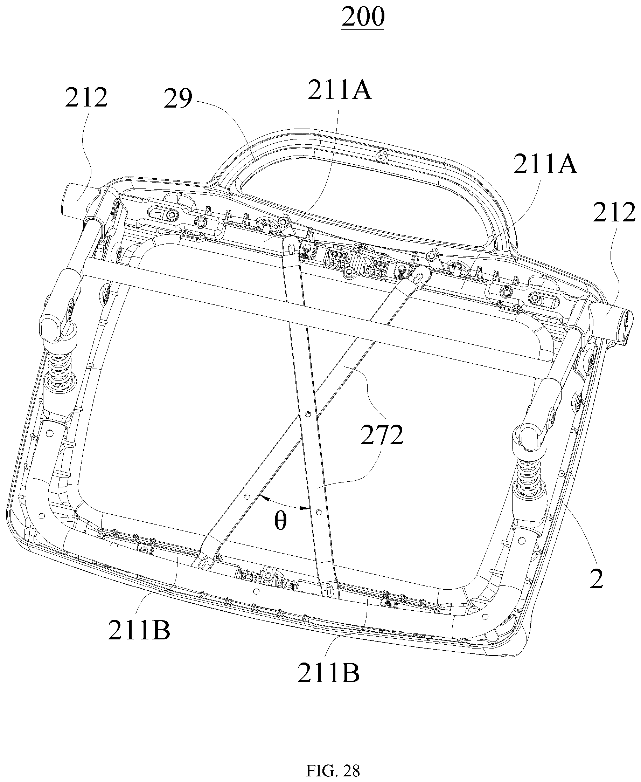

As can be seen from FIG. 28, in some embodiments, two ends of each link rod 272 are pivotally connected to the first locking member 211A and the second locking member 211B from the bottom, respectively.

Referring to FIG. 29, the engaging base assembly 200 provided with a retaining mechanism 23 according to some embodiments of the present application is schematically illustrated, with the upper housing of the seat plate assembly 2 being removed to show the retaining mechanism 23. As shown in FIG. 29, the engaging base assembly 200 of the present application further includes the retaining mechanism 23. The retaining mechanism 23 is disposed between two first locking members 211A and/or between two second locking members 211B, and is configured to retain the unlocking operating member 212 in the unlocked state. That is, the retaining mechanism 23 is configured to retain the engaging base assembly 200 in the unlocked state and retain the locking member 211 at the unlocked position. In this way, the user does not need to continuously perform the unlocking operation on the unlocking operating member 212 (for example, pressing the unlocking operating member 212), the engaging base assembly 200 may be maintained in the unlocked state, so that the user can remove the object above the engaging base assembly 200 at any time.

It should be noted that, although FIG. 29 only shows an embodiment in which the link rods 272 are configured to connect the first locking member 211A and the second locking member 211B respectively, it should be understood that the retaining mechanism 23 is also applicable to the case in which the corresponding first locking member 211A and the corresponding second locking member 211B are connected by the traction member 271 (such as the embodiment shown in FIG. 20).

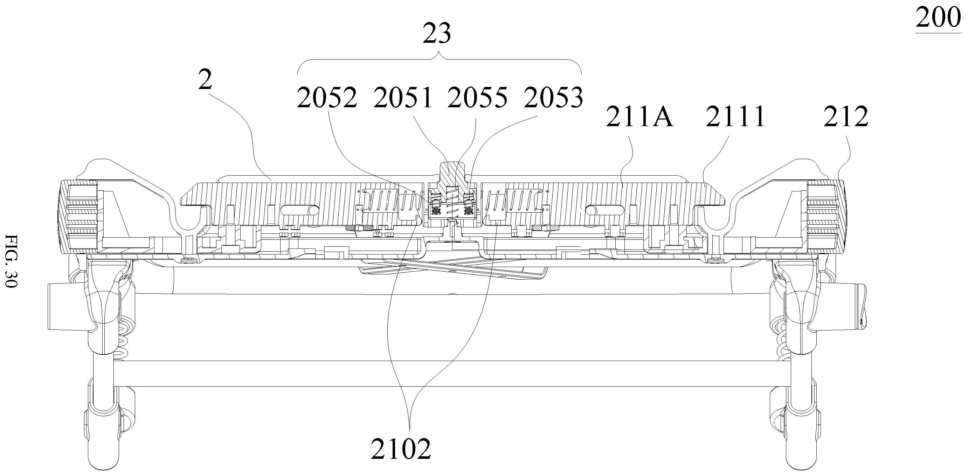

Referring to FIG. 29 and FIG. 30, a sectional view of the retaining mechanism 23 taken along a section line B3-B3 of FIG. 29 is schematically illustrated in FIG. 30, showing the structural relationship between the retaining mechanism 23 and the seat plate assembly 2. As shown in FIG. 29, the retaining mechanism 23 includes a touch button 2051, a buckling portion 2052 and a reset member 2055 (which is shielded in FIG. 29 and thus not shown, but shown in FIG. 30). The touch button 2051 is disposed on the seat plate assembly 2 (only the lower housing of the seat plate assembly 2 is shown in FIG. 29), and can move in a vertical direction relative to the seat plate assembly 2 to allow at least a portion of the touch button 2051 to protrude upwardly relative to the seat plate assembly 2 (specifically, the upper housing of the seat plate assembly 2, referring to FIG. 30). The buckling portion 2052 is movably disposed below the touch button 2051 and can move in a vertical direction along a sliding rail 2054 on the touch button 2051. For example, the buckling portion 2052 may be an engaging pin. As shown in FIG. 30, the reset member 2055 is disposed between the fixed structure (e.g., the lower housing of the seat plate assembly 2) of the engaging base assembly 200 and the touch button 2051. The reset member 2055 provides a force to drive the touch button 2051 to protrude upwardly from the seat plate assembly 2. That is, under the action of the reset member 2055, the touch button 2051 may be reset from a pressed state to an initial released state.

Referring to FIG. 30, in some embodiments, the retaining mechanism 23 further includes an elastic member 2053. The elastic member 2053 is disposed between the touch button 2051 and the buckling portion 2052, and is configured to cooperate with the movement of the buckling portion 2052 relative to the touch button 2051. In addition, a retaining hook 2102 is disposed at a lower portion of an end of the first locking member 211A away from the locking portion 2111, so as to correspondingly hook the buckling portion 2052 of the retaining mechanism 23. An end of the retaining hook 2102 may further be provided with a chamfer so as to be more firmly engaged with the buckling portion 2052.

In addition, as shown in FIG. 30, when the carrier is not placed on the seat plate assembly 2 and the unlocking operating member 212 has not been operated for unlocking, the unlocking operating member 212 is in the locked state (i.e., the initial state), and the retaining mechanism 23 is also in its initial state. In this case, a trigger button 2051 of the retaining mechanism 23 protrudes from the top of the seat plate assembly 2, the buckling portion 2052 is separated from the retaining hook 2102 of the first locking member 211A, and the reset member 2055 and the elastic member 2053 are both in a released state, i.e., not compressed.

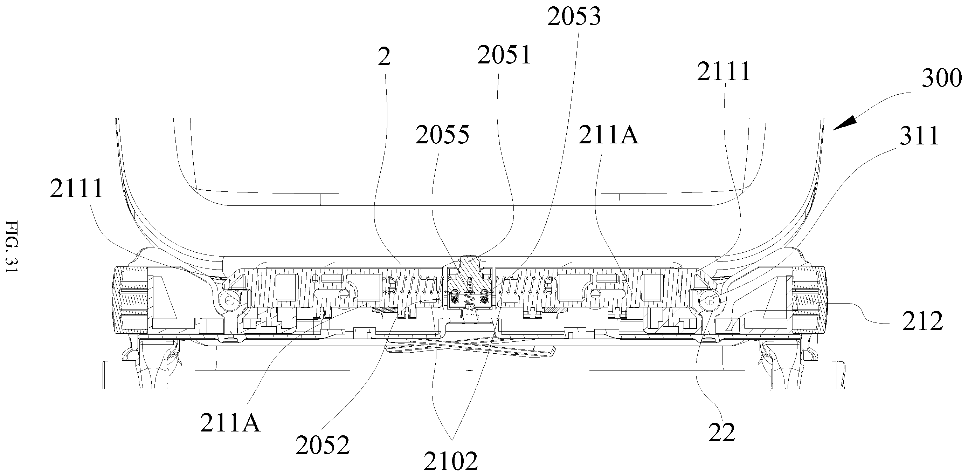

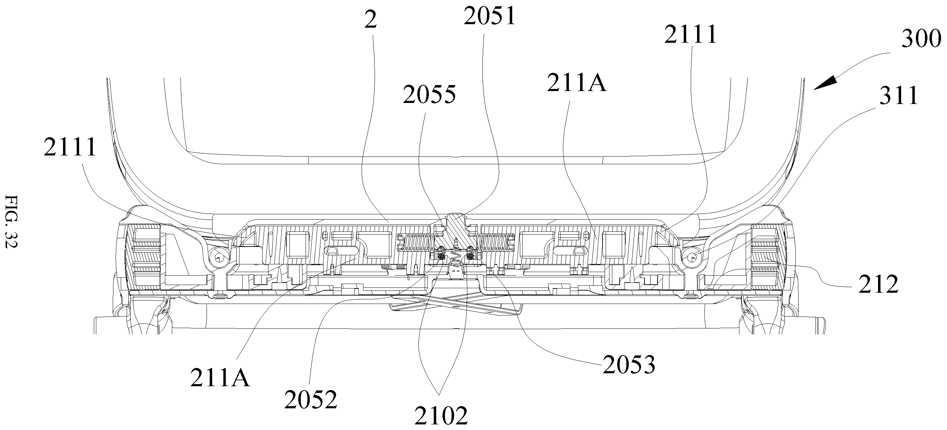

Referring to FIG. 31 and FIG. 32, the operation process of the retaining mechanism 23 when the carrier 300 is placed on the seat plate assembly 2 and the carrier 300 needs to be removed is schematically illustrated.

As shown in FIG. 31, when the user places the carrier 300 on the seat plate assembly 2, the engaging member 311 of the carrier 300 moves downwardly and is engaged in the engaging channel 22 by the locking portion 2111 of the first locking member 211A, and at the same time, the bottom surface of the carrier 300 presses down the touch button 2051 and compresses the reset member 2055. The buckling portion 2052 and the elastic member 2053 connected between the touch button 2051 and the buckling portion 2052 move downwardly as the touch button 2051 is pressed down. In this case, the retaining mechanism 23 is in a ready state.

When the carrier 300 needs to be removed from the seat plate assembly 2, as shown in FIG. 32, the user can operate (e.g., press) the unlocking operating member 212, and the first locking member 211A connected to the unlocking operating member 212 moves towards the unlocked position as the unlocking operating member 212 moves, and the retaining hook 2102 of the first locking member 211A moves towards the retaining mechanism 23 to hook the buckling portion 2052. More specifically, as the retaining hook 2102 moves towards the retaining mechanism 23, the end of the retaining hook 2102 (e.g., through its chamfer) forces the buckling portion 2052 to resist the force of the elastic member 2053 and move upwardly relative to the touch button 2051 (i.e., the buckling portion 2052 moves upwardly relative to the touch button 2051 to compress the elastic member 2053). After the hook-shaped portion of the retaining hook 2102 passes over the buckling portion 2052, the buckling portion 2052 moves downwardly under the action of the elastic member 2053 and is hooked by the retaining hook 2102. At this time, the retaining mechanism 23 is in a retaining state, and the buckling portion 2052 is maintained in a state of being engaged by the retaining hook 2102 under the downward pressure applied by the carrier 300 and the action of the elastic member 2053, thereby maintaining the unlocking operating member 212 in the unlocked state, and the engaging member 311 of the carrier 300 is not blocked by the locking portion 2111 (that is, the carrier 300 continues to be in a state of being able to be removed).

Next, when the carrier 300 is removed, the trigger button 2051 protrudes from the top of the seat plate assembly 2 again under the action of the reset member 2055, the buckling portion 2052 moves upwardly along with the trigger button 2051 and separates from the retaining hook 2102 of the first locking member 211A, and the unlocking operating member 212 returns to the locked state shown in FIG. 30.

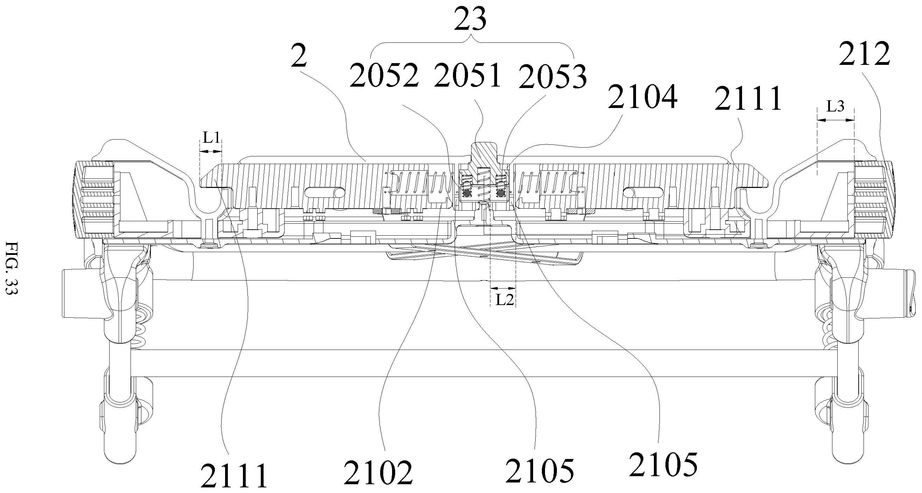

Referring to FIG. 33, the configuration of the retaining mechanism 23 according to some embodiments of the present application is illustrated.

As shown in FIG. 33, the touch button 2051 is disposed in a sliding channel 2104 disposed inside the seat plate assembly 2 so as to be able to move up and down along the sliding channel 2104. Notches 2105 are symmetrically provided on the wall of the sliding channel 2104. When moving towards the retaining mechanism 23, the retaining hook 2102 can extend into the notch 2105 to be engaged with the buckling portion 2052.

In addition, as shown in FIG. 33, in some embodiments, when the carrier 300 (as shown in FIG. 31 and FIG. 32) is mounted on the seat plate assembly 2, the distance of the locking portion 2111 to be retracted is L1. The distance required for the retaining hook 2102 to be engaged with the buckling portion 2052 (i.e., the distance between the retaining hook 2102 and the farthest end of the buckling portion 2052) is L2. The distance for the unlocking operating member 212 to be pressed to perform the unlocking is L3. In some embodiments, L1<L2<L3, so that when the carrier 300 (not shown in FIG. 33, please refer to FIG. 31) is locked on the seat plate assembly 2, the retaining hook 2102 may not hook the buckling portion 2052, and the retaining hook 2102 can only hook the buckling portion 2052 when the unlocking operating member 212 is pressed.

The engaging base assembly 200 is provided with the linkage assembly 25 that is between the plurality of first locking members 211A, the linkage member 27 that is between the first locking member 211A and the second locking member 211B, and the retaining mechanism 23, so that the user can unlock the plurality of locking members 211 at the same time when only one of the unlocking operating members 212 is operated, thereby providing a wheeled movable device 1000 that is easy to operate and has a simple structure. As a result, the user can conveniently (for example, operate with one hand to) move the carrier 300 away from the frame 100, which provides a better user experience for the user. Optionally, by providing the support frame 240 with a shock-absorbing effect, when the frame 100 moves, a cushioning support may be provided for the carrier 300 mounted on the frame 100 and the infant or pet therein, thereby providing a more comfortable and safer wheeled movable device.

### Second Embodiment

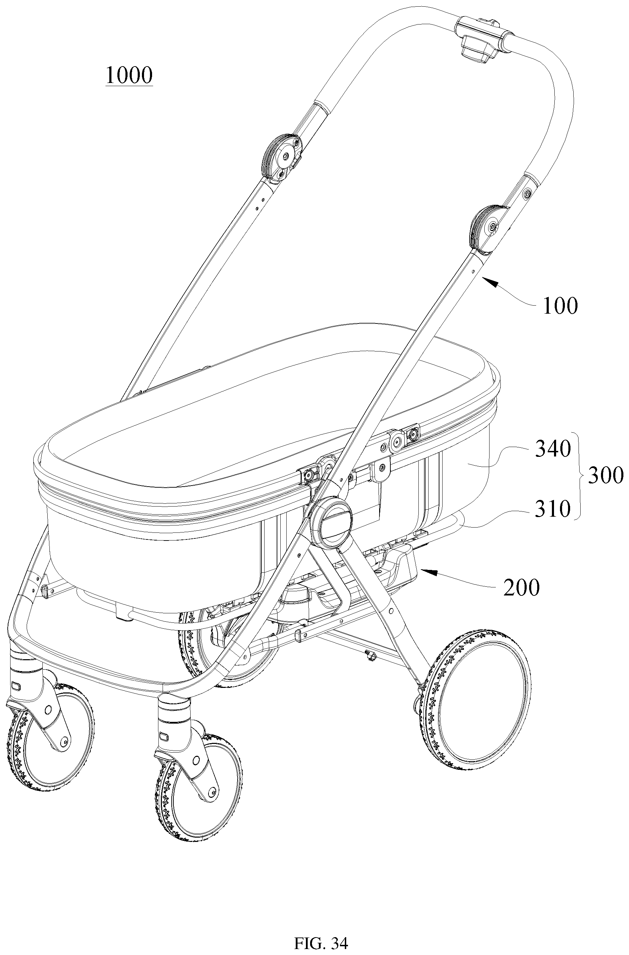

Referring to FIG. 34, a perspective schematic view of a wheeled movable device 1000 according to an embodiment of the present application is shown in FIG. 34.

As shown in FIG. 34, the wheeled movable device 1000 may include a frame 100, an engaging base assembly 200, and a carrier 300. The engaging base assembly 200 may be mounted on the frame 100. The carrier 300 may be fixed to the frame 100 through the engaging base assembly 200 so as to move together with the frame 100. In some embodiments, the carrier 300 may include a box body 340 and a bracket device 310. The box body 340 provides a storage space. The storage space is configured to accommodate infants or pets. The bracket device 310 is mounted on the box body 340 to support the box body 340. The bracket device 310 may be engaged with the engaging base assembly 200 so that the carrier 300 may be detachably mounted on the frame 100 by the bracket device 310.

The frame 100 and the engaging base assembly 200 of the wheeled movable device 1000 and the connection relationship between the frame 100 and the engaging base assembly 200 will be described in detail below.

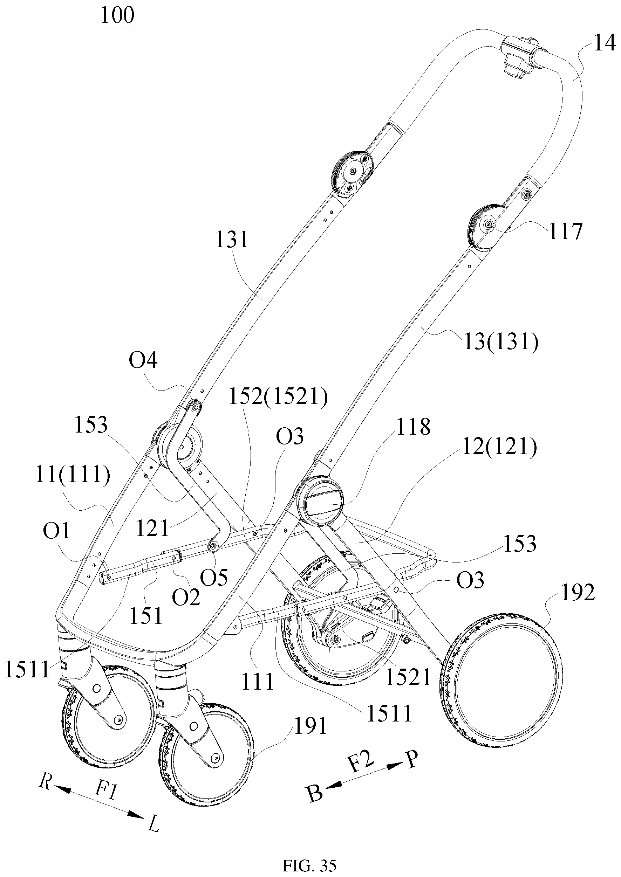

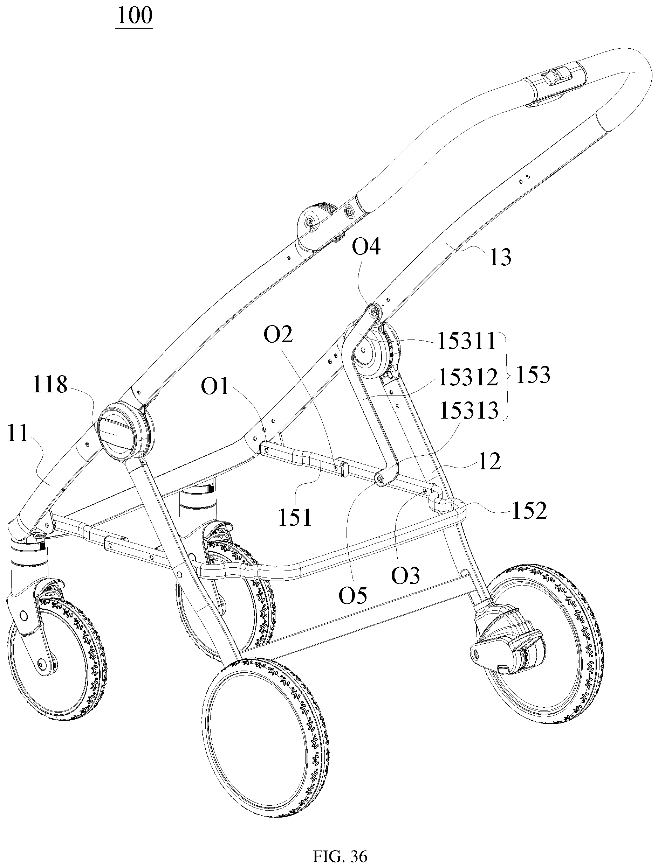

First, referring to FIG. 35 and FIG. 36, a perspective schematic view of the frame 100 according to some embodiments of the present application is shown in FIG. 35, and FIG. 36 shows a perspective schematic view of the frame 100 shown in FIG. 35 from another perspective.

The frame 100 of the present application may include a front support bar 11, a rear support bar 12, and an upper support bar 13. The front support bar 11 is connected to a front wheel 191. The rear support bar 12 is connected to a rear wheel 192. The upper support bar 13 is connected to a handlebar 14.

In some embodiments, as shown in FIG. 35 and FIG. 36, an end of the front support bar 11, an end of the rear support bar 12, and an end of the upper support bar 13 are pivotally connected to one another at a pivot portion (also referred to as a first pivot portion) 118, so that the front support bar 11, the rear support bar 12, and the upper support bar 13 may be folded relative to each other through the pivot portion 118. Specifically, the front support bar 11 may have a U- shaped structure, and include two bars 111 respectively positioned on the left and right sides and a first crossbar 101 connected between the two bars 111. The rear support bar 12 may include two parallel bars 121 and a rear crossbar 122 connected between the two bars 121. Upper ends of the bars 111 of the front support bar 11 are respectively pivotally connected to upper ends of the bars 121 of the rear support bar 12 by the pivot portions 118. At least one front wheel 191 is connected to the lower side of the front support bar 11. The lower ends of the two bars 122 of the rear support bar 12 are respectively connected to the corresponding rear wheels 192. The handlebar 14 is positioned at upper ends of the upper support bar 13 and is pivotally connected to the upper support bar 13 through pivot portions (also referred to as second pivot portions) 117. Certainly, the present application is not limited to the above configurations. In some embodiments, the front support bar 11 may also have a V-shaped or I-shaped structure, and the rear support bar 12 may also be disposed to have an integrally formed U-shaped structure.

In some embodiments, as shown in FIG. 35, the size of the rear wheel 192 may be greater than the size of the front wheel 191 to make the overall structure of the wheeled movable device 1000 more stable.

In addition, it can be seen from FIG. 34 and FIG. 35 that the frame 100 is further provided with a connecting assembly 15 (which may be used as a supporting structure of the engaging base assembly 200, which will be described in detail below) configured to mount the engaging base assembly 200 on the frame 100. The connecting assembly 15 is pivotally connected to the frame 100. The engaging base assembly 200 can pivot as the frame 100 is folded through the connecting assembly 15. The connecting assembly 15 may be unfolded or folded.

With reference to the description in the first embodiment, when the wheeled movable device 1000 is fully unfolded, the first direction F1 is comparable to the left-right direction, and the second direction F2 is comparable to the front-rear direction.

In some embodiments, as shown in FIG. 35 and FIG. 36, the connecting assembly 15 may include a first coupling member 151, an auxiliary support member 152 and a linking element 153.

As shown in FIG. 35, an end (a front end) of the first coupling member 151 is pivotally connected to the front support bar 11 at a first pivot point O1. The auxiliary support member 152 is pivotally connected to another end (a rear end) of the first coupling member 151 at a second pivot point O2. The auxiliary support member 152 is pivotally connected to the rear support bar 12 at a third pivot point O3. An end (upper end) of the linking element 153 is pivotally connected to the upper support bar 13 at a fourth pivot point O4, and another end (a lower end) of the linking element 153 is pivotally connected to the auxiliary support member 152 at a fifth pivot point O5. In this way, when the frame 100 is folded, the auxiliary support member 152 may be driven to pivot. The fifth pivot point O5 is positioned between the second pivot point O2 and the third pivot point O3, and the second pivot point O2 is positioned between the first pivot point O1 and the fifth pivot point O5. In some embodiments, the fifth pivot point O5 can coincide with the second pivot point O2.

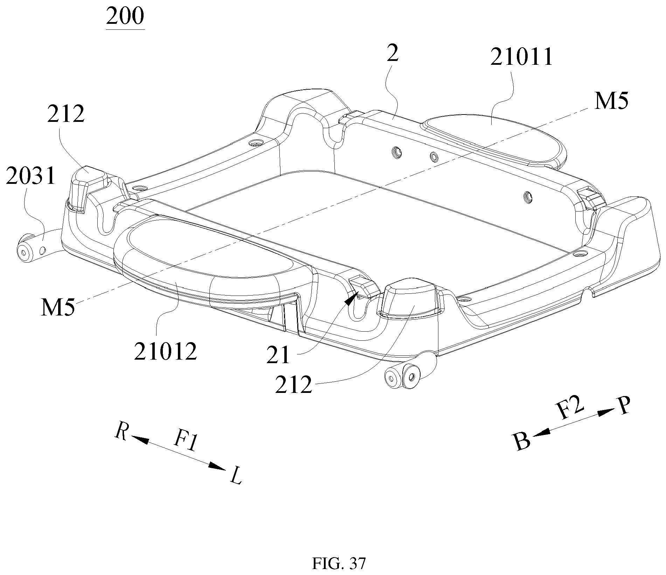

Referring to FIG. 36, in some embodiments, the linking element 153 may have an approximately S-shaped structure, so as to avoid interference with the rear support bar 12, the seat plate assembly 2 of the engaging base assembly 200 (not shown in FIG. 36, see FIG. 37) or other components when the frame 100 is folded. That is, the approximately S-shaped structure of the linking element 153 forms an avoidance structure. Specifically, the approximately S-shaped structure has a first section 15311, a second section 15312 and a third section 15313 in sequence. The second section 15312 is substantially perpendicular to the first section 15311, and the third section 15313 is substantially perpendicular to the second section 15312. When the frame 100 is unfolded, the first section 15311 is substantially overlapped with the upper support bar 13. Certainly, the present application is not limited thereto, and the linking element 153 may also be designed to have other shapes or structures that can avoid other components when folded. In addition, by adjusting other components so that multiple bars or components do not interfere with one another when folded. The linking element 153 may also be provided in the form of a straight bar.

Referring to FIG. 35, in some embodiments, the first coupling member 151 includes two first tubes 1511 respectively positioned on the left and right sides. One ends of the first tubes 1511 are respectively connected to the bars 111 of the front support bars 11 on both sides. The auxiliary support member 152 may have a generally U-shaped structure. Each of two ends of the auxiliary support member 152 is respectively connected to another end of the first tube 1511 of the corresponding first coupling member 151. In some embodiments, the auxiliary support member 152 includes two separate linear bars 1521. Each bar 1521 is respectively connected between the first tube 1511 and the bar 121 on the same side (left side or rear side). Certainly, the present application is not limited thereto.

In some embodiments, as shown in FIG. 35 and FIG. 36, when the frame 100 is unfolded, the first coupling member 151 and the auxiliary support member 152 are disposed horizontally and extend in the front-rear direction (the second direction F2). More specifically, each first tube 1511 of the first coupling member 151 and a tube (hereinafter referred to as a second tube) of the adjacent auxiliary support member 152 extend in the front-rear direction (i.e., the second direction F2). The first pivot point O1, the second pivot point O2, the third pivot point O3 and the fifth pivot point O5 are on the same horizontal plane. In some embodiments, the first pivot point O1, the second pivot point O2, the third pivot point O3 and the fifth pivot point O5 are substantially on a straight line.

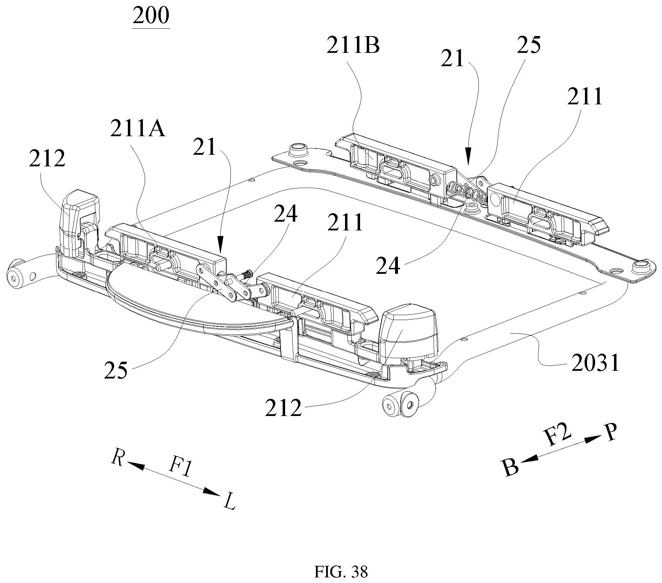

Referring FIG. 37 and FIG. 38, FIG. 37 shows a perspective schematic view of the engaging base assembly 200 according to an embodiment of the present application, and FIG. 38 shows a perspective schematic view of the engaging base assembly 200 shown in FIG. 37 with the seat plate assembly 2 removed.

As shown in FIGS. 37 and 38, the engaging base assembly 200 includes a seat plate assembly 2 and a locking mechanism 21 configured to lock the carrier 300 (not shown in FIG. 37 and FIG. 38, see FIG. 34) on the seat plate assembly 2. The engaging base assembly 200 may have a plurality of engagement points for supporting and positioning the carrier 300, thereby improving the connection stability between the carrier 300 and the engaging base assembly 200. It can be understood that each of the engagement points is configured with a locking member 211. In some embodiments, the plurality of engagement points are arranged in a rectangular array on the seat plate assembly 2, whereby the plurality of engagement points are arranged in at least two rows or at least two posts. For example, as shown in FIG. 37, the plurality of engagement points may be symmetric (symmetric in the left-right direction) disposed on the engaging base assembly 200 with respect to the longitudinal centerline M5-M5 of the engaging base assembly 200, so that the carrier 300 is more stably locked on the seat plate assembly 2 of the engaging base assembly 200. Preferably, four engagement points may be provided. The four engagement points are provided on the engaging base assembly 200 in central symmetry. That is, the four engagement points are arranged on the engaging base assembly 200 in such way that the engagement points are symmetric in the left-right direction and in the front-rear direction.

In the absence of conflict, for the configuration of the engaging base assembly 200, reference may be made to the description of the engaging base assembly 200 in the first embodiment. Referring to FIG. 37 and FIG. 38, specifically in this embodiment, the locking mechanism 21 includes a plurality of locking members 211. The plurality of locking members 211 may be connected by a linkage device so as to be able to move synchronously to the unlocked position. For the linkage device, reference may be made to such description in the first embodiment, for example, the linkage device includes a linkage assembly 25 and a linkage member (not shown in FIG. 38). An unlocking operating member 212 may also be mounted on the seat plate assembly 2. The unlocking operating member 212 is configured to be connected to at least one locking member 211 and drive the locking member 211 to move towards the unlocked position. The engaging base assembly 200 can further include an elastic device 24. The elastic device 24 can drive the locking member 211 to move towards the locked position. More specifically, the locking mechanism 21 in this embodiment includes four locking members 211. The four locking members 211 are two first locking members 211A and two second locking members 211B. The two first locking members 211A are positioned at the front side of the seat plate assembly 2, and the linkage assembly 25 may be disposed between the two first locking members 211A. The two second locking members 211B are positioned at the rear side of the seat plate assembly 2, and the linkage assembly 25 may be disposed between the two second locking members 211B. for the configuration of the linkage assembly 25, reference may be made to such description in the first embodiment. The first locking member 211A and the second locking member 211B positioned on the diagonal line may be connected by the linkage member 27 in the first embodiment.

In this embodiment, two unlocking operating members 212 are mounted on the seat plate assembly 2. The two unlocking operating members 212 are respectively connected to the two first locking members 211A in a driven manner. When any of the unlocking operating members 212 is pressed downwardly, under the action of the linkage device, the two first locking members 211A and the two second locking members 211B respectively slide synchronously in the left-right direction and synchronously move towards the unlocked position.

In some embodiments, the linkage device can omit the linkage member and have the linkage assemblies 25. In some embodiments, the first locking member 211A and the second locking member 211B are not linked, and the first locking member 211A and the second locking member 211B may be driven to the unlocked position by different unlocking operating members 212.

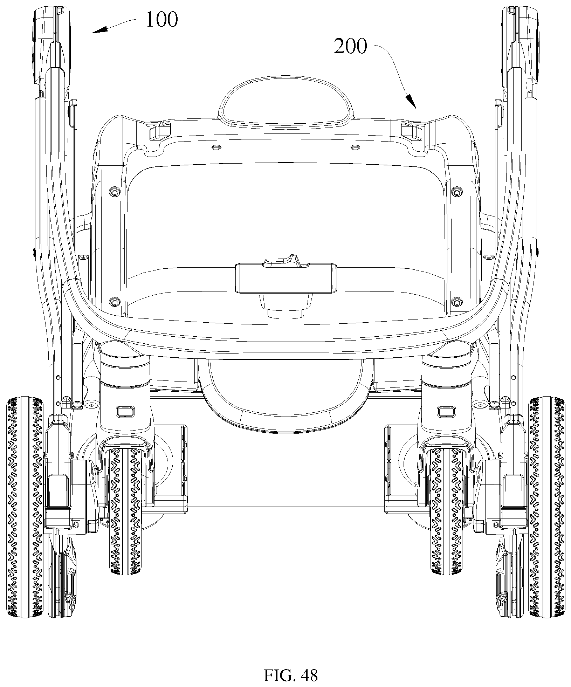

In some embodiments, as shown in FIG. 37, the seat plate assembly 2 may have a first extension 21011. The first extension 21011 extends from an end (e.g., the rear end, as shown in FIG. 34 and FIG. 35, i.e., the end adjacent to the rear wheel 192) of the seat plate assembly 2. More specifically, the first extension 21011 may extend rearwardly from the middle of the rear end of the seat plate assembly 2 by a certain distance to provide a larger support surface, thereby more stably supporting the carrier 300 (not shown in FIG. 37) disposed thereon. It should be noted that the "rear end" described here refers to the rear side relative to the frame 100 (e.g., the rear wheel 192 is positioned at the rear side of the frame 100). The front, rear, left, and right sides of the seat plate assembly 2 correspond to the front, rear, left, and right sides of the frame 100 respectively. In some embodiments, the first extension 21011 may also be provided in the form of a lifting handle to facilitate the lifting and movement of the folded frame 100 and the engaging base assembly 200. In some embodiments, the seat plate assembly 2 may also be disposed in a hollowed form, such as the annular structure shown in FIG. 37 (i.e., the middle area of the seat plate assembly 2 is hollowed out), so that when the frame 100 and the engaging base assembly 200 are folded together, the entire frame structure may be grasped, lifted or moved by means of the hollow design of the seat plate assembly 2 (see, for example, FIG. 48).

As shown in FIG. 37, in some embodiments, the seat plate assembly 2 may further include a second extension 21012. The second extension 21012 extends from the front end (i.e., the end adjacent to the front wheel 191) of the seat plate assembly 2 to provide an additional support surface, thereby helping to improve the stability of the carrier 300 on the frame 100 and facilitating the balance of the carrier 300 after being engaged with the entire frame 100.

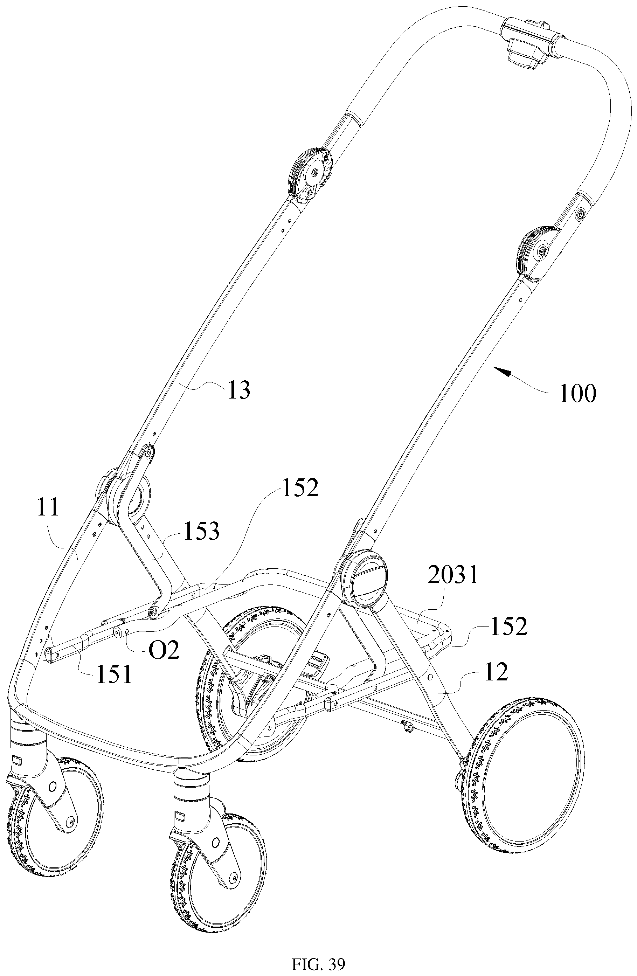

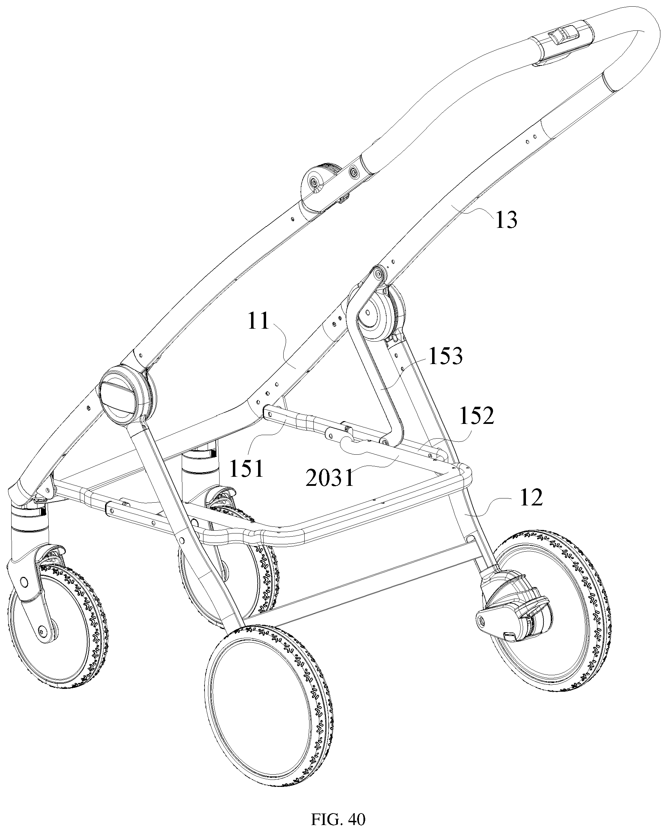

In some embodiments, as shown in FIG. 37 and FIG. 38, the engaging base assembly 200 may be disposed on a seat plate support member 2031 and connected to the frame 100 through the seat plate support member 2031 (see FIG. 34). In some embodiments, as shown in FIG. 38, the seat plate support member 2031 may have a U-shaped structure, but the present application is not limited thereto. The connection between the seat plate support member 2031 and the frame 100 will be described in detail below in conjunction with FIG. 39 and FIG. 40.

Referring to FIG. 39 and FIG. 40, FIG. 39 shows a perspective schematic view of the frame 100 shown in FIG. 35 and the seat plate support member 2031 mounted on the frame 100, and FIG. 40 shows a perspective schematic view of the frame 100 shown in FIG. 39 and the seat plate support member 2031 from another perspective.

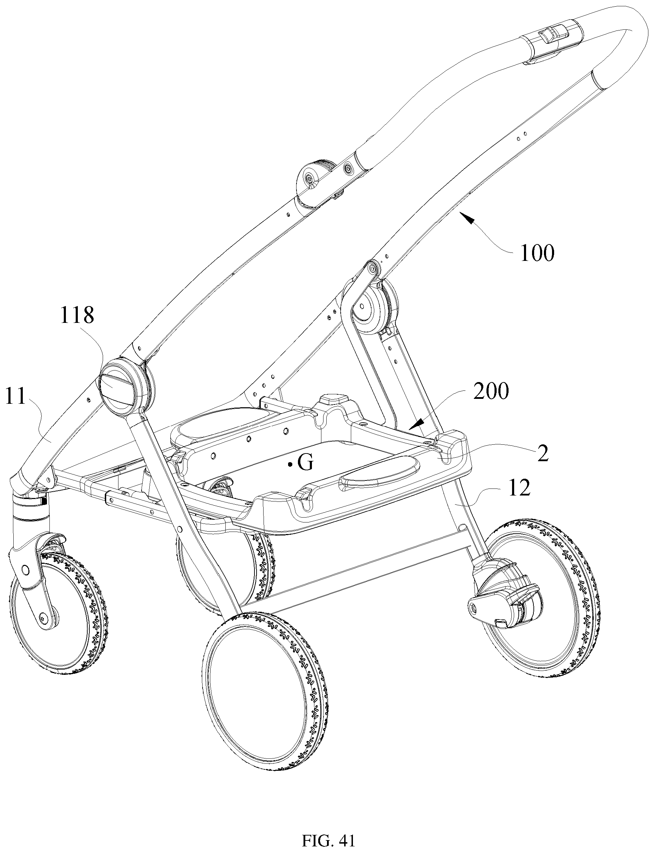

In some embodiments, as shown in FIGS. 39 and 40, the seat plate support member 2031 is disposed on the inner side of the auxiliary support member 152 and connected to the auxiliary support member 152, so that the seat plate support member 2031 can move synchronously along with the auxiliary support member 152, thereby driving the engaging base assembly 200 (not shown in FIG. 39 and FIG. 40, see FIG. 41) mounted on the seat plate support member 2031 to move synchronously, so as to achieve synchronous folding of the engaging base assembly 200 and the frame 100. In some embodiments, the other end of the first coupling member 151 is inserted between the seat plate support member 2031 and the auxiliary support member 152. For example, the auxiliary support member 152 and the seat plate support member 2031 are connected to each other at the second pivot point O2 by a pivot shaft extending through the first coupling member 151, and the auxiliary support member 152 and the seat plate support member 2031 are disposed on two sides of the first coupling member 151, so that the auxiliary support member 152 and the seat plate support member 2031 are synchronously pivotable relative to the first coupling member 151. In addition, the other end of the linking element 153 (i.e., the end where the linking element 153 is connected to the auxiliary support member 152) is inserted between the seat plate support member 2031 and the auxiliary support member 152. In some embodiments, the auxiliary support member 152 may be fixedly connected to the seat plate support member 2031, or the auxiliary support member 152 and the seat plate support member 2031 may be integrally formed. In other embodiments, both the auxiliary support member 152 and the seat plate support member 2031 may be connected to the engaging base assembly 200.

It should be noted that in the above embodiment, the auxiliary support member 152 and the seat plate support member 2031 that are fixedly connected to each other may be collectively regarded as a second coupling member. However, it should be understood that the second coupling member may also only include the auxiliary support member 152, and the auxiliary support member 152 can have a U-shaped structure.

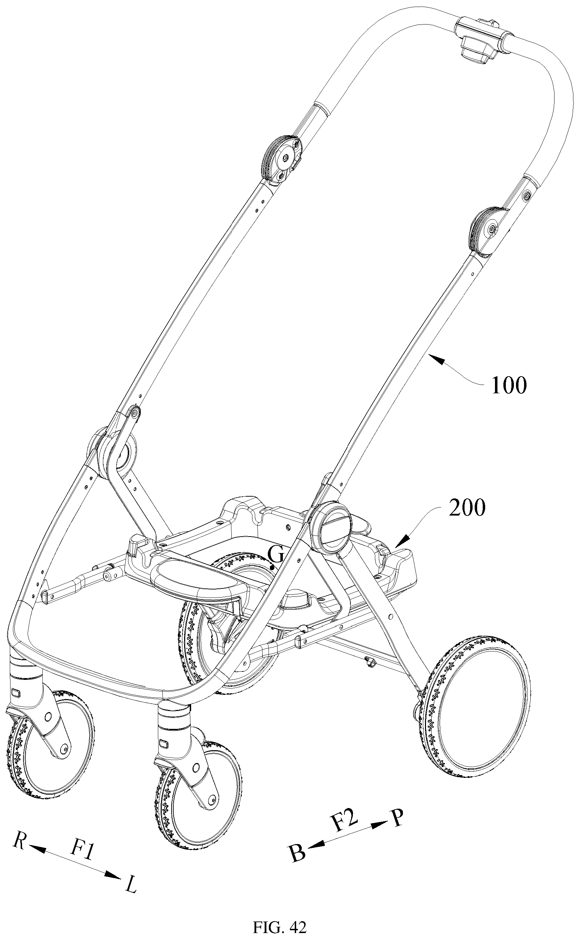

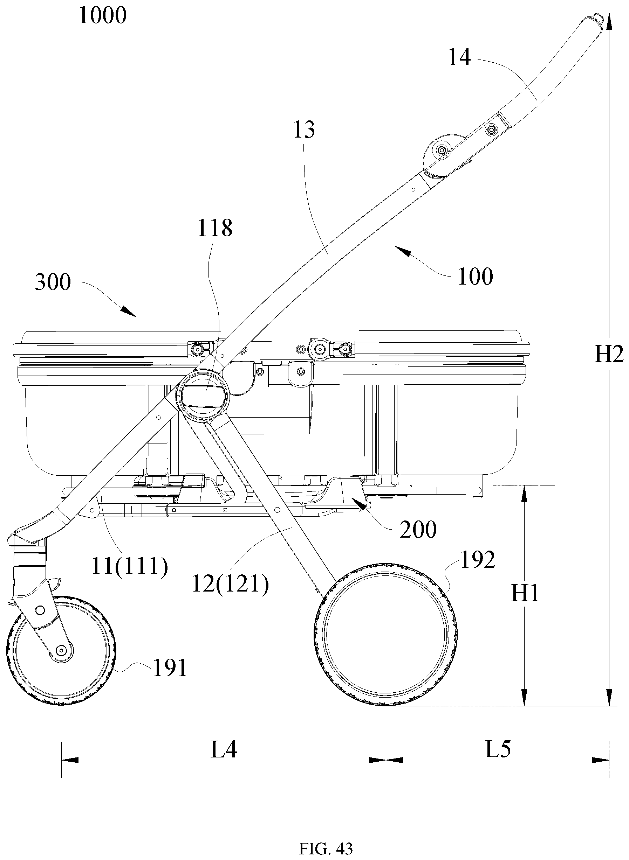

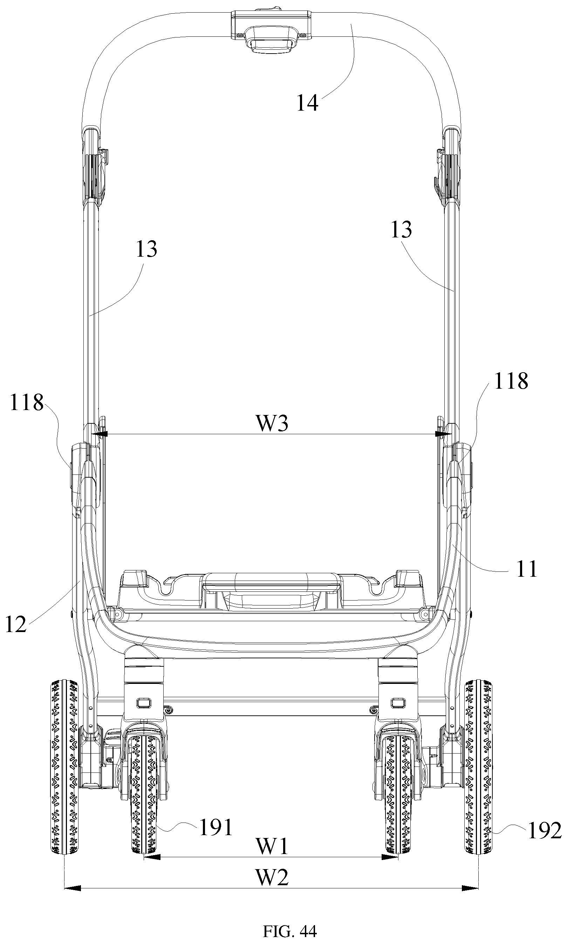

Further referring to FIG. 41 to FIG. 44, FIG. 41 shows a perspective schematic view of the frame 100 of the present application and the engaging base assembly 200 mounted on the frame 100, FIG. 42 shows a perspective schematic view of the frame 100 and the engaging base assembly 200 shown in FIG. 41 from another perspective, FIG. 43 shows a side view of the wheeled movable carrier 1000 shown in FIG. 34, and FIG. 44 shows a front view of the wheeled movable carrier 1000 shown in FIG. 43 with the carrier 300 removed.

As shown in FIG. 41 and FIG. 42, when the frame 100 is unfolded, the engaging base assembly 200 of the present application may be positioned at a lower position of the frame 100. In some embodiments, the engaging base assembly 200 is positioned at a height lower than the pivot portion 118. For example, the engaging base assembly 200 may be adjacent to the lower ends of the bars 111 of the front support bar 11, or the engaging base assembly 200 and the lower ends of the bars 111 of the front support bar 11 are at approximately the same height. More specifically, as shown in FIG. 43, the height H1 of the position where the engaging base assembly 200 is positioned may be less than the median value of the overall height H2 of the frame 100. In some embodiments, the height H1 of the position where the engaging base assembly 200 is positioned may be approximate to or even less than one-third of the overall height H2 of the frame 100. Through such arrangement, that is, the engaging base assembly 200 is disposed at a lower position of the frame 100, the user can more conveniently and labor-savingly place and position the carrier 300 (see FIG. 34) on the engaging base assembly 200, thereby improving the convenience of use and user experience. Moreover, the frame 100 may be applicable to carriers 300 of more different sizes (e.g., different heights), thereby improving the adaptability of use.

In some embodiments, as shown in FIG. 41 and FIG. 42, the center of gravity G of the engaging base assembly 200 disposed at a lower position may be offset towards the rear wheel 192 relative to the pivot portion 118, which helps improve the stability of the frame 100. Specifically, after the carrier 300 (see FIG. 43) is mounted on the frame 100, because the center of gravity G of the engaging base assembly 200 is further back relative to the pivot portion 118, the wheeled movable device 1000 is less likely to overturn due to the pet in the carrier 300 approaching the front end of the carrier 300 (at this time, the weight of the pet is concentrated on the front end of the carrier 300). The center of gravity G of the engaging base assembly 200 is further back relative to the pivot portion 118, which helps improve the stability of the overall structure of the wheeled movable device 1000. For example, in some embodiments, the center of gravity G of the engaging base assembly 200 may be approximate to the plane where the two bars 121 of the rear support bar 12 are located, alternatively, the center of gravity G of the engaging base assembly 200 may be positioned in the plane where the two bars 121 of the rear support bar 12 are located.

As shown in FIG. 43 and FIG. 44, when the frame 100 is unfolded, a horizontal distance L5 between the rear wheel 192 and the tip end (e.g., at the handlebar 14) of the frame 100 is less than a horizontal distance L4 between the front wheel 191 and the rear wheel 192. In addition, a width W3 between the support bars on the two sides (e.g., between the upper support bars 13) may be greater than the distance W1 between the two front wheels 191, and a width W3 between the two support bars on the two sides (e.g., between the upper support bars 13) may be less than a distance W2 between the two rear wheels 192.

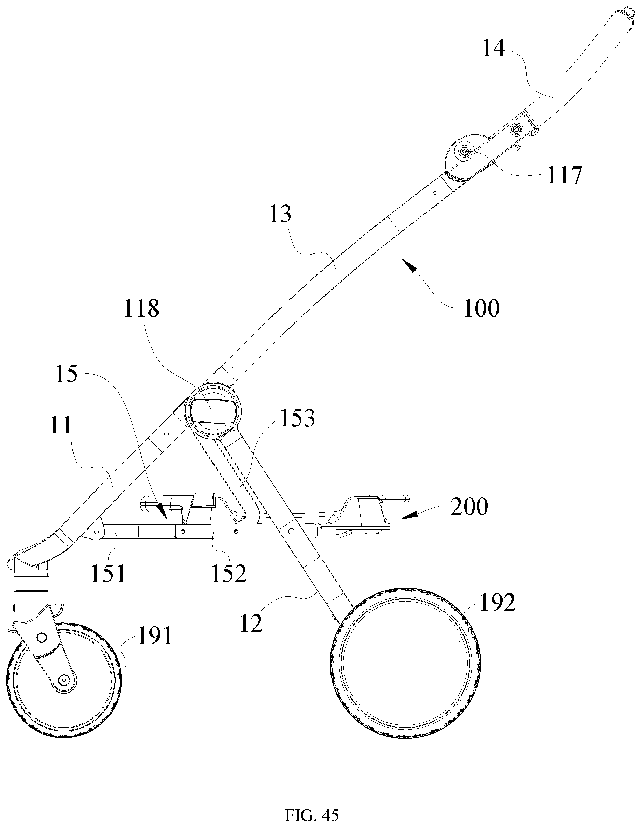

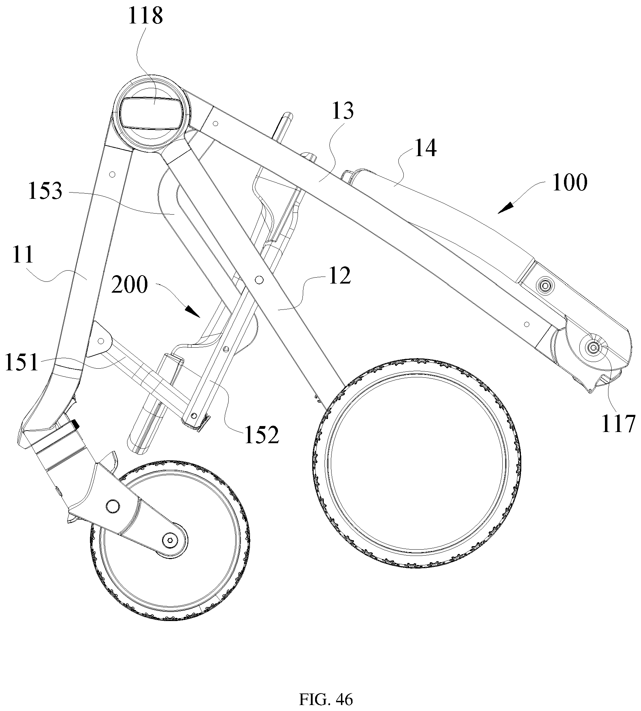

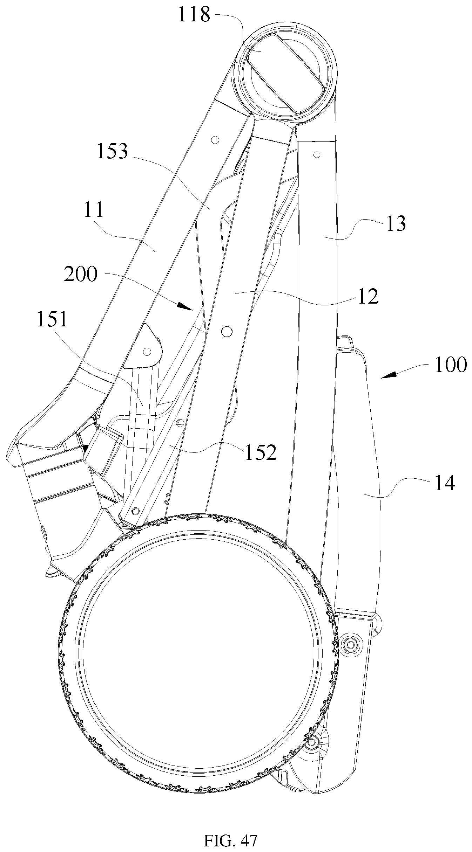

FIG. 45 to FIG. 48 schematically illustrate the folding process of the frame 100 and the engaging base assembly 200. FIG. 45 shows a side view of the frame 100 and the engaging base assembly 200 shown in FIG. 41 when they are fully unfolded. FIG. 46 shows a side view of the frame 100 and the engaging base assembly 200 shown in FIG. 45 in the process of folding. FIG. 47 shows a side view of the frame 100 and the engaging base assembly 200 shown in FIG. 45 after being fully folded. FIG. 48 shows a front view of the frame 100 and the engaging base assembly 200 shown in FIG. 47.

As shown in FIG. 45 and FIG. 47, the frame 100 of the present application can be folded so as to be easily carried and stored. Specifically, the handlebar 14 of the frame 100 is pivotally connected to the upper support bars 13 through pivot portions 117 and is foldable relative to the upper support bars 13. The front support bar 11, the rear support bar 12 and the upper support bar 13 are pivotally connected to the pivot portion 118 and are foldable relative to one another. In addition, when the frame 100 is folded, the engaging base assembly 200 may also be driven to pivot therewith through the connecting assembly 15. Specifically, in some embodiments, when the front support bar 11, the rear support bar 12 and the upper support bar 13 are folded with each other, the linking element 153 is driven to drive the auxiliary support member 152 to pivot, so that the seat plate support member 2031 fixedly connected to the auxiliary support member 152, and the engaging base assembly 200 mounted on the seat plate support member 2031 are also pivotable by folding the frame 100.

In some embodiments, when the frame 100 is folded, the front support bar 11, the rear support bar 12 and the upper support bar 13 approach one another, and the connecting assembly 15 drives the rear end of the engaging base assembly 200 (for example, the end where the first extension portion 21011 is provided, that is, the end of the engaging base assembly 200 adjacent to the rear wheel 192 or the rear support bar 12) to pivot towards the pivot portion 118. More specifically, as shown in FIG. 46 and FIG. 47, as the front support bar 11, the rear support bar 12 and the upper support bar 13 are folded relative to one another, the upper support bar 13 drives the linking element 153 to pivot, and at the same time, the front support bar 11 drives the first coupling member 151 to pivot, and the auxiliary support member 152 pivots under the action of the first coupling member 151 and the linking element 153. The auxiliary support member 152 then drives the seat plate support member 2031 connected to the auxiliary support member 152 to pivot, so that the longitudinal rear end of the seat plate support member 2031 and the engaging base assembly 200 disposed thereon pivots towards the pivot portion 118 (pivots upwardly), and the longitudinal front end of the engaging base assembly 200 pivots downwardly. As can be seen from FIG. 46, the engaging base assembly 200 is folded in a such a way that its upper surface pivots towards the front side of the frame 100. The engaging base assembly 200 is stored in the overall structure of the frame 100 as the frame 100 is folded, and FIG. 47 shows the frame 100 in a fully folded state.

Referring to FIG. 47, in some embodiments, when the frame 100 is fully folded, the front support bar 11, the rear support bar 12, the upper support bar 13, and the handlebar 14 are each folded closest to one another, and the engaging base assembly 200 is stored between the front support bar 11 and the upper support bar 13 as the frame 100 pivots.

### Third Embodiment

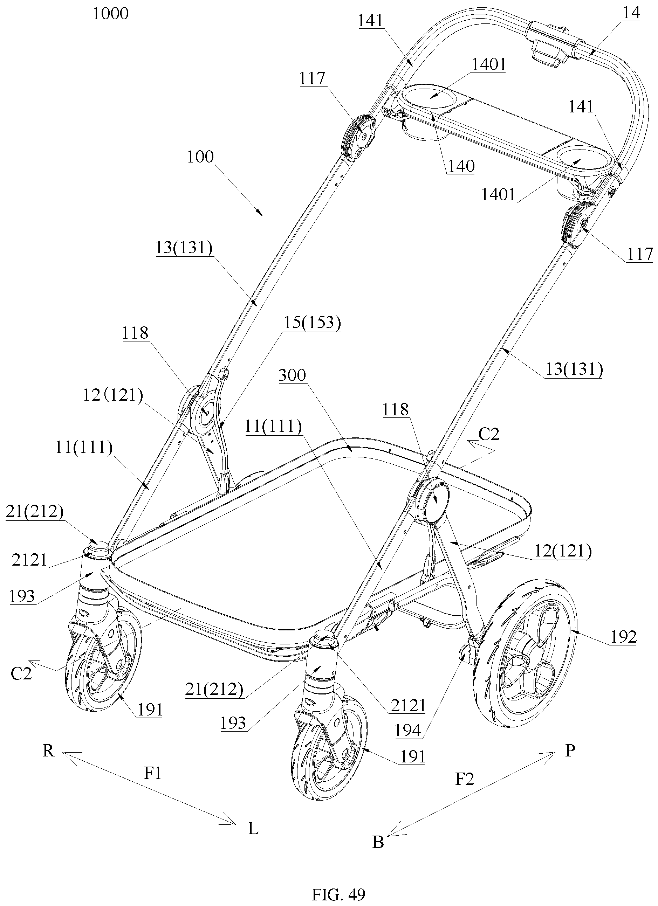

FIG. 49 shows a perspective view of a wheeled movable device 1000 according to some embodiments of the present application. The wheeled movable device 1000 may include a frame 100 and an engaging base assembly 200. In some embodiments, the wheeled movable device 1000 may further include a carrier 300. In the embodiment shown in FIG. 49, the wheeled movable device 1000 is exemplarily described by taking a cart as an example. According to the change of the type of the carrier 300, the cart may be a baby trolley, a pet trolley, a shopping cart, etc. Certainly, in some alternative embodiments, the wheeled movable device 1000 may also be other types of products.

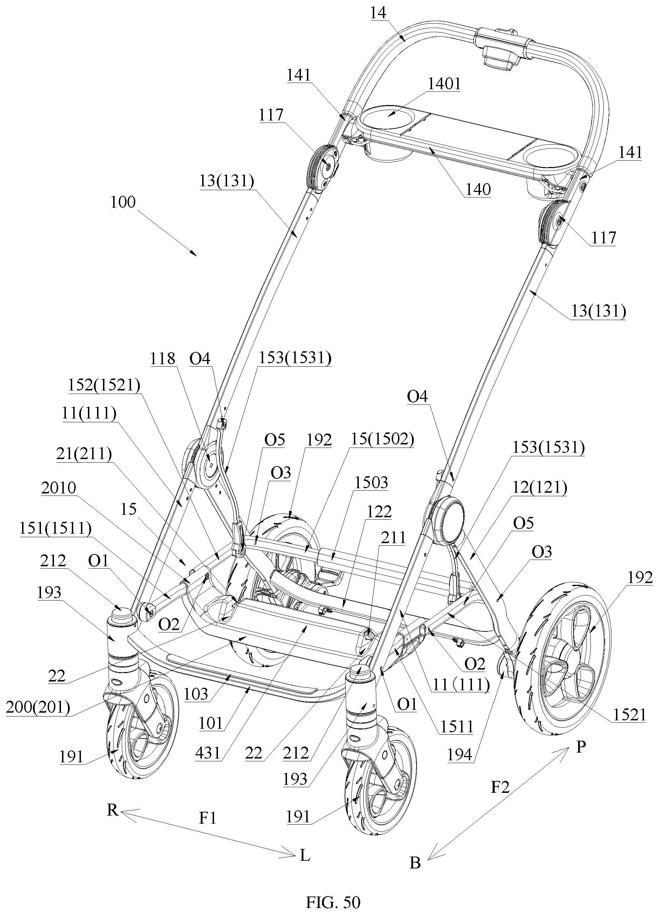

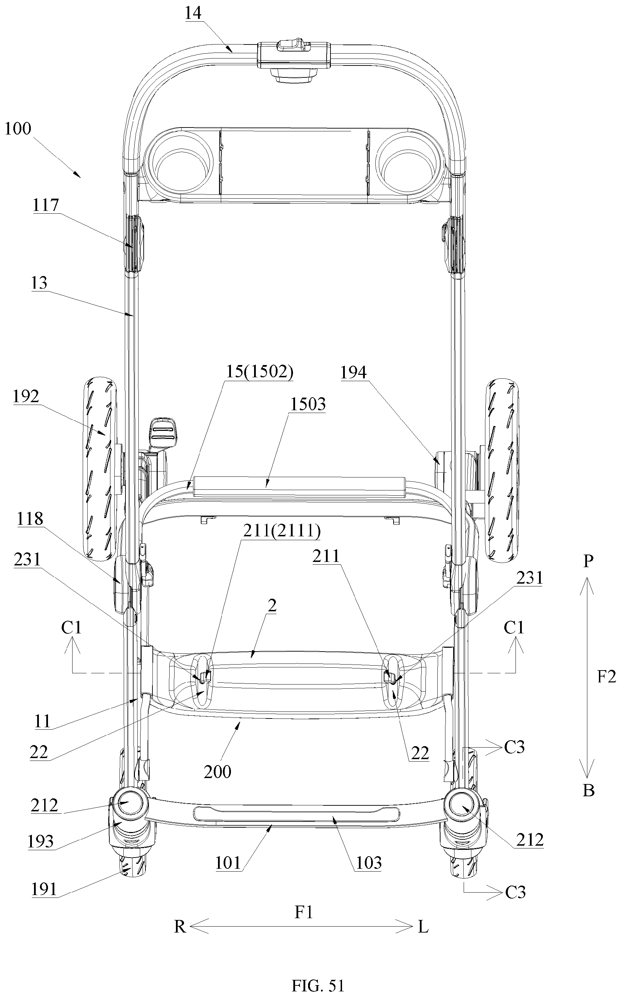

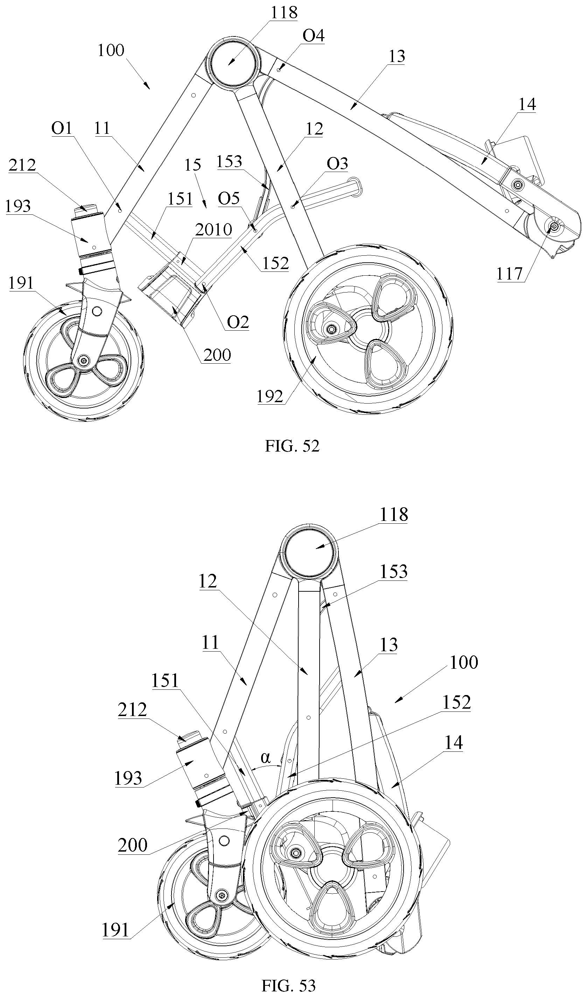

Referring to the configuration of the frame 100 shown in FIG. 50 and FIG. 51, in some embodiments, the configuration of the frame 100 is substantially symmetric in the left-right direction. The frame 100 may include, for example, a front support bar 11, a rear support bar 12, an upper support bar 13, a handlebar 14, and a connecting assembly 15. The frame 100 may be folded and have an unfolded state (FIG. 50) and a folded state (FIG. 53).

Referring to FIG. 50, the front support bar 11 has, for example, a U-shaped structure, and includes two bars 111 respectively positioned on the left and right sides and a first crossbar 101 connected between the two bars 111. The first crossbar 101 extends in a first direction F1, which is equivalent to a left-right direction. At least one front wheel seat 193 is mounted at the bottom of the front support bar 11. In this embodiment, two front wheel seats 193 are mounted at the bottom of the front support bar 11, and the two front wheel seats 193 are spaced apart in the left-right direction. Each front wheel seat 193 is configured to be fitted with a front wheel 191. The front wheel 191 may be a universal wheel or a non-universal wheel. Certainly, in some alternative embodiments, the front support bar 11 may also have other implementations, for example, the front support bar 11 has a V-shaped structure or an I-shaped structure, and a front wheel seat 193 may be mounted at the bottom of the front support bar 11 centrally.

The rear support bar 12 has, for example, a U-shaped structure, and includes two bars 121 respectively positioned on the left and right sides and a rear crossbar 122 connected between the two bars 121. Each of upper ends of the bars 121 is, for example, pivotally connected to an upper end of the bar 111 of the front support bar 11 on the same side by a pivot portion 118. The rear support bar 12 is provided with two rear wheel seats 194. The two rear wheel seats 194 are spaced apart in the left-right direction. Each rear wheel seat 194 is configured to be fitted with a rear wheel 192. The rear wheel 192 may be a universal wheel or a non-universal wheel. In this embodiment, the size of the rear wheel 192 is greater than the size of the front wheel 191, so that the overall structure of the wheeled movable device 1000 is more stable. Certainly, in some alternative embodiments, the size of the rear wheel 192 may be the same as the size of the front wheel 191.

The upper support bar 13 includes two bars 131 respectively positioned on the left and right sides. The lower end of each bar 131 is pivotally connected to the pivot portion 118 on the same side, and the upper end of each bar 131 is connected to the handlebar 14. In some embodiments, the handlebar 14 has, for example, a U-shaped structure, and includes two bars 141 respectively positioned on the left and right sides. A lower end of each bar 141 is, for example, pivotally connected to the bar 131 of the upper support bar 13 on the same side by the pivot part 117. In some alternative embodiments, the two bars 141 of the handlebar 14 are connected to the two bars 131 by telescopic structures, so that the height of the handlebar 14 may be changed. A storage rack 140 for storing small items may be mounted on the handlebar 14. The storage rack 140 has, for example, a storage cavity(s) 1401 for accommodating cups or other items.

The connecting assembly 15 is connected to the front support bar 11, the rear support bar 12 and the upper support bar 13 respectively. When the frame 100 is folded, the front support bar 11, the rear support bar 12 and the upper support bar 13 may be folded synchronously under the action of the connecting assembly 15. In this embodiment, the engaging base assembly 200 is connected to the connecting assembly 15 and thus mounted on the frame 100. When the connecting assembly 15 is unfolded, the engaging base assembly 200 is unfolded and the frame 100 is unfolded. When the connecting assembly 15 is folded, the engaging base assembly 200 is folded and the frame 100 is folded.

An exemplary embodiment of the connection assembly 15 is illustrated in FIG. 50. The connection assembly 15 includes, for example, a first coupling member 151, an auxiliary support member 152 and a linking element 153.

The first coupling member 151 includes two first tubes 1511 positioned at the left and right sides. The front end of each first tube 1511 is pivotally connected to the first pivot point O1 of the bar 111 of the front support bar 11 on the same side.

The auxiliary support member 152 has, for example, a U-shaped structure, and includes two second tubes 1521 respectively positioned on the left and right sides and a second crossbar 1502 connected between the two second tubes 1521. In this embodiment, the second crossbar 1502 is connected to the rear ends of the two second tubes 1521. The second crossbar 1502 extends in the left-right direction. The front end of each second tube 1521 is pivotally connected to the second pivot point O2 of the rear end of the first tube 1511 on the same side, and each second tube 1521 is also pivotally connected to the third pivot point O3 of the bar 121 of the rear support bar 12 on the same side. The second crossbar 1502 is positioned behind the first crossbar 101. The second crossbar 1502 and the first crossbar 101 are spaced apart by a predetermined distance apart in the second direction F2. The second direction F2 is equivalent to the front-rear direction, and the second direction F2 is substantially perpendicular to the first direction F1.

The linking element 153 includes two tubes 1531 respectively positioned on the left and right sides. The upper end of each tube 1531 is pivotally connected to the fourth pivot point O4 of the bar 131 on the same side, and the lower end of each tube 1531 is pivotally connected to the fifth pivot point O5 of the second tube 1521 on the same side. In this embodiment, each tube 1531 has an S-shaped structure to avoid interference with other components when the frame 100 is folded. Certainly, in some alternative embodiments, the configuration of each tube 1531 is not limited to the S-shape, and each tube 1531 may be designed into any suitable configuration as needed.

As can be seen from FIG. 50, when the frame 100 is in the unfolded state, the first coupling member 151 and the auxiliary support member 152 are unfolded and disposed substantially horizontally, the second pivot point O2 is positioned between the first pivot point O1 and the third pivot point O3, the third pivot point O3 is positioned between the second pivot point O2 and the second crossbar 1502, and the fifth pivot point O5 is positioned between the second pivot point O2 and the third pivot point O3. Referring to the perspective view of the folding process of the frame 100 shown in FIG. 52 and FIG. 53, when the frame 100 is in the folded state, the first coupling member 151 and the auxiliary support member 152 are folded. More specifically, during the folding process of the frame 100, the angle α between the first coupling member 151 and the auxiliary support member 152 changes from approximately 180 degrees to less than 90 degrees (as shown in FIG. 53, when the frame 100 is fully folded, the angle α is less than 90 degrees).

Referring to FIG. 52, when the frame 100 of the present embodiment needs to be folded, the handlebar 14 is rotated about the pivot portion 117 to be folded relative to the upper support bar 13. The upper support bar 13 is rotated about the pivot portion 118 to approach the rear support bar 120. The linking element 153 drives the auxiliary support member 152 to rotate about the third pivot point O3 as the upper support bar 13 moves, so that the first coupling member 151 rotates about the second pivot point O2 relative to the auxiliary support member 152 to approach the auxiliary support member 152. The first coupling member 151 pulls the front support bar 11 to approach the rear support bar 12 while rotating, until the frame 100 is folded to the folded state shown in FIG. 53.

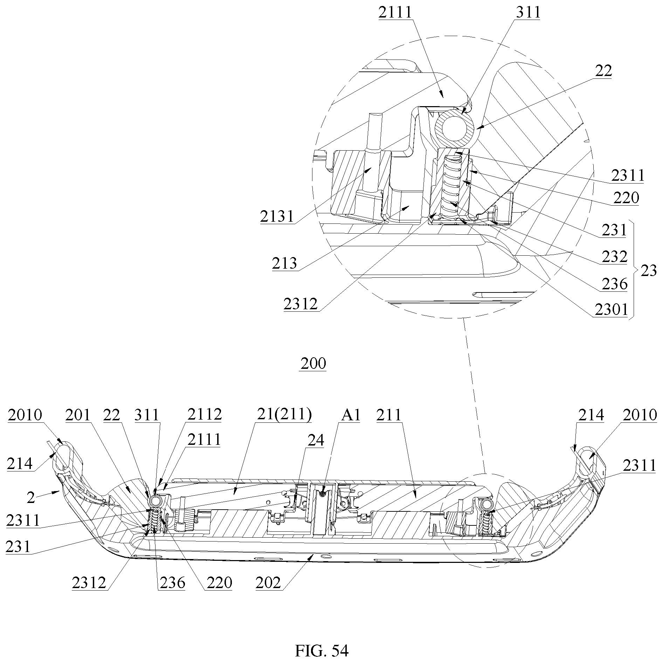

FIG. 54 to FIG. 59 show a sectional view of the engaging base assembly 200 in this embodiment and a perspective view of a part of the structure. The engaging base assembly 200 is, for example, a symmetric structure in the left-right direction. The engaging base assembly 200 includes a seat plate assembly 2 and a locking mechanism 21 mounted on the seat plate assembly 2. The seat plate assembly 2 includes, for example, an upper housing 201 and a lower housing 202. The upper housing 201 and the lower housing 202 are, for example, fastened together and may be fixed together by fasteners (such as screws or bolts) not shown. A space for accommodating the locking mechanism 21 is enclosed between the upper housing 201 and the lower housing 202.

Referring to FIG. 50 and FIG. 51, the seat plate assembly 2 of the engaging base assembly 200 is mounted on the connecting assembly 15 of the frame 100 and extends in the left-right direction (the first direction F1). The seat plate assembly 2 of the engaging base assembly 200 is positioned between the first crossbar 101 and the second crossbar 1502. That is, the seat plate assembly 2 of the engaging base assembly 200, the first crossbar 101, and the second crossbar 1502 are spaced apart by a predetermined distance in the front-rear direction (the second direction F2). Referring to FIG. 50 and FIG. 54, in some embodiments, sleeves 2010 are provided at the left and right ends of the upper housing 201, for example. Each sleeve 2010 may be sleeved on the outside of the adjacent first tube 1511. The pivot shaft of the first tube 1511 and the second tube 1521 at the second pivot point O2 extends through the sleeve 2010, so that the engaging base assembly 200 cannot slide forwardly and rearwardly along the first coupling member 151. When the frame 100 is folded, the engaging base assembly 200 can move to the folded position along with the first coupling member 151. In some alternative embodiments, sleeves configured to be sleeved on the two first tubes 1511 may be provided at the left and right ends of the lower housing 202, or the upper housing 201 and the lower housing 202 may be butted to each other to form the sleeves.

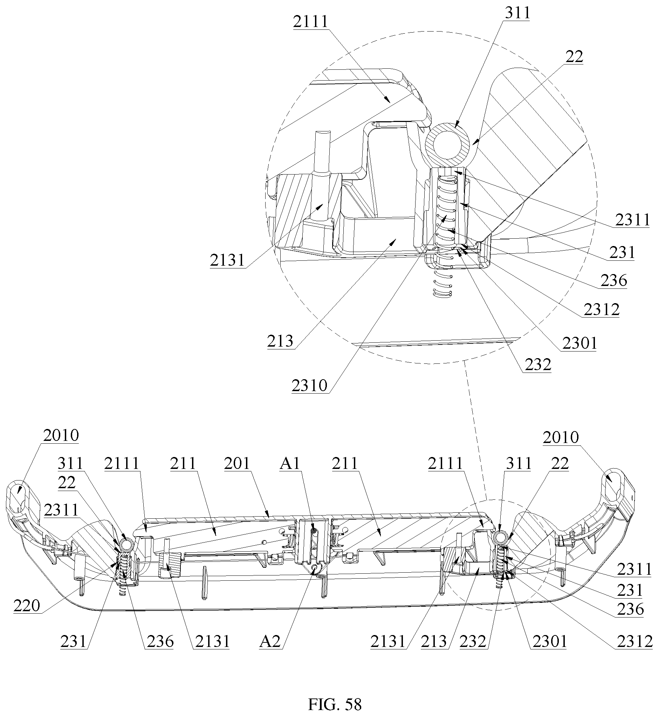

Referring to FIG. 51, the engaging base assembly 200 is formed with two engaging channels 22 (for example, recessed portions formed on the upper housing 201) extending in the front-rear direction (the second direction F2). The two engaging channels 22 are spaced apart from each other and arranged in a row in the left-right direction (the first direction F1). The two engaging channels 22 are configured to be engaged with an engaging member 311 (see FIG. 58) of the carrier 300. The type of the carrier 300 is not limited herein. The carrier 300 shown in FIG. 49 may be a bottom structure of a storage rack, a stretcher, or a container (such as a baby carrier or a pet box) whose complete structure is not shown. The bottom of the carrier 300 includes the engaging member 311. The engaging member 311 may be formed on two opposing bars of the annular structure, for example, or the engaging member 311 may be formed by two or more bars that are independent of each other. Certainly, the implementation of the engaging member 311 is not limited thereto. The engaging member 311 is configured to be engaged with the engaging channel 22 and may be locked in the engaging channel 22 by the locking mechanism 21. The cooperation between the engaging member 311 and the engaging channel 22 can limit the movement of the carrier 300 relative to the engaging base assembly 200 in the left-right direction.

The wheeled movable device 1000 according to the embodiments of the present application, the frame 100 may be connected to a variety of different types of carriers 300 by the engaging base assembly 200, thereby expanding the versatility of the frame 100, so that the wheeled movable device 1000 can provide multiple functions to meet the user's usage needs.

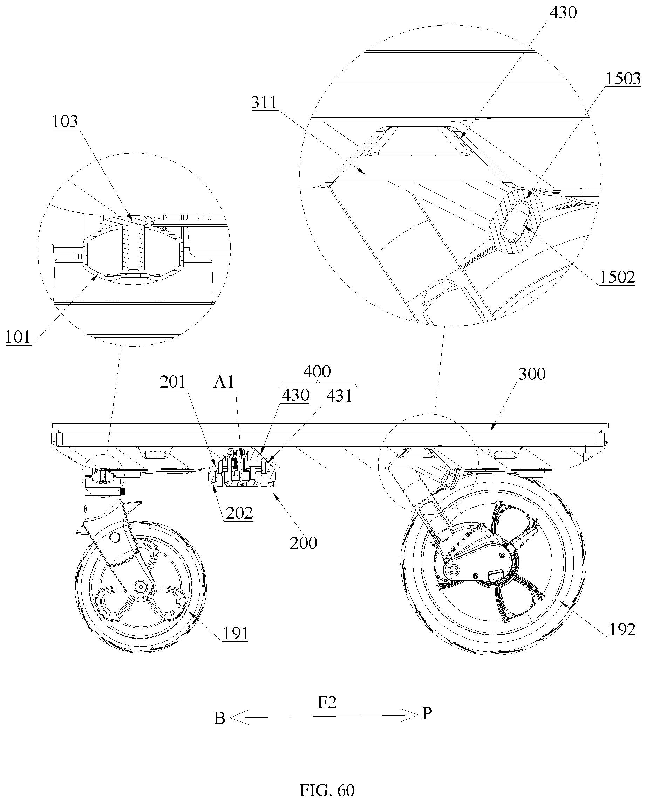

Referring to the sectional view shown in FIG. 60, a positioning mechanism 400 is provided between the engaging base assembly 200 and the carrier 300. The positioning mechanism 400 is configured to limit the movement of the carrier 300 in the front-rear direction (the second direction F2) relative to the engaging base assembly 200. The positioning mechanism 400, for example, includes a third positioning protrusion 431 (see FIG. 51 and FIG. 54) formed on the upper housing 201 of the seat plate assembly 2 of the engaging base assembly 200. The third positioning protrusion 431 extends in the left-right direction (the first direction F1). The third positioning protrusion 431 is configured to be engaged with a groove 430 at the bottom of the carrier 300 (for example, in a concave-convex matching manner). Certainly, the implementation of the positioning mechanism 400 is not limited to the above examples, as long as it can limit the movement of the carrier 300 in the front-rear direction relative to the engaging base assembly 200. For example, in some alternative embodiments, a recess extending in the left-right direction may be provided on the upper housing 201 of the engaging base assembly 200, and a positioning protrusion extending in the left-right direction may be provided on the carrier 300. The recess and the positioning protrusion are engaged with each other. In addition, in some alternative embodiments, the positioning mechanism 400 may be provided between the carrier 300 and the frame 100. Alternatively, in some alternative embodiments, the positioning mechanisms 400 are respectively provided between the carrier 300 and the frame 100, and between the carrier 300 and the engaging base assembly 200.

Still referring to FIG. 60, the first crossbar 101, the engaging base assembly 200 and the second crossbar 1502 collaboratively to support the carrier 300. The first crossbar 101 helps prevent the carrier 300 from tipping forwardly relative to the engaging base assembly 200, and the second crossbar 1502 helps prevent the carrier 300 from tipping rearwardly relative to the engaging base assembly 200, thereby providing more reliable support for the carrier 300.

Certainly, in some alternative embodiments, the engaging base assembly 200 and one of the first crossbar 101 and the second crossbar 1502 collaboratively support the carrier 300, and another of the first crossbar 101 and the second crossbar 1502 does not support the carrier 300. The first crossbar 101 or the second crossbar 1502 used to support the carrier 300 may also be detachably engaged with the carrier 300 through an engaging structure to prevent the carrier 300 from being easily separated from the first crossbar 101 or the second crossbar 1502. In some embodiments, the engaging structure, for example, includes a hook extending downwardly from the carrier 300. The hook is adapted to be engaged with the first crossbar 101 or the second crossbar 1502, so that the first crossbar 101 or the second crossbar 1502 is restricted between a hook body of the hook and the carrier 300. In some embodiments, the engaging structure may also limit the forward and rearward movement of the carrier 300 relative to the engaging base assembly 200. The positioning mechanism 400 can include the engaging structure. It should be noted that in the embodiment where both the first crossbar 101 and the second crossbar 1502 are configured to support the carrier 300, both the first crossbar 101 and the second crossbar 1502 may be detachably engaged with the carrier 300 via the engaging structure (such as the above-mentioned hook).

In some unillustrated embodiments, when the first crossbar 101 is configured to support the carrier 300, a first groove and a first positioning protrusion extending in the left-right direction may be respectively provided on the carrier 300 and the first crossbar 101. The engagement between the first groove and the first positioning protrusion (for example, engagement in a concave-convex matching manner) may limit the movement of the carrier 300 relative to the engaging base assembly 200 in the second direction F2. When the second crossbar 1502 is configured to support the carrier 300, a second groove and a second positioning protrusion extending in the left-right direction may be respectively provided on the carrier 300 and the second crossbar 1502. The engagement between the second groove and the second positioning protrusion (for example, engagement in a concave-convex matching manner) may limit the movement of the carrier 300 relative to the engaging base assembly 200 in the second direction F2. The positioning mechanism 400 includes the first groove and first positioning protrusion, the second groove and the second positioning protrusion, as described above.

Referring to FIG. 51 and FIG. 60, the first crossbar 101 may further be provided with a first abutting member 103 configured to abut against the carrier 300. The first abutting member 103 may be, for example, but not limited to, a plastic sheet mounted on the first crossbar 101. The first abutting member 103 may, for example, have an anti-slipping effect. The second crossbar 1502 may be provided with a second abutting member 1503 configured to abut against the carrier 300. The second abutting member 1503 may be, for example, but not limited to, a rubber sleeve mounted on the second crossbar 1502. The second abutting member 1503 may, for example, have an anti-slipping effect.

In some unillustrated embodiments, the position of the second crossbar 1502 in the front-rear direction is adjustable to be adapted to support carriers 300 of different sizes. More specifically, the two ends of the second crossbar 1502 are connected to two second tubes 1521 (see FIG. 50) by telescopic structures, respectively, to allow the position of the second crossbar 1502 in the front-rear direction to be adjustable.

Referring again to FIG. 51 and FIG. 54 to FIG. 59, an exemplary embodiment of the locking mechanism 21 is illustrated. The locking mechanism 21 includes two locking members 211. The two locking members 211 are mounted in the seat plate assembly 2 and can slide in the left-right direction (first direction F1). The two locking members 211 correspond to the two engaging channels 22 one by one. Each locking member 211 has a locked position and an unlocked position. Taking any one of the locking members 211 as an example, see FIG. 54, when the locking member 211 is at the locked position, a locking portion 2111 (such as a locking tongue) of the locking member 211 extends into the corresponding engaging channel 22 to lock the corresponding engaging member 311, so that the engaging member 311 would not be removed from the engaging channel 22. Referring to FIG. 58, when the locking member 211 is at the unlocked position, the locking portion 2111 of the locking member 211 retracts relative to the corresponding engaging channel 22 to unlock the corresponding engaging member 311, allowing the engaging member 311 to be removed from the engaging channel 22, thereby allowing the carrier 300 to be separated from the frame 100.

Referring to FIG. 54 and FIG. 58, in this embodiment, the two locking members 211 move in opposite directions in the left-right direction to unlock or lock the engaging member 311. This embodiment shows an exemplary structure for unlocking the two locking members 211.

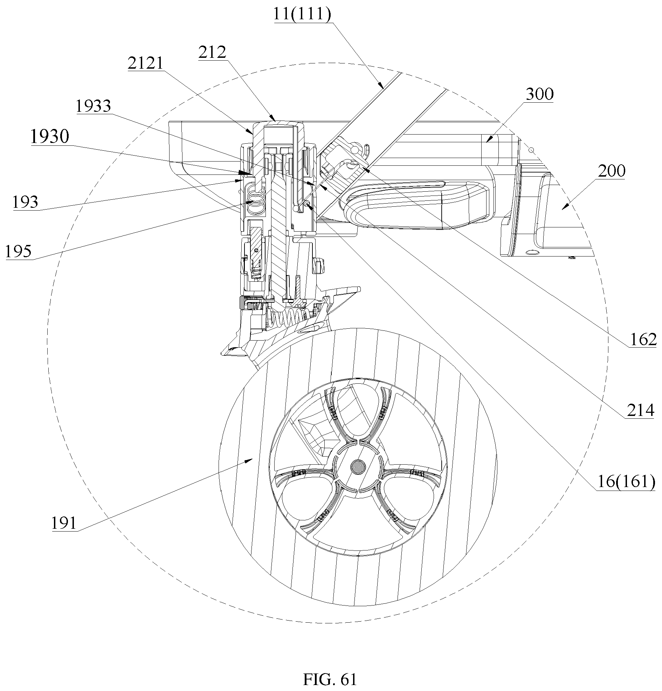

Referring to FIG. 49 and FIG. 50, each of the two wheel seats (more specifically, the front wheel seats 193) on the left and right sides of the frame 100 is mounted with an unlocking operating member 212. The two locking members 211 are driven to performing unlocking by the unlocking operating members 212, respectively. Referring to the partial sectional view shown in FIG. 61, each unlocking operating member 212 slidably cooperates with a sliding channel 1930 of the front wheel seat 193. Referring to FIG. 50, FIG. 55, FIG. 56 and FIG. 61, the two unlocking operating members 212 are connected to the two locking members 211 in the engaging base assembly 200 by two traction ropes 214, respectively. Each traction rope 214 extends inside tube bodies of the front wheel seat 193, the front support bar 11 and the first coupling member 151 of the frame 100, and then enters the inside of the engaging base assembly 200. To facilitate arranging the traction rope 214, the unlocking operating member 212 of the front wheel seat 193 on the left side of the frame 100 is connected to the locking member 211 on the right side of the engaging base assembly 200, and the unlocking operating member 212 of the front wheel seat 193 on the right side of the frame 100 is connected to the locking member 211 on the left side of the engaging base assembly 200. In this way, when any unlocking operating member 212 is pressed, the traction rope 214 would pull the corresponding locking member 211 to move, so that the locking member 211 unlocks the corresponding engaging member 311. In some embodiments, a reset member 195 (see FIG. 61) for driving the unlocking operating member 212 to reset may also be mounted in the front wheel seat 193. The reset member is, for example, a spring.

Referring to FIG. 49, the unlocking operating member 212 may have an unlocking identification region 2121. The unlocking identification region 2121 is configured to assist the user in determining whether the locking member 211 is at the unlocked position. The unlocking identification region 2121 is, for example, a color block (e.g., in green) positioned on the unlocking operating member 212. More specifically, when the unlocking operating member 212 is not pressed, the locking member 211 is at the locked position, and the unlocking identification region 2121 is positioned outside the front wheel seat 193 and is visible. When the unlocking operating member 212 is pressed, the locking member 211 is at the unlocked position, and the unlocking identification region 2121 slides into the interior of the front wheel seat 193 and is invisible. By observing whether the unlocking identification region 2121 is visible, the user can easily determine whether the locking member 211 is at the locked position or the unlocked position.

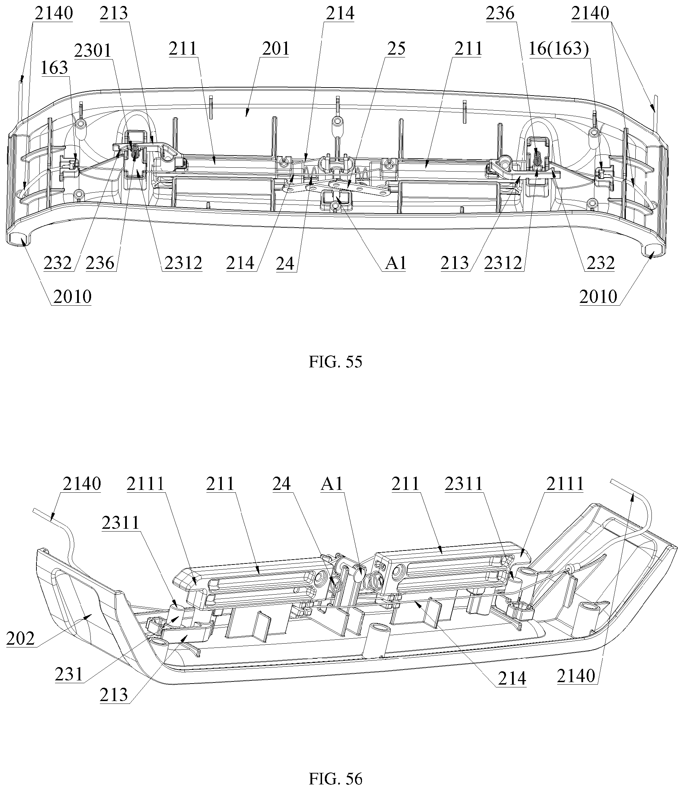

Referring to FIG. 55, each traction rope 214 is, for example, a steel wire rope. Taking any traction rope 214 as an example, the traction rope 214 has a first end connected to the corresponding unlocking operating member 212, and another end connected to the corresponding locking member 211. At least one guiding mechanism 16 configured to guide the traction rope 214 may be provided inside the frame 100. In conjunction with FIG. 61, the guiding mechanism 16 includes, for example, a rotating member 161 disposed near the unlocking operating member 212 and other guiding structures disposed in the tube bodies of the frame. Other guiding structures include, for example, a guiding bracket 162 (see FIG. 61) disposed inside the tube body (such as inside the front support bar 11) of the frame 100 and a guiding bracket 163 (see FIG. 55) disposed inside the engaging base assembly 200. The rotating member 161 is more specifically disposed in the front wheel seat 193. After passing by the rotating member 161, the traction rope 214 extends out of a hole 1933 of the front wheel seat 193 and enters the front support bar 11. The rotating member 161 can prevent the traction rope 214 from having unnecessary friction with other structures. The rotating member 161 may be formed by a rotatable rivet or pin, for example. Referring to FIG. 55 and FIG. 61, the guiding bracket 162 and the guiding bracket 163 are, for example, respectively disposed at positions where the traction rope 214 is bent. In some embodiments, the traction rope 214 is wrapped up in a sheath 2140. The guiding bracket 162 and the guiding bracket 163 may be configured to fix the sheath 2140 of the traction rope 214.

Referring again to FIG. 54 to FIG. 56, the engaging base assembly 200 may further include an elastic device 24. The elastic device 24 is configured to drive each locking member 211 to return to the locked position. In some embodiments, the elastic device 24 may include a spring disposed between two locking members 211. Alternatively, the elastic device 24 may include a spring disposed between each locking member 211 and the seat plate assembly 2 (e.g., the upper housing 201 or the lower housing 202). When the locking members 211 move towards the unlocked position, the springs of the elastic device 24 are compressed. Referring to FIG. 54, the locking portion 2111 of each locking member 211 may have an inclined surface 2112. After the inclined surface 2112 is pressed, the locking portion 2111 may move from the locked position towards the unlocked position, which allows the engaging member 311 to enter the engaging channel 22 without operating the unlocking operating member 212.

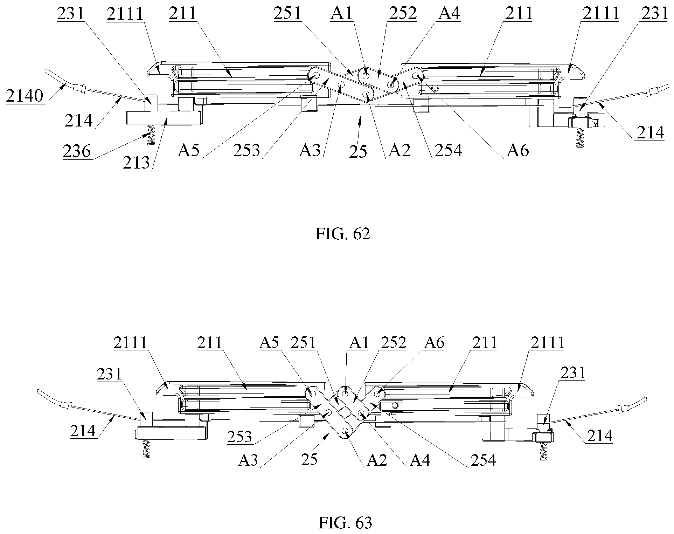

FIG. 62 and FIG. 63 show side views of two locking members 211 and a linkage assembly 25 of the engaging base assembly 200. In this embodiment, the two locking members 211 are connected by the linkage assembly 25 positioned therebetween, so that the two locking members 211 are synchronously movable to the unlocked position or the locked position. In this way, any one of the unlocking operating members 212 can only be operated to simultaneously unlock the two locking members 211.

Referring to FIG. 62 and FIG. 63, the linkage assembly 25 may be a four-bar linkage mechanism. Specifically, the four-bar linkage mechanism includes a first linking rod 251, a second linking rod 252, a third linking rod 253, and a fourth linking rod 254. The first linking rod 251 and the second linking rod 252 are pivotally connected by a pivot shaft A1. The third linking rod 253 and the fourth linking rod 254 are pivotally connected by a pivot shaft A2. The first linking rod 251 and the third linking rod 253 are pivotally connected by a pivot shaft A3. The second linking rod 252 and the fourth linking rod 254 are pivotally connected by a pivot shaft A4. The four-bar linkage mechanism is a parallel four-bar linkage mechanism, in which the first linking rod 251 and the fourth linking rod 254 are parallel to each other, and the second linking rod 252 and the third linking rod 253 are parallel to each other. One of the pivot shafts A1 and A2 that are disposed diagonally is a fixed pivot shat that is fixedly connected to the seat plate assembly 2 (e.g., the upper housing 201 or the lower housing 202), and another of the pivot shafts A1 and A2 that are disposed diagonally is a movable pivot shaft. The two linking rods pivotally connected to the movable pivot shaft are pivotally connected to the two locking members 211 via the pivot shaft A5 and the pivot shaft A6 respectively.

In this embodiment, the pivot shaft A1 is a fixed pivot shaft, and the pivot shaft A2 is a movable pivot. The pivot shaft A3 is positioned between the pivot shaft A2 and the pivot shaft A5. The pivot shaft A4 is positioned between the pivot shaft A2 and the pivot shaft A6. Referring to FIG. 63, when any one of the locking members 211 is driven by the corresponding unlocking operating member 212 to move towards the unlocked position, the linkage assembly 25 would be deformed and drive another locking member 211 to move synchronously towards the unlocked position. Similarly, when any one of the locking members 211 is driven by the elastic device 24 to move towards the locked position, the linkage assembly 25 would drive another locking member 211 to move synchronously towards the locked position. Certainly, the configuration of the linkage assembly 25 is not limited to the above-mentioned four-bar connection structure, as long as it can cause the locking members 211 connected by the linkage assembly 25 to move synchronously.

It can be understood that by providing the linkage assembly 25, for example, by operating any unlocking operating member 212 by pressing, the two locking members 211 may be unlocked at the same time. In some embodiments, by providing the linkage assembly 25, the number of unlocking operating members 212 may be less than the number of locking members 211. For example, only one unlocking operating member 212 may be provided to simultaneously unlock the two locking members 211. In addition, by providing the linkage assembly 25, the elastic device 24 can only include a spring disposed between one locking member 211 and the seat plate assembly 2 (for example, the upper housing 201 or the lower housing 202) to synchronously drive the two locking members 211 to return to the locked position.

Referring again to FIG. 54 to FIG. 59, the engaging base assembly 200 may further include a retaining mechanism 23 corresponding to the two locking members 211. When each locking member 211 is driven to the unlocked position by the unlocking operating member 212, each retaining mechanism 23 may lock the corresponding locking member 211 at the unlocked position. In this way, after the user presses the unlocking operating member 212 once, the locking member 211 is locked at the unlocked position by the retaining mechanism 23. Even if the user releases the pressing of the unlocking operating member 212, the locking member 211 remains at the unlocked position. Thereafter, the user only needs to lift the carrier 300 upwardly, the carrier 300 may be easily removed from the frame 100. It can be understood from the above that in some alternative embodiments, the retaining mechanism 23 may be configured for only one of the two locking members 211. Under the action of the linkage assembly 25, the retaining mechanism 23 may lock the two locking members 211 at the unlocked position at the same time.

Referring to FIG. 54 to FIG. 59, the retaining mechanism 23 in this embodiment includes, for example, a movable member 231, a first buckling portion 2301, a second buckling portion 232 and a reset device (also referred to as a reset member) 236.

Referring to FIG. 54, the movable member 231 may be mounted in a sliding channel 220 in communication with the engaging channel 22. The sliding channel 220 is positioned below the engaging channel 22. The movable member 231 has an abutting end 2311 adapted to extend into the engaging channel 22 and an engaging end 2312 away from the abutting end 2311. The abutting end 2311 is adapted to abut against the engaging member 311. The engaging member 311 positioned in the engaging channel 22 pushes the abutting end 2311 from the engaging channel 22 towards the sliding channel 220. The first buckling portion 2301 is mounted at the engaging end 2312. The first buckling portion 2301 is, for example, an engaging groove.

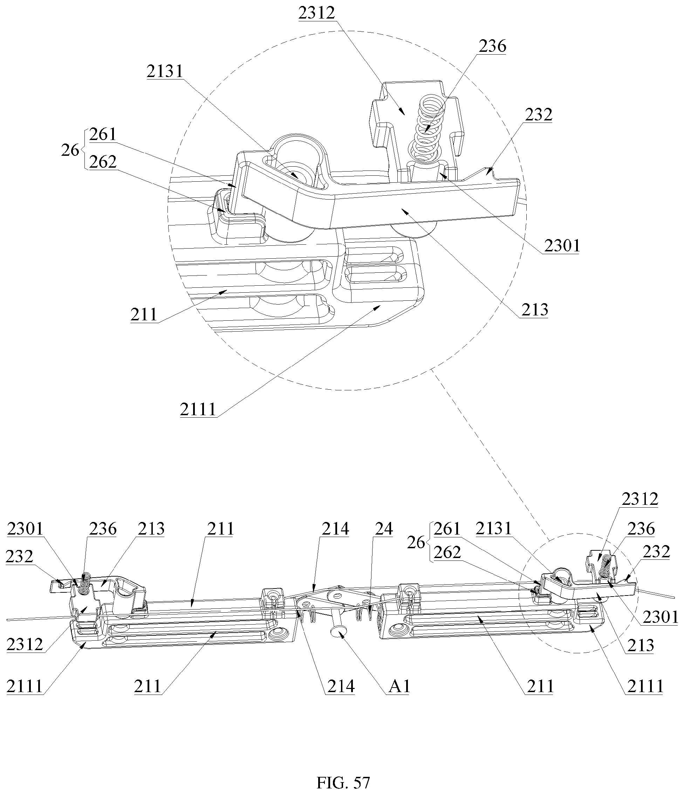

Referring to FIG. 55, the second buckling portion 232 is disposed on the locking member 211. Referring to FIG. 57, in this embodiment, an elastic arm 213 is mounted on the locking member 211. The elastic arm 213 extends in the left-right direction to the vicinity of the abutting end 2311 of the movable member 23. The second buckling portion 232 is mounted on the elastic arm 213. The second buckling portion 232 includes, for example, a wedge-shaped step formed on the elastic arm 213.

Referring to FIG. 57 and FIG. 58, in some embodiments, the elastic arm 213 is fixed to the locking member 211 by, for example, a fastener 2131. The fastener 2131 is, for example, a screw. A rotation-stopping structure 26 for preventing the elastic arm 213 and the locking member 211 from rotating relative to each other may also be provided between the elastic arm 213 and the locking member 211. There are many implementations of the rotation- stopping structure 26, and an exemplary implementation of the rotation-stopping structure 26 is illustrated in this embodiment. More specifically, the rotation-stopping structure 26 includes a rotation-stopping block 261 and a rotation-stopping groove 262. One of the rotation-stopping block 261 and the rotation-stopping groove 262 is disposed on the wall of the elastic arm 213 and offsets from the fastener 2131, and another of the rotation-stopping block 261 and the rotation-stopping groove 262 is disposed on the locking member 211. The rotation-stopping block 261 and the rotation-stopping groove 262 are engaged with each other to limit the elastic arm 213 from rotating around the fastener 2131 relative to the locking member 211. In some alternative embodiments, the elastic arm 213 and the locking member 211 may be integrally formed.

The reset device 236 is configured to drive the abutting end 2311 of the movable member 231 to move towards the engaging channel 22. In some embodiments, the reset device 236, for example, includes a spring disposed between the movable member 231 and the lower housing 202 of the seat plate assembly 2. In some embodiments, the movable member 231, for example, has a cavity 2310 (see FIG. 58) for accommodating the reset device 236.

The working process of the retaining mechanism 23 matched with the locking member 211 when the position of any locking member 211 changes will be described below with reference to FIG. 54, FIG. 58 and FIG. 59.

Referring to FIG. 54, when the carrier 300 is fixed on the frame 100, the engaging member 311 is locked in the engaging channel 22 by the locking member 211, and the movable member 231 is pressed by the engaging member 311 and moves downwardly along the sliding channel 220, so that the first buckling portion 2301 moves to the moving path of the second buckling portion 232.

Referring to FIG. 58, when the carrier 300 needs to be removed from the frame 100, the unlocking operating member 212 is pressed, and the unlocking operating member 212 drives the locking member 211 to move towards the unlocked position, and the second buckling portion 232 moves along with the locking member 211, and the elastic device 24 is compressed. When the second buckling portion 232 abuts against the engaging end 2312 of the movable member 231, the elastic arm 213 is elastically deformed to allow the locking member 211 to continue to move. After the locking member 211 moves to the unlocked position, the second buckling portion 232 faces the first buckling portion 2301, and at this time, the elastic arm 213 elastically resets, so that the second buckling portion 232 is engaged with the first buckling portion 2301. In this case, even if the unlocking operating member 212 is released, the elastic device 24 would not drive the locking member 211 towards the unlocked position due to the engagement between the second buckling portion 232 and the first buckling portion 2301, and the locking member 211 is locked at the unlocked position by the retaining mechanism 23. In this case, the user does not need to continue pressing the unlocking operating member 212, and can directly lift the carrier 300 upwardly to remove the carrier 300 from the frame 100.

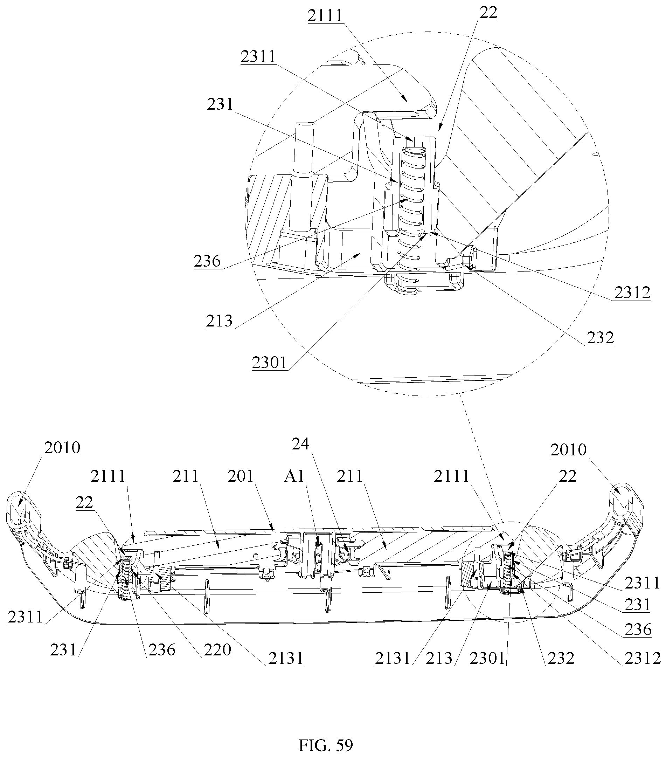

Referring to FIG. 59, when the carrier 300 is removed from the frame 100, the engaging member 311 moves away from the engaging channel 22 and does not press against the abutting end 2311 of the movable member 231. The movable member 231 is reset under the drive of the reset device 236, and the abutting end 2311 moves upwardly and extends into the engaging channel 22. At the same time, the first buckling portion 2301 moves out of the moving path of the second buckling portion 2302 as the movable member 231 moves, and the locking member 211 is reset towards the locked position under the action of the elastic device 24.

In some alternative embodiments, the retaining mechanism 23 may also have a variety of implementations, not limited to the above examples. For example, in some alternative embodiments, the first buckling portion 2301 may be a wedge-shaped step disposed on the engaging end 2312 of the movable member 231, and the second buckling portion 232 may be an engaging groove disposed on the elastic arm 213.

In some unillustrated embodiments, the wheeled movable device 1000 according to the above embodiments of the present application may also be modified as follows.
1. In some alternative embodiments, the frame 100 has a non-foldable structure, and the connection assembly 15 for the mounting of the engaging base assembly 200 has different implementations accordingly. For example, the connection assembly 15 includes two non-foldable tubes respectively positioned on the left and right sides. The two tubes extend in the front-rear direction respectively and are connected to the bar 111 and the bar 121 on the same side. Each tube of the connection assembly 15, the bar 111 and the bar 121 on the same side forms a stable triangle. The left and right ends of the engaging base assembly 200 may be sleeved on the two tubes of the connection assembly 15 and fixed by fasteners, respectively. Alternatively, the left and right ends of the engaging base assembly 200 are directly fixed to the two tubes of the connection assembly 15 by fasteners (bolts or screws), respectively. The engaging base assembly 200 is positioned between the first crossbar 101 and the rear crossbar 122.
2. In some alternative embodiments, the auxiliary support bar 152 may not include the second crossbar 1502 connected between the two second tubes 1521 on the left and right sides. By properly setting the height of the rear crossbar 122 of the rear support bar 12, the rear crossbar 122 may be used as a second crossbar for supporting the carrier 300 in collaboration with the engaging base assembly 200.
3. In some alternative embodiments, the second crossbar 1502 of the auxiliary support bar 152 for supporting the carrier 300 may not be disposed at the rear ends of the two second tubes 1521. For example, the connection position between the second crossbar 1502 and each second tube 1521 may be positioned between the second pivot point O2 and the third pivot point O3, and the second crossbar 1502 and the engaging base assembly 200 are spaced apart by a predetermined distance in the front-rear direction (the second direction F2).
4. In some alternative embodiments, the two ends of the engaging base assembly 200 may not be mounted on the two first tubes 1511 of the first coupling member 151, respectively. For example, the two ends of the engaging base assembly 200 are connected to the two second tubes 1521 of the auxiliary support bar 152 respectively.
5. In some alternative embodiments, there is no limitation on providing two engaging channels 22 on the engaging base assembly 200, and one or more (including two) engaging channels 22 on the engaging base assembly 200 may be provided. For example, a plurality of engaging channels 22 may be arranged in a row in the left-right direction, or in a post in the front-rear direction, or in multiple rows and posts in the left-right direction and in the front-rear direction.
6. In some alternative embodiments, the plurality of locking members 211 that cooperate with the plurality of engaging channels 22 in the same row move in the same direction when unlocking or locking the engaging member 311. For example, the plurality of locking members 211 that cooperate with the plurality of engaging channels in the same row are arranged in a row, and the locking members 211 in the same row may be connected to the same sliding member positioned in the seat plate assembly 2. In this way, there is no need to provide a linkage assembly 25, and the plurality of locking members 211 may be moved to the unlocked position at the same time by driving the sliding member through the same unlocking operating member 212.
7. The location of the unlocking operating member 212 is not limited to the front wheel seat 193. In some alternative embodiments, the unlocking operating member 212 may be disposed on the rear wheel seat 194 or at other suitable positions, and the unlocking operating member 212 controls the locking member 211 to unlock through the traction rope 214. In addition, in some alternative embodiments, the unlocking operating member 212 may be attached to the locking member 211, or may be formed integrally with the locking member 211.
8. Although in this embodiment, the wheeled movable device 100 includes the frame 100, the engaging base assembly 200 and the carrier 300, it can be seen from the above that the carrier 300 may be removed from the engaging base assembly 200, and the wheeled movable device 100 without the carrier 300 is also within the protection scope of this application.

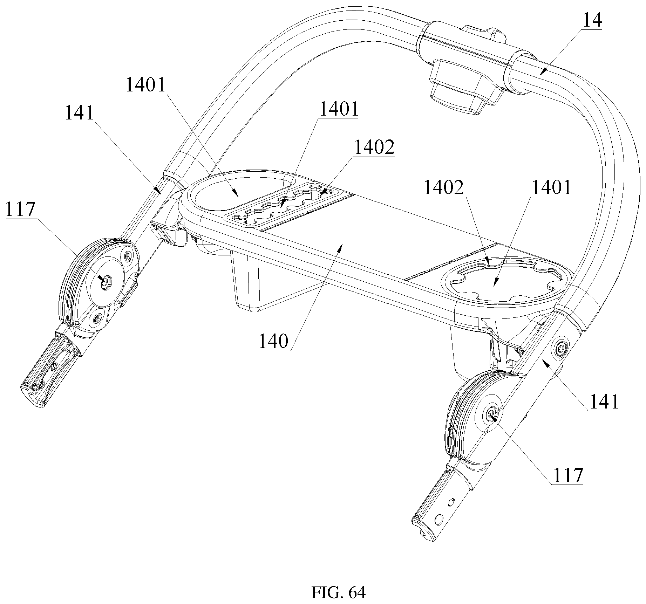

Referring to FIG. 64 to FIG. 66, the configuration of the storage rack 140 mounted on the handlebar 14 of the frame 100 in some modified embodiments of the wheeled movable device is illustrated. The storage rack 140, for example, has a receiving cavity 1401 for receiving a cup or other items. Depending on the different items to be received, the receiving cavity 1401 may have different cross-sectional shapes. For example, some receiving cavities 1401 have a rectangular cross-section to facilitate receiving a mobile phone, and some receiving cavities 1401 have a circular cross-section to facilitate receiving a water cup.

In some embodiments, an opening of the receiving cavity 1401 may be provided with at least one clamping portion 1402 extending inwardly. The clamping portion 1402 is made of, for example, an elastic material. When an object is placed in the receiving cavity 1401, the clamping portion 1402 may abut against the object to prevent the object from shaking back and forth in the receiving cavity 1401, and can prevent the object from easily falling out of the receiving cavity 1401. The present application does not impose any specific limitations on the shape of the clamping portion 1402, as long as it can abut against the object to clamp the object at the opening of the receiving cavity 1401. For example, in some embodiments, a plurality of clamping portions 1402 may be evenly provided along the inner periphery of the opening of the receiving cavity 1401, and each clamping portion 1402 may have, for example, an arc shape. In some embodiments, a long strip-shaped clamping portion 1402 may be locally provided at the opening of the receiving cavity 1401.

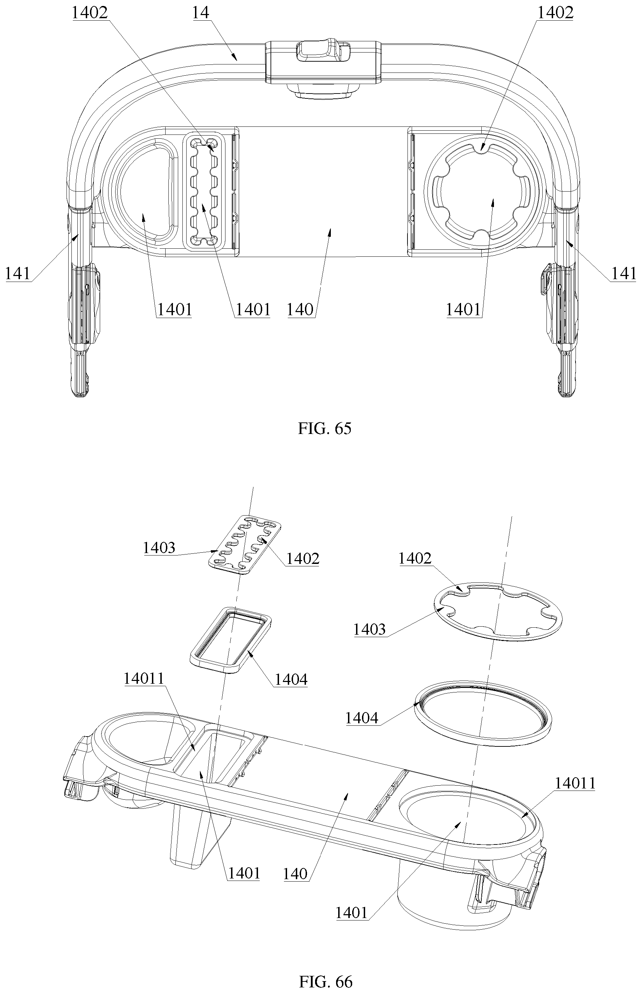

Referring to FIG. 66, in some embodiments, the clamping portion 1402 is formed on, for example, an annular member 1403. The annular member 1403 may be made of any suitable material. The annular member 1403 may be fixed in a fixing ring 1404 by overmolding. The fixing ring 1404 may be fixed on an annular step 14011 of the opening of the receiving cavity 1401 by any suitable method. In some embodiments, the annular member 1403 may be, but not limited to, made of a thermoplastic elastomer (TPE) material. The fixing ring 1404 may be, but not limited to, made of a polypropylene (PP) material. The hardness of the fixing ring 1404 is greater than that of the annular member 1403. The fixing ring 1404 may be, for example, fixed on the step 14011 by pressing or by vibration welding. Certainly, the clamping portion 1402 may also be fixed to the opening of the receiving cavity 1401 by any other suitable method to clamp the object, and is not limited to being fixed by the fixing ring 1404.

### Fourth Embodiment

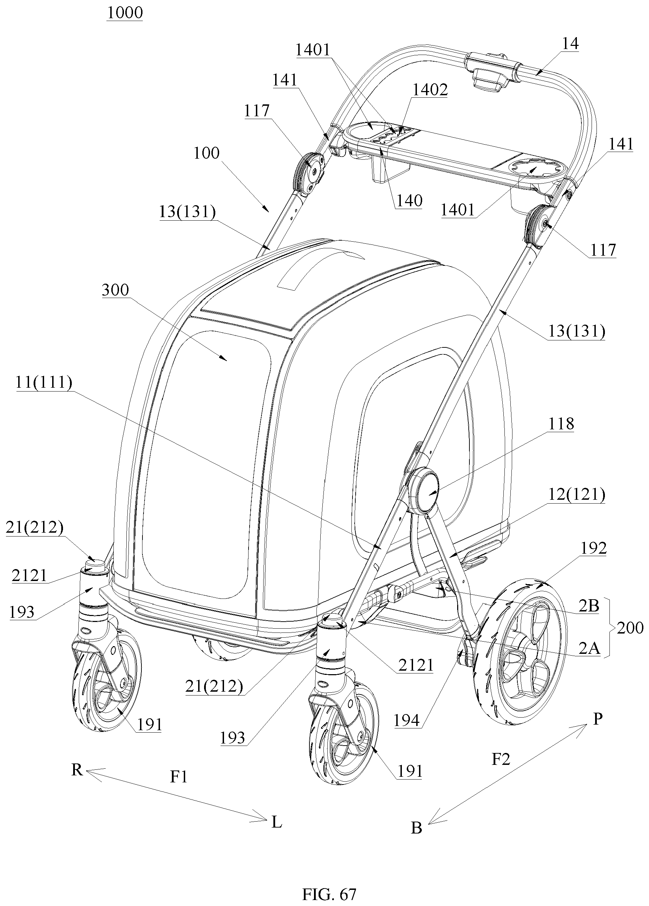

FIG. 67 shows a perspective view of a wheeled movable device 1000 according to a fourth embodiment of the present application, and the wheeled movable device 1000 may include a frame 100, an engaging base assembly 200, and a carrier 300. The wheeled movable device 1000 includes a support assembly according to some embodiments of the present application. The support assembly will be described together with the wheeled movable device 1000 below. In the embodiment shown in FIG. 67, the wheeled movable device 1000 is exemplarily described by taking a cart as an example. According to the change of the type of the carrier 300, the trolley may be a baby stroller, a pet trolley, a shopping cart, etc. Certainly, in some alternative embodiments, the wheeled movable device 1000 may also be other types of products.

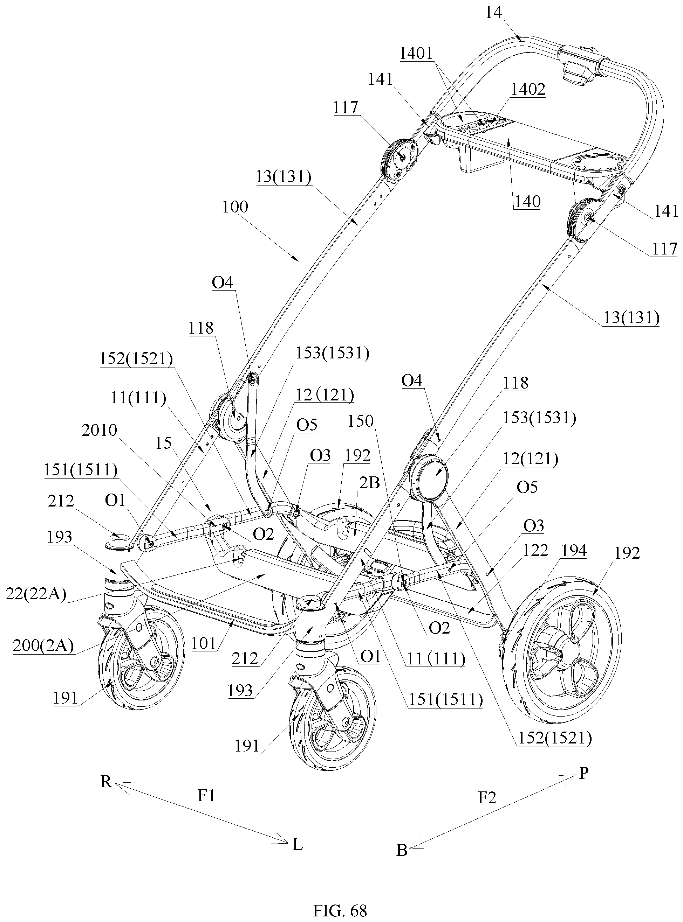

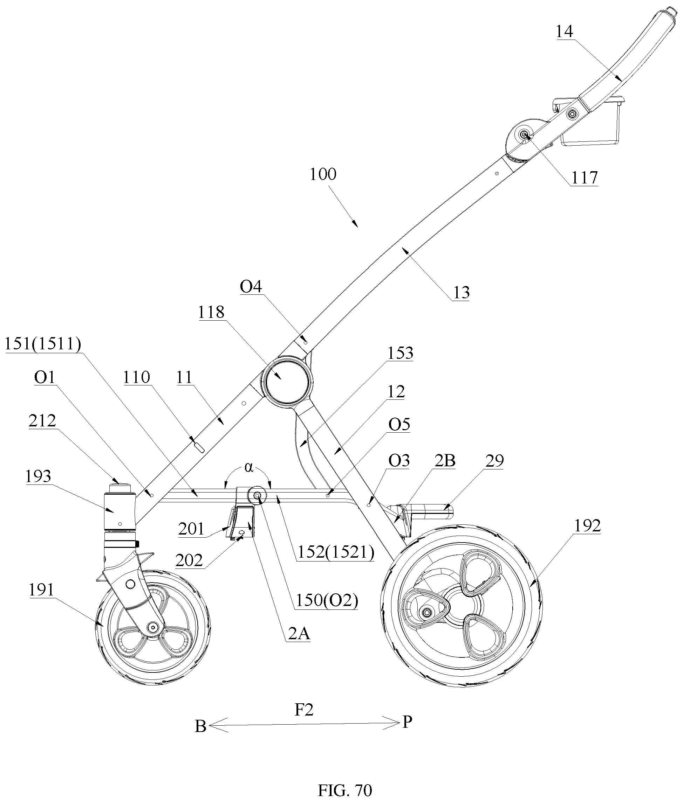

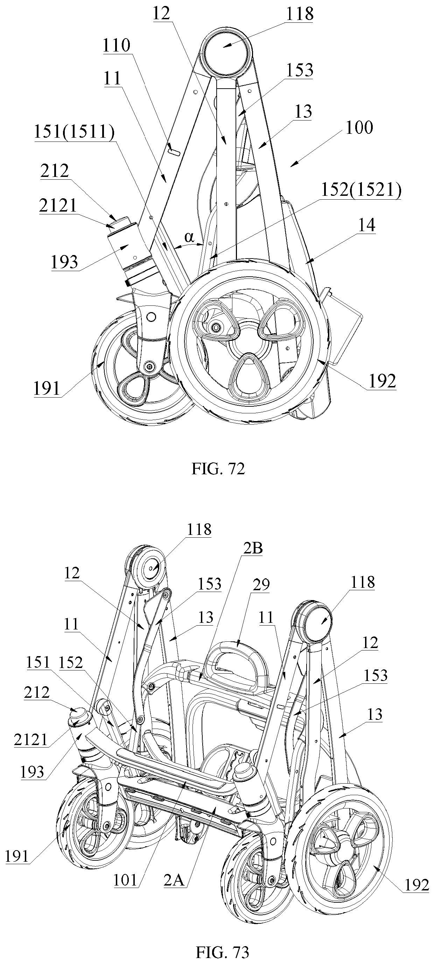

Referring to the configuration of the frame 100 shown in FIG. 68, in some embodiments, the configuration of the frame 100 is substantially symmetric in the left-right direction. The frame 100 may include, for example, a front support bar 11, a rear support bar 12, an upper support bar 13, a handlebar 14, and a connecting assembly 15. The frame 100 is foldable and have an unfolded state (see FIGS. 68 and 70) and a folded state (see FIGS. 72 and 73).

Referring to FIG. 68, the front support bar 11 has, for example, a U-shaped structure, and includes a first crossbar 101 and two bars 111. At least one front wheel seat 193 is mounted at the bottom of the front support bar 11. The front wheel seat 193 is configured to be fitted with a front wheel 191. In the absence of conflict, for the configurations of the front support bar 11, the front wheel seat 193 and the front wheel 191, reference may be made to the description in the third embodiment as above. In some embodiments, the two front wheel seats 193 are respectively mounted at the left and right ends of the first crossbar 101, and each of the two bars 111 is connected to the respective front wheel seat 193 on the same side.

The rear support bar 12 has, for example, a U-shaped structure, and includes a rear crossbar 122 and two bars 121. An upper end of each of the bars 121 is, for example, pivotally connected to the upper end of the respective bar 111 of the front support bar 11 on the same side by a pivot portion 118. The rear support bar 12 is fitted with two rear wheel seats 194. Each rear wheel seat 194 is configured to be fitted with a rear wheel 192. In the absence of conflict, for the configurations of the rear support bar 12, the rear wheel seats 194 and the rear wheels 192, reference may be made to the description in the third embodiment as above.

The upper support bar 13 includes two bars 131. The lower end of each bar 131 is pivotally connected to the pivot portion 118 on the same side, and the upper end of each bar 131 is connected to the handlebar 14. In some embodiments, the handlebar 14 has, for example, a U-shaped structure, and includes two bars 141. The lower end of each bar 141 is, for example, pivotally connected to the bar 131 of the upper support bar 13 on the same side through a pivot portion 117. A storage rack 140 for storing small items may be mounted on the handlebar 14. In the absence of conflict, for the configurations of the upper support bar 13, the handlebar 14 and the storage rack 140, reference may be made to the description in the third embodiment as above.

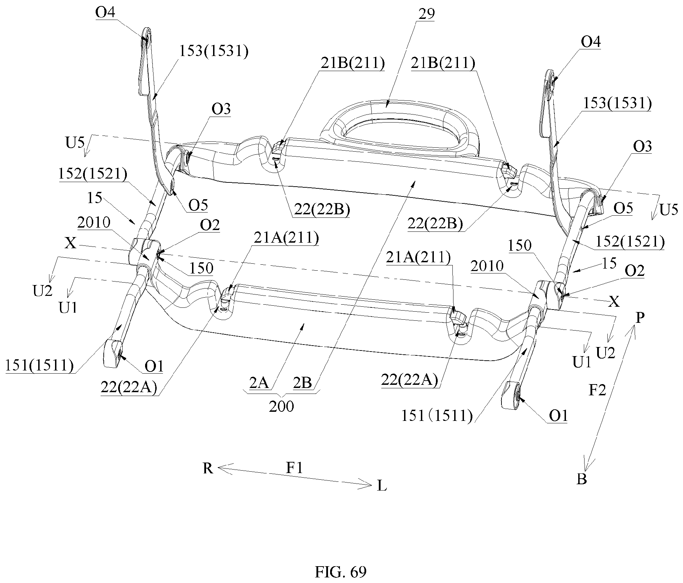

The connecting assembly 15 is connected to the front support bar 11, the rear support bar 12 and the upper support bar 13 respectively. When the frame 100 is folded, the front support bar 11, the rear support bar 12 and the upper support bar 13 may be folded synchronously under the action of the connecting assembly 15. FIG. 68 and FIG. 69 show an exemplary embodiment of the connecting assembly 15. The connecting assembly 15 includes, for example, a first coupling member (also referred to as a first support frame) 151, an auxiliary support member (also referred to as a second support frame) 152 and a linking element 153.

The first coupling member 151 includes two first tubes 1511 respectively positioned on the left and right sides. The two first tubes 1511 are parallel to each other. The front end of each first tube 1511 is pivotally connected to the first pivot point O1 of the bar 111 of the front support bar 11 on the same side.

The auxiliary support member 152 includes two second tubes 1521 respectively positioned on the left and right sides. The two second tubes 1521 are parallel to each other. The front end of each second tube 1521 is pivotally connected to a second pivot point O2 of the rear end of the first tube 1511 on the same side, and a rotation axis X-X is formed at the second pivot point O2 (see FIG. 69). More specifically, the second tube 1521 and the first tube 1511 on the same side are pivotally connected, for example, by a pivot shaft 150. The rotation axis X-X is the centerline of the pivot shaft 150. The rotation axis X-X is parallel to the first direction F1. Each second tube 1521 is also pivotally connected to a third pivot point O3 of the bar 121 of the rear support bar 12 on the same side. In some embodiments, the auxiliary support member 152 may also include an intermediate tube connected between the two first tubes 1511, and the auxiliary support member 152 is generally U-shaped.

The linking element 153 includes two tubes 1531 respectively positioned on the left and right sides. The upper end of each tube 1531 is pivotally connected to a fourth pivot point O4 of the bar 131 on the same side, and the lower end of each tube 1531 is pivotally connected to the fifth pivot point O5 of the second tube 1521 on the same side. Each tube 1531 may be designed into any suitable structure and in any suitable shape as needed to avoid interference with other components when the frame 100 is folded. For example, in some embodiments, the structure of each tube 1531 may be bent or S-shaped.

As can be seen from FIG. 68 and FIG. 70, when the frame 100 is in the unfolded state, the first coupling member 151 and the auxiliary support member 152 are unfolded and disposed substantially horizontally. An angle α between each first tube 1511 and the adjacent second tube 1521 on the same side is approximately 180 degrees. In some embodiments, when the frame 100 is in the unfolded state, the angle α formed between the first coupling member 151 and the auxiliary support member 152 may be an obtuse angle greater than 90 degrees. Still referring to FIG. 68, when the frame 100 is in the unfolded state, the second pivot point O2 is positioned between the first pivot point O1 and the third pivot point O3, and the fifth pivot point O5 is positioned between the second pivot point O2 and the third pivot point O3. Referring to FIG. 72 and FIG. 73, when the frame 100 is in the folded state, the first coupling member 151 and the auxiliary support member 152 are also in the folded state, and the angle α between each first tube 1511 and the adjacent second tube 1521 on the same side is an acute angle.

Reference is made to the perspective views of the folding process of the frame 100 shown in FIG. 70 to FIG. 73. When the frame 100 in this embodiment needs to be folded, the handlebar 14 is rotated around the pivot portion 117 and folded relative to the upper support bar 13. The upper support bar 13 is rotated around the pivot portion 118 and approaches the rear support bar 12. The linking element 153 drives the auxiliary support member 152 to rotate around the third pivot point O3 while the upper support bar 13 moves, so that the first coupling member 151 rotates around the second pivot point O2 relative to the auxiliary support member 152 and approaches the auxiliary support member 152. The angle α between each first tube 1511 of the first coupling member 151 and the adjacent second tube 1521 of the auxiliary support member 152 changes from approximately 180 degrees to an acute angle less than 90 degrees (as shown in FIG. 72, when the frame 100 is fully folded, the angle α is less than 90 degrees). The first coupling member 151 pulls the front support bar 11 towards the rear support bar 12 while rotating, until the frame 100 is folded to the folded state shown in FIG. 72 and FIG. 73.

FIG. 68 and FIG. 69 show an exemplary implementation of the engaging base assembly 200 in this embodiment. The engaging base assembly 200 includes a seat plate assembly on which an object (more specifically, a carrier) is configured to be placed. The seat plate assembly includes a first seat plate assembly 2A and a second seat plate assembly 2B. The first seat plate assembly 2A is mounted to the first coupling member 151 and is provided with a locking mechanism (such as a first locking mechanism 21A). The second seat plate assembly 2B is mounted to the auxiliary support member 152 and is provided with a locking mechanism (such as a second locking mechanism 21B). As previously described, the first coupling member 151 and the auxiliary support member 152 are pivotally connected by the pivot shaft 150. The pivot shaft 150 has a rotation axis X-X, whereby the first seat plate assembly 2A and the second seat plate assembly 2B can rotate relative to each other about the rotation axis X-X, so that the engaging base assembly 200 has an unfolded state and a folded state.

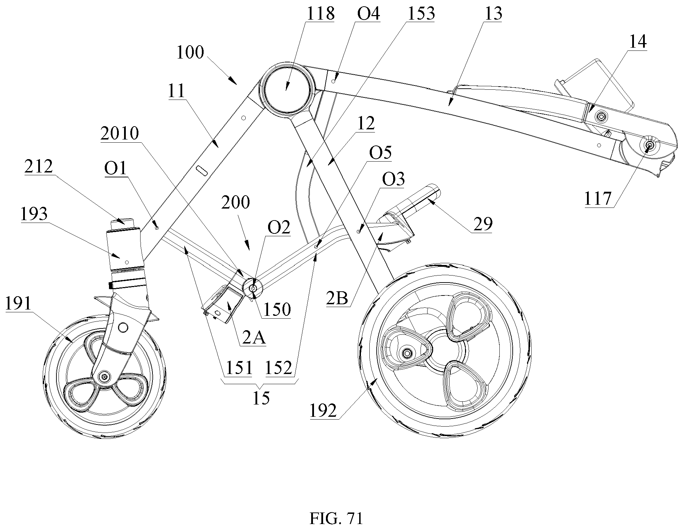

Referring to FIG. 68, when the frame 100 is in the unfolded state, the first coupling member 151 and the auxiliary support member 152 are in the unfolded state, and the engaging base assembly 200 is in the unfolded state accordingly. Referring to FIG. 67, FIG. 69 and FIG. 70, when the engaging base assembly 200 is in the unfolded state, the engaging base assembly 200 can support the carrier 300 and lock the carrier 300 by the first locking mechanism 21A and the second locking mechanism 21B. Referring to FIG. 71 to FIG. 73, the frame 100 may be folded after the carrier 300 is removed from the frame 100. When the frame 100 is in the folded state, the first coupling member 151 and the auxiliary support member 152 are in the folded state, and the engaging base assembly 200 is in the folded state accordingly. When the frame 100 and the engaging base assembly 200 are switched from the unfolded state to the folded state, the first seat plate assembly 2A and the second seat plate assembly 2B approach each other in the front-rear direction. When the frame 100 and the engaging base assembly 200 are switched from the folded state to the unfolded state, the first seat plate assembly 2A and the second seat plate assembly 2B move away from each other in the front-rear direction.

The engaging base assembly 200 in the embodiments of the present application can reduce the internal space of the folded frame 100 by folding itself. Referring to FIG. 73, in some embodiments, the engaging base assembly 200 may be provided with a lifting handle 29. The lifting handle 29 may be disposed on the first seat plate assembly 2A and/or the second seat plate assembly 2B, for example, so that the user can conveniently move the folded frame 100 by the lifting handle 29. More specifically, when the frame 100 is folded, the lifting handle 29 is, for example, positioned in the internal space of the frame allowed by the folded the engaging base assembly 200, and does not protrude outwardly relative to the frame 100. In this way, the packaging volume may be reduced and the transportation cost may be reduced.

The support assembly according to some embodiments of the present application may include the engaging base assembly 200, the first coupling member 151 and the auxiliary support member 152 as described above. The pivoting connection between the first seat plate assembly 2A and the second seat plate assembly 2B is achieved by means of the pivoting connection between the first coupling member 151 and the auxiliary support member 152. However, in actual applications, the pivoting method of the first seat plate assembly 2A and the second seat plate assembly 2B is not limited to the above-mentioned examples. For example, in some embodiments, the first coupling member 151 and the auxiliary support member 152 may not be provided, and the first seat plate assembly 2A and the second seat plate assembly 2B themselves have sufficient structural strength. The first seat plate assembly 2A and the second seat plate assembly 2B may be directly pivotally connected by the pivot shaft 150, and may be directly pivotally connected to the corresponding front support bar 11 or rear support bar 12. It can be understood that in some embodiments where the first seat plate assembly 2A and the second seat plate assembly 2B are directly pivotally connected by the pivot shaft 150, the support assembly may include the engaging base assembly 200 without including the first coupling member 151 and the auxiliary support member 152.

Referring to FIG. 69, in some embodiments, the first seat plate assembly 2A is connected between the two first tubes 1511 and extends in the left-right direction (first direction F1). The second seat plate assembly 2B is connected between the two second tubes 1521 and extends in the left-right direction (first direction F1). When the engaging base assembly 200 is in the unfolded state, the first seat plate assembly 2A and the second seat plate assembly 2B are spaced apart in the second direction F2. The second direction F2 is equivalent to the front-rear direction, and the second direction F2 is not parallel to the first direction F1. More specifically, the second direction F2 is substantially perpendicular to the first direction F1.

Referring to FIG. 70 and FIG. 71, in some embodiments, the first seat plate assembly 2A is proximate to the pivot shaft 150, and the second seat plate assembly 2B is far from the pivot shaft 150. Referring to FIG. 73, when the frame 100 is in the folded state, the engaging base assembly 200 is also in the folded state, and the positions of the first seat plate assembly 2A and the second seat plate assembly 2B are staggered from each other and do not overlap with each other, which is also beneficial to reduce the volume of the folded frame 100. Referring to FIG. 73, in some embodiments, when the frame 100 is folded, the second seat plate assembly 2B is positioned above the first seat plate assembly 2A, and the lifting handle 29 is, for example, disposed on the second seat plate assembly 2B.

Referring again to FIG. 69, in some embodiments, sleeves 2010 are disposed at both ends of the first seat plate assembly 2A. Each sleeve 2010 may be sleeved on the outside of the first tube 1511 adjacent thereto. The pivot shaft 150 extend through the sleeve 2010, so that the first seat plate assembly 2A does not move back and forth along the first tube 1511. In some embodiments, the pivot shaft 150 may be a hollow shaft.

Still referring to FIG. 69, in some embodiments, each of the first seat plate assembly 2A and the second seat plate assembly 2B includes at least one engaging channel 22. Each engaging channel 22 extends in the front-rear direction (the second direction F2). Each of the first locking mechanism 21A and the second locking mechanism 21B includes at least one locking member 211. Each locking member 211 moves in the left-right direction (the first direction F1) to have a locked position where the locking member 211 extends into the corresponding engaging channel 22 and an unlocked position where the locking member 211 retracts from the corresponding engaging channel 22. The moving direction of each locking member 211 is parallel to the rotation axis X-X. It can be understood that when the locking member 211 is at the locked position, the carrier 300 may be locked, and when the locking member 211 is at the unlocked position, the carrier 300 is allowed to be removed from the engaging base assembly 200.

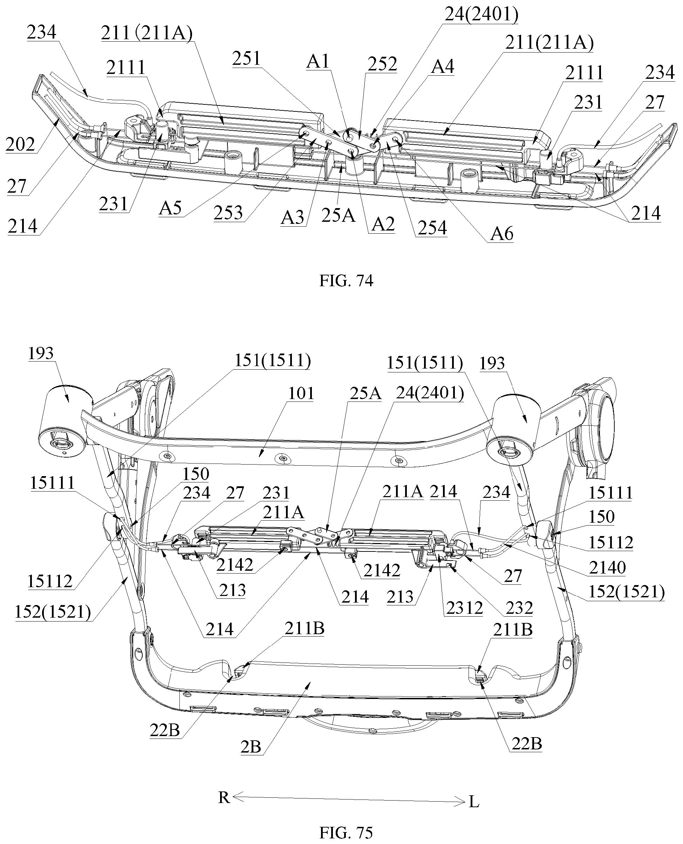

Still referring to FIG. 69, in this embodiment, the engaging channel 22 on the first seat plate assembly 2A may be referred to as a first engaging channel 22A, and the engaging channel 22 on the second seat plate assembly 2B may be referred to as a second engaging channel 22B. Referring to FIG. 69 and FIG. 74, the locking member 211 of the first locking mechanism 21Amay be referred to as a first locking member 211A. Referring to FIG. 69, FIG. 77 and FIG. 78, the locking member 211 of the second locking mechanism 21B may be referred to as a second locking member 211B. In this embodiment, two first engaging channels 22A and two first locking members 211A may be provided, and the two first locking members 211A are unlocked and locked in opposite directions. Two second engaging channels 22B and two second locking members 211B may be provided, and the two second locking members 211B are unlocked and locked in opposite directions. Certainly, in some alternative embodiments, the two first locking members 211A may be unlocked and locked in the same direction, and the two second locking members 211B may be unlocked and locked in the same direction.

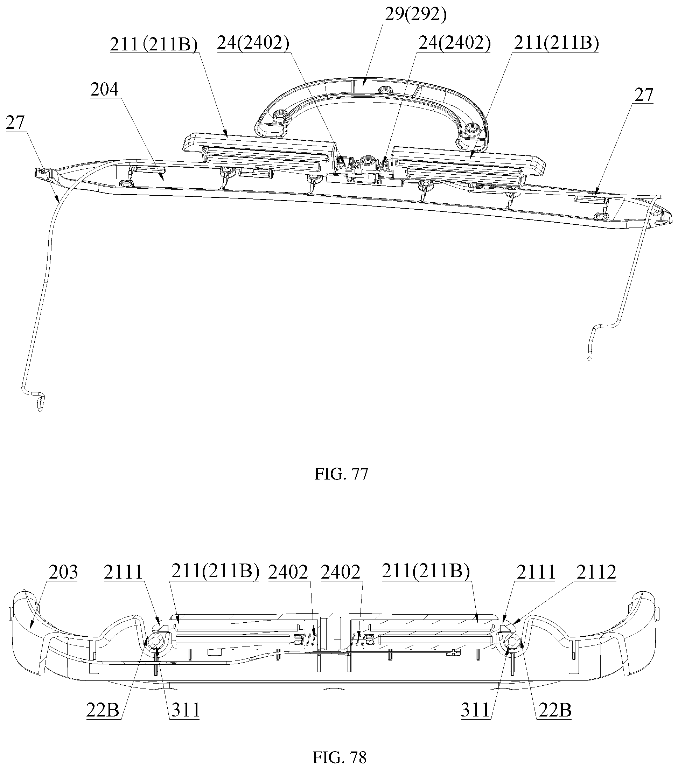

Referring to FIG. 70 and FIG. 74, in some embodiments, the first seat plate assembly 2A, for example, includes an upper housing 201 and a lower housing 202. The first engaging channel 22A is formed on the upper housing 201. The first locking member 211A is positioned in a receiving cavity enclosed by the upper housing 201 and the lower housing 202. The sleeves 2010 are, for example, disposed at two ends of the upper housing 201 respectively. Referring to FIGS. 77 and 78, in some embodiments, the second seat plate assembly 2B, for example, includes an upper housing 203 and a lower housing 204. The second engaging channel 22B is formed on the upper housing 203. The second locking member 211B is positioned in a receiving cavity enclosed by the upper housing 203 and the lower housing 204. Referring to Figure 77, in some embodiments, the lifting handle 29 may include an upper housing (not shown) and a lower housing 292, for example. The upper housing of the lifting handle 29 may be attached to the upper housing 203, or formed integrally with the upper housing 203. The lower housing 292 may be attached to the lower housing 204, or may be formed integrally with the lower housing 204.

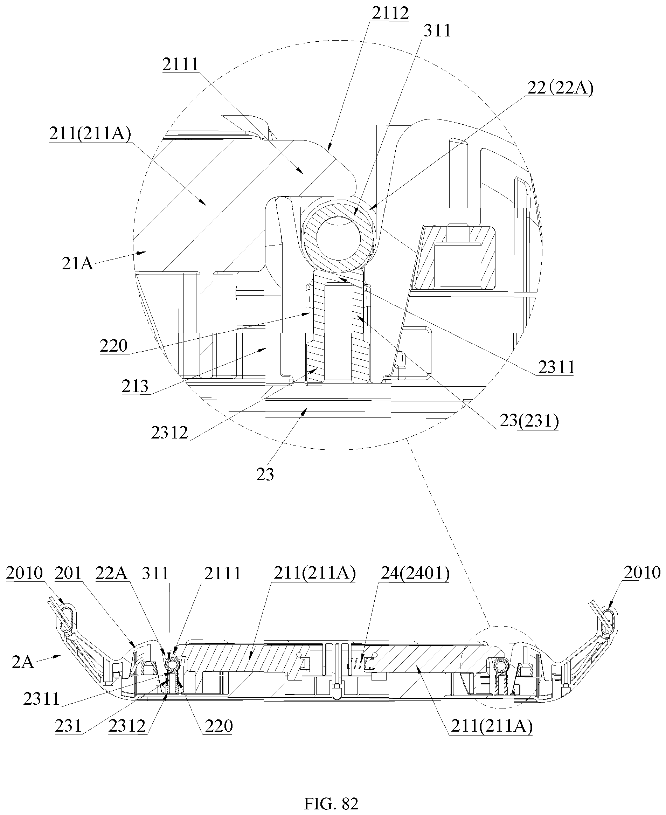

In the absence of conflict, the description of the carrier 300 can refer to the description in the third embodiment as above. For example, the bottom of the carrier 300 may be provided with an engaging member 311. The engaging member 311 is configured to be engaged with the respective engaging channels 22 (the first engaging channel 22A and the second engaging channel 22B). Referring to FIG. 67 to FIG. 69, when the carrier 300 is supported and locked by the engaging base assembly 200, grooves (not shown, for example, see the grooves 430 in the third embodiment) at the bottom of the carrier 300 respectively cooperate with the first seat plate assembly 2A and the second seat plate assembly 2B in a concave-convex manner and limit the movement of the carrier 300 in the front-rear direction (the second direction F2). The engaging member 311 is respectively engaged in the first engaging channel 22A and the second engaging channel 22B, and is respectively locked by the first locking member 211A (FIG. 82) of the first locking mechanism 21A and the second locking member 211B (FIG. 78) of the second locking mechanism 21B, so that the carrier 300 is unable to move in the left-right direction (first direction F1), and unable to be removed from the engaging base assembly 200. More specifically, referring to FIG. 78 and FIG. 82, when the individual locking members 211 (the first locking member 211A and the second locking member 211B) are at the locked position, a locking portion 2111 (such as a locking tongue) of each locking member 211 extends into the corresponding engaging channel 22 (the first engaging channel 22A or the second engaging channel 22B) to lock the corresponding engaging member 311, so that the engaging member 311 cannot be removed from the engaging channel 22. When the two first locking members 211A move towards each other and the two second locking members 211B move towards each other and respectively retract from the corresponding engaging channels 22, each engaging member 311 is allowed to be removed from the corresponding engaging channels 22, and the carrier 300 may be removed from the engaging base 200. It can be understood that the detachable connection between the carrier 300 and the engaging base 200 allows the frame 100 to be used in conjunction with different types of carriers 300.

In some alternative embodiments, the implementation of the carrier 300 is not limited to the above examples. For example, the engaging member 311 at the bottom of the carrier 300 may be formed on two opposite bars parallel to each other of the annular structure, or the engaging member 311 may be formed by four or more independent bars.

Referring to FIG. 74, FIG. 75 and FIG. 76, in some embodiments, the two first locking members 211A are connected by a first linkage assembly 25A. The first linkage assembly 25A controls the two first locking members 211A to move synchronously, so that the two first locking members 211A switch between their locked position and unlocked position synchronously. In this way, any one of the first locking members 211A may be operated to be unlocked, and then another first locking member 211A may be unlocked at the same time. Certainly, when any one of the first locking members 211A moves towards the locked position, under the action of the first linkage assembly 25A, another first locking member 211A moves synchronously towards the locked position.

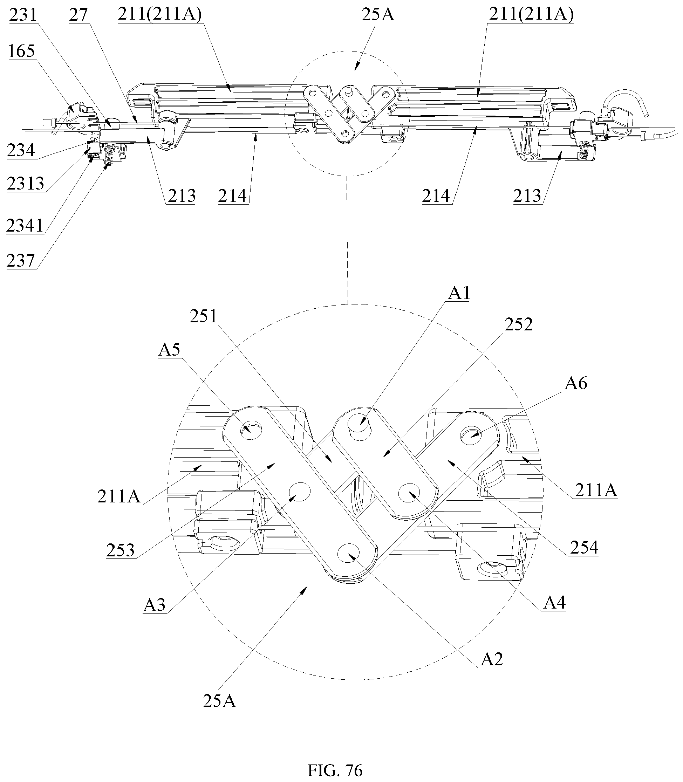

Referring to FIG. 74 and FIG. 76, the first linkage assembly 25A may be a four-bar linkage mechanism. Specifically, the four-bar linkage mechanism includes a first linking rod 251, a second linking rod 252, a third linking rod 253 and a fourth linking rod 254, which are pivotally connected by pivot shafts A1, A2, A3 and A4. In the absence of conflict, for the configuration of the first linkage assembly 25A, reference may be made to the description of the linkage assembly 25 in the third embodiment as above. One of the pivot shafts A1 and A2 arranged diagonally is a fixed pivot shaft fixedly connected to the seat plate assembly 2A (e.g., the upper housing 201 or the lower housing 202), and another of the pivot shafts A1 and A2 arranged diagonally is a movable pivot shaft. The two links pivotally connected to the movable pivot shaft are pivotally connected to two locking members 211 (more specifically, the first locking members 211A) by pivot shafts A5 and A6, respectively.

In this embodiment, the pivot shaft A1 is a fixed pivot shaft, the pivot shaft A2 is a movable pivot shaft, the pivot shaft A3 is positioned between the pivot shaft A2 and the pivot shaft A5, and the pivot shaft A4 is positioned between the pivot shaft A2 and the pivot shaft A4. Referring to FIG. 76, when any one of the first locking members 211A moves towards the unlocked position, the first linkage assembly 25A would be deformed and drive another first locking member 211A to move synchronously towards the unlocked position. Similarly, when any one of the first locking members 211A moves towards the locked position, the first linkage assembly 25A would drive another first locking member 211Ato move synchronously towards the locked position. Certainly, the confirmation of the first linkage assembly 25A is not limited to the four-bar connection structure as described above, as long as it can enable the first locking members 211A connected by the first linkage assembly 25A to move synchronously.

In some unillustrated embodiments, the two second locking members 211B may be connected via a second linkage assembly (not shown). The second linkage assembly controls the two second locking members 211B to move synchronously so that the two second locking members 211B switch synchronously between their locked position and unlocked position. For the configurations of the second linkage assembly and the connection relationship between the second linkage assembly and the two second locking members 211B, reference may be made to the configurations of the first linkage assembly and the connection relationship between the first linkage assembly and the two first locking members 211A. That is, the two second locking members 211B have configurations corresponding to the two first locking members 211A. The configuration of the second linkage assembly and the connection relationship between the second linkage assembly and the two second locking members are not repeatedly described herein.

Referring to FIG. 74, FIG. 75, FIG. 77 and FIG. 78, in some embodiments, the first locking member 211A of the first locking mechanism 21A and the second locking member 211B of the second locking mechanism 21B may be connected by a corresponding linkage member 27, so that the individual locking members 211 may be switched between the locked position and the unlocked position synchronously. In this way, any one of the first locking members 211A or any one of the second locking members 211B may be operated to be unlocked, and then the corresponding second locking member 211B or first locking member 211A may be unlocked synchronously. Certainly, when any one of the first locking members 211A or second locking members 211B moves towards the locked position, the corresponding second locking member 211B or first locking member 211A would also move towards the locked position synchronously.

Referring to FIG. 74 and FIG. 77, in some embodiments, the linkage member 27 may be a traction rope. The first locking member 211A and the second locking member 211B disposed diagonally are connected by the same linkage 27, whereby the first locking member 211A and the second locking member 211B that are connected to the same linkage 27 are unlocked and locked in opposite directions. More specifically, the first locking member 211A on the left side and the second locking member 211B on the right side are connected by one linkage member 27, and the first locking member 211A on the right side and the second locking member 211B on the left side are connected by one linkage member 27. In some embodiments, the traction rope may include a steel wire rope, which may be wrapped up in a steel wire rope sheath. Referring to FIG. 75, in some embodiments, the linkage member 27 connected to the first locking member 211A extends through a hole 15112 of the first tube 1511 and enters the first tube 1511, then enters the hollow pivot shaft 150, then enters the second tube 1521, and finally enters the second seat plate assembly 2B to be connected to the corresponding second locking member 211B.

In addition, the linkage assemblies (the first linkage assembly 25A and the second linkage assembly) and the linkage member 27 may be collectively referred to as a linkage device. The linkage device is configured to be connected between the locking members 211 so that these locking members 211 can move together towards the unlocked position or the locked position, thereby achieving synchronous unlocking or synchronous locking of the carrier 300 by the plurality of locking members 211.

Referring to FIG. 74 and FIG. 77, in this embodiment, the two first locking members 211A are connected by the first linkage assembly 25A, and each first locking member 211A is connected to the corresponding second locking member 211B by the linkage member 27. Thus, even if the second linkage assembly is not disposed between the two second locking members 211B, when any one of the first locking members 211A or any one of the second locking members 211B moves towards the unlocked position or the locked position, under the action of the first linkage assembly 25A and the linkage member 27, the effect of synchronously unlocking or locking the individual locking members 211 (the first locking member 211A and the second locking member 211B) may be achieved. Certainly, in some alternative embodiments, the two second locking members 211B may be connected by a second linkage assembly, and each first locking member 211A is still connected to the corresponding second locking member 211B by the linkage member 27. Thus, even if the first linkage assembly 25A is not disposed between the two first locking members 211A, the effect of synchronously unlocking or locking the individual locking members 211 may also be achieved.

This embodiment shows an exemplary implementation of unlocking each locking member 211. Referring to FIG. 67 and FIG. 68, the two wheel seats (more specifically, the front wheel seats 193) on the left and right sides of the frame 100 are respectively mounted with unlocking operating members 212. The two unlocking operating members 212 are operably connected to the two first locking members 211A. By pressing any one of the unlocking operating members 212, each locking member 211 may be driven to move towards the unlocked position. The support assembly according to the embodiments of the present application further includes the unlocking operating members 212.

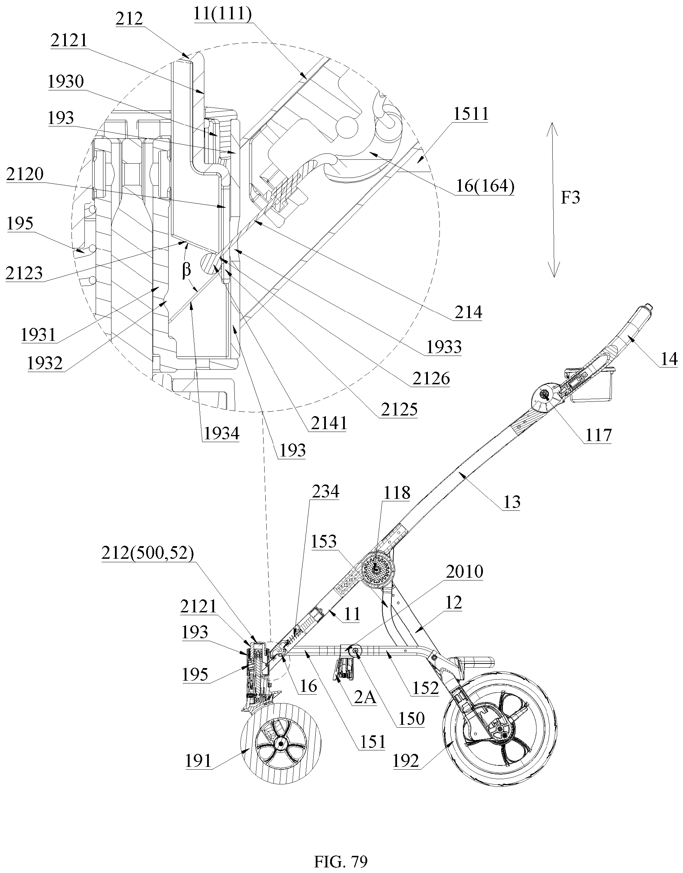

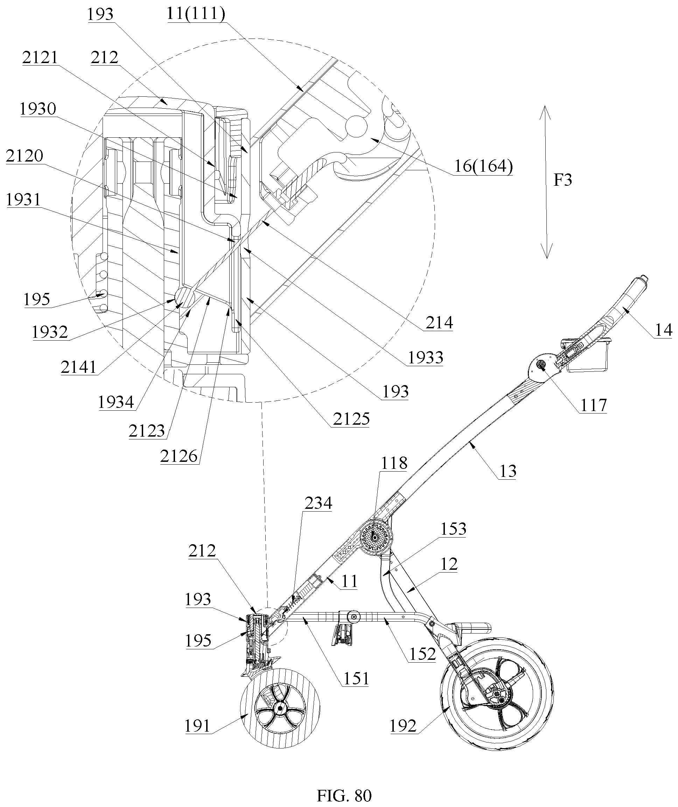

Referring to FIG. 79 and FIG. 80, more specifically, each unlocking operating member 212 slidably cooperates with a sliding channel 1930 of the front wheel seat 193. Referring to FIG. 75 and FIG. 79, each unlocking operating member 212 is connected to the corresponding first locking member 211A in the first seat plate assembly 2A by the traction rope 214. An end 2141 (see FIG. 79) of each traction rope 214 is connected to the corresponding unlocking operating member 212, and another end 2142 (see FIG. 75) thereof enters the bar 111 of the front support bar 11 and the first tube 1511 via the front wheel seat 193, and then enters the first seat plate assembly 2A via the hole 15111 of the first tube 1511, and is connected to the corresponding first locking member 211A. In order to facilitate arranging the traction rope 214, the unlocking operating member 212 of the front wheel seat 193 on the left side of the frame is connected to the first locking member 211A on the right side of the frame by the same traction rope 214; and the unlocking operating member 212 of the front wheel seat 193 on the right side of the frame is connected to the first locking member 211A on the left side of the frame by the same traction rope 214. In this way, when any one of the unlocking operating members 212 is pressed, the traction rope 214 would directly pull the corresponding first locking member 211A to move towards the unlocked position, and under the action of the first linkage assembly 25A and the linkage member 27, the other locking members 211 also move towards the unlocked position.

In some embodiments, a reset member 195 (see FIG. 79) configured for driving the unlocking operating member 212 to reset may also be mounted in the front wheel seat 193. The reset member 195 is, for example, a spring. It can be understood that the reset member 195 is not necessary. When each locking member 211 is reset towards the locked position, the first locking member 211A may also pull the unlocking operating member 212 to reset by the traction rope 214. In addition, in some embodiments, the frame 100 may also be provided with only one unlocking operating member 212, and the individual locking members 211 may also be unlocked synchronously. Certainly, in some embodiments, the frame 100 may also be provided with more unlocking operating members 212. A plurality of unlocking operating members 212 are, for example, directly connected to the plurality of locking members 211 in a one-to-one correspondence. In some embodiments, each unlocking operating member 212 may be, for example, disposed at other positions of the frame 100 and is not limited to be at the front wheel seat 193.

Referring to FIG. 79 and FIG. 80, each unlocking operating member 212 may have an unlocking identification region 2121. The unlocking identification region 2121 is configured to assist the user in determining whether the locking member 211 is at the unlocked position. The unlocking identification region 2121 is, for example, a color block (e.g., in green) positioned on the unlocking operating member 212. More specifically, when the unlocking operating member 212 is not pressed, the locking member 211 is at the locked position, and the unlocking identification region 2121 is positioned outside the front wheel seat 193 and is visible. When the unlocking operating member 212 is pressed, the locking member 211 is at the unlocked position, and the unlocking identification region 2121 slides into the interior of the front wheel seat 193 and is invisible. By observing whether the unlocking identification region 2121 is visible, the user can easily determine whether the locking member 211 is at the locked position or the unlocked position.

Referring to FIG. 75 again, each traction rope 214 is, for example, a steel wire rope, and at least a portion of the steel wire rope may be wrapped up in a sheath 2140. Referring to FIG. 79 together, at least one guiding mechanism 16 configured for guiding the traction rope 214 may be disposed inside the frame 100. The guiding mechanism 16 may include a plurality of guiding brackets disposed at the bends inside the tube bodies of the frame 100. These guiding brackets guide each traction rope 214 by supporting the sheath 2140. FIG. 79 and FIG. 80 show the guiding bracket 164 between the bar 111 and the first tube 1511.

Referring to FIG. 79 and FIG. 80, in some embodiments, the unlocking operating member 212 has a first driving inclined surface 2123. The first driving inclined surface 2123 is inclined relative to a sliding direction F3 of the unlocking operating member 212. The end 2141 of the traction rope 214 abuts against the first driving inclined surface 2123 so as to be able to slide along the first driving inclined surface 2123, thereby pulling the first locking member 211A to move. More specifically, when subjected to a pressing force, the unlocking operating member 212 moves downwardly from the state shown in FIG. 79 to the state shown in FIG. 80. The end 2141 of the traction rope 214 moves along the first driving inclined surface 2123 towards the center of the front wheel seat 193, and at the same time, the traction rope 214 pulls the corresponding first locking member 211A to move towards the unlocked position. In some embodiments, the unlocking operating member 212 is provided with a notch 2120, and the front wheel seat 193 is provided with the hole 1933. The hole 1933 is in communication with the inner space of the bar 111. The traction rope 214 extends through the notch 2120 and the hole 1933 and enters the bar 111.

Still referring to FIG. 79 and FIG. 80, in some embodiments, the unlocking operating member 212 includes, for example, a first limiting wall 2125. The first limiting wall 2125 extends downwardly relative to the first driving inclined surface 2123. A first engaging structure 2126 is formed between the first limiting wall 2125 and the first driving inclined surface 2123. A second limiting wall 1931 is disposed in the wheel seat 193, and a second engaging structure 1932 is formed on the second limiting wall 1931. The second engaging structure 1932 is, for example, a concave structure. When the unlocking operating member 212 is not pressed, the end 2141 of the traction rope 214 is engaged with the first engaging structure 2126 (as shown in FIG. 79). When the unlocking operating member 212 is pressed into place, the end 2141 of the traction rope 214 is engaged with the second engaging structure 1932 (as shown in FIG. 80).

Still referring to FIG. 79 and FIG. 80, in some embodiments, a first guiding inclined surface 1934 may be further provided in the wheel seat 193. The first guiding inclined surface 1934 is inclined relative to the sliding direction F3 of the unlocking operating member 212. An angle β is formed between the first guiding inclined surface 1934 and the first driving inclined surface 2123. The angle β is, for example, an acute angle. The end 2141 of the traction rope 214 abuts against both the first driving inclined surface 2123 and the first guiding inclined surface 1934 within the range of the angle β. That is, when the end 2141 of the traction rope 214 moves between the first engaging structure 2126 and the second engaging structure 1932 along the first driving inclined surface 2123, the end 2141 of the traction rope 214 also moves along the first guiding inclined surface 1934.

Referring to FIG. 74 and FIG. 77, the engaging base assembly 200 may further include an elastic device 24. The elastic device 24 is configured to drive the individual locking members 211 to return to the locked position. Referring to FIG. 74, in some embodiments, the elastic device 24 may include a spring 2401 disposed between any first locking member 211A and the housing of the first seat plate assembly 2A. For example, the spring 2401 is disposed between each first locking member 211A and the upper housing 201 (or the lower housing 202). Certainly, in some embodiments, the spring device 24 may include a spring disposed between two first locking members 211A. When the first locking member 211A moves towards the unlocked position, the spring 2401 is compressed. Referring to FIG. 77, in some embodiments, the elastic device 24 may include a spring 2402 disposed between any second locking member 211B and the housing of the second seat plate assembly 2B. For example, the spring 2402 is disposed between each second locking member 211B and the upper housing 203 (or the lower housing 204). Certainly, in some embodiments, the spring device 24 may include a spring disposed between the two second locking members 211B. When the second locking member 211B moves towards the unlocked position, the spring 2402 is compressed.

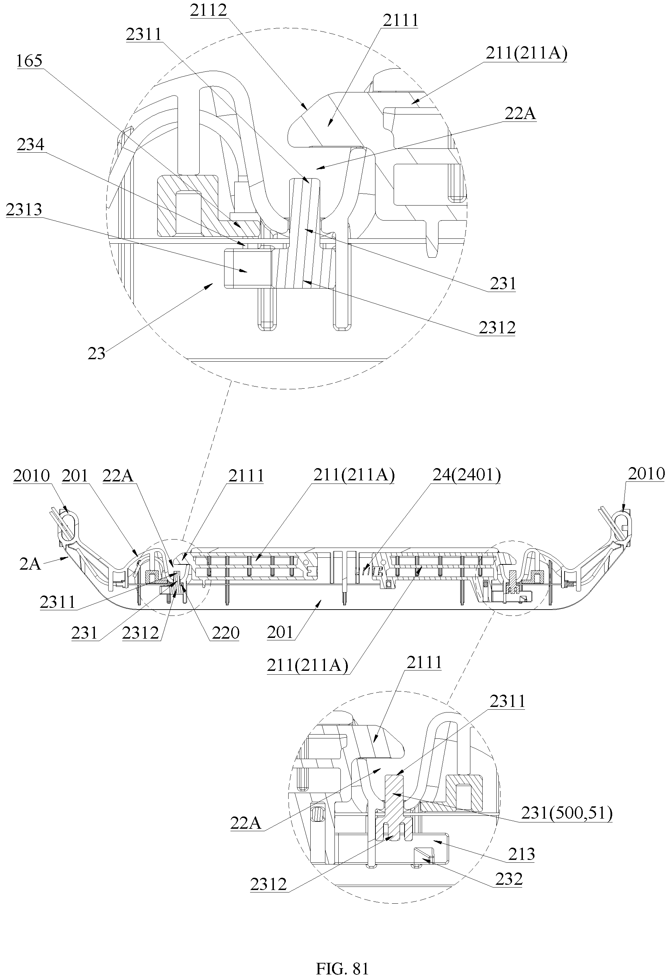

Referring to FIG. 78 and FIG. 81, in some embodiments, the locking portion 2111 of each of the locking members 211 (the first locking member 211A and the second locking member 211B) may have a slope 2112, which allows each engaging member 311 to enter the respective one of the engaging channels 22 (the first engaging channel 22A and the second engaging channel 22B) without pressing the unlocking operating member 212.

Referring to FIG. 81 to FIG. 86, in some embodiments, the frame 100 may further be provided with at least one retaining mechanism 23. When each locking member 211 is driven to the unlocked position, the retaining mechanism 23 may directly or indirectly lock each locking member 211 at the unlocked position. The support assembly includes the retaining mechanism 23. In this embodiment, two retaining mechanisms 23 are provided. The two retaining mechanisms 23 correspond to two locking members 211 (more specifically, the first locking members 211A) one by one. When each first locking member 211A moves to the unlocked position, each retaining mechanism 23 directly locks the corresponding first locking member 211A at the unlocked position, and the second locking member 211B corresponding to the each first locking member 211A is indirectly locked at the unlocked position. Therefore, the user does not need to continuously perform the unlocking operation on the unlocking operating member 212 (i.e., press the unlocking operating member 212), and the individual locking member 211 are kept at the unlocked position. The user only needs to lift the carrier 300 upwardly and the carrier 300 may be easily remove from the frame 100.

As can be seen from the above, when any one of the unlocking operating members 212 drives the corresponding first locking member 211A to the unlocked position, under the action of the linkage assembly 25 and the linkage member 27, all the locking members 211 (the first locking members 211A and the second locking members 211B) are moved to the unlocked position. Similarly, under the action of the linkage assembly 25 and the linkage member 27, as long as one of the locking members 211 (any one of the first locking members 211A or the second locking members 211B) is locked at the unlocked position by the retaining mechanism 23, all the locking members 211 would be locked at the unlocked position. In some alternative embodiments, only one retaining mechanism 23 may be provided for any one of the locking members 211 (any one of the first locking members 211A or the second locking members 211B), and the other locking members 211 may not be provided with the retaining mechanism 23. Certainly, in some alternative embodiments, each locking member 211 may be configured provided the retaining mechanism 23.

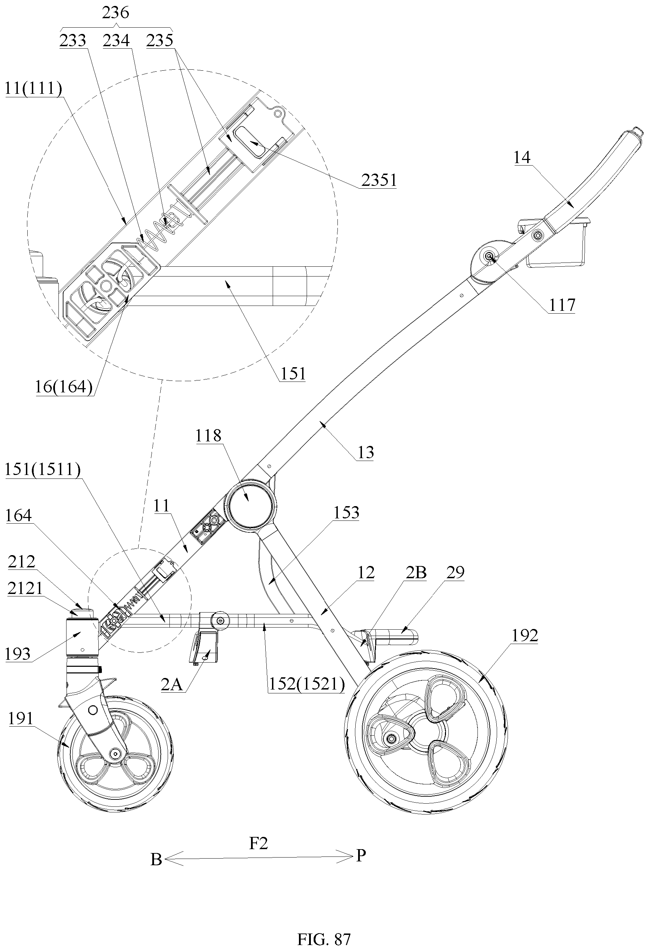

Referring to FIG. 81 to FIG. 87, exemplary embodiments of the retaining mechanism 23 are illustrated. The retaining mechanism 23 includes, for example, a movable member 231 and a reset device 236 (see FIG. 87).

The movable member 231 may be mounted in the sliding channel 220 which is in communication with the corresponding engaging channel 22 (more specifically, the first engaging channel 22A). The sliding channel 220 is positioned below the first engaging channel 22A. The movable member 231 has an abutting end 2311 adapted to extend into the first engaging channel 22A and an engaging end 2312 away from the abutting end 2311. The abutting end 2311 is adapted to abut against the engaging member 311. The engaging member 311 positioned in the first engaging channel 22A pushes the abutting end 2311 from the first engaging channel 22A towards the sliding channel 220. In some embodiments, a first buckling portion 2301 may be disposed on the engaging end 2312. The first buckling portion 2301 is, for example, an engaging groove.

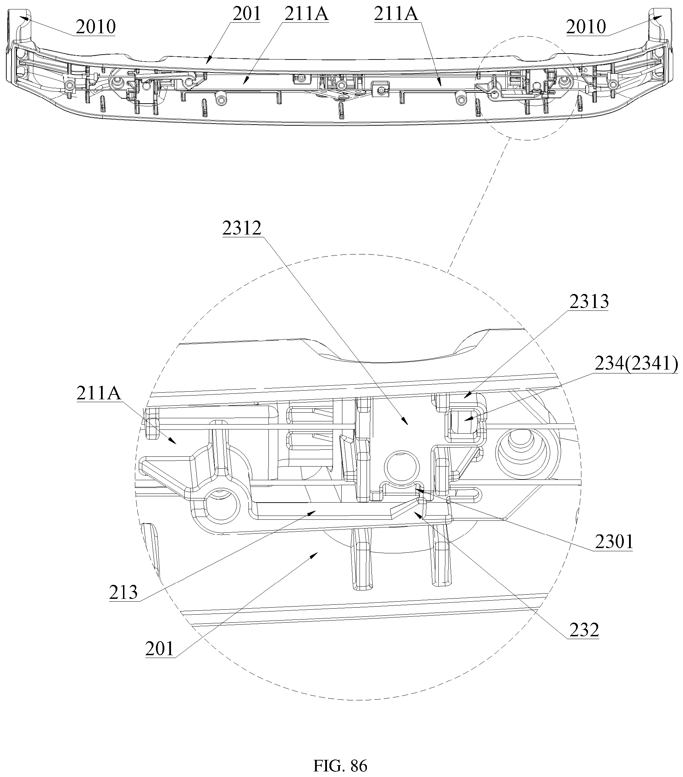

Referring to FIG. 75 and FIG. 86, in this embodiment, the first locking member 211A may be provided with an elastic arm 213. The elastic arm 213 extends, in the left-right direction, to the vicinity of the abutting end 2311 of the movable member 231. The elastic arm 213 may be provided with a second buckling portion 232. The second buckling portion 232 may include, for example, a wedge-shaped step formed on the elastic arm 213. In this embodiment, the elastic arm 213 and the corresponding first locking member 211A may be integrally formed. In some alternative embodiments, the elastic arm 213 may be attached to the corresponding first locking member 211A.

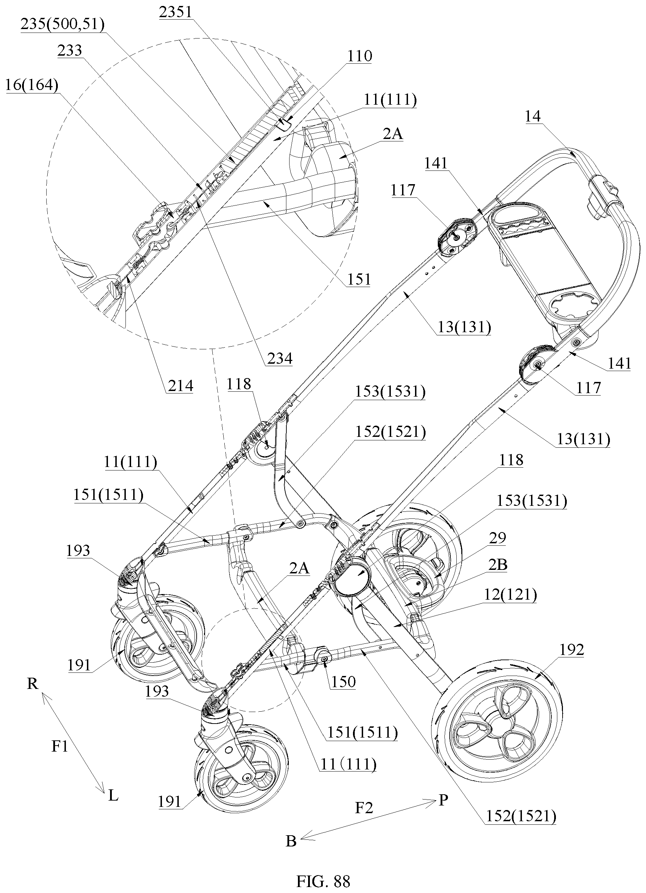

Referring to FIG. 87 and FIG. 88, the reset device 236 may include a first reset member 233, a pulling wire 234, and a sliding member 235. The first reset member 233 and the sliding member 235 are, for example, mounted in the hollow bar 111 of the front support frame 11. An end of the pulling wire 234 is connected to the sliding member 235, and another end of the pulling wire 234 passed by the guiding bracket 164 and enters the first coupling member 1511, and then enters the first seat plate assembly 2A via the hole 15112 (see FIG. 75) to be connected to the movable member 231. The first reset member 233 abuts against the sliding member 235, and is configured to drive the sliding member 235 to reset. As such, the pulling wire 234 drives the movable member 231 to move, so that the abutting end 2311 of the movable member 231 extends into the corresponding engaging channel 22 (first engaging channel 22A). In some embodiments, the first reset member 233 is, for example, a spring, which may be clamped between the guiding bracket 164 and the sliding member 235.

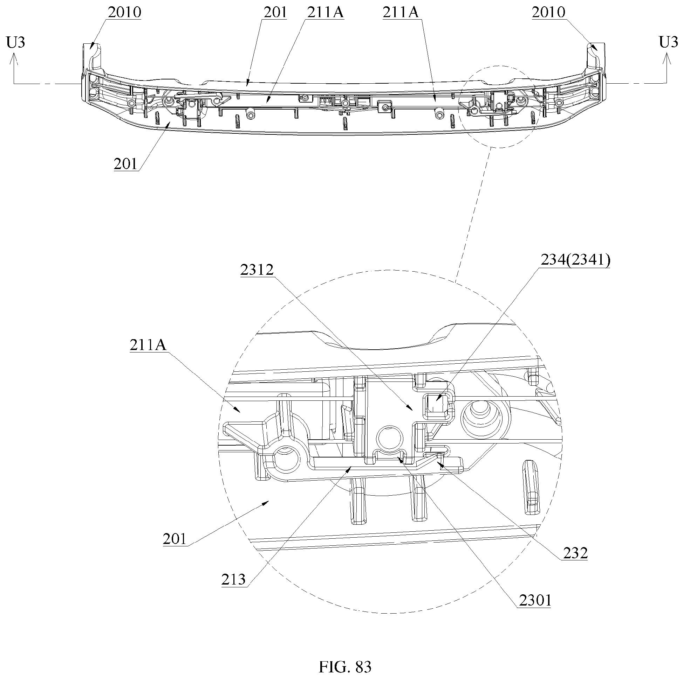

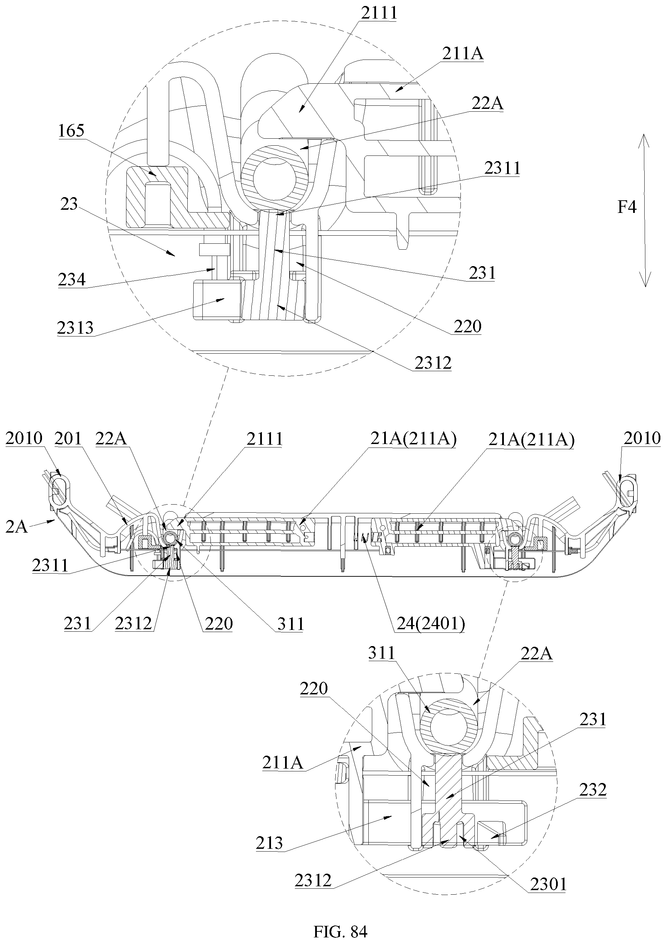

Referring to FIG. 83 and FIG. 84, in some embodiments, the movable member 231 has a connecting portion 2313 positioned outside the sliding channel 220. The pulling wire 234 is supported by the guiding bracket 165 positioned outside the sliding channel 220, and the end 2341 of the pulling wire 234 is connected to the connecting portion 2313. The moving direction F4 of the pulling wire 234 positioned between the guiding bracket 165 and the connecting portion 2313 is parallel to the sliding channel 220, so that the movable member 231 may be pulled to move towards the corresponding first engaging channel 22A with little effort.

The working process of the retaining mechanism 23 is explained below in conjunction with FIG. 81 to FIG. 86.

Referring to FIG. 81, when the carrier 300 is not mounted on the engaging base assembly 200, the abutting end 2311 of the movable part 231 extends into the corresponding first locking channel 22A, the first buckling portion 2301 disposed at the engaging end 2312 is separated from the second buckling portion 232, and the first buckling portion 2301 is positioned above the second buckling portion 232.

Referring to FIG. 82 to FIG. 84, when the carrier 300 is mounted on the engaging base assembly 200, each engaging member 311 is locked in the corresponding engaging channel 22 by a respective one of the locking members 211. The movable member 231 is pressed by the engaging member 311 and moves downwardly along the sliding channel 220, so that the first buckling portion 2301 moves to the moving path of the second buckling portion 232 (that is, the engaging end 2312 moves to the moving path of the first locking member 211A). The movement of the movable member 231 would drive the end 2341 of the pulling wire 234 to move downwardly together, referring to FIG. 88, the pulling wire 234 simultaneously drives the sliding member 235 to overcome the pulling force of the first reset member 233 and move downwardly along the bar 111, and the first reset member 233 is compressed.

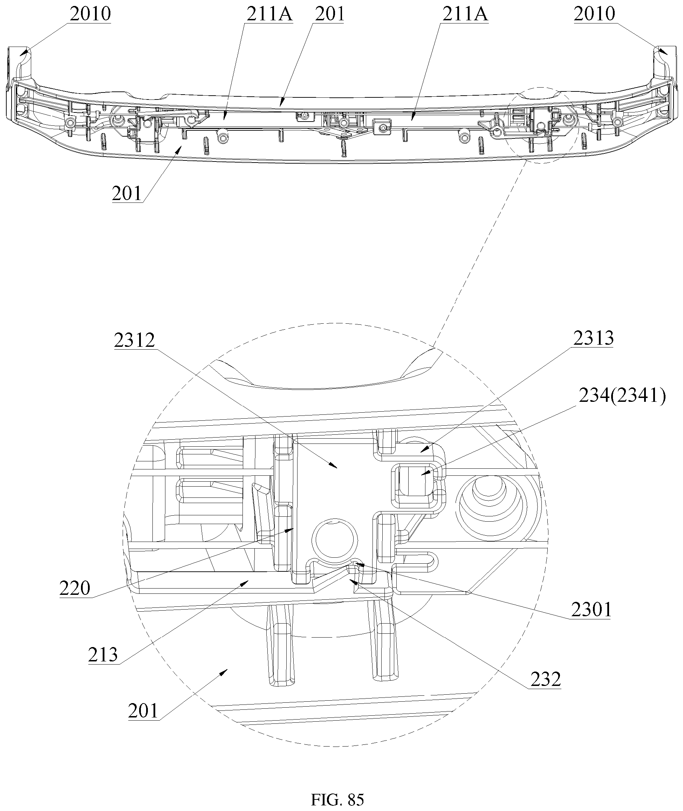

Referring to FIG. 80 and FIG. 85, when the carrier 300 needs to be removed from the engaging base assembly 200, any one of the unlocking operating members 212 is pressed, and the unlocking operating member 212 drives the corresponding first locking member 211A to move towards the unlocked position. As can be seen from the above, the other locking members 211 also move towards the unlocked position. The second buckling portion 232 moves along with the first locking member 211A. When the second buckling portion 232 abuts against the engaging end 2312 of the movable member 231, the elastic arm 213 is elastically deformed to allow the first locking member 211A to continue to move. When the first locking member 211A moves to the unlocked position, the second buckling portion 232 faces the first buckling portion 2301, and at this time, the elastic arm 213 elastically resets, so that the second buckling portion 232 is engaged with the first buckling portion 2301 (that is, the engaging end 2312 is engaged with the first locking member 211A), and the first locking member 211A and other locking members 211 are directly or indirectly locked at the unlocked position by the retaining mechanism 23. Thereafter, even if the unlocking operating member 212 is released, due to the engagement between the second buckling portion 232 and the first buckling portion 2301, the elastic device 24 does not drive the locking members 211 towards the unlocked position, and the user does not need to continue pressing the unlocking operating member 212, and only lifts the carrier 300 upwardly such that the carrier 300 may be easily removed from the frame 100.

After the carrier 300 is removed from the engaging base assembly 200, the engaging member 311 is separated from the engaging channel 22 and does not press the abutting end 2311 of the movable member 231. Referring to FIG. 87, the compressed first reset member 233 drives the sliding member 235 to reset. When the sliding member 235 resets, it moves upwardly along the bar 111 and drives the movable member 231 to reset by the pulling wire 234. The abutting end 2311 of the movable member 231 moves upwardly and extends into the engaging channel 22 again. Referring to FIG. 86, the engaging end 2312 of the movable member 231 drives the first buckling portion 2301 to move upwardly and move out of the moving path of the second buckling portion 232, and the corresponding first locking member 211A would not be blocked from moving towards the locked position. Each locking member 211 is reset to the locked position under the action of the elastic device 24.

Certainly, in some alternative embodiments, the retaining mechanism 23 may also have various implementations, and is not limited to the above examples. For example, in some alternative embodiments, the first buckling portion 2301 may be a wedge-shaped step disposed on the engaging end 2312 of the movable member 231, and the second buckling portion 232 may be an engaging groove disposed on the elastic arm 213. In some alternative embodiments, the movable member 231 of the retaining mechanism 23 is, for example, mounted on the second seat plate assembly 2B, and the movable member 231 is adapted to be pressed by the engaging member 311 entering the second engaging channel 2B, and the elastic arm provided with the second buckling portion 232 is correspondingly connected to the second locking member 211B. Referring to FIG. 76, in some embodiments, the reset device 236 of the retaining mechanism 23 may further include a reset member 237. The reset member 237 abuts against the movable member 231, and is configured to drive the abutting end 2311 of the movable member 231 to move upwardly and extend into the engaging channel 22.

Referring to FIG. 87 and FIG. 88, in some embodiments, the sliding member 235 has an engaging indication region 2351, and the bar 111 is provided with an observation hole 110 for observing the engaging indication region 2351. The engaging indication region 2351, for example, includes a color block (e.g., in green) positioned on the sliding member 235. It can be seen from the above, when the movable member 231 is pressed by the engaging member 311, the sliding member 235 is pulled to move downwardly by the pulling wire 234, and at this time, the green color block of the engaging indication region 2351 moves to the observation hole 110 and is visible. The user can thus determine that the movable member 231 has been pressed by the engaging member 311 of the carrier, and further determine that the carrier 300 has been locked by the engaging base assembly 200. When the movable member 231 is not pressed by the engaging member 311, the green color block of the engaging indication region 2351 is reset to the top of the observation hole 110 and is not visible. In this case, even though the carrier 300 may have been placed on the engaging base assembly 200, the carrier 300 is not locked by the engaging base assembly 200. The user can adjust the relative position of the carrier 300 and the engaging base assembly 200 according to the display of the engaging indication region 2351, so that the carrier 300 is reliably locked by the engaging base assembly 200.

### Fifth Embodiment

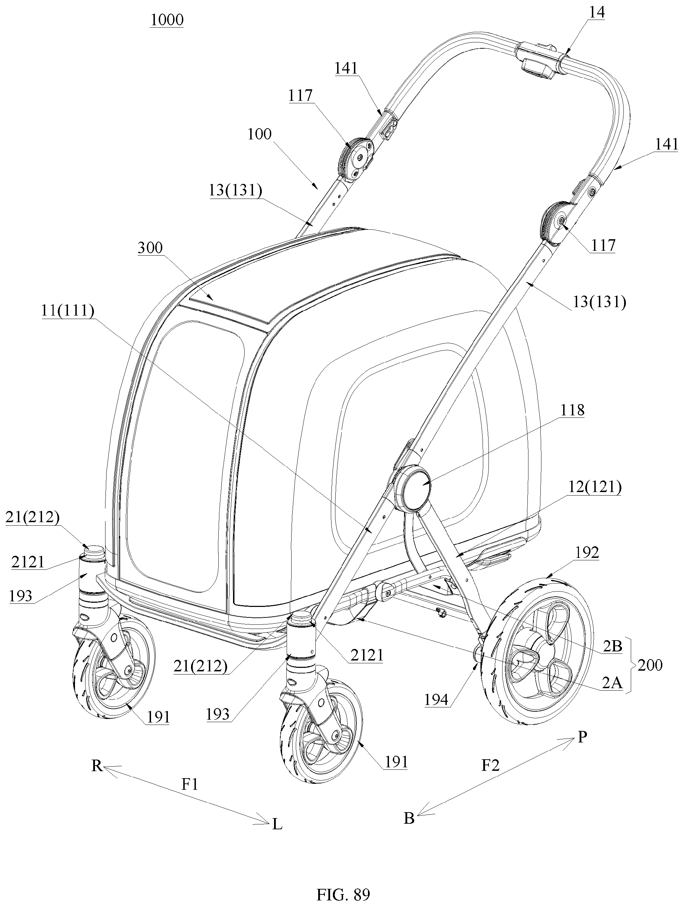

FIG. 89 shows a perspective view of a wheeled movable device 1000 according to the fifth embodiment of the present application, and the wheeled movable device 1000 may include a frame 100, an engaging base assembly 200 and a carrier 300. The wheeled movable device 1000 in this embodiment is a variant of the wheeled movable device 1000 of the fourth embodiment as described above. In the absence of conflict, for the configuration of the components in this embodiment and the connection relationship between the components, reference may be made to the description of the fourth embodiment as above, and the following mainly describes the differences between this embodiment and the fourth embodiment described above. It can be understood that the wheeled movable device 1000 according to this embodiment further includes a support assembly according to some embodiments of the present application. The support assembly includes at least an engaging base assembly 200, and may further include a first coupling member 151 and an auxiliary support member 152.

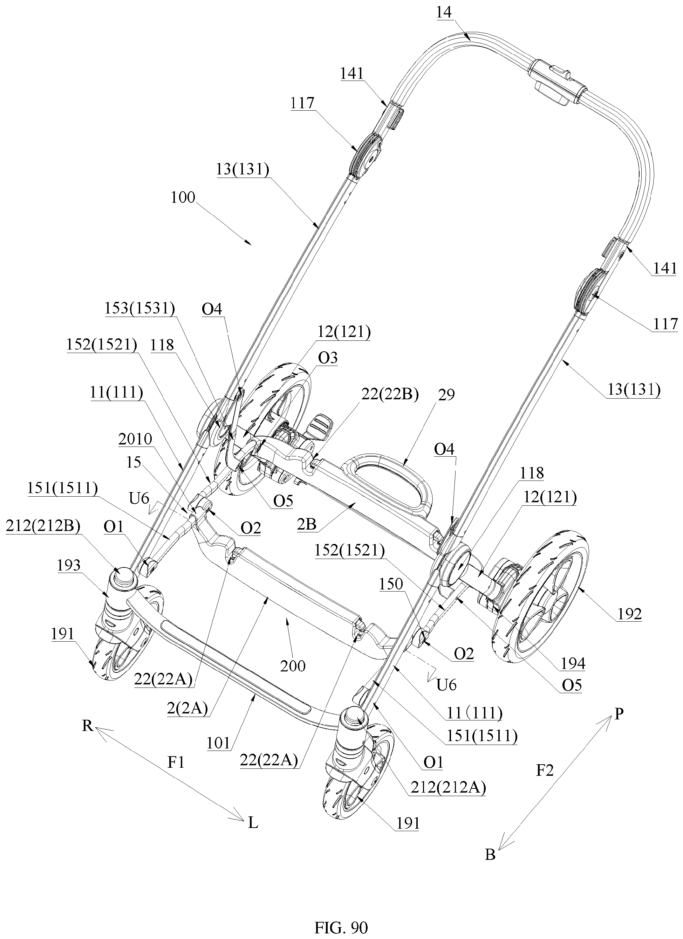

Referring to FIG. 90 to FIG. 92, the retaining mechanism 23 is modified in embodiments of the present application. The retaining mechanism 23 includes a movable member 231 and a reset device 236. The reset device 236 includes a reset member 237, but the first reset member 233, the pulling wire 234 and the sliding member 235 in the fourth embodiment are omitted. Accordingly, the observation hole 110 in the fourth embodiment may not be provided on the bar 111, and the connecting portion 2313 of the movable member 231 configured to be connected to the pulling wire 234 in the fourth embodiment may accordingly omitted. In addition, the traction rope 214 and the linkage member 27 may enter the interior of the first seat plate assembly 2A via a hole 15111 of the first tube 15111, so that the hole 15112 in the fourth embodiment may be omitted.

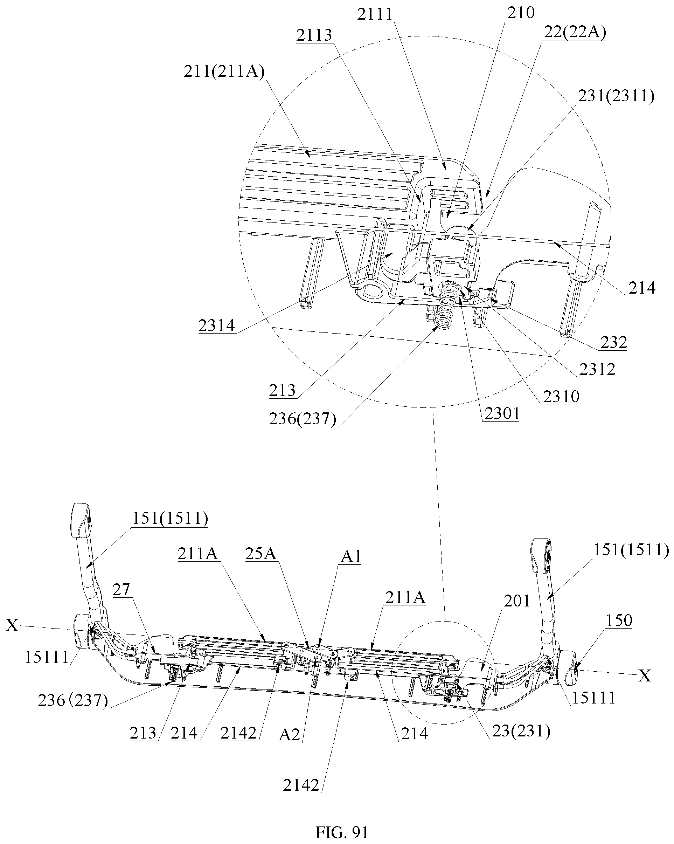

Referring to FIG. 91 to FIG. 94, in some embodiments, the reset member 237 may be, for example, a spring. An end of the spring abuts against the movable member 231, and another end of the spring abuts against, for example, the lower housing 202 of the first seat plate assembly 2A. When the engaging member 311 of the carrier 300 is inserted into the engaging channel 22 and abuts against the abutting end 2311 of the movable member 231, the movable member 231 moves downwardly and compresses the reset member 237. When the engaging member 311 is separated from the engaging channel 22 and does not abut against the abutting end 2311 of the movable member 231, the reset member 237 is elastically reset and drives the movable member 231 to move upwardly, and the abutting end 2311 of the movable member 231 extends into the engaging channel 22 again. In some embodiments, the movable member 231 may be, for example, provided with a cavity 2310 for accommodating the reset member 237.

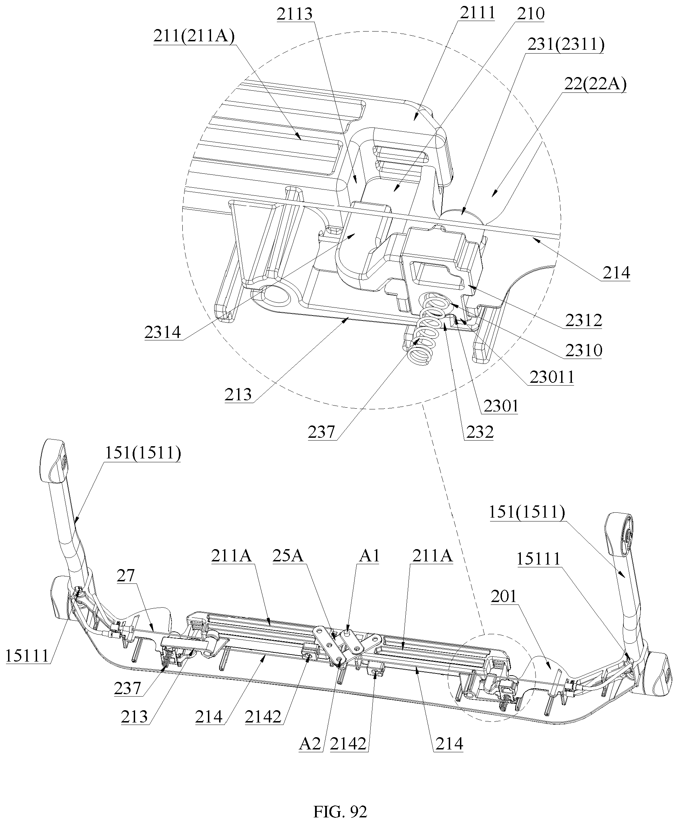

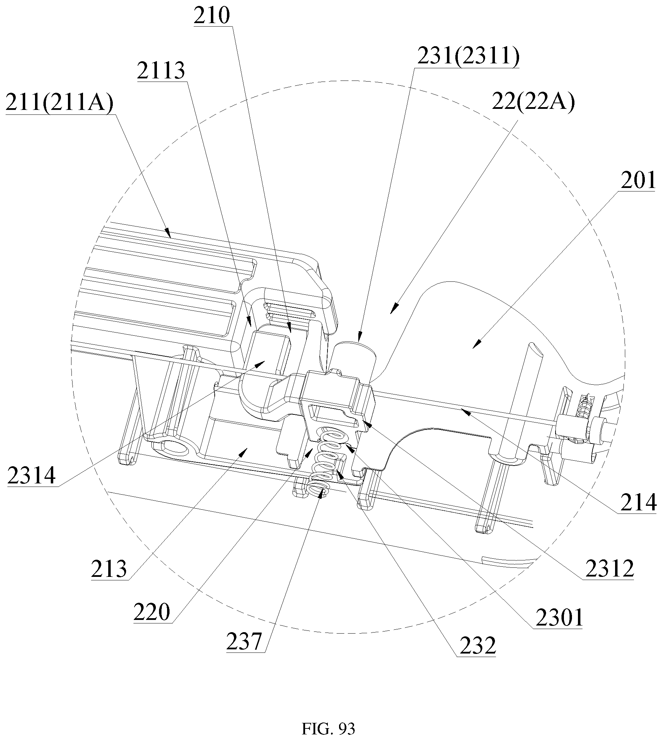

Referring to FIG. 91 to FIG. 93, in some embodiments, the movable member 231 is further provided with a limiting portion 2314. The limiting portion 2314 is positioned outside the sliding channel 220. The limiting portion 2314, for example, protrudes towards the corresponding locking member 211. A matching portion 2113 configured for abutting against the limiting portion 2314 is disposed on the locking member 211. In some embodiments, the locking member 211 has a recess 210. The matching portion 2113 is formed on the wall of the recess 210. More specifically, when the reset member 237 drives the movable member 231 to move up and down, the limiting portion 2314 moves up and down accordingly, so as to be able to move to the moving path of the locking member 211 or withdraw from the moving path of the locking member 211. Referring to FIG. 92, when the locking member 211 is at the unlocked position and the engaging member 311 has just been moved out of the engaging channel 22, the reset member 237 drives the movable member 231 to move upwardly, and the abutting end 2311 of the movable member 231 extends into the engaging channel 22, while the limiting portion 2314 moves to the moving path of the locking member 211. Referring to FIG. 93, when the abutting end 2311 extends into the engaging channel 22, the limiting portion 2314 remains abutting against the matching portion 2113. The limiting portion 2314 abutting against the matching portion 2113 may prevent the locking member 211 from resetting to its locked position. In this way, when the carrier 300 needs to be mounted again, the engaging member 311 of the carrier 300 may enter the engaging channel 22 without being hindered by the locking member 211.

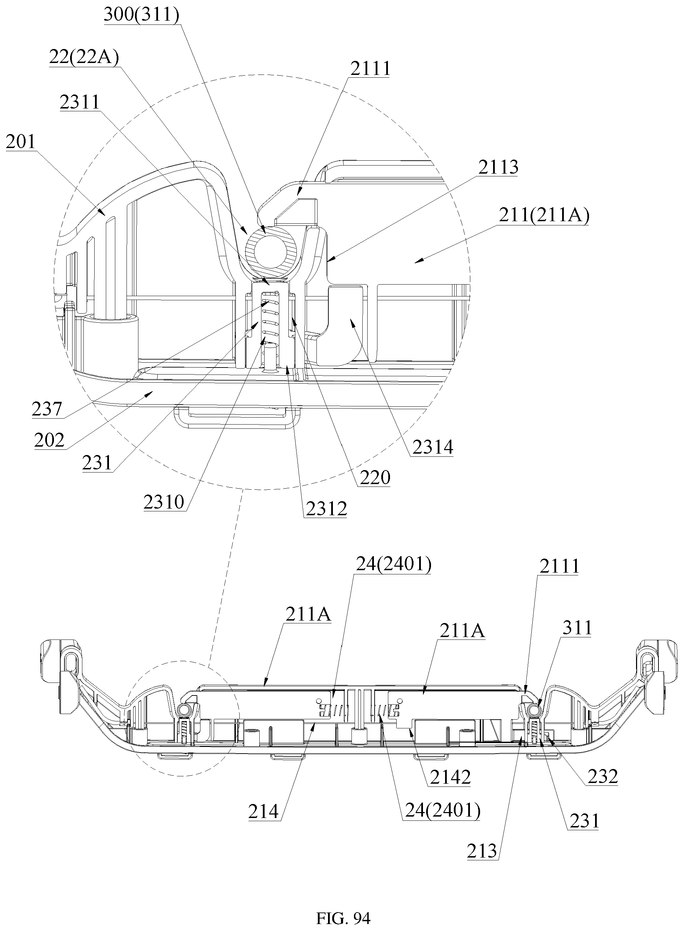

The working process of the retaining mechanism 23 is described below in conjunction with FIG. 94 to FIG. 98.

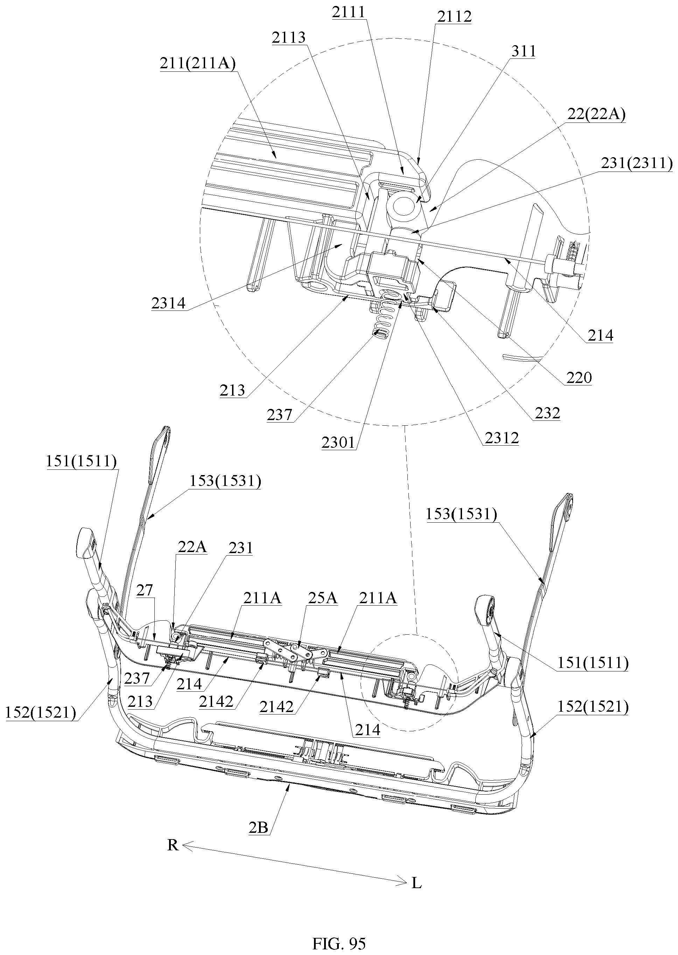

Referring to FIG. 94, when the carrier 300 is mounted to the engaging base assembly 200, each engaging member 311 is locked in the corresponding engaging channel 22 by the respective locking member 211. Referring to FIG. 95, the abutting end 2311 of the movable member 231 is pressed by the engaging member 311 and moves downwardly along the sliding channel 220 and withdraws from the engaging channel 22, so that the first buckling portion 2301 moves to the moving path of the second buckling portion 232 (that is, the engaging end 2312 moves to the moving path of the first locking member 211A), and at the same time, the limiting portion 2314 moves out of the moving path of the locking member 211, and the reset member 237 is compressed.

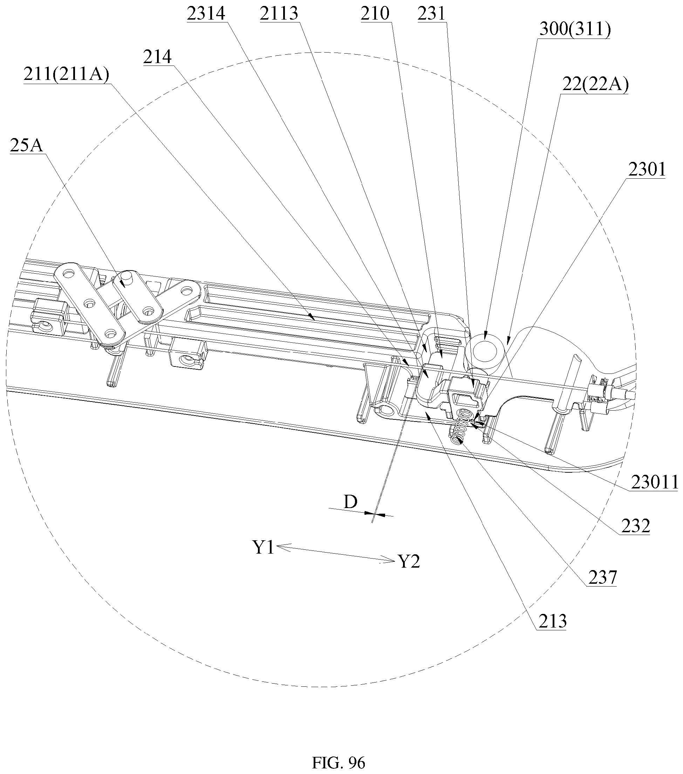

Referring to FIG. 96 and in combination with the description of the fourth embodiment, when the carrier 300 needs to be removed from the engaging base assembly 200, any one of the unlocking operating members 212 is pressed, and the unlocking operating member 212 drives the corresponding first locking member 211A to move towards the unlocked position in the direction Y1, and other locking members 211 also move towards the unlocked position together. The second buckling portion 232 moves along with the first locking member 211A. Wen the second buckling portion 232 abuts against the engaging end 2312 of the movable member 231, the elastic arm 213 is elastically deformed to allow the first locking member 211A to continue to move. When the first locking member 211A moves to the unlocked position, the second buckling portion 232 faces the first buckling portion 2301, and at this time, the elastic arm 213 elastically resets, so that the second buckling portion 232 is engaged with the first buckling portion 2301 (that is, the engaging end 2312 is engaged with the first locking member 211A), and the first locking member 211A and other locking members 211 are directly or indirectly locked at the unlocked position by the retaining mechanism 23. Thereafter, even if the unlocking operating member 212 is released, due to the engagement between the second buckling portion 232 and the first buckling portion 2301, the elastic device 24 does not drive the locking members 211 to the unlocked position. The user does not need to continue pressing the unlocking operating member 212, and only lifts the carrier 300 upwardly such that the carrier 300 may be easily removed from the frame 100. As can be seen from FIG. 96, when each locking member 211 is locked at the unlocked position, the recessed portion 210 is positioned above the limiting portion 2314, allowing room for the upward movement of the limiting portion 2314. In some embodiments, when the second buckling portion 232 is engaged with the first buckling portion 2301, the matching portion 2113 and the limiting portion 2314 have a small spacing D in the moving direction of the corresponding locking member 211. The matching portion 2113 is at a position that does not interfere with the upward movement of the limiting portion 2314.

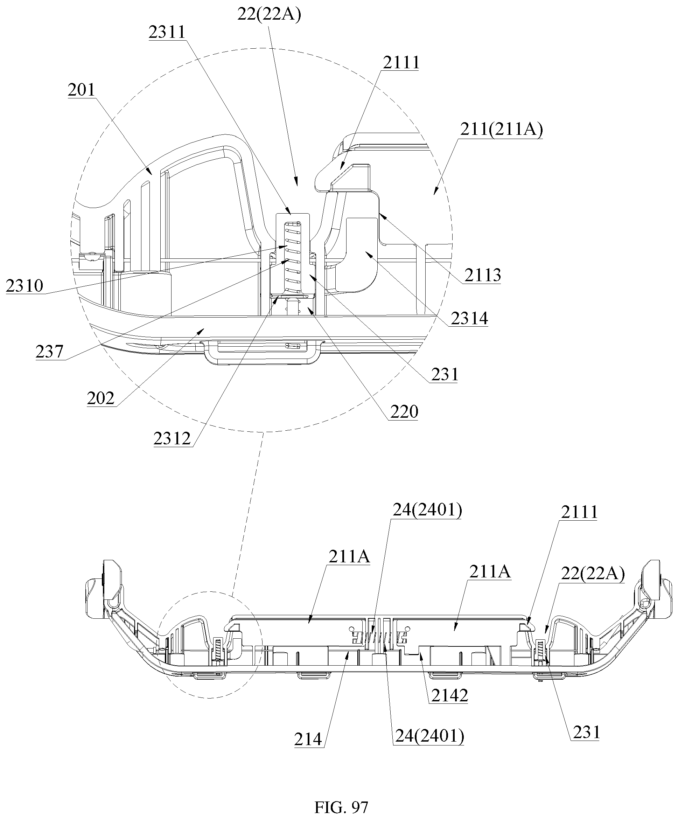

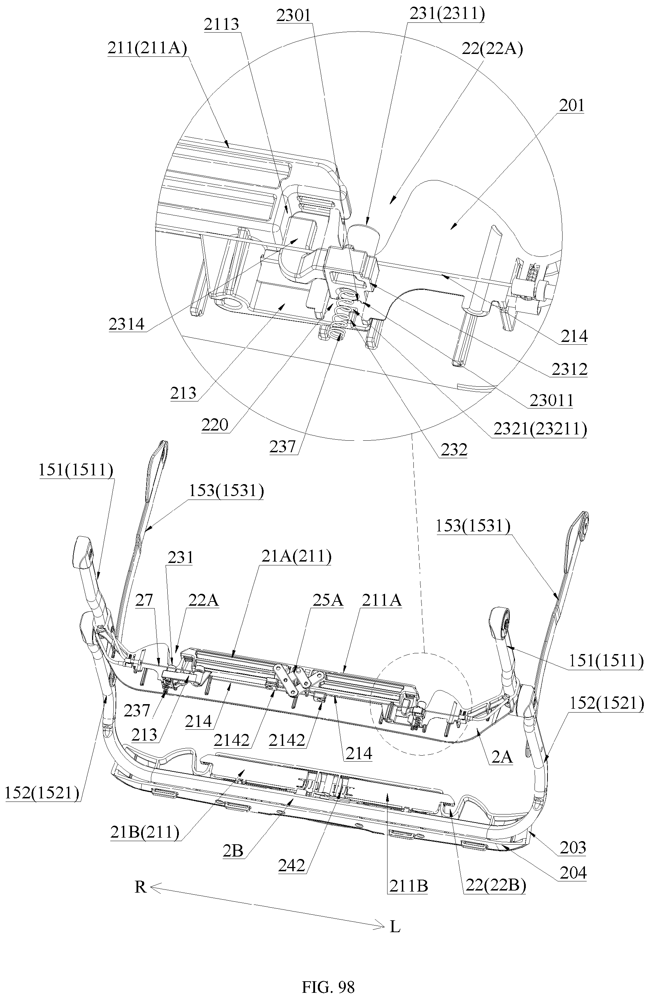

Referring to FIG. 97 and FIG. 98, when the carrier 300 is removed from the engaging base assembly 200, the engaging member 311 is separated from the engaging channel 22 and does not press against the abutting end 2311 of the movable member 231. The compressed reset member 237 resets and directly drives the abutting end 2311 of the movable member 231 to move upwardly and extend into the engaging channel 22 (first engaging channel 22A) again. During the upward movement of the movable member 231, at the moment when the second buckling portion 232 is disengaged from the first buckling portion 2301, the movable member 231 continues to move upwardly, and while the limiting portion 2314 moves upwardly to the moving path of the first locking member 211A, the locking member 211 is pushed by the elastic device 24 and moves in the direction Y2, by the distance of the above-mentioned spacing D (see FIG. 96), towards the locked position until the matching portion 2113 abuts against the limiting portion 2314. At this time, the locking member 211 does not continue to move towards the locked position due to the hindering of the limiting portion 2314. It can be understood that because the spacing D is very small, after the engaging member 311 of the carrier 300 is moved out of the engaging channels 22, each locking member 211 is still maintained at the unlocked position.

Referring to FIG. 98, after the abutting end 2311 of the movable member 231 is inserted into the engaging channel 22 in place, although the first buckling portion 2301 of the movable member 231 moves upwardly and moves out of the moving path of the second buckling portion 232, and does not block the corresponding first locking member 211A from moving towards the locked position, each locking member 211 is still kept at the unlocked position by the limiting portion 2314 abutting against the matching portion 2113. In this way, when the carrier 300 needs to be mounted again, the engaging member 311 of the carrier 300 can enter the engaging channel 22 without being hindered by the locking member 211. In addition, because the locking member 211 moves in the direction Y2, by the spacing D, towards the locked position before the matching portion 2113 abuts against the limiting portion 2314, the first buckling portion 2301 is not aligned with the second buckling portion 232 in the moving direction of the movable member 231. When one of the first buckling portion 2301 and the second buckling portion 232 is an engaging groove and another of the first buckling portion 2301 and the second buckling portion 232 is a wedge-shaped step, a groove wall 23011 of the engaging groove would correspond to a side surface 2321 of the wedge-shaped step. In some embodiments, at least one of the groove wall 23011 and the side surface 2321 includes an inclined surface (in this embodiment, taking the side surface 2321 including an inclined surface 23211 as an example).

When the carrier 300 needs to be mounted on the engaging base assembly 200 again, the engaging member 311 is placed in the engaging channel 22 so that the engaging end 2312 of the movable member 231 is pressed and withdraws from the engaging channel 22. During the process of the engaging end 2312 withdrawing from the engaging channel 22, the reset member 237 is compressed, and the limiting portion 2314 moves downwardly and out of the moving path of the first locking member 211A, so that the limiting portion 2314 does not abuts against the matching portion 2113, and does not hinder the corresponding first locking member 211A from moving towards the locked position. During the downward movement of the limiting portion 2314, the groove wall 23011 and the side surface 2321 contact each other through the inclined surface 23211. Under the action of the inclined surface 23211, the elastic arm 213 drives the second buckling portion 232 to move in a direction away from the first buckling portion 2301, thereby preventing the second buckling portion 232 from being engaged with the first buckling portion 2301, thereby not affecting the elastic device 24 driving the individual locking members 211 to move towards the locked position. When the engaging member 311 is placed in place, each locking member 211 is driven to the locked position by the elastic device 24.

This embodiment is similar to the above fourth embodiment in that the manner of unlocking each locking member 211. The two wheel seats (more specifically, the front wheel seats 193) on the left and right sides of the frame 100 are respectively provided with the unlocking operating members 212. The two unlocking operating members 212 are operably connected to the two first locking members 211A respectively. By pressing any one of the unlocking operating members 212, each locking member 211 may be driven to move towards the unlocked position. In addition, each unlocking operating member 212 can have an unlocking identification region 2121. The unlocking identification region 2121 is configured to assist the user in determining whether the locking member 211 is at the unlocked position. The unlocking identification region 2121 is, for example, a color block (for example, in green) positioned on the unlocking operating member 212. When the unlocking operating member 212 is not pressed, the locking member 211 is at the locked position, and the unlocking identification region 2121 is positioned outside the front wheel seat 193 and is visible. When the unlocking operating member 212 is pressed, the locking member 211 is at the unlocked position, and the unlocking identification region 2121 slides into the interior of the front wheel seat 193 and becomes invisible.

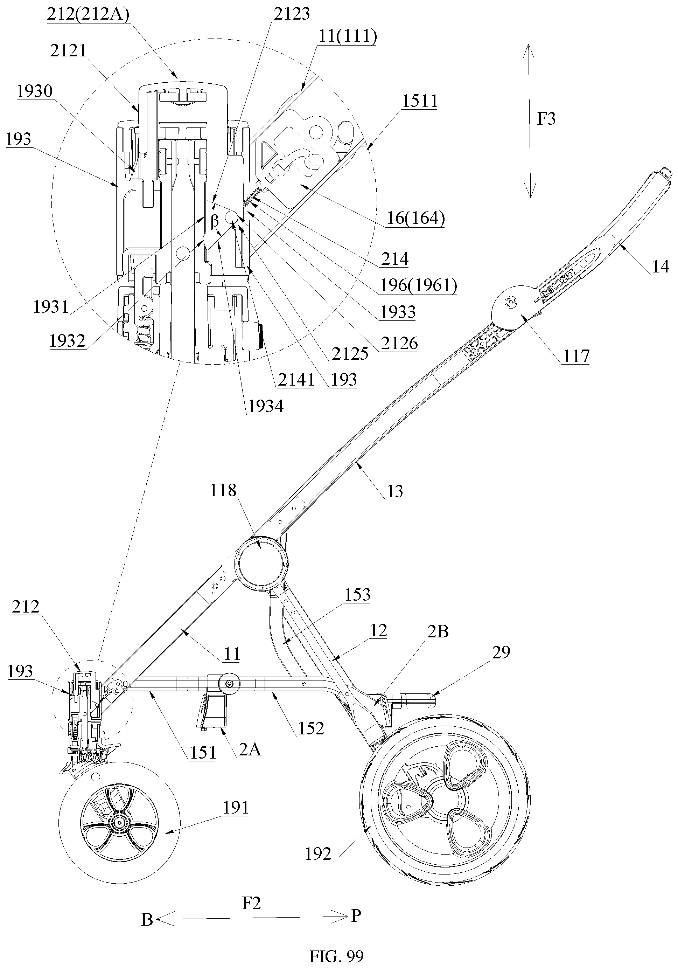

Referring to FIG. 99 to FIG. 102, in order to avoid the situation where the unlocking identification region 2121 of the unlocking operating member 212 that is directly pressed becomes invisible, but the unlocking identification region 2121 of the unlocking operating member 212 that is not directly pressed remains visible, causing identification difficulties for the user, an unlocked state synchronization mechanism 196 is further provided in the present embodiment. The unlocked state synchronization mechanism 196 may allow the unlocking identification regions 2121 of different unlocking operating members 212 to be visible or invisible at the same time.

This embodiment shows an exemplary implementation of the unlocked state synchronization mechanism 196. The unlocked state synchronization mechanism 196, for example, includes a second reset member 1961. The second reset member 1961 abuts against the end 2141 of the traction rope 214. The second reset member 1961 is adapted to provide a force for the end 2141 of the traction rope 214 to move from the first engaging structure 2126 towards the second engaging structure 1932. In this way, when one unlocking operating member 212 is directly pressed, the end 2141 of the traction rope 214 corresponding to the unlocking operating member 212 that is not directly pressed moves towards the second engaging structure 1932 under the drive of the second reset member 1961 and is separated from the first driving inclined surface 2123, which allows the unlocking operating member 212 that is not directly pressed to slide downwardly under the action of gravity. Thus, the unlocking operating member 212 that is not directly pressed and the unlocking identification region 2121 of the unlocking operating member 212 that is directly pressed are not visible at the same time. The two unlocking operating members 212 are in the state of unlocking the locking member 211 at the same time.

The working process of each unlocking operating member 212 is described in detail below in conjunction with FIG. 99 to FIG. 102.

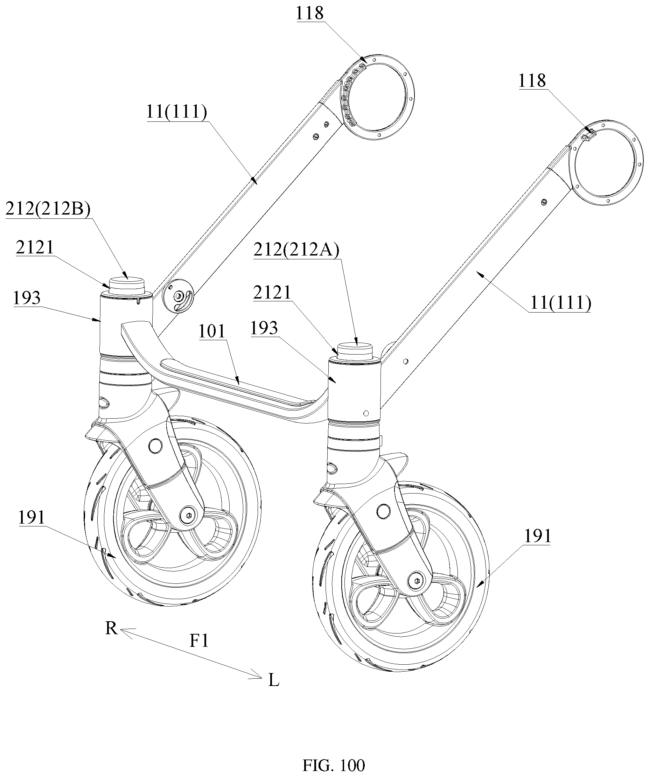

Referring to FIG. 99 and FIG. 100, in some embodiments, the second reset member 1961 may be a spring. The spring is sleeved outside the traction rope 214. One end of the spring abuts against the end 2141 of the traction rope 214, and another end of the spring may be limited by any suitable structure. For example, the other end of the spring may abut against the guiding bracket 164. When each locking member 211 is at the locked position and the two unlocking operating members 212 are not directly pressed, the traction ropes 214 corresponding to the two first locking members 211A are both in a tensioned state. The ends 2141 of the two traction ropes 214 are respectively engaged with the corresponding first engaging structures 2126, and each second reset member 1961 is compressed.

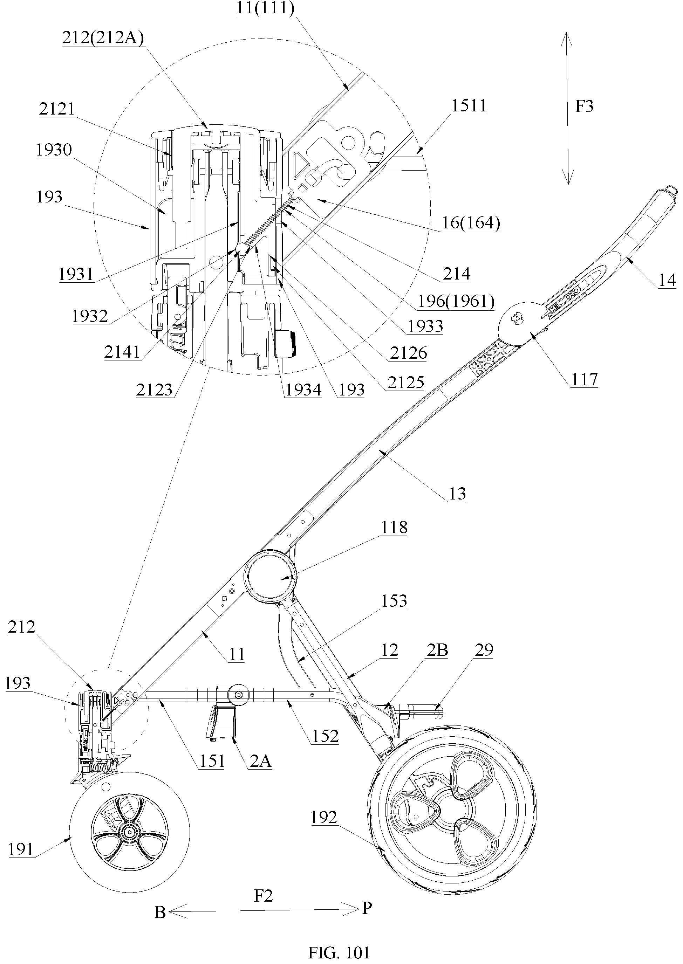

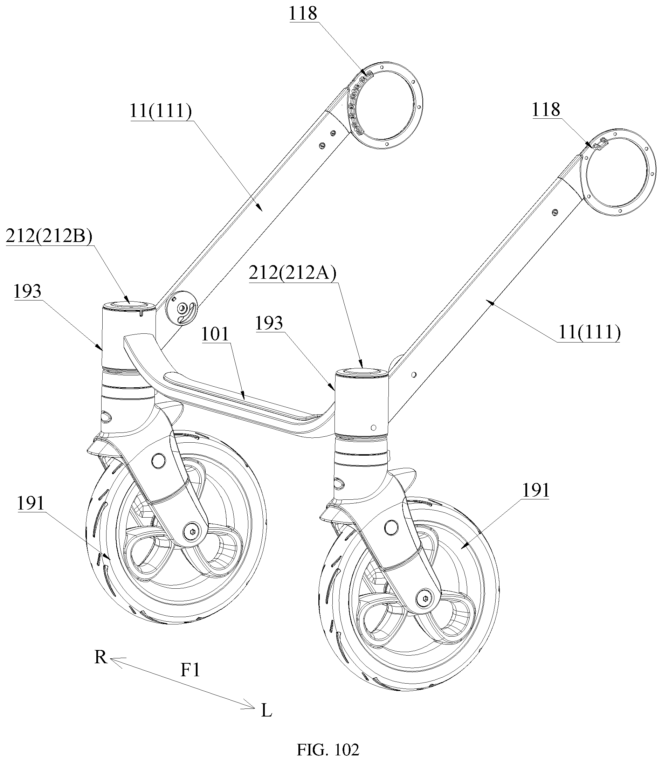

Referring to FIG. 101 and FIG. 102, the two unlocking operating members 212 include an unlocking operating member 212A on the left side or an unlocking operating member 212B on the right side. When the user directly presses any one of the unlocking operating members 212, for example, directly pressing the unlocking operating member 212A on the left side, the end 2141 of the traction rope 214 connected to the unlocking operating member 212A on the left side moves towards the second engaging structure 1932 along the first driving inclined surface 2123 and the first guiding inclined surface 1934 under the drive of the first driving inclined surface 2123. When the unlocking operating member 212A is pressed in place, the unlocking identification region 2121 on the unlocking operating member 212A enters the interior of the left front wheel seat 193 and becomes invisible, and the first locking member 211A operably connected to the unlocking operating member 212A moves to the unlocked position.

As can be seen from the description of the fourth embodiment, under the action of the first linkage assembly 25A, when the first locking member 211A operably connected to the unlocking operating member 212A moves to the unlocked position, the first locking member 211A operably connected to the unlocking operating member 212B on the right side switches from the locked position towards the unlocked position synchronously. In this process, the traction rope 214 connected to the unlocking operating member 212B (hereinafter referred to as the right traction rope 214) has a tendency to relax. At this time, the second reset member 1961 corresponding to the right traction rope 214 drives the end 2141 of the right traction rope 214 to move from the first engaging structure 2126 towards the second engaging structure 1932. The end 2141 of the right traction rope 214 is separated from the first driving inclined surface 2123 of the unlocking operating member 212B, which allows the unlocking operating member 212B to automatically slide downwardly in the sliding channel 1930 under gravity, so that the unlocking identification region 2121 on the unlocking operating member 212B enters the interior of the right front wheel seat 193 and is invisible. At this time, the unlocking identification regions 2121 of the two unlocking operating members 212 are invisible at the same time, and the user can directly determine whether the locking member 211 is at the locked position or the unlocked position by observing any one of the unlocking identification regions 2121, and it is not easy to make a misjudgment.

When each locking member 211 moves from the unlocked position towards the locked position, each first locking member 211A drives the corresponding traction rope 214 to move synchronously, and the end 2141 of each traction rope 214 simultaneously drives the first driving inclined surface 2123 of the corresponding unlocking operating member 212A or the unlocking operating member 212B, so that the unlocking operating member 212A and the unlocking operating member 212B move upwardly synchronously. The unlocking identification regions 2121 of the unlocking operating member 212A and the unlocking operating member 212B is simultaneously exposed to the outside of the front wheel seats 193 respectively and visible. The two unlocking operating members 212 are simultaneously in a state of not unlocking the locking member 211.

### Sixth Embodiment

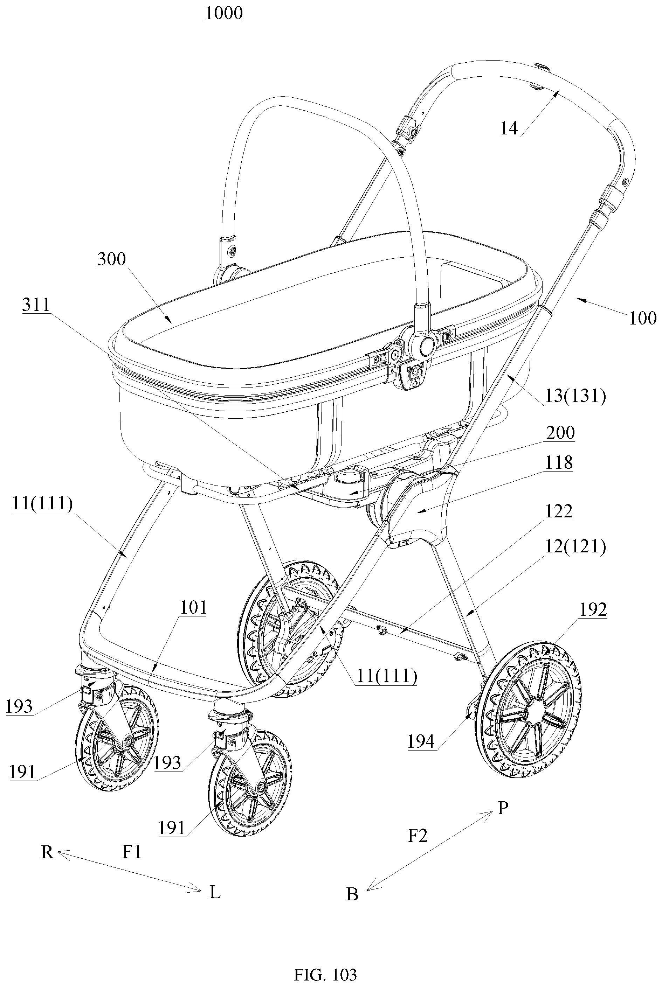

FIG. 103 shows a perspective view of a wheeled movable device 1000 according to a sixth embodiment of the present application, and the wheeled movable device 1000 is similar to that of the fourth embodiment, and includes a frame 100, an engaging base assembly 200, and a carrier 300. The wheeled movable device 1000 includes a support assembly according to another embodiment of the present application. The support assembly will be described together with the wheeled movable device 1000 below.

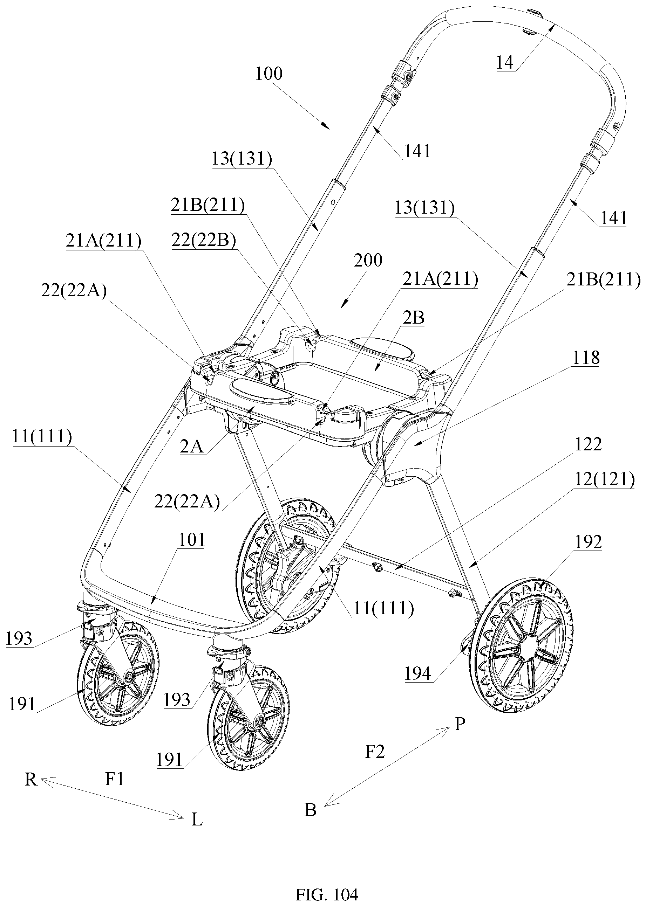

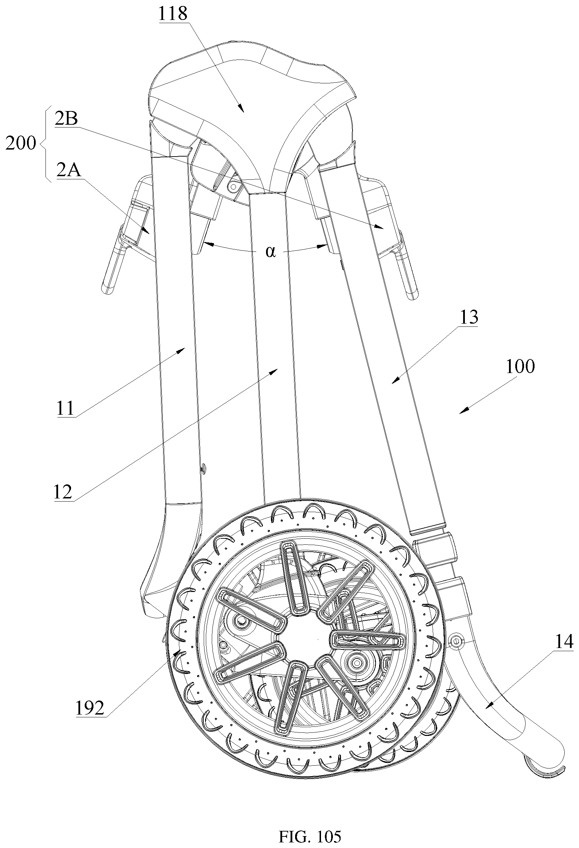

The configuration of the frame 100 is substantially symmetric in the left-right direction. The frame 100 may include a front support bar 11, a rear support bar 12, an upper support bar 13 and a handlebar 14. The frame 100 is foldable and has an unfolded state (see FIG. 104) and a folded state (see FIG. 105).

Referring to FIG. 104, the front support bar 11 has, for example, a U-shaped structure, and includes two bars 111 respectively positioned on the left and right sides and a first crossbar 101 connected between the two bars 111. The first crossbar 101 extends in the left-right direction (first direction F1). Two front wheel seats 193 are mounted at the left and right ends of the first crossbar 101 respectively. Each front wheel seat 193 is configured to be fitted with a front wheel 191. The front wheel 191 may be a universal wheel or a non-universal wheel.

The rear support bar 12 has, for example, a U-shaped structure, and includes two bars 121 respectively positioned on the left and right sides and a rear crossbar 122 connected between the two bars 121. The rear crossbar 122 extends in the left-right direction (first direction F1). The upper end of each of the bar 121 is, for example, pivotally connected to the upper end of each of the bars 111 of the front support bar 11 on the same side by a pivot portion 118. The rear support bar 12 is provided with two rear wheel seats 194. The two rear wheel seats 194 are spaced apart in the left-right direction. Each rear wheel seat 194 is configured to be fitted with a rear wheel 192. The rear wheel 192 may be a universal wheel or a non-universal wheel.

The upper support bar 13 includes two bars 131 respectively positioned on the left and right sides. The lower end of each bar 131 is pivotally connected to the pivot portion 118 on the same side respectively, and the upper end of each bar 131 is respectively connected to the handlebar 14. In some embodiments, the handlebar 14 has, for example, a U-shaped structure, and includes two bars 141 respectively positioned on the left and right sides. The two bars 141 of the handlebar 14 are respectively connected to the two bars 131, for example, through telescopic structures, so that the height of the handlebar 14 may be changed.

In some embodiments, the pivot portion 118 includes a locking mechanism (not shown) for locking the relative positions of the front support bar 11, the rear support bar 12, and the upper support bar 13. The locking mechanism is configured to keep the frame 100 in the unfolded state. When the locking mechanism is unlocked, the frame 100 is allowed to change towards the folded state.

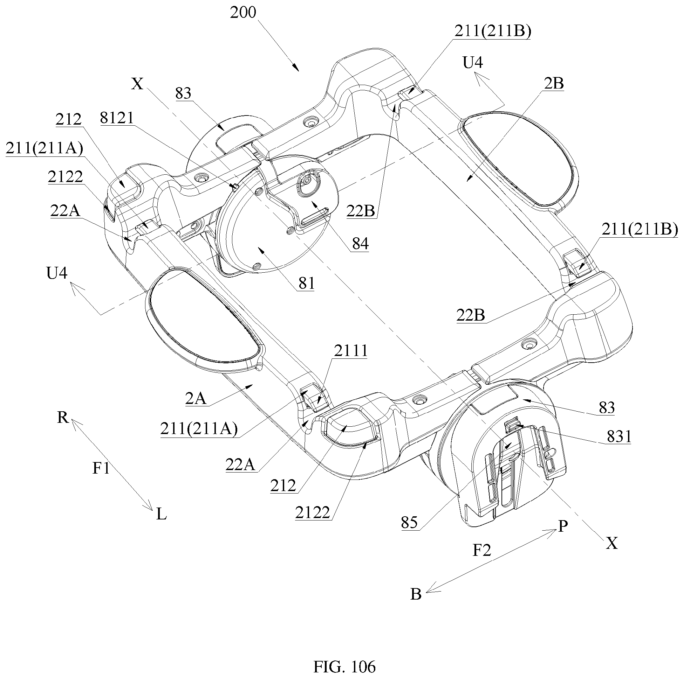

Referring to FIG. 106 to FIG. 108, in this embodiment, the support assembly includes a first coupling member 151, an auxiliary support member 152, and an engaging base assembly 200. Different from the fourth embodiment as described above, the first coupling member 151 and the auxiliary support member 152 are not connected between the front support bar 11 and the rear support bar 12 of the frame 100, and may be detachably connected to the frame 100. The first seat plate assembly 2A of the engaging base assembly 200 is mounted on the first coupling member 151, and the second seat plate assembly 2B is mounted on the auxiliary support member 152. The engaging base assembly 200 is configured to support and lock the carrier 300. In the wheeled movable device 1000 according to this embodiment, the support assembly may be removed from the frame 100 as a whole, so that the frame 100 may be detachably connected to the engaging base assembly 200, and the engaging base assembly 200 may be detachably connected to the carrier 300.

Referring to FIG. 104, FIG. 106 and FIG. 107, in some embodiments, the first seat plate assembly 2A is connected to a first pivot base 81 by the first coupling member 151, and the second seat plate assembly 2B is connected to a second pivot base 82 by the auxiliary support member 152. The first pivot base 81 and the second pivot base 82 are pivotally connected and have a rotation axis X-X. In some embodiments, the first pivot base 81 is proximate to the longitudinal center plane of the frame 100 (which may also be called the left-right symmetric plane of the frame 100). The second pivot base 82 is away from the longitudinal center plane of the frame 100. The second pivot base 82 is also pivotally connected to a mounting base 83. The mounting base 83 may be mounted on the pivot portion 118 of the frame 100, and may be detachably connected to a locking hole (not shown) on the pivot portion 118 by a locking member 831.

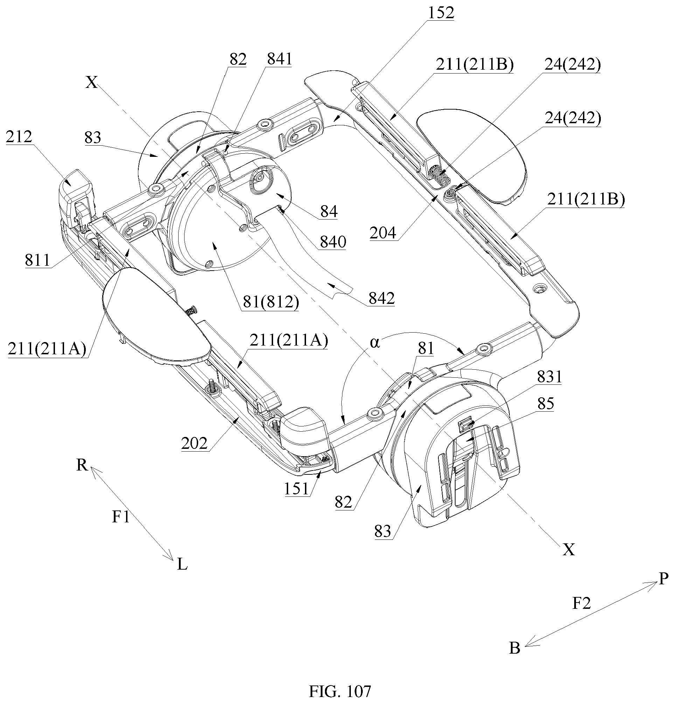

Referring to FIG. 104 and FIG. 107, when the frame 100 is in the unfolded state, the first coupling member 151 and the auxiliary support member 152 are unfolded and disposed substantially horizontally. The angle α between the first coupling member 151 and the auxiliary support member 152 is approximately 180 degrees. Certainly, in some embodiments, when the frame 100 is in the unfolded state, the angle α formed between the first coupling member 151 and the auxiliary support member 152 may be an obtuse angle greater than 90 degrees. In some embodiments, a locking mechanism may be disposed between the first pivot base 81 and the second pivot base 82. The locking mechanism is configured to lock the relative position between the first pivot base 81 and the second pivot base 82 to keep the first coupling member 151 and the auxiliary support member 152 in the unfolded state.

When the frame 100 needs to be folded, the first coupling member 151 and the auxiliary support member 152 can rotate relative to each other to be folded, and the angle α formed by the folded first coupling member 151 and the auxiliary support member 152 is an acute angle less than 90 degrees (see FIG. 105).

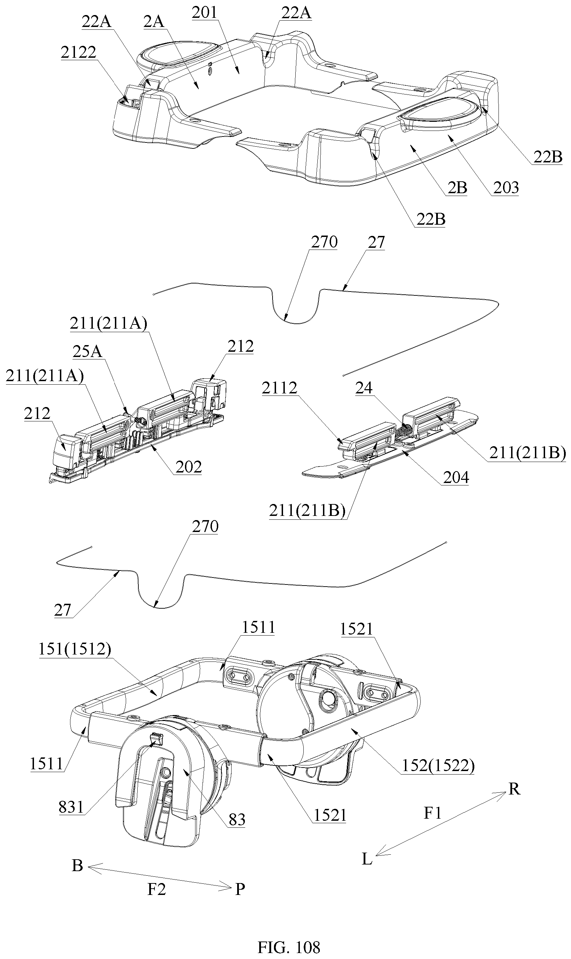

Referring to FIG. 107 and FIG. 108, in some embodiments, the first coupling member 151 may include two first tubes 1511 disposed in parallel and an intermediate tube 1512 connected between the two first tubes 1511. The auxiliary support member 152 may include two second tubes 1521 disposed in parallel and an intermediate pipe 1522 connected between the two second tubes 1521. An end of each first tube 1511 is respectively connected to the corresponding first pivot base 81, and an end of each second tube 1521 is respectively connected to the corresponding second pivot bases 82. The first pivot bases 81 and the second pivot bases 82 on the same side are pivotally connected to each other.

Referring to FIG. 107, in some embodiments, an unlocking member 84 is mounted on the first pivot base 81 via a pivot shaft 841. The pivot shaft 841 is parallel to the second direction F2. The unlocking member 84 may rotate around the pivot shaft 841 to remove the positional lock between the first pivot base 81 and the second pivot base 82, thereby allowing the first pivot base 81 and the second pivot base 82 to rotate relative to each other. In some embodiments, the unlocking member 84 may be provided with a hole 840. A pulling member 842 may be mounted in the hole 840. The pulling member 842 is, for example, a webbing. When the first coupling member 151 and the auxiliary support member 152 need to be folded, the unlocking member 84 is driven to rotate around the pivot shaft 841 by the pulling member 842. After the unlocking member 84 is rotated into place, the positional lock between the first pivot base 81 and the second pivot base 82 is removed, and the user can manually drive the first coupling member 151 and the auxiliary support member 152 to be folded. In some embodiments, when the first pivot base 81 and the second pivot base 82 rotate relative to each other, a driving member 85 on the mounting base 83 may be driven to move. The movement of the driving member 85 would drive the locking mechanism on the first pivot portion 118 (see Figure 105) to be unlocked, thereby removing the positional lock between the front support bar 11, the rear support bar 12 and the upper support bar 13, so that the front support bar 11, the rear support bar 12 and the upper support bar 13 may be folded.

Referring to FIG. 107 and FIG. 108, in some embodiments, the engaging base assembly 200 may include the first seat plate assembly 2A and the second seat plate assembly 2B. The first seat plate assembly 2A is mounted on the first coupling member 151, and the second seat plate assembly 2B is mounted on the auxiliary support member 152. It can be seen from the above that the first seat plate assembly 2A and the second seat plate assembly 2B can rotate relative to each other about the rotation axis X-X, so that the engaging base assembly 200 has an unfolded state and a folded state. Referring to FIG. 104, the unfolded state of the engaging base assembly 200 corresponds to the unfolded state of the frame 100. Referring to FIG. 105, the folded state of the engaging base assembly 200 corresponds to the folded state of the frame 100.

It should be noted that, in some alternative embodiments, the support assembly may not be provided with the first coupling member 151 and the auxiliary support member 152. The first seat plate assembly 2A, for example, is directly connected to the first pivot base 81, and the second seat plate assembly 2B, for example, is directly connected to the second pivot base 82, which is also within the scope of protection of the present application.

Referring to FIG. 104 and FIG. 107, the first seat plate assembly 2A is mounted to the first coupling member 151 and is provided with a locking mechanism, more specifically, a first locking mechanism 21A. The second seat plate assembly 2B is mounted to the auxiliary support member 152 and is provided with a locking mechanism, more specifically, a second locking mechanism 21B. The first seat plate assembly 2A and the second seat plate assembly 2B each include at least one engaging channel 22. Each engaging channel 22 extends in the front-rear direction (second direction F2). The first locking mechanism 21A and the second locking mechanism 21B each include at least one locking member 211. Each locking member 211 moves in the left-right direction (first direction F1) to have a locked position where the locking member 211 extends into the corresponding engaging channel 22 and an unlocked position where the locking member 211 retracts from the corresponding engaging channel 22. The moving direction of each locking member 211 is parallel to the rotation axis X-X. It can be understood that when the locking member 211 is at the locked position, the carrier 300 may be locked, and when the locking member 211 is at the unlocked position, the carrier 300 is allowed to be removed from the engaging base assembly 200.

Still referring to FIG. 104, FIG. 106 and FIG. 108, the engaging channel 22 on the first seat plate assembly 2A may be referred to as a first engaging channel 22A, and the engaging channel 22 on the second seat plate assembly 2B may be referred to as a second engaging channel 22B. The locking member 211 of the first locking mechanism 21A may be referred to as a first locking member 211A. The first locking member 211A is, for example, positioned directly above the intermediate tube 1512. The locking member 211 of the second locking mechanism 21B may be referred to as a second locking member 211B. The second locking member 22B is, for example, positioned directly above the intermediate tube 1522. In this embodiment, two first engaging channels 22A and two first locking members 211A may be provided, and the two first locking members 211A are unlocked and locked in opposite directions. Two second engaging channels 22B and two second locking members 211B may be provided, and the two second locking members 211B are unlocked and locked in opposite directions. Certainly, in some alternative embodiments, the two first locking members 211A may be unlocked and locked in the same direction, and the two second locking members 211B may be unlocked and locked in the same direction.

Referring to FIG. 108, in some embodiments, the first seat plate assembly 2A includes, for example, an upper housing 201 and a lower housing 202. The first engaging channel 22A is formed on the upper housing 201, and the first locking member 211A is positioned in a receiving cavity enclosed by the upper housing 201 and the lower housing 202. The second seat plate assembly 2B includes, for example, an upper housing 203 and a lower housing 204. The second engaging channel 22B is formed on the upper housing 203, and the second locking member 211B is positioned in a receiving cavity enclosed by the upper housing 203 and the lower housing 204.

FIG. 103 shows another exemplary embodiment of a carrier 300, where the carrier 300 is, for example, a baby carrier. A bracket device of the baby carrier includes an annular structure positioned at the bottom. The annular structure is exposed at the bottom of the carrier 300. The annular structure (which may be regarded as the engaging member 311) has two bars parallel to each other, which may be configured to be engaged with the engaging channels 22 (the first engaging channel 22A and the second engaging channel 22B) respectively. When the carrier 300 is supported and locked by the engaging base assembly 200, the individual engaging members 311 are respectively engaged into the corresponding first engaging channel 22A and second engaging channel 22B, and are respectively locked by the first locking member 211A of the first locking mechanism 21A and the second locking member 211B of the second locking mechanism 21B.

Referring to FIG. 106, when the individual locking members 211 (the first locking member 211A and the second locking member 211B) are at the locked position, the locking portions 2111 (such as the locking tongues) of the individual locking member 211 extend into the respective engaging channels 22 (first engaging channel 22A and second engaging channel 22B) to lock the corresponding engaging members 311, so that the engaging member 311 is unable to be removed from the engaging channel 22. When the two first locking members 211A move towards each other and the two second locking members 211B move towards each other, so that they retract from the corresponding engaging channels 22, the engaging member 311 is allowed to be removed from the corresponding engaging channels 22, and the carrier 300 may be removed from the engaging base 200.

Referring to FIG. 108, in some embodiments, two first locking members 211A are connected by a first linkage assembly 25A. The first linkage assembly 25A controls the two first locking members 211A to move synchronously, so that the two first locking members 211A switch synchronously between their locked positions and unlocked positions. In this way, any one of the first locking members 211A may be operated to be unlocked, and then another first locking member 211A may be unlocked at the same time. Certainly, when any one of the first locking members 211A moves towards the locked position, under the action of the first linkage assembly 25A, another first locking member 211A moves synchronously towards the locked position. For the connection relationship between the first linkage assembly 25A and the first locking members 211A, reference may be made to the description in the fourth embodiment, and which will not be repeatedly described herein.

Still referring to FIG. 108, in some embodiments, the first locking member 211A of the first locking mechanism 21A and the second locking member 211B of the second locking mechanism 21B may be connected through a corresponding linkage member 27 to synchronously switch between their respective locked positions and unlocked positions. In this way, any one of the first locking members 211A or any one of second locking member 211B may be operated to be unlocked, that is, the corresponding second locking member 211B or first locking member 211A may be synchronously unlocked.

Still referring to FIG. 108, in some embodiments, the linkage member 27 may be a traction rope. The first locking member 211A and the second locking member 211B disposed diagonally are connected by the same linkage 27. Thus, when being unlocked and locked, the first locking member 211A and the second locking member 211B that are connected to the same linkage 27 move in opposite directions, so as to be able to lock or unlock the carrier 300 synchronously. More specifically, the first locking member 211A on the left side and the second locking member 211B on the right side are connected by one linkage member 27, and the first locking member 211A on the right side and the second locking member 211B on the left side are connected by one linkage member 27. In some embodiments, the traction rope may include a steel wire rope, and at least a portion of the steel wire rope may be wrapped up in a steel wire rope sheath.

Referring to FIG. 107 to FIG. 113, in some embodiments, the first pivot base 81 and/or the second pivot base 82 is provided with a guiding structure 801. Each linkage member 27 has a guiding section 270 that cooperates with the guiding structure 801. When the first coupling member 151 and the auxiliary support member 152 rotate relative to each other, the guiding section 270 cooperates with the guiding structure 801 to prevent the traction rope of the linkage member 27 from being piled up.

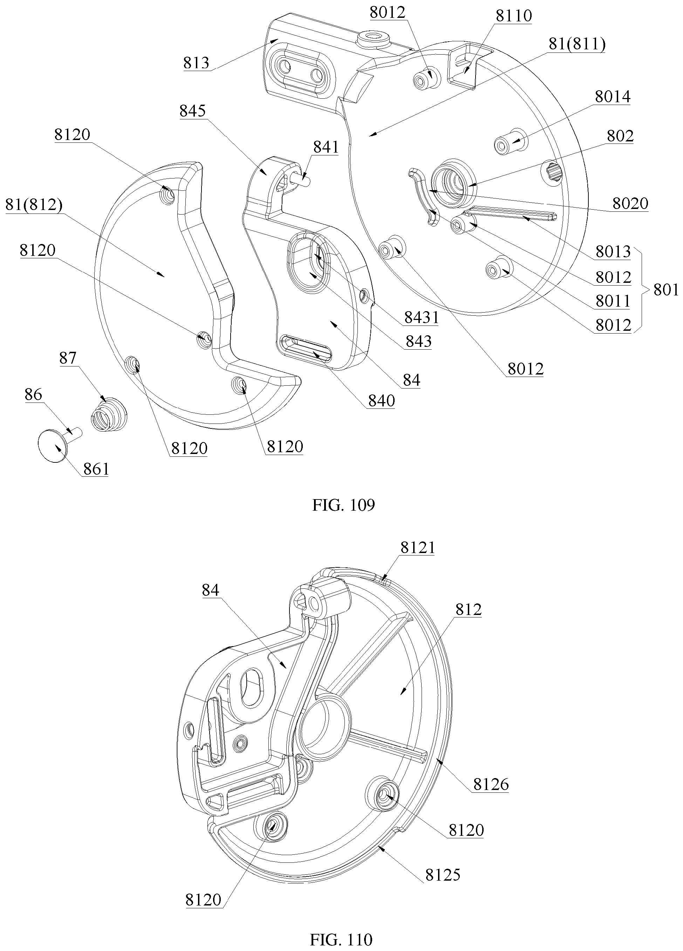

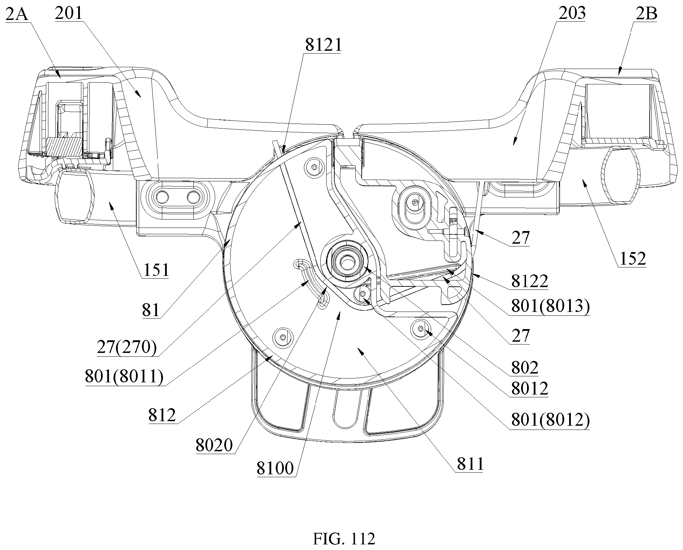

Referring to FIG. 109, in some embodiments, the first pivot base 81 includes a disk body 811 and a cover body 812. The disk body 811 has a sleeve 813. The sleeve 813 is configured to be connected to the first tube 1511 of the first coupling member 151. A side of the disk body 811 faces the second pivot base 82 (see FIG. 107). The cover body 812 is mounted on another side of the disk body 811. The disk body 811 has a groove 8110. A pivot portion 845 of the unlocking member 84 extends into the groove 8110 and is connected to the disk body 811 by the pivot shaft 841. Referring to FIG. 106, in some embodiments, the shapes of the cover body 812 and the unlocking member 84 are substantially complementary to each other, and the area of the cover body 812 is greater than the area of the unlocking member 84. Referring to FIG. 109 and FIG. 112, the disk body 811 has a post body 802 at the center. The post 802 has a hole through which the pivot shaft between the first pivot base 81 and the second pivot base 82 extend. The cover body 812 covers the post 802.

Still referring to FIG. 109, in some embodiments, the unlocking member 84 has an elongated counterbore 843, and a fastener 86 is mounted on the disk body 811. The fastener 86 extends through the elongated counterbore 843 and is then connected to a post 8014 on the disk body 811. An elastic reset member 87 is sleeved on the fastener 86. The elastic reset member 87 is clamped between a head 861 of the fastener 86 and a step 8431 of the elongated counterbore 843. The fastener 86 can limit the unlocking rotation range of the unlocking member 84. When the unlocking member 84 is subjected to an external pulling force and rotates around the pivot shaft 841, the elastic reset member 87 is compressed. When the external pulling force on the unlocking member 84 is removed, the elastic reset member 87 drives the unlocking member 84 to reset, and the unlocking member 84 is attached to the disk body 811.

Referring to FIG. 109 and FIG. 110, in some embodiments, a plurality of connecting posts 8012 are provided on the disk body 811, a plurality of holes 8120 are provided on the cover body 812. A plurality of fasteners (not shown) extend through the holes 8120 and connected to the corresponding connecting posts 8012. The connecting posts 8012 support the cover body 812 so that a space 8100 (see FIG. 112) through which the corresponding linkage member 27 extends is defined between the cover body 812 and the disk body 811. The guiding structure 801 may be positioned in the space 8100 defined by the cover body 812 and the disk body 811.

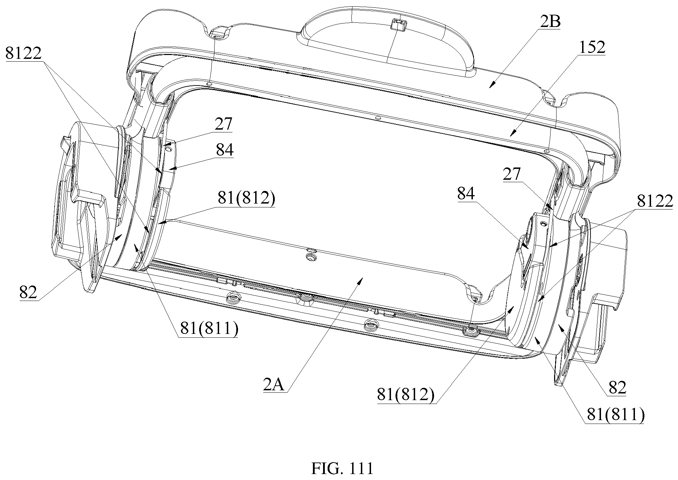

Referring to FIG. 110, a flanging 8126 abutting against the disk body 811 may be disposed on a portion of the edge of the cover body 812, and a partial edge 8125 of the cover body 812 is separated from the disk body 811. A notch 8121 may be disposed on the flanging 8126. The linkage member 27 connected to the first locking member 211A extends through and out of the first seat plate assembly 1A, and then enters the space 8100 via the notch 8121. A slit 8122 (see FIG. 111) through which the linkage member 27 extends out of the space 8100 is formed between the partial edge 8125 of the cover body 812 and the disk body 811. The linkage member 27 extends out via the slit 8122, and then enters the second seat plate assembly 1B and is connected to the second locking member 211B. In some embodiments, a slit 8122 through which the linkage member 27 extend out may also be formed between the unlocking member 84 and the disk body 811.

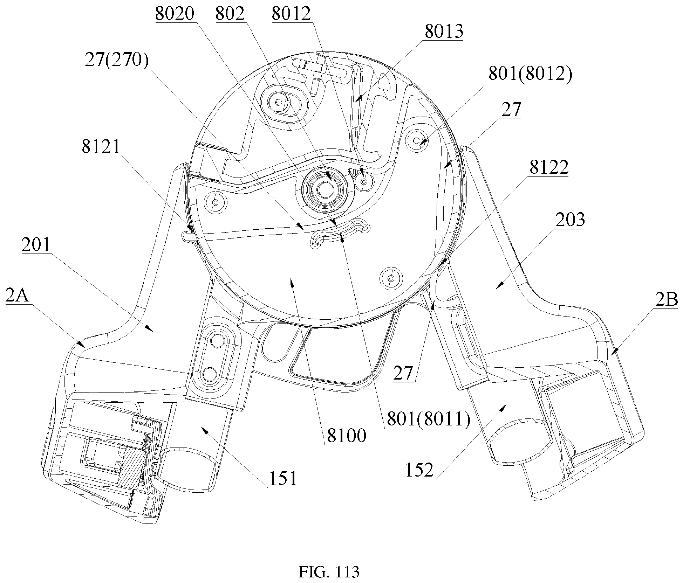

Referring to FIG. 109 to FIG. 113, exemplary embodiments of the guiding structure 801 are shown. The guiding structure 801 may include an arc structure 8011 opposed to the post 802. A channel 8020 through which the linkage member 27 extends is formed between the arc structure 8011 and the post 802. The guiding structure 801 may further include at least a part of the connecting posts 8012 and other suitable components, such as ribs 8013 disposed on the disc body 811. Referring to FIG. 112 and FIG. 113, when the first pivot base 81 and the second pivot base 82 rotate relative to each other, so that the support assembly switches to the unfolded state or the folded state, the degree of tightness of the linkage member 27 may change, but under the guiding of the guiding structure 801, the piling up of the traction rope of the linkage member 27 may be effectively avoided. Certainly, in some alternative embodiments, the implementation of the guiding structure 801 is not limited to the above examples, as long as it can play a role in avoiding the piling up of the linkage member 27.

In this embodiment, an exemplary implementation of unlocking each locking member 211 is illustrated. Referring to FIG. 106 to FIG. 108, two holes 2122 are disposed on the upper housing 201 of the first seat plate assembly 2A. The two holes 2122 are symmetric in the left-right direction. Unlocking operating members 212 are respectively mounted in the two holes 2122. Each unlocking operating member 212 is operably connected to the first locking member 211A on the same side, for example, to directly or indirectly drive each locking member 211 to move to the unlocked position. In some embodiments, the moving direction of each unlocking operating member 212 is perpendicular to the moving direction of the corresponding first locking member 211A.

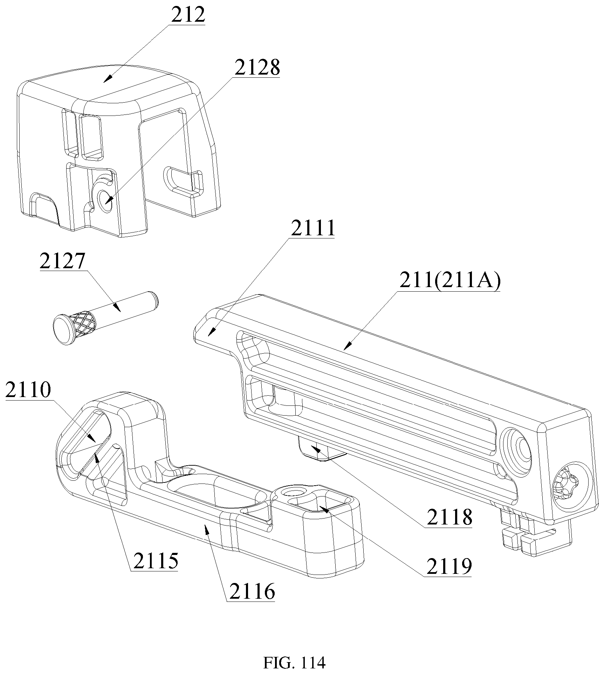

Reference is made to the exploded view of the unlocking operating member 212 and the first locking member 211A shown in FIG. 114. In some embodiments, each first locking member 211A is connected with an extension 2116. The extension 2116 and the corresponding first locking member 211A are attached to each other, for example, by the cooperation between a positioning groove 2119 and a positioning post 2118. The extension 2116 extends towards the corresponding unlocking operating member 212 and is provided with an inclined hole 2110. The hole wall of the inclined hole 2110 includes a second driving inclined surface 2115. A driving pin 2127 that slidably cooperates with the inclined hole 2110 is mounted in the hole 2128 of each unlocking operating member 212. When any one of the unlocking operating members 212 is pressed, the driving pin 2127 presses against the second driving inclined surface 2115 and drives the corresponding first locking member 211A to move towards the unlocked position. Under the action of the first linkage assembly 25A and the linkage member 27, other locking members 211 also move towards the unlocked position.

There are many ways to operably connect the unlocking operating member 212 and the corresponding locking member 211, which are not limited to the above examples. For example, in some embodiments, the inclined hole 2110 and the second driving inclined surface 2115 may be disposed on the unlocking operating member 212, and the driving pin 2127 may be disposed on the extension 2116. Alternatively, in some embodiments, the unlocking operating member 212 and the extension 2116 may both be provided with the second driving inclined surface 2115. The second driving inclined surface 2115 of the unlocking operating member 212 abuts against the second driving inclined surface 2115 of the extension 2116. In addition, in some alternative embodiments, the extension 2116 and the corresponding first locking member 211A may be integrally formed.

Certainly, in some embodiments, the unlocking operating member 212 may be mounted on the second seat plate assembly 2B and operably connected to the corresponding second locking member 211B. for the operably connected manner of the unlocking operating member 212 to the second locking member 211B, reference may be made to the operably connected manner of the unlocking operating member 212 to the first locking member 211A as described above. In addition, in some embodiments, the engaging base assembly 200 may be provided with only one unlocking operating member 212. The unlocking operating member 212 may be mounted on the first seat plate assembly 2A or the second seat plate assembly 2B. When the one unlocking operating member 212 is pressed, each locking member 211 may also be unlocked at the same time. Certainly, in some embodiments, the first seat plate assembly 2A and the second seat plate assembly 2B may be provided with multiple unlocking operating members 212. The multiple unlocking operating members 212 correspond to the multiple locking members 211 one by one, for example.

In some embodiments, a retaining mechanism may be provided in the first engaging base assembly 2A or the second engaging base assembly 2B. When the locking member 211 is driven to the unlocked position, the retaining mechanism is configured to lock the locking member 211 at the unlocked position to facilitate the user to remove the carrier 300 from the engaging base assembly 200.

Referring to FIG. 108, the support assembly may further include an elastic device 24. The elastic device 24 is configured to drive each locking member 211 to return to the locked position. In some embodiments, the elastic device 24 may include a spring disposed between any first locking member 211A and the first seat plate assembly 2A (e.g., the upper housing 201 or the lower housing 202). In some embodiments, the spring device 24 may include a spring disposed between two first locking members 211A, and alternatively, the spring device 24 may include a spring disposed between each first locking member 211A and the first seat plate assembly 2A. Alternatively, in some embodiments, the elastic device 24 may include a spring disposed between any second locking member 211B and the second seat plate assembly 2B (e.g., the upper housing 203 or the lower housing 204). In some embodiments, the spring device 24 may include a spring disposed between two second locking members 211B, and alternatively the spring device 24 may include a spring disposed between each second locking member 211B and the second seat plate assembly 2B. When each locking member 211 is driven by the unlocking operating member 212 to move to the unlocked position, the springs of the spring device 24 is compressed. When the unlocking operating member 212 does not drives the locking members 211, the springs of the spring device 24 are reset and drives the locking members 211 to the locked position.

Referring to FIG. 114 again, in some embodiments, when the first locking member 211A moves towards the locked position, the second driving inclined surface 2115 abuts against the driving pin 2127 and drives the unlocking operating member 212 to reset. In some alternative embodiments, a reset member for driving the unlocking operating member 212 to reset may be mounted in the hole 2128. The reset member is, for example, a spring.

### Seventh Embodiment

The seventh embodiment of the present application further provides a wheeled movable device 1000. For the wheeled movable device 1000 according to the seventh embodiment, reference may be made to the description of the wheeled movable device 1000 according to the fourth embodiment and FIG. 79 to FIG. 88. Specifically, the wheeled movable device 1000 in this embodiment may include a frame 100, an engaging base assembly 200 and an indicator device 500 (see FIG. 79 and FIG. 88).

The frame 100 may be a foldable frame as described above. In some alternative embodiments, the frame 100 may also be a non-foldable fixed frame.

The engaging base assembly 200 may be a foldable engaging base assembly 200 as described above. In some alternative embodiments, the engaging base assembly 200 may also be a non-foldable engaging base assembly. The engaging base assembly 200 is mounted on the frame 100 and is configured to support the carrier 300. The engaging base assembly 200 includes at least one engaging channel 22 and at least one locking member 211. The engaging channel 22 is configured to be engaged with at least one engaging member 311 of the carrier 300. The implementation of the engaging channel 22 may be, but is not limited to, the implementations of the engaging channel 22 of the aforementioned embodiments. The locking member 211 has a locked position that extends into the engaging channel 22 to lock the engaging member 311, and an unlocking position that unlocks the engaging member 311. The implementation of the locking member 211 may be, but is not limited to, the implementations of the locking member 211 of the aforementioned embodiments.

The indicator device 500 is mounted on the frame 100 and/or the engaging base assembly 200, and is configured to indicate the working state of the wheeled movable device 1000, so that the user can confirm whether the state of the wheeled movable device 1000 meets the requirements. The working state of the wheeled movable device 1000 includes, but is not limited to: whether the engaging member 311 is engaged in the engaging channel 22, or whether the locking member 211 is at the unlocked position.

In some embodiments, the indicator device 500 includes a first indicator device 51 (see FIG. 88). The first indicator device 51 is configured to indicate whether the engaging member 311 is engaged in the engaging channel 22. Through the indication of the first indicator device 51, the user can easily determine whether the carrier 300 is locked by the engaging base assembly 200 when supported on the engaging base assembly 200.

Referring to FIG. 81 and FIG. 88, the first indicator device 51 includes, for example, the movable member 231 and the sliding member 235 as described in the fourth embodiment. Referring to the description in the fourth embodiment, the movable member 231 is mounted in the sliding channel 220 in communication with the engaging channel 22. The movable member 231 has the abutting end 2311 adapted to extend into the engaging channel 22. The sliding member 235 is operably connected to the movable member 231 and has an engaging indication region 2351. More specifically, the sliding member 235 is slidably sleeved in the bar 111 of the frame 100. The bar 111 is provided with the observation hole 110 for observing the engaging indication region 2351. The engaging indication region 2351 includes, for example, a color block (e.g., in green) positioned on the sliding member 235. The sliding member 235 may be operably connected to the movable member 231 through the pulling wire 234. A first reset member 233 may also be mounted in the bar 111. The first reset member 233 abuts against the sliding member 235, and configured to drive the sliding member 235 to reset.

Referring to the description of the fourth embodiment, it can be known that when the movable member 231 is pressed by the engaging member 311, the sliding member 235 is pulled downwardly by the pulling wire 234 to change the relative position of the engaging indication region 2351 and the observation hole 110. At this time, the green color block of the engaging indication region 2351 moves to the observation hole 110 and is visible. The user can thus determine that the movable member 231 has been pressed by the engaging member 311 of the carrier, and further determine that the carrier 300 has been locked by the engaging base assembly 200. When the movable member 231 is not pressed by the engaging member 311, the green color block of the engaging indication region 2351 is reset to the top of the observation hole 110 and is invisible. The pulling wire 234 drives the abutting end 2311 to extend into the engaging channel 22. At this time, even if the carrier 300 may have been placed on the engaging base assembly 200, it is not locked by the engaging base assembly 200. The user can adjust the relative position of the carrier 300 and the engaging base assembly 200 according to the display of the locking indication region 2351, so that the carrier 300 may be reliably locked by the engaging base assembly 200.

Referring to the description of the fourth embodiment, it can be known that in some embodiments, the movable member 231 has the connecting portion 2313 positioned outside the sliding channel 220. The pulling wire 234 may be supported by the guiding bracket 165 positioned outside the sliding channel 220, and the end 2341 of the pulling wire 234 is connected to the connecting portion 2313. The moving direction F4 of the pulling wire 234 positioned between the guiding bracket 165 and the connecting portion 2313 is parallel to the sliding channel 220, so that the abutting end 2311 of the movable member 231 may be pulled to move towards the corresponding engaging channel 22 with little effort.

Referring to the description of the fourth embodiment, it can be known that in some embodiments, the movable member 231 has the engaging end 2312 away from the abutting end 2311. When the engaging member 311 is engaged in the engaging channel 22 and the locking member 211 moves to the unlocked position, the engaging end 2312 is engaged with the locking member 211 to lock the locking member 211 at the unlocked position. In some embodiments, the engaging end 2312 and the locking member 211 may be engaged with each other by the first buckling portion 2301 and the second buckling portion 232 described in the

### fourth embodiment.

Referring to FIG. 79 and FIG. 80, in some embodiments, the indicator device 500 includes, for example, a second indicator device 52 (see FIG. 79). The second indicator device 52 is configured to indicate the position of the locking member 211 so that the user can determine whether the locking member is at the locked position or the unlocked position.

In some embodiments, the second indicator device 52 may include the unlocking operating member 212. The unlocking operating member 212 is slidably mounted to the wheel seat (more specifically, the front wheel seat 193). The unlocking operating member 212 is connected to the locking member 211 by the traction rope 214. The unlocking operating member 212 may have an unlocking identification region 2121. The user can determine the position of the locking member 211 by the unlocking identification region 2121. The relevant description of the unlocking operating member 212 and the unlocking identification region 2121 may be found in the above description, and which will not be repeatedly described herein.

The technical features of the above-described embodiments may be arbitrarily combined. To make the description concise, not all possible combinations of the technical features in the above-described embodiments are described. However, as long as there is no contradiction in the combination of these technical features, they should be considered to be within the scope of this specification.

The above-described embodiments only express several implementation methods of the present application, and the descriptions thereof are relatively specific and detailed, but they cannot be construed as limiting the scope of the patent application. It should be noted that, for a person of ordinary skill in the art, several variants and improvements may be made without departing from the concept of the present application, and all fall within the protection scope of the present application. Therefore, the patent protection of the present application shall be defined by the appended claims.

## Claims

1. An engaging base assembly, comprising:
a seat plate assembly configured to receive an object thereon; and
a locking mechanism including at least one locking member, the at least one locking member being disposed on the seat plate assembly and slidable between a first locked position and a first unlocked position, wherein when the locking member is at the first locked position, the locking member is capable of locking the object, and wherein when the locking member is at the first unlocked position, the locking member is capable of unlocking the object.

2. The engaging base assembly according to claim 1, wherein the locking mechanism is mounted on the seat plate assembly, and the locking mechanism further includes at least one unlocking operating member, the unlocking operating member being connected to the locking member, and the unlocking operating member being slidable between a second locked position and a second unlocked position; and
wherein when the unlocking operating member is at the second locked position, the locking member is at the first locked position, and when the unlocking operating member is operated to move from the second locked position to the second unlocked position, the locking member moves to the first unlocked position as the unlocking operating member moves.

3. The engaging base assembly according to claim 2, wherein the unlocking operating member and/or the locking member is provided with a second driving inclined surface; and the unlocking operating member and the locking member are operably connected via the second driving inclined surface, such that a moving direction of the unlocking operating member is perpendicular to a moving direction of the locking member.

4. The engaging base assembly according to claim 3, wherein: the locking member is provided with an extension, the extension being provided with an inclined hole; the second driving inclined surface is disposed on a hole wall of the inclined hole; and the unlocking operating member is fitted with a driving pin that slidably cooperates with the inclined hole.

5. The engaging base assembly according to claim 1, wherein the locking mechanism includes two first locking members, the two first locking members being connected by a linkage device, and wherein when any one of the first locking members is subjected to force and moves towards the first unlocked position, the linkage device drives another of the first locking members to move towards the first unlocked position synchronously.

6. The engaging base assembly according to claim 5, wherein:
the two first locking members are disposed on a same side of the seat plate assembly;
the two first locking members move in a same direction to switch to the first locked position or the first unlocked position; or the two first locking members move in opposite directions to switch to the first locked position or the first unlocked position; and
the engaging base assembly further includes at least one elastic device, and the elastic device applying a force to each first locking member to move towards the first locked position.

7. The engaging base assembly according to claim 5, wherein the linkage device includes a linkage assembly connected between the two first locking members, and when any one of the first locking members is subjected to force and moves between the first unlocked position and the first locked position, the linkage assembly drives another of the first locking members to move synchronously between the first unlocked position and the first locked position.

8. The engaging base assembly according to claim 7, wherein: the linkage assembly includes a fixed connection point positioned between the two first locking members, and two pivot shafts positioned on two sides of the fixed connection point; the linkage assembly is pivotally connected to the two first locking members through the two pivot shafts; and when any one of the first locking members moves, the two pivot shafts are caused to move in opposite directions, such that the two first locking members move synchronously in opposite directions.

9. The engaging base assembly according to claim 7, wherein:
the linkage assembly includes a first linking rod, a second linking rod, a third linking rod and a fourth linking rod, the first linking rod, the second linking rod, the third linking rod and the fourth linking rod being connected in pairs to form four connection points; one of the four connection points is a fixed connection point, the fixed connection point being fixed to the seat plate assembly; a connection point of the four connection points opposed to the fixed connection point is a central connection point; two of the first linking rod, the second linking rod, the third linking rod and the fourth linking rod that are connected to the central connection point are respectively connected to the two first locking members; and
a line connecting the fixed connection point and the central connection point is perpendicular to moving directions of the two first locking members.

10. The engaging base assembly according to claim 6, wherein the locking mechanism includes two second locking members, the two second locking members being disposed on another side of the seat plate assembly and are respectively parallel to the two first locking members; and wherein the two second locking members have configurations corresponding to the two first locking members.

11. The engaging base assembly according to claim 6, wherein the locking mechanism includes two second locking members, the two second locking members being disposed on another side of the seat plate assembly and are respectively parallel to the two first locking members; and wherein the two first locking members and the two second locking members are connected by the linkage device, and the linkage device allows the two first locking members and the two second locking members to move synchronously to the first unlocked position.

12. The engaging base assembly according to claim 1, wherein:
the locking mechanism includes at least one first locking member and at least one second locking member, a moving direction of the at least one first locking member being parallel to a moving direction of the at least one second locking member; and
one of the at least one first locking member and one of the at least one second locking member are positioned on a diagonal line and are connected by a linkage device, and the linkage device allows the first locking member and the second locking member that are connected to each other to move in opposite directions and synchronously switch to the first unlocked position.

13. The engaging base assembly according to claim 12, wherein:
the linkage device includes a linkage member, the linkage member being a link rod or a traction member; and the first locking member and the second locking member positioned on the diagonal line being connected by the linkage member; and/or
the engaging base assembly further includes at least one elastic device, the elastic device applying a force to the first locking member and/or the second locking member to move towards the first locked position.

14. The engaging base assembly according to claim 13, wherein the locking mechanism includes two first locking members and two second locking members; and wherein the two first locking members are connected to the two second locking members by two linkage members.

15. The engaging base assembly according to claim 14, wherein the two linkage members are link rods respectively, and the two linkage members are disposed to intersect with each other.

16. The engaging base assembly according to claim 15, wherein:
the two linkage members are pivotally connected at an intersection therebetween; and/or
an angle is defined by connection points between the two linkage members and the two second locking members with respect to the intersection of the two linkage members, and when the locking member moves from the first locked position towards the first unlocked position, the angle becomes smaller.

17. The engaging base assembly according to claim 1, further comprising two support frames configured to support the seat plate assembly, wherein the two support frames are respectively disposed on the left and right sides of the seat plate assembly, and each of the support frames includes a longitudinal bar, a connecting bar and a shock-absorbing bar that are connected to form a triangular structure.

18. The engaging base assembly according to claim 17, wherein: the longitudinal bar is disposed below the seat plate assembly and is fixedly connected to the seat plate assembly; a first end of the connecting bar is connected to a first end of the longitudinal bar, and a second end of the connecting bar is connected to a first end of the shock-absorbing bar; a second end of the shock-absorbing bar is connected to the longitudinal bar; and the shock-absorbing bar is elastic to provide buffer support to the seat plate assembly.

19. The engaging base assembly according to claim 18, wherein:
the engaging base assembly is configured to be mounted on a foldable frame; and
each of the support frames further includes a first connecting component and a second connecting component, a first end of the first connecting component and a first end of the second connecting component being respectively pivotally connected to the second end of the connecting bar; and a second end of the first connecting component, a second end of the second connecting component and the first end of the connecting bar being respectively pivotally connected to different bars of the frame that are foldable relative to each other.

20. The engaging base assembly according to claim 18, wherein:
a first connecting bar is connected between two longitudinal bars of the two support frames; and/or
a second connecting bar is connected between two connecting bars of the two support frames.

21. The engaging base assembly according to claim 18, wherein:
the longitudinal bar includes a limiting finger disposed at the first end of the longitudinal bar, wherein the limiting finger limits an angle by which the longitudinal bar pivots downwardly relative to the connecting bar by abutting against the connecting bar; and/or
the longitudinal bar includes a limiting protrusion disposed at the first end of the longitudinal bar, wherein the limiting protrusion limits an angle by which the longitudinal bar pivots upwardly relative to the connecting bar by abutting against the connecting bar.

22. The engaging base assembly according to claim 18, wherein the support frame further includes a limiting member, a first end of the limiting member is slidably connected to the longitudinal bar, and a second end of the limiting member is pivotally connected to the connecting bar.

23. The engaging base assembly according to claim 1, further comprising a retaining mechanism configured to retain the locking member at the first unlocked position, wherein the retaining mechanism includes:
a touch button disposed on the seat plate assembly, the touch button being movable in a vertical direction relative to the seat plate assembly to allow at least a portion of the touch button to protrude upwardly relative to the seat plate assembly;
a buckling portion connected to the touch button; and
a reset member disposed between the touch button and the seat plate assembly, and configured to drive the touch button to move upwardly such that the touch button protrudes upwardly relative to the seat plate assembly;
wherein when the object is placed on the seat plate assembly, the touch button is pressed downwardly by the object, and the buckling portion moves downwardly along with the touch button; and
wherein when the locking member moves from the first locked position to the first unlocked position, a retaining hook of the locking member hooks the buckling portion, and the locking member is retained at the first unlocked position.

24. The engaging base assembly according to claim 23, wherein:
the buckling portion is movable in the vertical direction relative to the touch button; and
the retaining mechanism further includes an elastic member, the elastic member being disposed between the touch button and the buckling portion, and being configured to drive the buckling portion to move downwardly relative to the touch button.

25. The engaging base assembly according to claim 1, wherein:
the engaging base assembly includes at least one engaging channel configured to be engaged with at least one engaging member of the object;
when the locking member is at the first locked position, the locking member extends into the corresponding engaging channel to lock the corresponding engaging member; and
wherein when the locking member is at the first unlocked position, the locking member retracts relative to the engaging channel to allow the engaging member to be removed from the engaging channel.

26. The engaging base assembly according to claim 25, further comprising a retaining mechanism configured to retain the locking member at the first unlocked position.

27. The engaging base assembly according to claim 26, wherein the retaining mechanism includes:
a movable member mounted in a sliding channel in communication with the engaging channel, the movable member having an abutting end adapted to extend into the engaging channel and an engaging end away from the abutting end; and
a reset device configured to drive the abutting end to extend into the engaging channel; and
wherein when the engaging channel is engaged with the engaging member, the abutting end is pressed by the engaging member and withdraws from the engaging channel, and when the locking member moves to the first unlocked position, the engaging end is engaged with the locking member to lock the locking member at the first unlocked position.

28. The engaging base assembly according to claim 27, wherein the engaging end is provided with a first buckling portion, and the locking member is provided with a second buckling portion; wherein when the engaging member is engaged into the engaging channel, the first buckling portion moves to a moving path of the second buckling portion; and wherein when the locking member moves to the first unlocked position, the second buckling portion is engaged with the first buckling portion.

29. The engaging base assembly according to claim 28, wherein the locking member is provided with an elastic arm, and the second buckling portion is disposed on the elastic arm; and/or
wherein one of the first buckling portion and the second buckling portion is an engaging groove, and another of the first buckling portion and the second buckling portion is a wedge-shaped step.

30. The engaging base assembly according to claim 29, wherein:
the locking member and the elastic arm are integrally formed; or
the elastic arm is fixed to the locking member via a fastener, and a rotation-stopping structure is disposed between the elastic member and the locking member.

31. The engaging base assembly according to claim 27, wherein the reset device further includes a pulling wire, a first reset member and a sliding member, the pulling wire being connected between the movable member and the sliding member; wherein the first reset member abuts against the sliding member and is configured to drive the sliding member to reset; and wherein when the sliding member is reset, the pulling wire drives the abutting end to extend into the engaging channel.

32. The engaging base assembly according to claim 31, wherein the sliding member has an engaging indication region configured to indicate a position of the movable member; and wherein the sliding member is mounted in a hollow bar, the bar being provided with an observation hole that is configured to observe the engaging indication region.

33. The engaging base assembly according to claim 31, wherein:
the movable member has a connecting portion positioned outside the sliding channel, and the pulling wire is supported by a guiding bracket positioned outside the sliding channel and is connected to the connecting portion; and
a moving direction of the pulling wire between the connecting portion and the guiding bracket is parallel to the sliding channel.

34. The engaging base assembly according to claim 27, wherein:
the locking member is provided with a matching portion, and the movable member has a limiting portion positioned outside the sliding channel;
when the engaging member moves out of the engaging channel, the reset device drives the movable member to move such that the limiting portion moves to a moving path of the locking member and abuts against the matching portion, to retain the locking member at the first unlocked position; and
when the engaging channel is engaged with the engaging member, the limiting portion moves out of the moving path of the locking member to allow the locking member to move towards the first locked position.

35. The engaging base assembly according to claim 1, wherein:
the engaging base assembly is configured to be mounted on the frame; and
at least one unlocking operating member is mounted on the frame, and the at least one unlocking operating member is operably connected to the at least one locking member, and the at least one unlocking operating member is configured to drive the at least one locking member to move towards the first unlocked position.

36. The engaging base assembly according to claim 35, wherein the at least one unlocking operating member has an unlocking identification region, the unlocking identification region being configured to indicate that the at least one locking member is at the first locked position or the first unlocked position.

37. The engaging base assembly according to claim 35, wherein the frame includes at least one wheel seat configured to be fitted with a front wheel or a rear wheel, the at least one unlocking operating member slidably cooperates with the at least one wheel seat; and wherein the unlocking operating member is connected to the at least one locking member by at least one traction rope.

38. The engaging base assembly according to claim 37, wherein the frame is provided with at least one guiding mechanism configured to guide the at least one traction rope, the at least one guiding mechanism including at least one rotating member disposed proximate to the at least one unlocking operating member.

39. The engaging base assembly according to claim 37, wherein the unlocking operating member has a first driving inclined surface, the first driving inclined surface being inclined relative to a sliding direction of the unlocking operating member; and wherein an end of the traction rope abuts against the first driving inclined surface so as to be able to slide along the first driving inclined surface.

40. The engaging base assembly according to claim 39, wherein:
the unlocking operating member includes a first limiting wall, and a first engaging structure is formed between the first limiting wall and the first driving inclined surface;
the wheel seat is provided with a second limiting wall therein, and a second engaging structure is formed on the second limiting wall; and
the first driving inclined surface is between the first limiting wall and the second limiting wall, and the end of the traction rope is adapted to be engaged with the first engaging structure or the second engaging structure.

41. The engaging base assembly according to claim 39, wherein: the wheel seat is provided with a first guiding inclined surface therein; an angle is formed between the first guiding inclined surface and the first driving inclined surface; and the end of the traction rope abuts against the first driving inclined surface and the first guiding inclined surface within a range of the angle.

42. The engaging base assembly according to claim 35, wherein:
the locking mechanism includes at least two locking members, the at least two locking members being connected by a linkage device, and the linkage device allowing the at least two locking members to move synchronously to the first unlocked position; and
the frame is fitted with an unlocked state synchronization mechanism and at least two unlocking operating members, the at least two unlocking operating members being respectively connected to the at least two locking members, and the unlocked state synchronization mechanism allowing the at least two unlocking operating members to be synchronically in a state of unlocking the at least two locking members.

43. The engaging base assembly according to claim 42, wherein: the at least two unlocking operating members are respectively connected to the at least two locking members by at least two traction ropes; the frame includes at least two wheel seats configured to be fitted with front wheels or rear wheels; and the at least two unlocking operating members are slidably mounted to the at least two wheel seats, respectively.

44. The engaging base assembly according to claim 43, wherein:
each of the at least two unlocking operating members has a first driving inclined surface, the first driving inclined surface being inclined relative to a sliding direction of the unlocking operating member; and each of the at least two unlocking operating members abuts against an end of a respective one of the at least two traction ropes by the respective first driving inclined surface; and
the unlocked state synchronization mechanism includes at least two second reset members, each of which abuts against an end of the respective traction ropes to drive the end of the traction rope to move away from the respective first driving inclined surface to allow a corresponding one of the unlocking operating members to slide downwardly.

45. The engaging base assembly according to claim 1, wherein:
the seat plate assembly includes a first seat plate assembly and a second seat plate assembly;
the locking mechanism includes a first locking mechanism and a second locking mechanism, the first locking mechanism being disposed on the first seat plate assembly, the second locking mechanism being disposed on the second seat plate assembly, and each of the first locking mechanism and the second locking mechanism including the at least one locking member;
the first seat plate assembly and the second seat plate assembly are rotatable relative to each other about a rotation axis, such that the engaging base assembly has an unfolded state and a folded state; and
when the engaging base assembly is in the unfolded state, the engaging base assembly is adapted to support the object, and the at least one locking member is adapted to lock the object.

46. The engaging base assembly according to claim 45, wherein the seat plate assembly is mounted on a foldable connecting assembly, the connecting assembly including the rotation axis, an unfolded state of the connecting assembly corresponds to the unfolded state of the engaging base assembly, and a folded state of the connecting assembly corresponds to the folded state of the engaging base assembly.

47. The engaging base assembly according to claim 46, wherein the connecting assembly includes:
a first coupling member to which the first seat plate assembly is mounted;
an auxiliary support member to which the second seat plate assembly is mounted; and
the first coupling member and the auxiliary support member being pivotally connected via a pivot shaft, and a centerline of the pivot shaft forms the rotation axis.

48. The engaging base assembly according to claim 47, wherein:
the first coupling member includes two first tubes disposed in parallel, and the auxiliary support member includes two second tubes disposed in parallel, each of the first tubes being pivotally connected to an adjacent one of the second tubes through the pivot shaft;
the first seat plate assembly is connected between the two first tubes and extends in a first direction, and the second seat plate assembly is connected between the two second tubes and extends in the first direction; and
when the connecting assembly is in the unfolded state, the first seat plate assembly and the second seat plate assembly are spaced apart in a second direction, and the first direction and the second direction are not parallel to each other.

49. The engaging base assembly according to claim 48, wherein:
when the connecting assembly is in the unfolded state, an angle between the first tube and the second tube adjacent to the first tube is substantially 180 degrees, and when the connecting assembly is in the folded state, the angle between the first tube and the second tube adjacent to the first tube is an acute angle; and/or
the first seat plate assembly is proximate to the pivot shaft, the second seat plate assembly is far away from the pivot shaft, and when the connecting assembly is in a folded state, positions of the first seat plate assembly and the second seat plate assembly are staggered from each other.

50. The engaging base assembly according to claim 48, wherein sleeves are respectively provided at two ends of the first seat plate assembly, each of the sleeves is sleeved on a corresponding one of the first tubes, and the pivot shaft extends through the sleeve.

51. The engaging base assembly according to claim 45, wherein:
the first seat plate assembly has at least one first engaging channel, each of which extends in a second direction, and the first locking mechanism has at least one first locking member, each of which moves in a first direction to switch to the first locked position or the first unlocked position;
when the first locking member is at the first locked position, the first locking member extends into the corresponding first engaging channel, and when the first locking member is at the first unlocked position, the first locking member retracts from the corresponding first engaging channel;
the second seat plate assembly has at least one second engaging channel, each of which extends in the second direction; and the second locking mechanism has at least one second locking member, each of which moves in the first direction to switch to the first locked position or the first unlocked position;
when the second locking member is at the first locked position, the second locking member extends into the corresponding second engaging channel, and when the second locking member is at the first unlocked position, the second locking member retracts from the corresponding second engaging channel; and
the first direction and the second direction are not parallel to each other.

52. The engaging base assembly according to claim 51, wherein:
the first locking mechanism includes two first locking members, the two first locking members being connected by a first linkage assembly, and the first linkage assembly controlling the two first locking members to move synchronously such that the two first locking members are synchronously switched between the first locked position and the first unlocked position; and/or
the second locking mechanism includes two second locking members, the two second locking members being connected by a second linkage assembly, and the second linkage assembly controlling the two second locking members to move synchronously such that the two second locking members are synchronously switched between the first locked position and the first unlocked position.

53. The engaging base assembly according to claim 51, wherein:
the at least one first locking member is connected to the at least one second locking member via at least one linkage member;
the first locking member and the second locking member that are connected to a same linkage member are synchronously switched between the first locked position and the first unlocked position; and
the first locking member and the second locking member that are connected to the same linkage member move in opposite directions.

54. The engaging base assembly according to claim 45, wherein:
the first seat plate assembly is connected to a first pivot base, the second seat plate assembly is connected to a second pivot base, the first pivot base and the second pivot base are pivotally connected to each other and the rotation axis is formed; and
a moving direction of the first locking member, a moving direction of the second locking member, and the rotation axis are parallel to one another.

55. The engaging base assembly according to claim 54, wherein:
the first seat plate assembly is mounted on a first support frame, and the first support frame is connected to the first pivot base;
the second seat plate assembly is mounted on a second support frame, and the second support base is connected to the second pivot base; and
the first pivot base and the second pivot base are connected to a mounting base, and the mounting base is configured to be detachably connected to a frame.

56. A wheeled movable device, comprising a frame and the engaging base assembly according to any one of claims 1 to 55.

57. The wheeled movable device according to claim 56, wherein the frame is provided with a storage rack, the storage rack having at least one receiving cavity; and wherein an opening of the at least one receiving cavity is provided with at least one clamping portion, the clamping portion being made of an elastic material.

58. A wheeled movable device, comprising a frame and a connecting assembly;
wherein the frame includes: a front support bar fitted with a front wheel; a rear support bar fitted with a rear wheel; and an upper support bar connected to a handlebar;
wherein an upper end of the front support bar, an upper end of the rear support bar and a lower end of the upper support bar are pivotally connected via a pivot portion; and
wherein the connecting assembly is pivotally connected to the frame, and the connecting assembly is folded as the frame is folded.

59. The wheeled movable device according to claim 58, wherein the connecting assembly includes:
a first coupling member, a front end of the first coupling member being pivotally connected to a first pivot point of the front support bar;
an auxiliary support member, a front end of the auxiliary support member being pivotally connected to a second pivot point of the first coupling member, and the auxiliary support member being pivotally connected to a third pivot point of the rear support bar; and
a linking element, an upper end of the linking element being pivotally connected to a fourth pivot point of the upper support bar, and a lower end of the linking element being pivotally connected to a fifth pivot point of the auxiliary support member;
wherein when the frame is in an unfolded state, the first coupling member and the auxiliary support member are unfolded, the second pivot point is positioned between the first pivot point and the third pivot point, and the fifth pivot point is positioned between the second pivot point and the third pivot point; and
wherein when the frame is in a folded state, the first coupling member and the auxiliary support member are folded.

60. The wheeled movable device according to claim 59, wherein when the frame is unfolded, the first coupling member and the auxiliary support member are disposed horizontally, and the second pivot point, the third pivot point and the fifth pivot point are substantially on a straight line.

61. The wheeled movable device according to claim 59, wherein the connecting assembly further includes a seat plate support member, the seat plate support member being connected to the auxiliary support member and capable of moving synchronously with the auxiliary support member, and wherein the seat plate support member is fitted with an engaging base assembly, the engaging base assembly being configured to be engaged with the carrier.

62. The wheeled movable device according to claim 61, wherein,
the seat plate support member is disposed on an inner side of the auxiliary support member, and a rear end of the first coupling member is positioned between the seat plate support member and the auxiliary support member; and/or
the engaging base assembly is mounted on the seat plate support member, and the engaging base assembly includes a plurality of engagement points.

63. The wheeled movable device according to claim 59, wherein an engaging base assembly is mounted on the auxiliary support member, and the engaging base assembly includes a plurality of engagement points.

64. The wheeled movable device according to claim 59, wherein the linking element has an approximately S-shaped structure, and the approximately S-shaped structure has a first section, a second section and a third section in sequence.

65. The wheeled movable device according to claim 58, wherein an engaging base assembly is mounted on the connecting assembly, and the engaging base assembly includes a seat plate assembly configured to receive and support the carrier; and wherein the seat plate assembly has a first extension and/or a second extension, the first extension extending rearwardly from the seat plate assembly, and the second extension extending forwardly from the seat plate assembly.

66. The wheeled movable device according to claim 58, wherein an engaging base assembly is mounted on the connecting assembly, and the engaging base assembly includes a plurality of engagement points; and wherein when the frame is folded, the front support bar, the rear support bar and the upper support bar approach each other, and the connecting assembly drives the engaging base assembly to pivot, such that a front end of the engaging base assembly pivots downwardly and a rear end of the engaging base assembly pivots upwardly.

67. The wheeled movable device according to claim 58, wherein an engaging base assembly is mounted on the connecting assembly, and the engaging base assembly includes:
a seat plate assembly configured to receive an object thereon; and
a locking mechanism including at least one locking member, the at least one locking member being disposed on the seat plate assembly and being slidable between a first locked position and a first unlocked position;
wherein when the locking member is at the first locked position, the locking member is capable of locking the carrier, and when the locking member is at the first unlocked position, the locking member is capable of unlocking the carrier.

68. A wheeled movable device, comprising:
a frame including: a front support bar fitted with a front wheel; rear support bars, each rear support bar being fitted with a rear wheel; and an upper support bar connected to a handlebar, wherein an upper end of the front support bar, an upper end of the rear support bar and a lower end of the upper support bar are pivotally connected via a pivot portion; and
an engaging base assembly mounted on the frame and configured to support and lock the carrier;
wherein when the frame is unfolded, a center of gravity of the engaging base assembly is offset towards the rear wheel relative to the pivot portion.

69. The wheeled movable device according to claim 68, wherein when the frame is in an unfolded state, the center of gravity of the engaging base assembly is proximate to or positioned in a plane formed by the rear support bars.

70. The wheeled movable device according to claim 68, wherein when the frame is in an unfolded state, the engaging base assembly is lower than the pivot portion.

71. A wheeled movable device, comprising:
a frame; and
an engaging base assembly mounted on the frame and extending in a left-right direction, wherein the engaging base assembly includes a seat plate assembly configured to receive a carrier thereon and a locking mechanism including at least one locking member, and the locking member being configured to lock the carrier,
wherein the frame includes a first crossbar and/or a second crossbar extending in the left-right direction;
wherein the first crossbar is positioned at a predetermined distance in front of the engaging base assembly, and the first crossbar and the engaging base assembly collaboratively support the carrier; and
wherein the second crossbar is positioned at a predetermined distance behind the engaging base assembly, and the second crossbar and the engaging base assembly collaboratively support the carrier.

72. The wheeled movable device according to claim 71, wherein:
the frame includes: a front support bar fitted with a front wheel; a rear support bar fitted with a rear wheel; and a connecting assembly respectively connected to the front support bar and the rear support bar, wherein the engaging base assembly is mounted on the connecting assembly, the front support bar includes the first crossbar, and/or the connecting assembly includes the second crossbar; and/or
a position of the second crossbar in a front-rear direction is adjustable.

73. The wheeled movable device according to claim 72, wherein:
the front support bar is pivotally connected to the rear support bar, and the frame is foldable;
the connecting assembly includes a first coupling member and an auxiliary support member, wherein the first coupling member is pivotally connected to a first pivot point of the front supporting bar; a second pivot point of the first coupling member is pivotally connected to the auxiliary support member; and the auxiliary support member is pivotally connected to a third pivot point of the rear supporting bar;
when the frame is in an unfolded state, the first coupling member and the auxiliary support member are unfolded, and the second pivot point is positioned between the first pivot point and the third pivot point;
when the frame is in a folded state, the first coupling member and the auxiliary support member are folded;
the engaging base assembly is connected to the first coupling member or the auxiliary support member; and
the auxiliary support member includes the second crossbar.

74. The wheeled movable device according to claim 73, wherein the engaging base assembly has a sleeve configured to be sleeved with the first coupling member or the auxiliary support member, and a pivot shaft at the second pivot point extends through the sleeve.

75. The wheeled movable device according to claim 73, wherein the frame further includes an upper support bar, wherein a lower end of the upper support bar is pivotally connected to an upper end of the front support bar and an upper end of the rear support bar, and an upper end of the upper support bar is connected to a handlebar; and wherein the connecting assembly further includes a linking element, an upper end of the linking element being connected to the upper support bar, and a lower end of the linking element being connected to the auxiliary support member.

76. The wheeled movable device according to claim 71, wherein the first crossbar is provided with a first groove or a first positioning protrusion; and/or
the second crossbar is provided with a second groove or a second positioning protrusion; and/or
the engaging base assembly is provided with a third groove or a third positioning protrusion.

77. The wheeled movable device according to claim 71, wherein the first crossbar is fitted with a first abutting member configured to abut against the carrier; and/or wherein the second crossbar is fitted with a second abutting member configured to abut against the carrier.

78. The wheeled movable device according to claim 71, wherein:
the engaging base assembly includes at least one engaging channel extending in a front-rear direction, the at least one engaging channel being spaced apart and disposed in a row in a left-right direction; and
the at least one locking member is slidable in the left-right direction, and the at least one locking member has a first locked position when the at least one locking member extends into the at least one engaging channel to lock the carrier, and a first unlocked position where the at least one locking member retracts from the at least one engaging channel to unlocking the carrier.

79. The wheeled movable device according to claim 71, wherein:
the frame includes at least one wheel seat configured to be fitted with a front wheel or a rear wheel, and at least one unlocking operating member slidably cooperates with the at least one wheel seat;
the at least one unlocking operating member is connected to the at least one locking member via at least one traction rope to drive the at least one locking member to move to an unlocked position; and
the at least one unlocking operating member has an unlocking identification region configured to indicate that the at least one locking member is at a locked position or at the unlocked position.

80. The wheeled movable device according to claim 71, wherein the engaging base assembly further includes at least one retaining mechanism, and when the at least one locking member is driven to an unlocked position, the at least one retaining mechanism is configured to lock the at least one locking member at the unlocked position.

81. A wheeled movable device, comprising:
a frame;
an engaging base assembly mounted on the frame and configured to be engaged with a carrier, the engaging base assembly including at least one locking member, and the at least one locking member having a locked position for locking the carrier and an unlocking position for unlocking the carrier; and
an indicator device mounted on the frame and/or the engaging base assembly, and configured to indicate a working state of the wheeled movable device, wherein the working state includes whether the engaging base assembly is engaged with the carrier, and/or whether the at least one locking member locks the carrier.

82. The wheeled movable device according to claim 81, wherein:
the engaging base assembly includes at least one engaging channel configured to be engaged with an engaging member of the carrier; and
the indicator device includes a first indicator device, the first indicator device including: a movable member mounted in a sliding channel in communication with each engaging channel, the movable member having an abutting end that is adapted to extend into the engaging channel; and a sliding member operably connected to the movable member and having an engaging indication region; wherein when each engaging member is engaged in the respective engaging channel, the abutting end is pressed by the engaging member and withdraws from the engaging channel, such that the movable member drives the sliding member to slide, so as to change a position of the engaging indication region.

83. The wheeled movable device according to claim 82, wherein:
the frame includes a hollow bar, wherein the sliding member is slidable in the bar, the bar is provided with an observation hole for observing the engaging indication region, and the sliding member is connected to the movable member through a pulling wire; and
the first indicator device further includes a first reset member, the first reset member abutting against the sliding member and being configured to drive the sliding member to reset, such that the pulling wire drives the abutting end to extend into the engaging channel.

84. The wheeled movable device according to claim 81, wherein the indicator device includes a second indicator device, the second indicator device including at least one unlocking operating member, and the at least one unlocking operating member being operably connected to the at least one locking member; and wherein the at least one unlocking operating member has a unlocking identification region, the unlocking identification region being configured to indicate a position of the at least one locking member.

85. A wheeled movable device, comprising:
a frame including at least two wheel seats configured to be fitted with front wheels or rear wheels;
an engaging base assembly including: a seat plate assembly configured to receive a carrier thereon; a locking mechanism including at least two locking members, wherein the at least two locking members are disposed on the seat plate assembly and is slidable between a locked position and an unlocked position, when the locking members are at the locked position, the locking members are capable of locking the carrier, and when the locking members are at the unlocked position, the locking members are capable of unlocking the carrier; and a linkage device connected to the at least two locking members, so as to allow the at least two locking members to move synchronously to the unlocked position;
at least two unlocking operating members slidably mounted on the at least two wheel seats respectively, the at least two unlocking operating members being connected to the at least two locking members respectively by at least two traction ropes; and
an unlocked state synchronization mechanism configured to allow the at least two unlocking operating members to be synchronically in a state of unlocking the locking member.

86. The wheeled movable device according to claim 85, wherein:
the at least two locking members are connected via a linkage device, and when any one of the locking members is subjected to force and moves towards the unlocked position, the linkage device drives another of the locking members to move towards the unlocked position synchronously;
each of the at least two unlocking operating members has a first driving inclined surface, and each of the at least two unlocking operating members is operably connected to an end of a respective one of the at least two traction ropes by the first driving inclined surface; and
the unlocked state synchronization mechanism includes at least two second reset members, each second reset member abutting against the end of the respective traction rope to push the end of the traction rope to move away from the first driving inclined surface.

87. A support frame for supporting a seat plate assembly, the support frame comprising a longitudinal bar, a connecting bar and a shock-absorbing bar that are connected into a triangular structure;
wherein the longitudinal bar is adapted to be disposed under the seat plate assembly and fixedly connected to the seat plate assembly, a first end of the connecting bar is connected to a first end of the longitudinal bar, a second end of the connecting bar is connected to a first end of the shock-absorbing bar; a second end of the shock-absorbing bar is connected to the longitudinal bar, and the shock-absorbing bar is elastic to provide buffering support to the seat plate assembly.

88. The support frame according to claim 87, further comprising a first connecting component and a second connecting component, wherein a first end of the first connecting component and a first end of the second connecting component are respectively pivotally connected to a second end of the connecting bar, and a second end of the first connecting component, a second end of the second connecting component and the first end of the connecting bar are respectively pivotally connected to different bars of a frame that are foldable relative to each other.

89. The support frame according to claim 87, wherein:
the longitudinal bar includes a limiting finger disposed at the first end of the longitudinal bar, wherein the limiting finger limits an angle by which the longitudinal bar pivots downwardly relative to the connecting bar by abutting against the connecting bar; and/or
the longitudinal bar includes a limiting protrusion disposed at the first end of the longitudinal bar, wherein the limiting protrusion limits an angle by which the longitudinal bar pivots upwardly relative to the connecting bar by abutting against the connecting bar.

90. The support frame according to claim 87, further comprising a limiting member, a first end of the limiting member being slidably connected to the longitudinal bar, and a second end of the limiting member being pivotally connected to the connecting bar.

91. A locking mechanism, comprising:
two first locking members moving in opposite directions to move to a locked position or an unlocked position; and
a linkage assembly including a fixed connection point between the two first locking members, and two pivot shafts positioned on two sides of the fixed connection point, wherein the linkage assembly is pivotally connected to the two first locking members via the two pivot shafts, and the linkage assembly is configured to cause the two pivot shafts to move in opposite directions when any one of the first locking members moves, such that the two first locking members move synchronously in opposite directions.

92. The locking mechanism according to claim 91, wherein the linkage assembly includes a first linking rod, a second linking rod, a third linking rod, and a fourth linking rod that are connected in pairs to form four connection points; one of the four connection points is the fixed connection point, one of the four connection points opposed to the fixed connection point is a central connection point; and two of the first linking rod, the second linking rod, the third linking rod and the fourth linking rod that are connected to the central connection point are respectively connected to the two first locking members; and a line connecting the fixed connection point and the central connection point is perpendicular to moving directions of the two first locking members.

93. The locking mechanism according to claim 91, wherein the locking mechanism further includes two second locking members parallel to the two first locking members, and wherein one of the two first locking members and one of the two second locking members are positioned on a diagonal line and connected by a linkage member.

94. The locking mechanism according to claim 93, wherein the linkage member is a link rod, the two first locking members are connected to the two second locking members by two link rods respectively, and the two link rods are pivotally connected to each other at an intersection therebetween.

95. A retaining mechanism, configured to retain a locking member that is slidable between a locked position and an unlocked position, at the unlocked position, the locking member being mounted on a seat plate assembly, the retaining mechanism comprising:
a movable member mounted in a sliding channel of the seat plate assembly, the movable member having an abutting end and an engaging end away from the abutting end, the abutting end being capable of be pressed by a carrier placed on the seat plate assembly, wherein the locking member is configured to lock the carrier; and
a reset device configured to drive the abutting end to move in a direction away from the engaging end;
wherein when the carrier is locked by the locking member, the pressing end is pressed by the carrier and moves towards the engaging end; and
wherein when the locking member moves to the unlocked position, the engaging end is engaged with the locking member, to lock the locking member at the unlocked position.

96. The retaining mechanism according to claim 95, wherein:
the locking member is provided with a matching portion, and the movable member has a limiting portion positioned outside the sliding channel; and
when the carrier does not press the movable member, the reset device drives the movable member to move, such that the limiting portion moves to a moving path of the locking member and abuts against the matching portion, to retain the locking member at the unlocked position.

97. The retaining mechanism according to claim 96, wherein when the carrier presses the pressing end of the movable member downwardly, the limiting portion moves out of the moving path of the locking member to allow the locking member to move to the locked position.
